(19) Europäisches Patentamt
European Patent Office
Office européen des brevets

(11) EP 0 837 085 A1

(12) EUROPEAN PATENT APPLICATION
published in accordance with Art. 158(3) EPC

(43) Date of publication:
**22.04.1998 Bulletin 1998/17**

(21) Application number: **95941826.0**

(22) Date of filing: **20.12.1995**

(51) Int. Cl.$^6$: **C08G 64/02**, C08G 64/10, C08G 64/14, C08G 64/16, C08G 64/22, C09D 169/00, G03G 5/05

(86) International application number:
**PCT/JP95/02609**

(87) International publication number:
**WO 96/19522 (27.06.1996 Gazette 1996/29)**

(84) Designated Contracting States:
**BE CH DE FR GB IT LI NL SE**

(30) Priority: **20.12.1994 JP 317303/94**
**20.12.1994 JP 317304/94**
**23.02.1995 JP 35599/95**

(71) Applicant:
**IDEMITSU KOSAN COMPANY LIMITED**
**Tokyo 100 (JP)**

(72) Inventors:
- **NAGAO, Tomohiro,**
**Idemitsu Petrochemical Co., Ltd.**
**Himeji-shi, Hyogo 672 (JP)**
- **HIKOSAKA, Takaaki,**
**Idemitsu Kosan Co., Ltd.**
**Sodegaura-shi, Chiba 299-02 (JP)**

(74) Representative:
**Strehl Schübel-Hopf & Partner**
**Maximilianstrasse 54**
**80538 München (DE)**

# (54) POLYCARBONATE-BASE POLYMER, PRODUCTION PROCESS, RESIN COATING FLUID PREPARED THEREFROM, AND ELECTROPHOTOGRAPHIC PHOTORECEPTOR PREPARED THEREFROM

(57) A polymer comprising mainly repeating units (1) and/or repeating units (2), containing optionally terminal groups (3) and/or repeating units (4), and having a reduced viscosity [$\eta_{sp}$/c] of 0.2 to 10.0 dl/g as measured in a 0.5 g/dl solution thereof in methylene chloride at 20°C; a resin coating fluid containing the polymer, a charge-transfer substance and a solvent; and an electrophotographic photoreceptor containing the polymer as a binder resin in a photosensitive layer, wherein $Rf^1$ represents a group that is composed of at least carbon atoms and fluorine atoms and bonded directly to the two oxygen atoms of the carbonate linkage in the general formula (1) without any intervening arylene group; and $Rf^2$ represents a group that is composed of at least carbon atoms and fluorine atoms and bonded directly to one of the oxygen atoms of the carbonate linkage in the general formula (3) without any intervening arylene group.

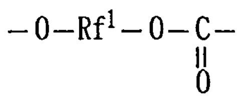
(1)

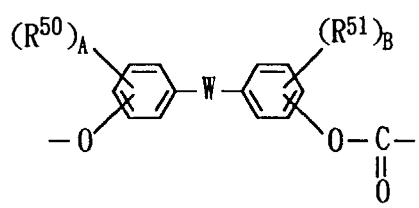
(2)

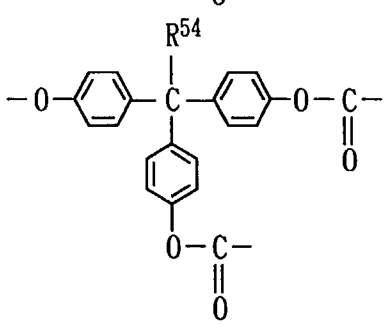
(4)

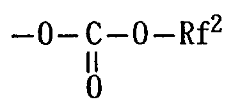
(3)

EP 0 837 085 A1

Fig. 1

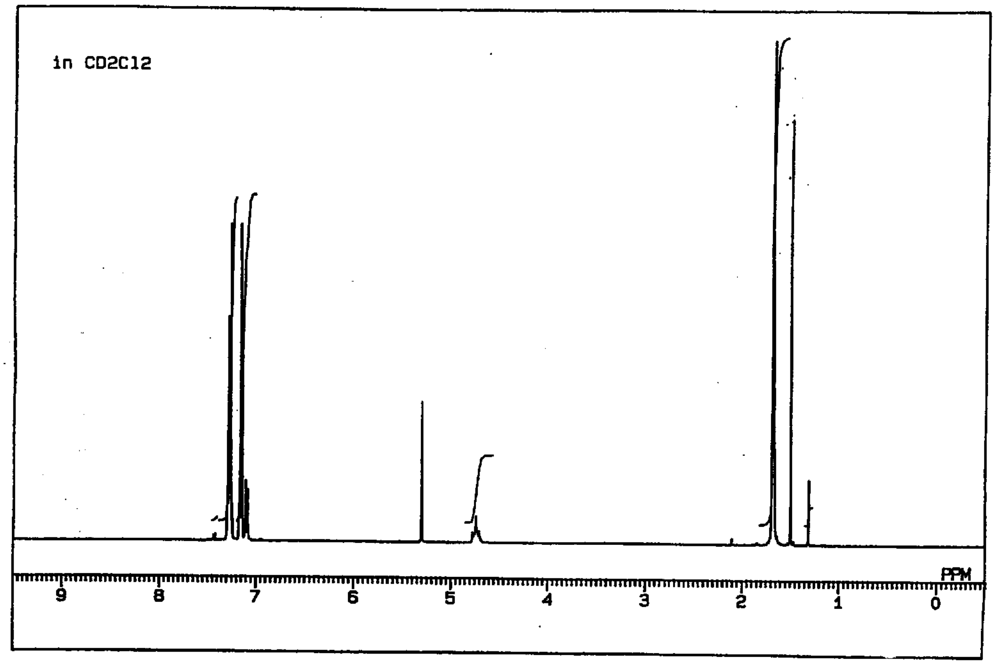

## Description

### TECHNICAL FIELD

The present invention relates to polycarbonate-base polymers and resin coating fluids prepared therefrom. The present invention further relates to electrophotographic photoreceptors containing the polycarbonate-base polymers as binder resins in the photosensitive layers thereof, particularly to electrophotographic photoreceptors which maintain high mechanical strength and excellent electrophotographic properties during a long-term repeated use and are suitable for various electrophotography fields.

The present invention also relates to processes for producing polycarbonates, particularly to processes for stably producing high molecular weight aliphatic or aliphatic-aromatic polycarbonates of good quality which are free of coloration and residual catalysts used for the synthesis thereof. These processes are suitable for the synthesis of the polycarbonate-base polymers of the present invention.

### BACKGROUND ART

In electrophotography fields, there have been proposed and used lamination-type electrophotographic photoreceptors, which are organic electrophotographic photoreceptors (OPC) whose photosensitive layers contain at least two layers, a charge-generating layer (CGL) generating charge by exposure and a charge-transfer layer (CTL) transferring the charge, or single-layer-type electrophotographic photoreceptors whose photosensitive layers are composed of a single layer wherein charge-generating substances and charge-transfer substances are dispersed in binder resins.

Electrophotographic photoreceptors are required to be specified in sensitivity, electric properties and optical properties to suit their directed electrophotographic processes. Particularly, photoreceptors for repeated use require durability against electrical and mechanical, external force which is applied directly on the surface layers thereof, namely the layers farthest away from substrates (commonly being conductive substrates), during corona electrification, toner development, transfer onto paper, cleaning and so on. Particular requirements are for surface wear or scuff resistance against friction and for resistance against surface deterioration due to the ozone generated during corona electrification at elevated temperatures. To meet such requirements, bisphenol A polycarbonate resins and bisphenol Z polycarbonate resins, which have good compatibility with charge-transfer substances and high mechanical strength, have been widely used as binder resins in the charge-transfer layers of lamination-type electrophotographic photoreceptors and in the photosensitive layers of single-layer-type electrophotographic photoreceptors. These polycarbonates resins prepared from bisphenol A or bisphenol Z, however, cannot satisfy the requirements completely.

That is, when dissolved in solvents to prepare coating fluids for forming photosensitive layers, the polycarbonate resins produced from bisphenol A or bisphenol Z sometimes cause whitening or gelation of the coating fluids, so that after coating and drying, crystallization occurs in the photosensitive layers. In crystallized areas, photo-decay does not occur and the charge remains as a residual potential and appears as a picture defect.

Further, photoreceptors using the polycarbonate resins produced from bisphenol A or bisphenol Z are deficient in durability since they are worn or scuffed due to their poor surface hardness.

Bisphenol A polycarbonate obtainable by the reaction of 2,2-bis(4-hydroxyphenyl)propane (bisphenol A) with a carbonate precursor, such as phosgene or diphenyl carbonate, is a typical, conventional polycarbonate, and has been widely used as an engineering plastic because of its excellent properties, such as transparency, high heat resistance and good mechanical properties. As the uses of polycarbonates have been extended, there occurred a demand for polycarbonates having more excellent properties, and polycarbonates of various structures have been proposed. The extended uses also caused a strong demand for polycarbonates of higher performance, which are excellent not only in the above-described properties but also in other various functions depending on the uses. Examples of polycarbonates satisfying such demands are aliphatic and aliphatic-aromatic polycarbonates produced by using alcohols as starting compounds and polycarbonates having specific, aliphatic terminal groups. Unfortunately, alcohols are not enough reactive to undergo the conventional interfacial polycondensation for producing polycarbonates, and it has been a settled view that interfacial polycondensation is not applicable for the production of aliphatic polycarbonates, aliphatic-aromatic polycarbonates and polycarbonates having aliphatic terminal groups. Therefore, melt polymerization, which is another method of producing polycarbonates, has been employed for the production of polycarbonates using alcohols. Melt polymerization however cannot provide polymers of satisfactory properties since the catalysts in the reaction system remain in the polymers and the high reaction temperature of the melt polymerization causes coloration of the polymers.

### DISCLOSURE OF INVENTION

Under such circumstances, the present invention is directed to solve the above-described problems of the electrophotographic photoreceptors using as binder resins the polycarbonates produced from bisphenol A or bisphenol Z.

That is, the present invention is directed to provide a polymer exhibiting good compatibility with charge-transfer substances and such a high solubility in solvents as not to cause whitening or gelation and as well having wear-resistance. The present invention is also directed to provide a resin coating fluid prepared by dissolving the polymer and a charge-transfer substance in a solvent, which is so stable as not to cause whitening or gelation during a long term storage and is suitable particularly for the production of charge-transfer layers of electrophotographic photoreceptors. The present invention is also directed to provide an electrophotographic photoreceptor which contains the polymer as a binder resin and maintains outstanding wear-resistance and excellent electrophotographic properties for a long term.

The present invention is also directed to solve the problems of the conventional methods of producing polycarbonates and to provide an interfacial polycondensation process whereby catalyst-free and non-colored polycarbonates of high molecular weight can be produced easily and stably by using an alcohol as a starting material.

As the result of a study for solving the above-described problems, the inventors have found that by using as binder resins polycarbonate-base polymers which contain structural units composed of at least carbon atoms and fluorine atoms and are bonded directly to the oxygen atoms of the carbonate linkages, coating fluids can be prevented from whitening or gelation during production of photoreceptors and that electrophotographic photoreceptors maintaining excellent electrophotographic properties and durability for a long term are obtainable. On the basis of these findings, the inventors have completed the present invention.

[POLYMER]

That is, the present invention provides a polymer comprising mainly repeating units (1) represented by the following general formula (1) and having a reduced viscosity [$\eta_{sp}$/c] of 0.2 to 10.0 dl/g as measured in a 0.5 g/dl solution thereof in methylene chloride at 20°C;

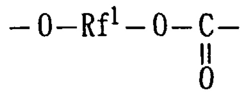
(1)

wherein $Rf^1$ is a group that is composed of at least carbon atoms and fluorine atoms and bonded directly to the two oxygen atoms of the carbonate linkage in the general formula (1) without any intervening arylene group.

The present invention further provides a polymer comprising mainly repeating units (2) represented by the following general formula (2), having polymer ends partially or wholly terminated by terminal groups (3) represented by the following general formula (3), and having a reduced viscosity [$\eta_{sp}$/c] of 0.2 to 10.0 dl/g as measured in a 0.5 g/dl solution thereof in methylene chloride at 20°C;

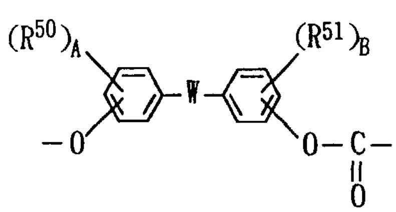
(2)

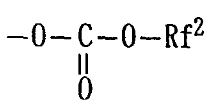
(3)

wherein, in the general formula (2), $R^{50}$ and $R^{51}$ are each independently a halogen atom, an alkyl group of 1 to 6 carbon atoms, a cycloalkyl group of 5 to 7 carbon atoms or a substituted or non-substituted aryl group of 6 to 12 carbon atoms, W is a single bond, -O-, -CO-, -S-, -SO-, $-SO_2-$, $-CR^{52}R^{53}-$ ($R^{52}$ and $R^{53}$ are each independently a hydrogen atom, trifluoromethyl, an alkyl group of 1 to 10 carbon atoms or a substituted or non-substituted aryl group of 6 to 12 carbon atoms), a cycloalkylidene group of 5 to 11 carbon atoms, an $\alpha,\omega$-alkylene group of 2 to 12 carbon atoms, 9-fluolenylidene, 1,9-menthanediyl, a substituted or non-substituted pyrazinylidene group, a substituted or non-substituted arylene group of 6 to 12 carbon atoms or an $\alpha$, $\omega$-siloxanediyl group, and A and B are each independently an integer of 0 to 4, and,

in the general formula (3), $Rf^2$ is a group that is composed of at least carbon atoms and fluorine atoms and bonded directly to the oxygen atom of the carbonate linkage in the general formula (3) without any intervening arylene group.

[RESIN COATING FLUID]

The present invention further provides a resin coating fluid comprising the polymer of the present invention, a charge-transfer substance and a solvent.

[ELECTROPHOTOGRAPHIC PHOTORECEPTOR]

The present invention further provides an electrophotographic photoreceptor comprising a conductive substrate and a photosensitive layer that is disposed on the electroconductive substrate and contains a charge-generating substance, a charge-transfer substance and a binder resin, the binder resin being the polymer of the present invention.

[PROCESS FOR PRODUCING POLYCARBONATES]

The inventors have also investigated the synthesis of polycarbonates from aliphatic alcohols by interfacial polycondensation, and have found that the use of alcohols having p$K_a$'s lower than the p$K_a$ for water as the starting alcohols enables the synthesis of aliphatic polycarbonates, aliphatic-aromatic polycarbonates and polycarbonates with aliphatic terminal groups by interfacial polycondensation. On the basis of this finding, we have completed the present invention. For example, the production process of the present invention is suitable for the synthesis of the polymer of the present invention.

p$K_a$ is a value obtained by adding a negative sign to the common logarithm of an acidity constant ($K_a$).

$$pK_a = -\log K_a \qquad \text{equation (1)}$$

Acidity constant $K_a$ is defined as follows.

An ordinary acid, which is represented by HA, in water is in an equilibrium state as shown below.

$$HA + H_2O \rightleftarrows H_3O^+ + A^- \qquad \text{equation (2)}$$

Equilibrium constant $K_{eq}$ is calculated as follows.

$$K_{eq} = \frac{[H_3O^+]\,[A^-]}{[HA]\,[H_2O]} \qquad \text{equation (3)}$$

wherein [ ] represents the concentration of each chemical species.

In ordinary diluted solutions, the concentration of water [$H_2O$] hardly changes and is constantly 55.5M, and the equilibrium constant $K_{eq}$ can be converted into another equation, to show the following acidity constant $K_a$.

$$K_a = \frac{[A^-]\,[H_3O^+]}{[HA]} \qquad \text{equation (4)}$$

To synthesize polycarbonates by interfacial polycondensation, alcohols need to react with acid acceptors to form reactive chemical species. In interfacial polycondensation, acid acceptors are used as aqueous solutions, and alcohols having larger p$K_a$'s than the p$K_a$ of water can not react with the acid acceptors. That is, alcohols having p$K_a$'s of higher than 15.74, which is the p$K_a$ *of water,* cannot undergo polymerization since they cannot react with acid acceptors to form the chemical species necessary for polycondensation.

In the process of the present invention for producing polycarbonates by using alcohols as at least partial starting materials, the use of alcohol compounds having p$K_a$'s of less than 15.74 permit synthesis of polycarbonates by interfacial polycondensation using starting alcohols.

That is, the present invention further provides a process for producing a polycarbonate, comprising carrying out interfacial polycondensation of a carbonate precursor with a dioxy compound in the presence of an aqueous alkali solution in a liquid mixture of a water-insoluble organic solvent and the aqueous alkali solution, the dioxy compound being a dihydric alcohol having a p$K_a$ of less than 15.74 as measured in water at 25°C.

## BRIEF DESCRIPTION OF DRAWINGS

Fig. 1 is a chart of an $^1$H-NMR spectrum of the polymer produced in Example 1.
Fig. 2 is a chart of an $^1$H-NMR spectrum of the polymer produced in Example 4.
Fig. 3 is a chart of an $^1$H-NMR spectrum of the polymer produced in Example 7.
Fig. 4 is a chart of an $^1$H-NMR spectrum of the polymer produced in Example 10.
Fig. 5 is a chart of an $^1$H-NMR spectrum of the polymer produced in Example 13.
Fig. 6 is a chart of an $^1$H-NMR spectrum of the polymer produced in Example 16.
Fig. 7 is a chart of an $^1$H-NMR spectrum of the polymer produced in Example 19.
Fig. 8 is a chart of an $^1$H-NMR spectrum of the polymer produced in Example 20.
Fig. 9 is a chart of an $^1$H-NMR spectrum of the polymer produced in Example 21.
Fig. 10 is a chart of an $^1$H-NMR spectrum of the polymer produced in Example 22.
Fig. 11 is a chart of an $^1$H-NMR spectrum of the polymer produced in Example 23.

## BEST MODE FOR CARRYING OUT THE INVENTION

[1] POLYMER

The polycarbonate-base polymers of the present invention include polycarbonates and polyestercarbonates, and polycarbonates are particularly preferred.

The present invention provides a polymer A which is a polycarbonate-base polymer comprising mainly the following repeating units (1);

$$-O-Rf^1-O-\underset{\underset{O}{\|}}{C}- \qquad (1)$$

wherein $Rf^1$ is as defined above.

The polymers A may optionally comprise two or more kinds of repeating units (1), and may further contain repeating units other than the repeating units (1) so far as they do not hinder the attainment of the objects of the present invention.

The polymers A may be linear, cyclic or branched. The polymers A may contain specific terminal structures at its polymer ends or specific branching structures therein, which are introduced by producing the polymers A by using an end-terminating agent or a branching agent.

$Rf^1$ in the repeating units (1) is composed of at least carbon atoms and fluorine atoms, and may further contain one or more atoms other than carbon and fluorine atoms, such as hydrogen, oxygen, nitrogen, sulfur, silicon, phosphorus, boron, chlorine, bromine or iodine atom, with hydrogen being particularly preferred.

$Rf^1$'s having preferred structures are fluorine-substituted alkylidene groups, fluorine-substituted alkylene groups, fluorine-substituted cycloalkylidene groups and fluorine-substituted cycloalkylene groups. The fluorine-substituted alkylidene groups and the fluorine-substituted alkylene groups may be straight chain groups or branched groups. They may contain an arylene group, such as phenylene, except at the ends thereof.

Particularly preferred $Rf^1$'s have the following structures;

$-CH_2-(CF_2)_r-CH_2-$ 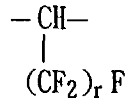 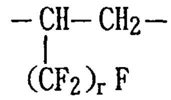 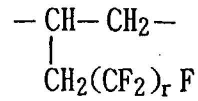

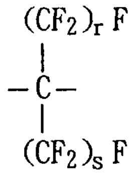 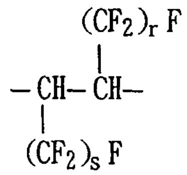 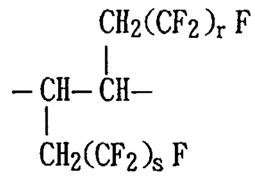 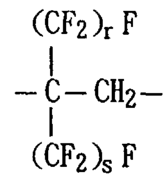

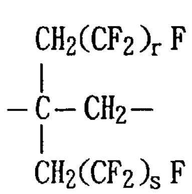 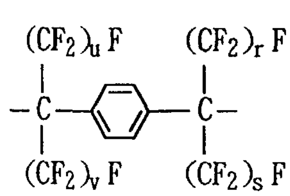 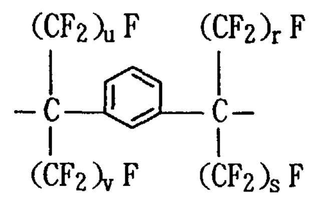

wherein r, s, u and v are each independently an integer of 1 to 20, preferably 1 to 10.

The polymers A of the present invention have a reduced viscosity of 0.2 to 10.0 dl/g as measured in a 0.5 g/dl solution thereof in methylene chloride at 20°C. Polymers having a reduced viscosity of less than 0.2 dl/g tend to be readily worn due to their poor hardness, to reduce printing life. Polymers having a reduced viscosity of more than 10.0 dl/g will increase the viscosity of solutions thereof, and sometimes make it difficult to produce the polymers or to produce photoreceptors by application of coating fluids. The reduced viscosity is more preferably 0.3 to 2.0 dl/g.

As an embodiment of the polymers A which contains other desirable repeating units along with the repeating units (1) represented by the general formula (1), the present invention further provides a polymer (polymer B) comprising mainly the repeating units (1) represented by the general formula (1) and repeating units (2) represented by the following general formula (2) and having a reduced viscosity [$\eta_{sp}/c$] of 0.2 to 10.0 dl/g, preferably 0.3 to 2.0 dl/g, as measured in a 0.5 g/dl solution thereof in methylene chloride at 20°C, the repeating units (1) being 0.1 to 99 mol% based on a total of the repeating units (1) and the repeating units (2);

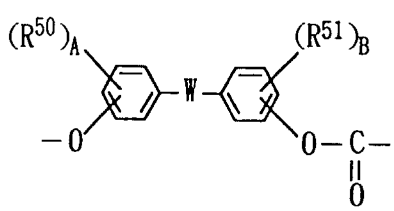 (2)

wherein, in the general formula (2), $R^{50}$ and $R^{51}$ are each independently a halogen atom, an alkyl group of 1 to 6 carbon atoms, a cycloalkyl group of 5 to 7 carbon atoms or a substituted or non-substituted aryl group of 6 to 12 carbon atoms, W is a single bond, -O-, -CO-, -S-, -SO-, $-SO_2-$, $-CR^{52}R^{53}-$ ($R^{52}$ and $R^{53}$ are each independently a hydrogen atom, trifluoromethyl, an alkyl group of 1 to 10 carbon atoms or a substituted or non-substituted aryl group of 6 to 12 carbon atoms), a cycloalkylidene group of 5 to 11 carbon atoms, an $\alpha,\omega$-alkylene group of 2 to 12 carbon atoms, 9-fluolenylidene, 1,9-menthanediyl, a substituted or non-substituted pyrazinylidene group, a substituted or non-substituted arylene group of 6 to 12 carbon atoms or an $\alpha$, $\omega$-siloxanediyl group, and A and B are each independently an integer of 0 to 4.

The Halogen atoms represented by $R^{50}$ and $R^{51}$ in the general formula (2) are fluorine, chlorine, bromine and iodine atoms. Chlorine and fluorine atoms are particularly preferred.

Preferred among the alkyl groups of 1 to 6 carbon atoms represented by $R^{50}$ and $R^{51}$ are methyl, ethyl, propyl, butyl, pentyl, hexyl, isopropyl, isobutyl, *sec*-butyl and *tert*-butyl. Methyl is particularly preferred.

Preferred among the cycloalkyl groups of 5 to 7 carbon atoms represented by $R^{50}$ and $R^{51}$ are cyclopentyl,

cyclohexyl and cycloheptyl. Cyclohexyl is particularly preferable.

Preferred among the substituted or non-substituted aryl groups of 6 to 12 carbon atoms represented by $R^{50}$ and $R^{51}$ are phenyl, tolyl, xylyl, naphthyl and benzyl. Phenyl is particularly preferred.

$R^{50}$ and $R^{51}$ may be identical with or different from each other.

As to $-CR^{52}R^{53}-$ represented by W in the general formula (2), preferred among the alkyl groups of 1 to 10 carbon atoms represented by $R^{52}$ and $R^{53}$ are methyl, ethyl, propyl, butyl, pentyl, hexyl, heptyl, octyl, nonyl, decyl, isopropyl, isobutyl, *sec*-butyl and *tert*-butyl. Methyl, ethyl, propyl and isopropyl are particularly preferred.

Preferred among the substituted or non-substituted aryl groups of 6 to 12 carbon atoms represented by $R^{52}$ and $R^{53}$ are phenyl, tolyl, xylyl, naphthyl and benzyl. Phenyl is particularly preferred.

Preferred among the cycloalkylidene groups of 5 to 11 carbon atoms represented by $R^{52}$ and $R^{53}$ are cyclopentylidene, cyclohexylidene, cycloheptylidene, cyclooctylidene and 3,3,5-trimethylcyclohexylidene. Cyclohexylidene is particularly preferred.

Preferred among the $\alpha,\omega$-alkylene groups of 2 to 12 carbon atoms represented by $R^{52}$ and $R^{53}$ are ethylene, trimethylene, tetramethylene, pentamethylene, hexamethylene, heptamethylene, octamethylene, nonamethylene and decamethylene. Ethylene is particularly preferred.

Preferred among the arylene groups of 6 to 12 carbon atoms represented by $R^{52}$ and $R^{53}$ are phenylene and diphenylylene.

$R^{52}$ and $R^{53}$ may be identical with or different from each other.

The polymers B comprising mainly the repeating units (1) and the repeating units (2) contain 0.1 to 99 mol%, preferably 1 to 50 mol% of the repeating units (1), based on the total of the repeating units (1) and the repeating units (2). Polymers containing less than 0.1 mol% of the repeating units (1) cannot make the effects of the present invention, failing to prevent coating fluids from whitening or gelation or to improve printing life. Polymers containing some kinds of repeating units (1) in an amount of more than 99 mol% tend to have decreased solubility in the solvents used to prepare coating fluids, or make the fluids unstable or whitened due to crystallization.

The polymers B may contain two or more kinds of the repeating units (1) and the repeating units (2), respectively, and may further contain other repeating units, so far as the attainment of the objects of the present invention is not hindered.

As an embodiment of the polymer A comprising mainly the repeating units (1), the present invention further provides a polymer (polymer C) having preferred end structures, which comprise mainly the repeating units (1), has polymer ends partially or wholly terminated by terminal groups (3) represented by the following general formula (3) and has a reduced viscosity $[\eta_{sp}/c]$ of 0.2 to 10.0 dl/g, preferably 0.3 to 2.0 dl/g, as measured in a 0.5 g/dl solution thereof in methylene chloride at 20°C;

$$-O-\underset{\underset{O}{\|}}{C}-O-Rf^2 \qquad (3)$$

wherein, in the general formula (3), $Rf^2$ is a group that is composed of at least carbon atoms and fluorine atoms and bonded directly to the oxygen atom of the carbonate linkage in the general formula (3) without any intervening arylene group.

$Rf^2$ in the terminal group (3) is composed of at least carbon and fluorine atoms, and may further contain at least one or more atoms other than carbon and fluorine atoms, such as hydrogen, oxygen, nitrogen, sulfur, silicon, phosphorus, boron, chlorine, bromine or iodine atoms, with hydrogen being particularly preferred.

$Rf^2$'s having preferred structures are fluorine-substituted alkyl groups and fluorine-substituted cycloalkyl groups. The fluorine-substituted alkyl groups may have a straight chain structure or a branched structure.

Particularly preferred $Rf^2$'s have the following structures.

$F-(CF_2)_r-CH_2-$ $F-(CF_2)_r-CHFCF_2CH_2-$ $F-(CF_2)_r-(CH_2)_s-$

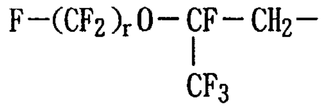 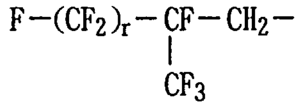 $H-(CF_2)_r-CH_2-$

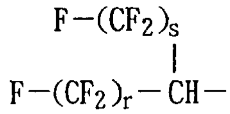 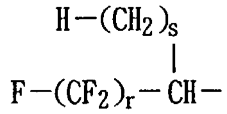 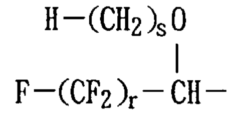

wherein r and s are each independently an integer of 1 to 20, preferably 1 to 10.

The polymers C may contain two or more kinds of the repeating units (1) and the terminal groups (3), respectively.

The present invention further provides a polymer (polymer D) comprising mainly the repeating units (2), having polymer ends partially or wholly terminated by the terminal groups (3) represented by the general formula (3), and having a reduced viscosity [$\eta_{sp}$/c] of 0.2 to 10.0 dl/g as measured in a 0.5 g/dl solution thereof in methylene chloride at 20°C.

The polymers D have a reduced viscosity of 0.2 to 10.0 dl/g as measured in a 0.5 g/dl solution thereof in methylene chloride at 20°C. Polymers having a reduced viscosity of less than 0.2 dl/g tend to be worn due to their poor hardness and to shorten printing life. Polymers having a reduced viscosity of more than 10.0 dl/g increase the viscosity of solutions thereof, and sometimes make it difficult to synthesize the polymers and to produce photoreceptors by application of coating fluids. The reduced viscosity is more preferably 0.3 to 2.0 dl/g.

The polymers D may contain two or more kinds of the repeating units (2) and the repeating units (3), respectively, and may further contain other repeating units or terminal groups, so far as the attainment of the objects of the present invention is not hindered.

The polymers D may be linear, cyclic or branched, and may contain specific branching structures which are introduced therein by using a branching agent at the time of the production of the polymers.

The polymers D comprising mainly the repeating units (2) preferably contain 0.01 to 30 mol%, more preferably 1 to 10 mol% of the terminal groups (3), based on the total of the repeating units (2) and the terminal groups (3). Polymers containing less than 0.01 mol% of the terminal groups (3) cannot make the effects of the present invention, failing to prevent coating fluids from whitening or gelation or charge-transfer layers or photosensitive layers from crystallization or to improve printing life.

As an embodiment of the polymer B comprising mainly the repeating units (1) and the repeating units (2), the present invention further provides a polymer (polymer E) having preferred terminal groups, which contains 0.1 to 99 mol% of the repeating units (1), based on the total of the repeating units (1) and the repeating units (2), has polymer ends partially or wholly terminated by the terminal groups (3) represented by the general formula (3) and has a reduced viscosity [$\eta_{sp}$/c] of 0.2 to 10.0 dl/g, preferably 0.3 to 2.0 dl/g, as measured in a 0.5 g/dl solution thereof in methylene chloride at 20°C.

As further embodiments of the polymers A to E, the present invention further provides polymers containing preferred branching structures.

That is, the present invention provides a polymer (polymer F) which comprises mainly the repeating units (1), contains, as branching units, 0.01 to 30 mol% of repeating units (4) represented by the following general formula (4), based on the total of the repeating units (4) and other repeating units than the repeating units (4) and has a reduced viscosity [$\eta_{sp}$/c] of 0.2 to 10.0 dl/g as measured in a 0.5 g/dl solution thereof in methylene chloride at 20°C;

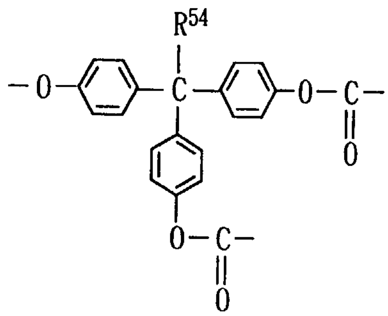

(4)

wherein, in the general formula (4), $R^{54}$ is an alkyl group of 1 to 10 carbon atoms.

$R^{54}$ in the general formula (4) is an alkyl group of 1 to 10 carbon atoms, and preferred examples are methyl, ethyl, propyl and butyl, with methyl being particularly preferred.

The present invention further provides a polymer (polymer G) which comprises mainly the repeating units (1) and the repeating units (2), contains the repeating units (4) as branching units and has a reduced viscosity $[\eta_{sp}/c]$ of 0.2 to 10.0 dl/g as measured in a 0.5 g/dl solution thereof in methylene chloride at 20°, the repeating units (1) are 0.1 to 99 mol% of the total of the repeating units (1) and the repeating units (2), and the repeating units (4) are 0.01 to 30 mol% of the total of the repeating units (4) and other repeating units than the repeating units (4).

The present invention further provides a polymer (polymer H) which comprises mainly the repeating units (1), contain, as branching units, contains the repeating units (4), has polymer ends partially or wholly terminated by the terminal groups (3) and has a reduced viscosity $[\eta_{sp}/c]$ of 0.2 to 10.0 dl/g as measured in a 0.5 g/dl solution thereof in methylene chloride at 20°, the repeating units (4) are 0.01 to 30 mol% of the total of the repeating units (4) and other repeating units than the repeating units (4).

The present invention further provides a polymer (polymer I) which comprises mainly the repeating units (2), contains the repeating units (4) as branching units, has polymer ends partially or wholly terminated by the terminal groups (3) and has a reduced viscosity $[\eta_{sp}/c]$ of 0.2 to 10.0 dl/g as measured in a 0.5 g/dl solution thereof in methylene chloride at 20°C, the repeating units (4) are 0.01 to 30 mol% of the total of the repeating units (4) and other repeating units than the repeating units (4).

The present invention further provides a polymer (polymer J) which comprises mainly the repeating units (1) and the repeating units (2), contains the repeating units (4) as branching units, has polymer ends partially or wholly terminated by the terminal groups (3) and has a reduced viscosity $[\eta_{sp}/c]$ of 0.2 to 10.0 dl/g as measured in a 0.5 g/dl solution thereof in methylene chloride at 20°C, the repeating units (1) are 0.1 to 99 mol% of the total of the repeating units (1) and the repeating units (2), the repeating units (4) are 0.01 to 30 mol% of the total of the repeating units (4) and other repeating units than the repeating units (4).

[2] PROCESS FOR PRODUCING POLYMERS

The polymers A of the present invention comprising mainly the repeating units (1) may be produced by, for example, polycondensation of a dihydric alcohol (I) represented by the following general formula (I) with a carbonate precursor, such as phosgene, in the presence of an appropriate acid acceptor, or by interesterification of the dihydric alcohols (I) with a bisaryl carbonate;

$$HO\text{-}Rf^1\text{-}OH \qquad (I)$$

wherein $Rf^1$ is as defined above.

Preferred dihydric alcohols (I) contain at least one fluorine atom on the carbon vicinal to the carbon bonded to each hydroxyl group (β-position) or on the carbon once more vicinal to the carbon (γ-position). Examples of such preferred dihydric alcohols (I) are represented by the following structural formulae;

$HO-CH_2-(CF_2)_r-CH_2-OH$ 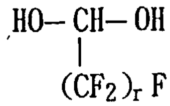 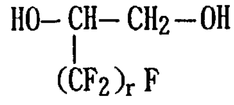 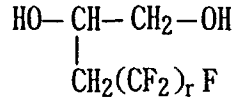

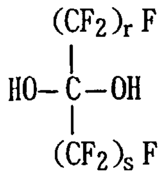 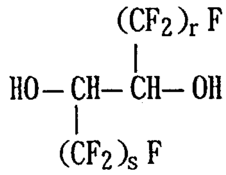 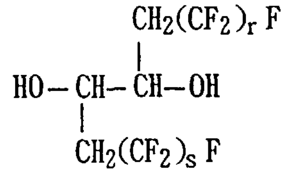 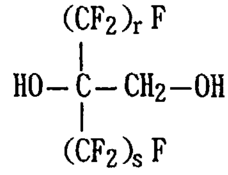

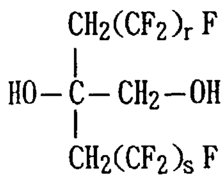 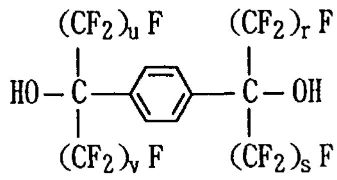 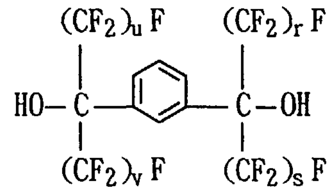

wherein r, s, u and v are as defined above.

Included among such dihydric alcohols (I) are 2,2-difluoro-1,3-propanediol, 2,2,3,3-tetrafluoro-1,4-butanediaol, 2,2,3,3,4,4-hexafluoro-1,5-pentanediol, 1H,1H,6H,6H-perfluoro-1,6-hexanediol, 1H,1H,7H,7H-perfluoro-1,7-heptanediol, 1H,1H,8H,8H-perfluoro-1,8-octanediol, 1H,1H,9H,9H-perfluoro-1,9-nonanediol, 1H,1H,10H,10H-perfluoro-1,10-decanediol, 1H,1H,11H,11H-perfluoro-1,11-undecanediol, 1H,1H,12H,12H-perfluoro-1,12-dodecanediol, 2,2,2-trifluoro-1,1-ethanediol, 2,2,3,3,3-pentafluoro-1,1-ethanediol, 1H-perfluoro-1,1-butanediol, 1H-perfluoro-1,1-pentanediol, 1H-perfluoro-1,1-hexanediol, 1H-perfluoro-1,1-heptanediol, 1H-perfluoro-1,1-octanediol, 1H-perfluoro-1,1-nonanediol, 1H-perfluoro-1,1-decanediol, 1H-perfluoro-1,1-undecanediol, 1H-perfluoro-1,1-dodecanediol, 3,3,3-trifluoro-1,2-propanediol, 1H,1H,2H-perfluoro-1,2-butanediol, 1H,1H,2H-perfluoro-1,2-pentanediol, 1H,1H,2H-perfluoro-1,2-hexanediol, 1H,1H,2H-perfluoro-1,2-heptanediol, 1H,1H,2H-perfluoro-1,2-octanediol, 1H,1H,2H-perfluoro-1,2-nonanediol, 1H,1H,2H-perfluoro-1,2-decanediol, 1H,1H,2H-perfluoro-1,2-undecanediol, 1H,1H,2H-perfluoro-1,2-dodecanediol, 1H,1H,2H-perfluoro-1,2-tridecanediol, 1H,1H,2H-perfluoro-1,2-tetradecanediol, 4,4,4-trifluoro-1,2-butanediol, 4,4,5,5,5-pentafluoro-1,2-pentanediol, 1H,1H,2H,3H,3H-perfluoro-1,2-hexanediol, 1H,1H,2H,3H,3H-perfluoro-1,2-heptanediol, 1H,1H,2H,3H,3H-perfluoro-1,2-octanediol, 1H,1H,2H,3H,3H-perfluoro-1,2-nonanediol, 1H,1H,2H,3H,3H-perfluoro-1,2-decanediol, 1H,1H,2H,3H,3H-perfluoro-1,2-undecanediol, 1H,1H,2H,3H,3H-perfluoro-1,2-dodecanediol, 1H,1H,2H,3H,3H-perfluoro-1,2-tridecanediol, 1H,1H,2H,3H,3H-perfluoro-1,2-tetradecanediol, 1H,1H,2H,3H,3H-perfluoro-1,2-pentadecanediol, 1H,1H,2H,3H,3H-perfluoro-1,2-hexadecanediol, perfluoropropane-2,2-diol, perfluorobutane-2,2-diol, perfluoropentane-3,3-diol, perfluorodecane-2,2-diol, perfluorododecane-2,2-diol, perfluorotetradecane-2,2-diol, 2H,3H-perfluorobutane-2,3-diol, 2H,3H-perfluoropentane-2,3-diol, 2H,3H-perfluoroundecane-2,3-diol, 2H,3H-perfluorotridecane-2,3-diol, 2H,3H-perfluoropentadecane-2,3-diol, 2H,2H,3H,4H,5H,5H-perfluorohexane-3,4-diol, 2H,2H,3H,4H,5H,5H-perfluoroheptane-3,4-diol, 2H,2H,3H,4H,5H,5H-perfluorotridecane-3,4-diol, 2-perfluoromethyl-1H,1H-perfluoropropane-1,2-diol, 2-perfluoromethyl-1H,1H-perfluorodecane-1,2-diol, 2-perfluoromethyl-1H,1H-perfluorododecane-1,2-diol, 2-(1H,1H-perfluoroethyl)-1H,1H,3H,3H-perfluorobutane-1,2-diol, 2-(1H,1H-perfluoroethyl)-1H,1H,3H,3H-perfluoroundecane-1,2-diol, 2-(1H,1H-perfluoroethyl)-1H,1H,3H,3H-perfluorotridecane-1,2-diol, 1,4-bis(2-hydroxyperfluoro-2-propyl)benzene, 1,3-bis(2-hydroxyperfluoro-2-propyl)benzene, and 1,4-bis(2-hydroxyperfluoro-2-decyl)benzene.

The polymers B of the present invention comprising mainly the repeating units (1) and the repeating units (2) may be produced by, for example, polycondensation of the dihydric alcohol (I) and a dihydroxyaryl compound (II) represented by the following general formula (II) with a carbonate precursor, such as phosgene, in the presence of an appropriate acid acceptor, or by interesterification of the dihydric alcohol (I) and the dihydroxyaryl compound (II) with a bisaryl carbonate;

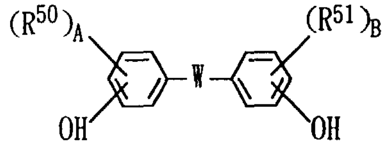

(II)

wherein $R^{50}$, $R^{51}$, W, A and B are as defined above.

Examples of the dihydroxyaryl compounds (II) (dihydroxyaryl compounds (II-a)) are 4,4'-dihydroxybiphenyls, such as 4,4'-dihydroxybiphenyl, 3,3'-difluoro-4,4'-dihydroxybiphenyl, 4,4'-dihydroxy-3,3'-dimethylbiphenyl, 4,4'-dihydroxy-2,2'-dimethylbiphenyl and 4,4'-dihydroxy-3,3'-dicyclohexylbiphenyl; bis(hydroxyphenyl)alkanes, such as bis(4-hydroxyphenyl)methane, 1,1-bis(4-hydroxyphenyl)-1,1-diphenylmethane, 1,1-bis(4-hydroxyphenyl)-1-phenylmethane, bis(4-hydroxy-3-methylphenyl)methane, bis(3-nonyl-4-hydroxyphenyl)methane, bis(4-hydroxy-3,5-dimethylphenyl)methane, 1,1-bis(2-*tert*-butyl-4-hydroxy-5-methylphenyl)-1-phenylmethane, bis(3-chloro-4-hydroxyphenyl)methane, bis(3-fluoro-4-hydroxyphenyl)methane, bis(3,5-dibromo-4-hydroxyphenyl)methane, bis(3-allyl-4-hydroxyphenyl)methane, bis(2-hydroxyphenyl)methane, 2-hydroxyphenyl-4-hydroxyphenylmethane, bis(2-hydroxy-4-methylphenyl)methane, bis(6-*tert*-butyl-2-hydroxy-4-methylphenyl)methane, bis(2-hydroxy-4,6-dimethylphenyl)methane, 1,1-bis(4-hydroxypnenyl)ethane, 1,2-bis(4-hydroxyphenyl)ethane, 1,1-bis(4-hydroxyphenyl)-1-phenylethane, 1,1-bis(4-hydroxy-3-methylphenyl)-1-phenylethane, 1,1-bis(4-hydroxy-3-phenylphenyl)-1-phenylethane, 2-(4-hydroxy-3-methylphenyl)-2-(4-hydroxyphenyl)-1-phenylethane, 1,1-bis(2-*tert*-butyl-4-hydroxy-3-methylphenyl)ethane, 1-phenyl-1,1-bis(3-fluoro-4-hydroxyphenyl)ethane, 1,1-bis(2-hydroxy-4-methylphenyl)ethane, 2,2-bis(4-hydroxyphenyl)propane (alias "bisphenol A"), 1,1-bis(4-hydroxyphenyl)propane, 2,2-bis(4-hydroxy-3-methylphenyl)propane, 2,2-bis(4-hydroxy-3,5-dimethylphenyl)propane, 2,2-bis(3-isopropyl-4-hydroxyphenyl)propane, 2,2-bis(4-hydroxy-2-methylphenyl)propane, 1,1-bis(2-*tert*-butyl-4-hydroxy-5-methylphenyl)propane, 2,2-bis(3-*sec*-butyl-4-hydroxyphenyl)propane, 2,2-bis(3-chloro-4-hydroxyphenyl)propane, 2,2-bis(3-fluoro-4-hydroxyphenyl)propane, 2,2-bis(3-bromo-4-hydroxyphenyl)propane, 2,2-bis(3,5-difluoro-4-hydroxyphenyl)propane (alias "tetrafluorobisphenol A"), 2,2-bis(3,5-dichloro-4-hydroxyphenyl)propane (alias "tetrachlorobisphenol A"), 2,2-bis(3,5-dibromo-4-hydroxyphenyl)propane (alias "tetrabromobisphenol A"), 2,2-bis(3-bromo-5-chloro-4-hydroxyphenyl)propane, 2,2-bis(3-hydroxyphenyl)-1,1,1,3,3,3-hexafluoropropane, 2,2-bis(4-hydroxy-3-phenylphenyl)propane, 2,2-bis(3-allyl-4-hydroxyphenyl)propane, 2,2-bis(2-hydroxy-4,6-dimethylphenyl)propane, 2,2-bis(4-*sec*-butyl-2-hydroxyphenyl)propane, 1,1-bis(2-*tert*-butyl-5-methyl-4-hydroxyphenyl)-2-methylpropane, 1,1-bis(4-hydroxyphenyl)-2-methylpropane, 2,2-bis(4-hydroxy-3-methylphenyl)butane, 2,2-bis(4-hydroxyphenyl)butane, 1,1-bis(2-butyl-4-hydroxy-5-methylphenylbutane, 1,1-bis(2-*tert*-butyl-4-hydroxy-5-methylphenyl)butane, 1,1-bis(4-hydroxy-2-methyl-5-*tert*-pentylphenyl)butane, 2,2-bis(3,5-dichloro-4-hydroxyphenyl)butane, 2,2-bis(3,5-dibromo-4-hydroxyphenyl)butane, 2,2-bis(4-hydroxyphenyl)-3-methylbutane, 1,1-bis(4-hydroxyphenyl)-3-methylbutane, 2,2-bis(4-hydroxyphenyl)pentane, 1,1-bis(4-hydroxyphenyl)cyclopentane, 2,2-bis(4-hydroxyphenyl)hexane, 2-ethyl-1,1-bis(4-hydroxyphenyl)hexane, 4,4-bis((4-hydroxyphenyl)heptane, 1,1-bis(2-*tert*-butyl-4-hydroxy-5-methylphenyl)heptane, 2,2-bis(4-hydroxyphenyl)octane, 2,2-bis(4-hydroxyphenyl)nonane, 2,2-bis(4-hydroxyphenyl)decane, 1,1-bis(4-hydroxyphenyl)cyclohexane, 1,1-bis(4-hydroxy-3-methylphenyl)cyclohexane, 1,1-bis(4-hydroxy-3,5-dimethylphenyl)cyclohexane, 1,1-bis(4-hydroxy-3-cyclohexylphenyl)cyclohexane and 1,1-bis(4-hydroxy-3-phenylphenyl)cyclohexane; bis(4-hydroxyphenyl) ethers, such as bis(4-hydroxyphenyl) ether and bis(3-fluoro-4-hydroxyphenyl) ether; bis(4-hydroxyphenyl) sulfides, such as bis(4-hydroxyphenyl) sulfide and bis(4-hydroxy-3-methylphenyl) sulfide; bis(4-hydroxyphenyl) sulfones, such as bis(4-hydroxyphenyl) sulfone, bis(4-hydroxy-3-methylphenyl) sulfone and bis(4-hydroxy-3-phenylphenyl) sulfone; 4,4'-dihydroxybenzophenone; bis(hydroxyphenyl)fluorenes, such as 9,9-bis(4-hydroxyphenyl)fluorene, 9,9-bis(4-hydroxy-3-methylphenyl)fluorene, 9,9-bis(3-ethyl-4-hydroxyphenyl)fluorene and 9,9-bis(4-hydroxy-3-phenylphenyl)fluorene; dihydroxy-*p*-terphenyls, such as 4,4''-dihydroxy-*p*-terphenyl; dihydroxy-*p*-phenylquaterphenyls, such as 4,4'''-dihydroxy-*p*-quaterphenyl; bis(hydroxyphenyl)pyrazines, such as 2,5-bis(4-hydroxyphenyl)pyrazine, 2,5-bis(4-hydroxyphenyl)-3,6-dimethylpyrazine and 2,5-bis(4-hydroxyphenyl)-2,6-diethylpyrazine; bis(hydroxyphenyl)menthanes, such as 1,8-bis(4-hydroxyphenyl)menthane, 1,8-bis(4-hydroxy-3-methylphenyl)menthane and 1,8-bis(4-hydroxy-3,5-dimethylphenyl)menthane; 1,4-bis[2-(4-hydroxyphenyl)-2-propyl]benzene, 1,3-[2-(4-hydroxyphenyl)-2-propyl]benzene; and other dihydroxyaryl compounds (II-a) including the siloxane compounds represented by the following general formula (V);

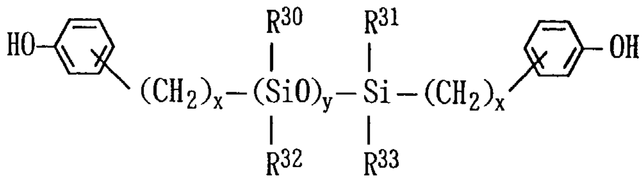 (V)

wherein, in the general formula (V), $R^{30}$, $R^{31}$, $R^{32}$ and $R^{33}$ are each independently a hydrogen atom, an alkyl group, such as methyl or ethyl, an aryl group, such as phenyl, a halogen atom, such as a fluorine atom or a chlorine atom, x is an integer of 0 to 20, and y is an integer of 0 to 2000.

Preferred dihydroxyaryl compounds (II) [dihydroxyaryl compounds (II-b)] are 2,2-bis(4-hydroxyphenyl)propane, 1,1-bis(4-hydroxyphenyl)cyclohexane, 1,1-bis(4-hydroxyphenyl)-1,1-diphenylmethane, 1,1-bis(4-hydroxyphenyl)-1-phenylethane, 2,2-bis(4-hydroxy-3-methylphenyl)propane, 2,2-bis(4-hydroxy-3-phenylphenyl)propane, 4,4'-dihydroxybiphenyl and bis(4-hydroxyphenyl)sulfone, with 2,2-bis(4-hydroxyphenyl)propane particularly preferred.

Along with these dihydroxyaryl compounds (II), dihydroxybisindanes, such as 6,6'-dihydroxy-3,3,3',3'-tetramethylbisindane; and dihydroxynaphthalenes, such as 1,3-dihydroxynaphthalene, 1,4-dihydroxynaphthalene, 1,5-dihydroxynaphthalne, 2,6-dihydroxynaphthalene and 2,7-dihydroxynaphthalene, may also be used.

These dihydroxyaryl compounds may be used individually or in a combination of two or more.

The polymers C of the present invention comprising mainly the repeating units (1) and having terminal groups (3) may be produced by, for example, polycondensation of the dihydric alcohol (I) and a monohydric alcohol (III) represented by the following general formula (III) with a carbonate precursor, such as phosgene, in the presence of an appropriate acid acceptor, or by interesterification of the dihydric alcohol (I) and the monohydric alcohol (III) with a bisaryl carbonate;

$$Rf^2\text{-}OH \qquad \text{(III)}$$

wherein, in the general formula (III), $Rf^2$ is as defined above.

Preferred monohydric alcohols (III) contain at least one fluorine atom positioned at the β-position or γ-position to the hydroxyl group.

Examples of such preferred monohydric alcohols (III) are represented by the following structural formulae;

$F-(CF_2)_r-CH_2-OH$ $F-(CF_2)_n-CHFCF_2CH_2-OH$ $F-(CF_2)_r-(CH_2)_s-OH$

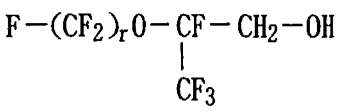 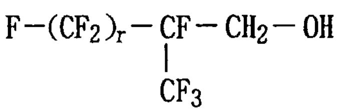 $H-(CF_2)_r-CH_2-OH$

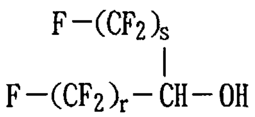 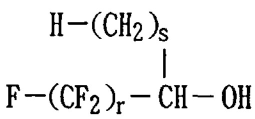 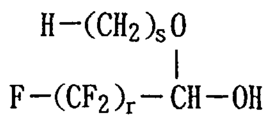

wherein r and s are as defined above.

Typical monohydric alcohols (III) are 2,2,2-trifluoroethanol, 2,2,3,3,3-pentafluoropropanol, 1H,1H-perfluorobutanol, 1H,1H-perfluoropentanol, 1H,1H-perfluorohexanol, 1H,1H-perfluoroheptanol, 1H,1H-perfluorooctanol, 1H,1H-perfluorononanol, 1H,1H-perfluorodecanol, 1H,1H-perfluoroundecanol, 1H,1H-perfluorododecanol, 1H,1H-perfluorotridecanol, 1H,1H-perfluorotetradecanol, 1H,1H-perfluoropentadecanol, 1H,1H,2H,2H-perfluoropropanol, 1H,1H,2H,2H-perfluorobutanol, 1H,1H,2H,2H-perfluoropentanol, 1H,1H,2H,2H-perfluorohexanol, 1H,1H,2H,2H-perfluoroheptanol, 1H,1H,2H,2H-perfluorooctanol, 1H,1H,2H,2H-perfluorononanol, 1H,1H,2H,2H-perfluorodecanol, 1H,1H,2H,2H-perfluoroundecanol, 1H,1H,2H,2H-perfluorododecanol, 1H,1H,2H,2H-perfluorotridecanol, 1H,1H,2H,2H-perfluorotetradecanol, 1H,1H,2H,2H-perfluoropentadecanol, 7,7,8,8,8-pentafluorooctanol, 7,7,8,8,9,9,10,10,10-nonafluorodecanol, 7,7,8,8,9,9,10,10,11,11,12,12,12-tridecafluorododecanol, 7,7,8,8,9,9,10,10,11,11,12,12,13,13,14,14,14-heptadecafluorotetradecanol, 1H,1H,3H-perfluorobutanol, 1H,1H-2-trifluoromethylbutanol, 1H,1H-2-perfluoropropyloxypropanol, α,α,ω-trihydroperfluoroethanol, α,α,ω-trihydroperfluoropropanol, α,α,ω-trihydroperfluorobutanol, α,α,ω-trihydroperfluoropentanol, α,α,ω-trihydroperfluorohexanol, α,α,ω-trihydroperfluoroheptanol, α,α,ω-trihydroperfluorooctanol, α,α,ω-trihydroperfluorononanol, α,α,ω-trihydroperfluorodecanol, α,α,ω-trihydroperfluoroundecanol, α,α,ω-trihydroperfluorododecanol, 1,1,1,3,3,3-hexafluoro-2-propanol, 1,1,1-trifluoro-2-propanol, 1H,1H,1H,2H-perfluoro-2-pentanol and 1-methoxy-1H-perfluoropropanol.

Besides the monohydric alcohols represented by the above general formulae, for example, 4,4,5,5,6,6,7,7,7-nonafluoro-2-heptenol, 4,4,5,5,6,6,7,7,8,8,9,9,9-tridecafluoro-2-nonenol, 4,4,5,5,6,6,7,7,8,8,9,9,10,10,11,11,11-heptadecafluoro-2-undecenol, 4,4,5,5,6,6,7,7,7-nonafluoro-2-iodoheptanol, 4,4,5,5,6,6,7,7,8,8,9,9,9-tridecafluoro-2-iodononanol, 4,4,5,5,6,6,7,7,8,8,9,9,10,10,11,11,11-heptadecafluoro-2-iodoundecanol, 1H,1H,2H,2H-5-trifluoromethylperfluorohexanol, 1H,1H,2H,2H-7-trifluoromethylperfluorooctanol, 1H,1H,2H,2H-9-trifluoromethylperfluorodecanol, 1H,1H,2H,2H-11-trifluoromethylperfluorododecanol, 2,2-bis(trifluoromethyl)propanol, perfluorocyclohexylethanol, perfluorobenzyl alcohol, perfluoro-*tert*-butanol may also be used suitably.

These monohydric alcohols (III) may be used individually or in a combination of two or more.

The polymers D of the present invention comprising mainly the repeating units (2) and having the terminal groups (3) may be produced by, for example, polycondensation of the dihydroxyaryl compound (II) and the monohydric alcohol (III) with a carbonate precursor, such as phosgene, in the presence of an appropriate acid acceptor, or by interesterification of the dihydroxyaryl compound (II) and the monohydric alcohol (III) with a bisaryl carbonate.

The polymers E of the present invention comprising mainly the repeating units (1) and the repeating units (2) and having the terminal groups (3) may be produced by, for example, polycondensation of the dihydric alcohol (I), the dihydroxyaryl compound (II) and the monohydric alcohol (III) with a carbonate precursor, such as phosgene, in the presence of an appropriate acid acceptor, or by interesterification of the dihydric alcohol (I), the dihydroxyaryl compound (II) and the monohydric alcohol (III) with a bisaryl carbonate.

The polymers F of the present invention comprising mainly the repeating units (1) and further containing the repeating units (4) as branching units may be produced by, for example, polycondensation of the dihydric alcohol (I) and the trihydric phenol (IV) represented by the following general formula (IV) with a carbonate precursor, such as phosgene, in the presence of an appropriate acid acceptor, or by interesterification of the dihydric alcohol (I) and the trihydric phenol(IV) with a bisaryl carbonate;

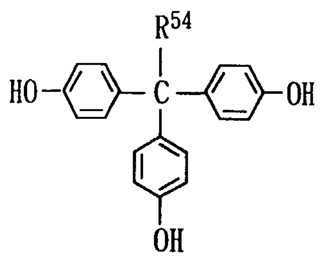

(IV)

wherein, in the general formula (IV), $R^{54}$ is as defined above.

Examples of the trihydric phenols (IV) are 1,1,1-tris(4-hydroxyphenyl)ethane, 1,1,1-tris(4-hydroxyphenyl)propane, 1,1,1-tris(4-hydroxyphenyl)butane and 1,1,1-tris(4-hydroxyphenyl)pentane, with 1,1,1-tris(4-hydroxyphenyl)ethane being particularly preferred.

The polymers G of the present invention comprising mainly the repeating units (1) and the repeating units (2) and further containing the repeating units (4) as branching units may be produced by, for example, polycondensation of the dihydric alcohol (I), the dihydroxyaryl compound (II) and the trihydric phenol (IV) with a carbonate precursor, such as phosgene, in the presence of an appropriate acid acceptor, or by interesterification of the dihydric alcohol (I), the dihydroxyaryl compound (II) and the trihydric phenol (IV) with a bisaryl carbonate.

The polymers H of the present invention comprising mainly the repeating units (1), having the terminal groups (3) and further containing the repeating units (4) as branching units may be produced by, for example, polycondensation of the dihydric alcohol (I), the monohydric alcohol (III) and the trihydric phenol (IV) with a carbonate precursor, such as phosgene, in the presence of an appropriate acid acceptor, or by interesterification of the dihydric alcohol (I), the monohydric alcohol (III) and the trihydric phenol (IV) with a bisaryl carbonate.

The polymers I of the present invention comprising mainly the repeating units (2), having the terminal groups (3) and further containing the repeating units (4) as branching units may be produced by, for example, polycondensation of the dihydroxyaryl compound (II), the monohydric alcohol (III) and the trihydric phenol (IV) with a carbonate precursor, such as phosgene, in the presence of an appropriate acid acceptor, or by interesterification of the dihydroxyaryl compound (II), the monohydric alcohol (III) and the trihydric phenol (IV) with a bisaryl carbonate.

The polymers J of the present invention comprising mainly the repeating units (1) and the repeating units (2), having the terminal groups (3) and further containing the repeating units (4) as branching units may be produced by, for example, polycondensation of the dihydric alcohol (I), the dihydroxyaryl compound (II), the monohydric alcohol (III) and the trihydric phenol (IV) with a carbonate precursor, such as phosgene, in the presence of an appropriate acid acceptor, or by interesterification of the dihydric alcohol (I), the dihydroxyaryl compound (II), the monohydric alcohol (III) and the trihydric phenol (IV) with a bisaryl carbonate.

In the synthesis of the polymers of the present invention, it is possible to use other branching agents than the trihydric phenols (IV) and other end-terminating agents than the monohydric alcohols (III), so far as the attainment of the objects of the present invention is not hindered.

The branching agents other than the trihydric phenols (IV) are phenols or carboxylic acids of trivalence or more.

Examples of such branching agents [branching agents (X)] are phloroglucitol, pyrogallol, 4,6-dimethyl-2,4,6-tris(4-hydroxyphenyl)-2-heptene, 2,4-dimethyl-2,4,6-tris(4-hydroxyphenyl)heptane, 2,6-dimethyl-2,4,6-tris(4-hydroxyphenyl)-3-heptene, 1,3,5-tris(2-hydroxyphenyl)benzene, 1,3,5-tris(4-hydroxyphenyl)benzene, tris(4-hydroxyphenyl)phenylmethane, 2,2-bis(4,4-bis(4-hydroxyphenyl)cyclohexyl)propane, 2,4-bis{2-(4-hydroxyphenyl)-2-propyl}phenol, 2,6-bis(2-hydroxy-5-methylbenzyl)-4-methylphenol, 2-(4-hydroxyphenyl)-2-(2,4-dihydroxyphenyl)propane, tetrakis(4-hydroxyphenyl)methane, tetrakis(4-(4-hydroxyphenylisopropyl)phenoxy)methane, 1,4-bis(4',4''-dihydroxytriphenylmethyl)benzene, 2,4-dihydroxybenzoic acid, trimesic acid, cyanuric acid, 3,3-bis(3-methyl-4-hydroxyphenyl)-2-oxo-2,3-dihydroindole, 3,3-bis(4-hydroxyaryl)oxyindoles, 5-chloroisatin, 5,7-dichloroisatin and 5-bromoisatin.

Of these, phloroglucitol and 1,3,5-tris(4-hydroxyphenyl)benzene are preferred.

Examples of usable end-terminating agents other than the monohydric alcohols (III) are monovalent carboxylic acids and derivatives thereof and monohydric phenols.

Representatives of such end-terminating agents (Y-1) are phenol, α-naphthol, β-naphthol, *o*-cresol, *m*-cresol, *p*-cresol, 2,3-xylenol, 2,4-xylenol, 2,5-xylenol, 2,6-xylenol, 3,4-xylenol, 3,5-xylenol, *p*-ethylphenol, *p*-propylphenol, *p*-butylphenol, *p*-pentylphenol, *p*-hexylphenol, *p*-heptylphenol, *p*-octylphenol, *p*-nonylphenol, *p*-decylphenol, *p*-undecylphenol, *p*-dodecylphenol, *p*-isopropylphenol, *p*-*tert*-butylphenol, 2,6-dimethyl-*p*-*tert*-butylphenol, 2-*tert*-pentyl-4-methylphenol, 3-methyl-6-*tert*-butylphenol, 2-methyl-4,6-di-*tert*-butylphenol, 2,4-di-*tert*-butylphenol, 2,6-di-*tert*-butyl-4-methylphenol, 4-*tert*-pentylphenol, 2,4,6-tri-*tert*-butylphenol, *p*-phenylphenol, 2,6-di-*tert*-butyl-4-phenylphenol, 2,6-di-*sec*-butyl-4-methylphenol, *o*-anisole, *m*-anisole, *p*-anisole, *o*-chlorophenol, *m*-chlorophenol, *p*-chlorophenol, *o*-bromophenol, *m*-bromophenol, *p*-bromophenol, *p*-ethoxyphenol, *o*-aminophenol, *m*-aminophenol, *p*-aminophenol, *p*-cyanophenol, *p*-nitrophenol, 3-methyl-6-isopropylphenol, 2-methyl-5-isopropylphenol, perfluorobutanoic acid, perfluoropentanoic acid, perfluorohexanoic acid, perfluoroheptanoic acid, perfluorooctanoic acid, perfluorononanoic acid, perfluorodecanoic acid, perfluoroundecanoic acid, perfluorododecanoic acid, perfluorotridecanoic acid, perfluorotetradecanoic acid, perfluoropentadecanoic acid, perfluorohexadecanoic acid, perfluorooctadecanoic acid, 2H,2H-perfluoropentanoic acid, 2H,2H-perfluorohexanoic acid, 2H,2H-perfluoroheptanoic acid, 2H,2H,perfluorooctanoic acid, 2H,2H-perfluorononanoic acid, 2H,2H-perfluorodecanoic acid, 2H,2H-perfluoroundecanoic acid, 2H,2H-perfluorododecanoic acid, 2H,2H-perfluorotridecanoic acid, 2H,2H,3H,3H-perfluorohexanoic acid, 2H,2H,3H,3H-perfluoroheptanoic acid, 2H,2H,3H,3H-perfluorooctanoic acid, 2H,2H,3H,3H-perfluorononanoic acid, 2H,2H,3H,3H-perfluorodecanoic acid, 2H,2H,5H-perfluoropetanoic acid, 2H,2H,6H-perfluorohexanoic acid, 2H,2H,7H-perfluoroheptanoic acid, 2H,2H,8H-perfluorooctanoic acid, 2H,2H,9H-perfluorononanoic acid, 2H,2H,10H-perfluorodecanoic acid, 2H,2H,11H-perfluoroundecanoic acid, 2H,2H,12H-perfluorododecanoic acid, 2H,2H,13H-perfluorotridecanoic acid, or acid halides of these compounds, *p*-(perfluoropentyl)phenol, *p*-(perfluorohexyl)phenol, *p*-(perfluoroheptyl)phenol, *p*-(perfluorooctyl)phenol, *p*-(perfluorononyl)phenol, *p*-(perfluorodecyl)phenol, *p*-(perfluoroundecyl)phenol, *p*-(perfluorododecyl)phenol, *p*-(perfluorotridecyl)phenol, *p*-(perfluorotetradecyl)phenol, *p*-(perfluoropentadecyl)phenol, *p*-(perfluorobutyloxy)phenol, *p*-(perfluoropentyloxy)phenol, *p*-(perfluorohexyloxy)phenol, *p*-(perfluoroheptyloxy)phenol, *p*-(perfluorooctyloxy)phenol, *p*-(perfluorononyloxy)phenol, *p*-(perfluorodecyloxy)phenol, *p*-(perfluoroundecyloxy)phenol, *p*-(perfluorododecyloxy)phenol, *p*-(perfluorotridecyloxy)phenol, *p*-(perfluorotetradecyloxy)phenol, *p*-(perfluoropentadecyloxy)phenol, 4-perfluorooctyl-2,3,5,6-tetrafluorophenol, 4-perfluorononyl-2,3,5,6-tetrafluorophenol, 4-perfluorodecyl-2,3,5,6-tetrafluorophenol, 4-perfluoroundecyl-2,3,5,6-tetrafluorophenol, 4-perfluorododecyl-2,3,5,6-tetrafluorophenol, 4-perfluorotridecyl-2,3,5,6-tetrafluorophenol, 4-perfluorotetradecyl-2,3,5,6-tetrafluorophenol, 4-perfluoropentadecyl-2,3,5,6-tetrafluorophenol, *p*-*tert*-perfluorobutylphenol, 3-methyl-4-perfluorononylphenol, *p*-(2-(1H,1H-perfluorooctyloxy)-1,1,1,3,3,3-hexafluoro-2-propyl)phenol, *p*-(2-(1H,1H-perfluorononyloxy)-1,1,1,3,3,3-hexafluoro-2-propyl)phenol, *p*-(2-1H,1H-perfluorodecyloxy)-1,1,1,3,3,3-hexafluoro-2-propyl)phenol, *p*-(2-(1H,1H-perfluoroundecyloxy)-1,1,1,3,3,3-hexafluoro-2-propyl)phenol, *p*-(2-(1H,1H-perfluorododecyloxy)-1,1,1,3,3,3-hexafluoro-2-propyl)phenol, 3,5-bis(perfluorohexyloxycarbonyl)phenol, *p*-(1H,1H-perfluoropentyloxy)phenol, *p*-(1H,1H-perfluorohexyloxy)phenol, *p*-(1H,1H-perfluoroheptyloxy)phenol, *p*-(1H,1H-perfluorooctyloxy)phenol, *p*-(1H,1H-perfluorononyloxy)phenol, *p*-(1H,1H-perfluorodecyloxy)phenol, *p*-(1H,1H-perfluoroundecyloxy)phenol, *p*-(1H,1H-perfluorododecyloxy)phenol, *p*-(1H,1H-perfluorotridecyloxy)phenol, perfluoropentyl *p*-hydroxybenzoate, perfluorohexyl *p*-hydroxybenzoate, perfluoroheptyl *p*-hydroxybenzoate, perfluorooctyl *p*-hydroxybenzoate, perfluorononyl *p*-hydroxybenzoate, perfluorodecyl *p*-hydroxybenzoate, perfluoroundecyl *p*-hydroxybenzoate, perfluorododecyl *p*-hydroxybenzoate, (*p*-hydroxybenzyl)perfluorohexane, (*p*-hydroxybenzyl)perfluoroheptane, (*p*-hydroxybenzyl)perfluorooctane, (*p*-hydroxybenzyl)perfluorononane, (*p*-hydroxybenzyl)perfluorodecane, (*p*-hydroxybenzyl)perfluoroundecane and (*p*-hydroxybenzyl)perfluorododecane.

Among these, preferred end-terminating agents (Y-2) are *p*-(tert-butyl)phenol, *p*-phenylphenol, *p*-(perfluorononylphenyl)phenol, *p*-(perfluoroctylphenyl)phenol, *p*-tert-perfluorobutylphenol, 1-(*p*-hydroxybenzyl)perfluorodecane, *p*-(2-(1H,1H-perfluorotridecyloxy)-1,1,1,3,3,3-hexafluoropropyl)phenol, 3,5-bis(perfluorohexyloxycarbonyl)phenol, perfluorododecyl *p*-hydroxybenzoate, *p*-(1H,1H-perfluorooctyloxy)phenol and 2H,2H,9H-perfluorononanoic acid.

The total content of the end-terminating agents is preferably 0.01 to 30 mol%, more preferably 1 to 10 mol%, in copolymerization ratio. Polymers containing more than 30 mol% of terminal groups derived from the end-terminating agents may tend to be worn due to their poor surface hardness to shorten printing life, and polymers containing less than 0.01 mol% of such groups increase the viscosity of solutions thereof, and sometimes make it difficult to synthesize the polymers and to produce photoreceptors by application of coating fluids.

The total content of the branching agents is preferably 0.01 to 30 mol%, more preferably 1 to 10 mol%, in copolymerization ratio. Polymers containing less than 0.01 mol% of branching units derived from the branching agents may tend to be worn due to their poor surface hardness to shorten printing life, and polymers containing more than 30 mol% of such groups increase the viscosity of solutions thereof, and sometimes make it difficult to synthesize the polymers and to produce photoreceptors by application of coating fluids.

The end-terminating agent and the branching agent are used in the presence of the above-described starting monomers by taking various methods. For example, they are made coexistent with the dihydric alcohol (I) and/or the dihydroxyaryl compound (II) from the beginning, to perform polymerization in one stage; or, after oligomerization of the dihydric alcohol (I) and/or the dihydroxyaryl compound (II), both of them are added in the subsequent polymerization stage; or, after oligomerization of the dihydric alcohol (I) and/or the dihydroxyaryl compound (II), the end-terminating agent is added to react with the oligomer, and then the branching agent is added to perform polymerization; or, after oligomerization of the dihydric alcohol (I) and/or the dihydroxyaryl compound (II), polymerization is performed by adding the branching agent to react with the oligomer, followed by addition of the end-terminating agent.

The polycondensation in the presence of an acid acceptor by using a carbonate precursor, for example, a carbonyl dihalide such as phosgene, a haloformate such as chloroformate, or a carbonate compound, is ordinarily carried out in a solvent. In cases where a gaseous carbonate precursor, such as phosgene, is used, it is preferable to blow it into the reaction system.

The amount of the carbonate precursor may be determined properly based on the stoichiometric ratio (equivalent) for the reaction thereof.

Examples of usable acid acceptors are alkali metal hydroxides, such as sodium hydroxide and potassium hydroxide, alkali metal carbonates, such as sodium carbonate and potassium carbonate, organic bases, such as pyridine, and mixtures thereof.

The amount of the acid acceptor may be determined properly based on the stoichiometric ratio (equivalent) for the reaction thereof. That is, it is desirable to use at least two equivalents, preferably 2 to 10 equivalents of the acid acceptor per mole (generally, one mole corresponds to two equivalents) of the total of the dihydric alcohol (I) and the dihydroxyaryl compound (II), and at least three equivalents, preferably 3 to 10 equivalents, per mole of the trihydric phenol (IV).

Usable solvents are various ones including the solvents conventionally used for the production of known polycarbonates, and may be used individually or as a solvent mixture. Representative solvents are hydrocarbons, such as toluene and xylene, and hydrocarbon halides, such as methylene chloride, chloroform and chlorobenzene. The interfacial polycondensation may be carried out by using two solvents non-compatible with each other.

To accelerate the polycondensation, it is desirable to add a catalyst, for example a tertiary amine, such as triethylamine, or a quaternary ammonium salt, to the reaction system. A small amount of an antioxidant, such as sodium sulfite or hydrosulfite, may also be added according to demands. The reaction is generally carried out at a temperature of 0 to 150°C, preferably 5 to 40°C. The reaction may be carried out at a reduced pressure, atmospheric pressure or an increased pressure, and generally proceeds sufficiently at atmospheric pressure or at the pressure in the reaction system. The reaction time depends on the reaction temperature or the like, and is generally 0.5 minutes to 10 hours, preferably one minutes to two hours.

The reaction may also be carried out by a two-stage process wherein first a part of the reaction materials comprising the dihydric alcohol (I) and/or the dihydroxyaryl compound (II) and, according to demands, the branching agent are allowed to react with the carbonate precursor to form an oligomer, and the remaining reaction materials are then added to complete the polycondensation. The two-stage process facilitates the control of the reaction, thereby enabling highly accurate adjustment of molecular weight.

Examples of bisaryl carbonates which may be used in the latter method for the interesterification thereof with the dihydric alcohol (I) and/or the dihydroxyaryl compound (II) and, according to demands, the branching agent and the

end-terminating agent, are di-*p*-tolyl carbonate, phenyl-*p*-tolyl carbonate, di-*p*-chlorophenyl carbonate and dinaphthyl carbonate.

Reaction procedures suitable for the interesterification are, for example, melt polycondensation and solid state polycondensation. In melt polycondensation, the dihydric alcohol (I) and/or the dihydroxyaryl compound (II) and, according to demands, the branching agent and the end-terminating agent are mixed with the bisaryl carbonate, and are then allowed to react in a molten state at a reduced pressure at a high temperature. The reaction is carried out generally at 150 to 350°C, preferably 200 to 300°C. In solid state polycondensation, the dihydric alcohol (I) and/or the dihydroxyaryl compound (II) and, according to demands, the branching agent and the end-terminating agent are mixed with the bisaryl carbonate, and then heated to a temperature not higher than the product polycarbonate, to undergo polycondensation while they are still in solid state. In either case, the reaction system is vacuumed at the final stage to 1 mmHg or lower, to distill away the phenols derived from bisaryl carbonates by the interesterification. The reaction time depends on the reaction temperature and the degree of vacuum, and is generally about 1 to 4 hours. The reaction is preferably carried out in the atmosphere of an inert gas, such as nitrogen or argon, and, according to demands, in the presence of a molecular weight regulator or an antioxidant.

The reduced viscosity of the product polymer may be adjusted within the above-described range by various methods, for example, by optimizing the above-described reaction conditions or the amounts of the branching agent and end-terminating agent. In certain circumstances, the product polymer may also be treated mechanically (mixing, fractionation or the like) and/or chemically (polymer reactions, crosslinking, partial decomposition or the like), to obtain a polymer of a predetermined reduced viscosity.

[3] RESIN COATING FLUID

The present invention further provide a resin coating fluid comprising the polymer of the present invention, a charge-transfer substance and a solvent.

The polymers of the present invention have good compatibility with various charge-transfer substances, and when dissolved in solvents, do not cause whitening or gelation. The resin coating fluid of the present invention comprising the polymer, a charge-transfer substance and a solvent is also stable during a long term storage without getting whitening or setting to gel. Therefore, electrophotographic photoreceptors having photosensitive layer produced by using the resin coating fluid give excellent, defect-free images since crystallization does not occur in their photosensitive layers.

The proportions of the polymer and the solvent in the resin coating fluid of the present invention are preferably such that the polymer is 1 to 30 % by weight, more preferably 5 to 20 % by weight, based on the total of the polymer and the solvent. The weight ratio of the polymer to the charge-transfer substance in the resin coating fluid is preferably from 20:80 to 80:20, more preferably from 30:70 to 70:30.

In the resin coating fluid of the present invention, the polymers of the present invention may be used individually or in a combination of two or more.

Other resins known to be the binder resins in electrophotographic photoreceptors also may be used so far as the attainment of the objects of the present invention is not hindered. Details of such resins will be described later together with the electrophotographic photoreceptor of the present invention.

Preferred solvents are aromatic solvents, such as benzene, toluene, xylene and chlorobenzene, ketones, such as acetone, methyl ethyl ketone and cyclohexanone, alcohols, such as methanol, ethanol and isopropanol, esters, such as ethyl acetate and ethyl cellosolve, hydrocarbon halides, such as carbon tetrachloride, chloroform, dichloromethane and tetrachloroethane, ethers, such as tetrahydrofuran and dioxane, dimethylformamide, dimethyl sulfoxide and diethylformamide.

These solvents may be used individually or as a solvent mixture of two or more.

Details of the charge-transfer substances which may be used in the resin coating fluid of the present invention will be described later together with the electrophotographic photoreceptor of the present invention. The resin coating fluid may contain one or more kinds of charge-transfer substances.

The resin coating fluid of the present invention, according to demands, may contain various additives to improve the properties of the photosensitive layer produced therefrom. Details of the additives will be described later together with the electrophotographic photoreceptor.

The resin coating fluid of the present invention is well suited for the production of the charge-transfer layer of lamination-type electrophotographic photoreceptors whose photosensitive layers contain, at least, one charge-generating layer and one charge-transfer layer. By adding a charge-generating substance thereto, the resin coating fluid may also be used for the production of the photosensitive layer of single-layer-type electrophotographic photoreceptors. Details of charge-generating substances which may be contained in the resin coating fluid of the present invention will also be described later together with the electrophotographic photoreceptor of the present invention.

[4] ELECTROPHOTOGRAPHIC PHOTORECEPTOR

The present invention further provides an electrophotographic photoreceptor which comprises a conductive substrate and a photosensitive layer that is disposed on the electroconductive substrate and contains a charge-generating substance, a charge-transfer substance and a binder resin, and is characterized in that the binder resin being the polymer of the present invention.

In the electrophotographic photoreceptor of the present invention, the photosensitive layer contains at least one kind of the above-described polymer as a binder resin, at least one charge-generation substance and at least one charge-transfer substance.

As far as the electrophotographic photoreceptor contains such a photosensitive layer disposed on a conductive substrate, it may have any structure, for example a known structure such as a single-layer-type or lamination-type structure, and is preferably a lamination-type electrophotographic photoreceptor wherein the photosensitive layer contains at least one charge-generation layer and at least one charge-transfer layer containing the above-described polymer as a binder resin.

In the electrophotographic photoreceptor of the present invention, the polymers of the present invention may be used individually or in a combination of two or more. According to demands, other resins, such as other polycarbonates, may also be contained so far as the attainment of the objects of the present invention is not hindered.

The conductive substrate of the electrophotographic photoreceptor of the present invention may be composed of any material, such as a known material, and examples of usable materials are a plate, drum or sheet of aluminum, nickel, chromium, palladium, titanium, gold, silver, copper, zinc, stainless steel, molybdenum, indium, platinum, brass, lead oxide, tin oxide, indium oxide, ITO or graphite; glass, cloth, paper or a plastic film sheet or seamless belt, each of which is endowed with conductivity by evaporation, spattering or coating of the above-described materials; and a plastic film, sheet or seamless belt with metal foil, such as aluminum foil, laminated thereon, and a metal drum oxidized by, for example, electrode oxidation.

The charge-generating layer of the lamination-type electrophotographic photoreceptor contains at least a charge-generating substance, and may be produced by, for example, forming a layer of the charge-generating substance on a underlying layer by a vacuum evaporation technique, a spattering technique or a CVD method, or by forming on a underlying layer, a layer wherein the charge-generating substance is fixed by a binder resin. Various methods, including known methods, may be used for the production of the charge-generating layer containing the binder resin, and a suitable method is to apply a coating fluid prepared by dispersing or dissolving both the charge-generating substance and the binder polymer in an appropriate solvent, followed by drying.

Usable charge-generating substances are various ones including known ones, for example, various inorganic materials, for example, selenium single substances, such as amorphous selenium and trigonal selenium, tellurium single substances, selenium alloys, such as selenium-tellurium alloy and selenium-arsenic alloy, selenium compounds or selenium-containing compositions, such as $As_2Se_3$, zinc oxide, cadmium sulfide, antimony sulfide, zinc sulfide, and inorganic materials composed of the elements of the Groups 12 and 16, such as CdS-Se alloy; various other inorganic materials, for example, oxide semiconductors, such as titanium oxide, and silicon materials, such as amorphous silicon; metal-free-phthalocyanines pigments, such as $\tau$-metal-free-phthalocyanine and $\chi$-metal-free-phthalocyanine; metallo-phthalocyanine pigments, such as $\alpha$-copper-phthalocyanine, $\beta$ -copper-phthalocyanine, $\gamma$-copper-phthalocyanine, $\varepsilon$-copper-phthalocyanine, X-copper-phthalocyanine, A-titanyl-phthalocyanine, B-titanyl-phthalocyanine, C-titanyl-phthalocyanine, D-titanyl-phthalocyaine, E-titanyl-phthalocyanine, F-titanyl-phthalocyanine, H-titanyl-phthalocyanine, G-titanyl-phthalocyanine, K-titanyl-phthalocyanine, L-titanyl-phthalocyanine, M-titanyl-phthalocyanine, N-titanyl-phthalocyanine and titanyl-phthalocyanines exhibiting a strong X-ray diffraction peak at a Bragg angle $2\theta$ of $27.3\pm0.2$ degree; cyanine dyes, anthracene pigments, bisazo pigments, pyrene pigments, polycyclic quinone pigments, quinacridone pigments, indigo pigments, perylene pigments, pyrylium dyes, thiapyrylium dyes, polyvinylcarbazole, squalium pigments, anthoanthorone pigments, benzimidazole pigments, azo pigments, thioindigo pigments, bisbenzimidazole pigments, quinoline pigments, lake pigments, oxazine pigments, dioxazine pigments, triphenylmethane pigments, azulenium dyes, squalium dyes, triarylmethane dyes, xanthine dyes and thiazine dyes.

For example, the compounds represented by the following general formulae are suitable.

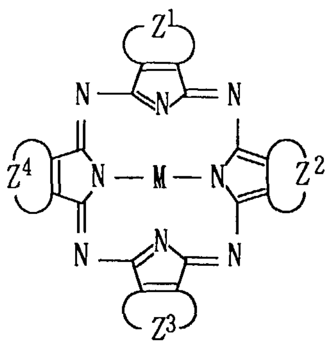

wherein $Z^1$, $Z^2$, $Z^3$ and $Z^4$ are each independently an atomic group which is linked to the two carbon atoms on each pyrrole ring to form an optionally substituted aromatic hydrocarbon ring or heterocyclic ring, and M is a metal atom or a metal compound which optionally contains two hydrogen atoms or ligands.

$$Ar^6(N = N - Cp)_t$$

wherein $Ar^6$ is a t-valent residue group which contains a conjugated system and, optionally, an aromatic hydrocarbon ring or a heterocyclic ring, t is a positive number of not less than 1, Cp is a coupler residue having an aromatic hydroxyl group, and, when t is two or more, Cp's may be identical with or different from each other.

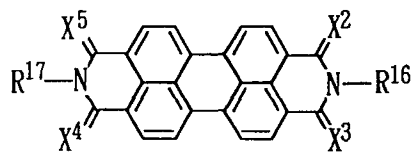

wherein $X^2$, $X^3$, $X^4$ and $X^5$ are each independently an oxygen atom, sulfur atom or selenium atom, $R^{16}$ and $R^{17}$ are each independently an alkyl or aryl group of 1 to 12 carbon atoms, $X^2$ or $X^3$ and $R^{16}$, or, $X^4$ or $X^5$ and $R^{17}$ may optionally be linked to each other to form an optionally substituted heterocyclic ring.

Examples of fluorene disazo pigments are given bellow.

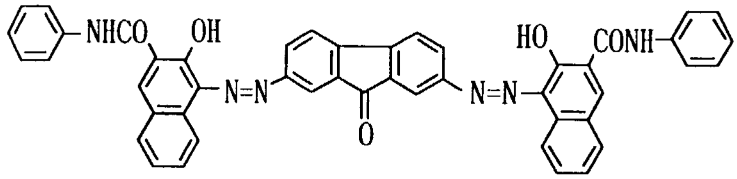

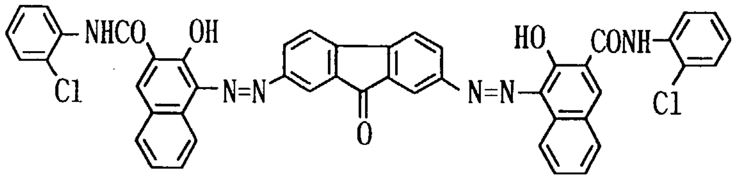

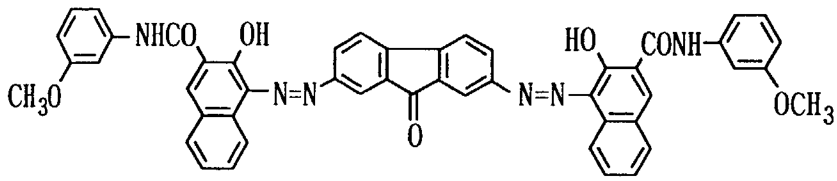

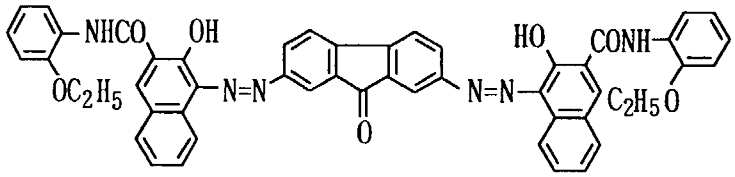

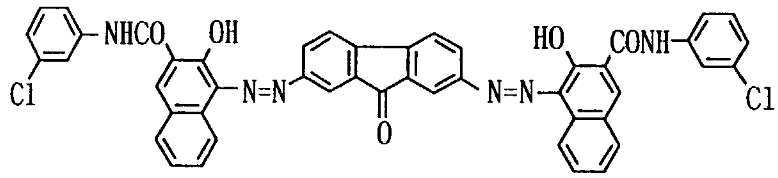

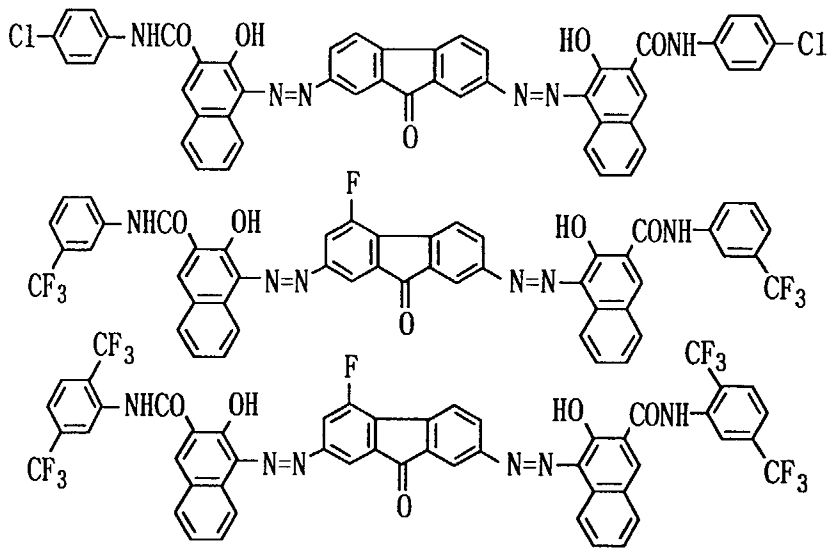

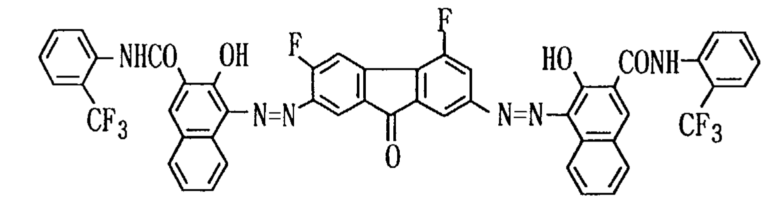

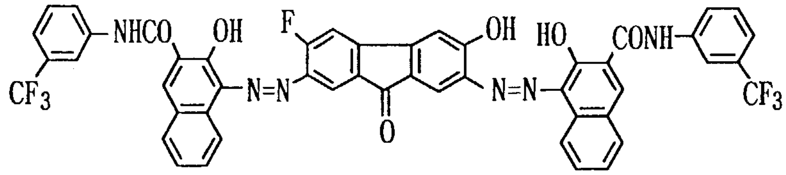

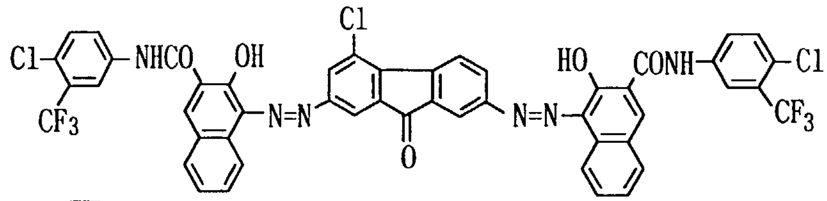

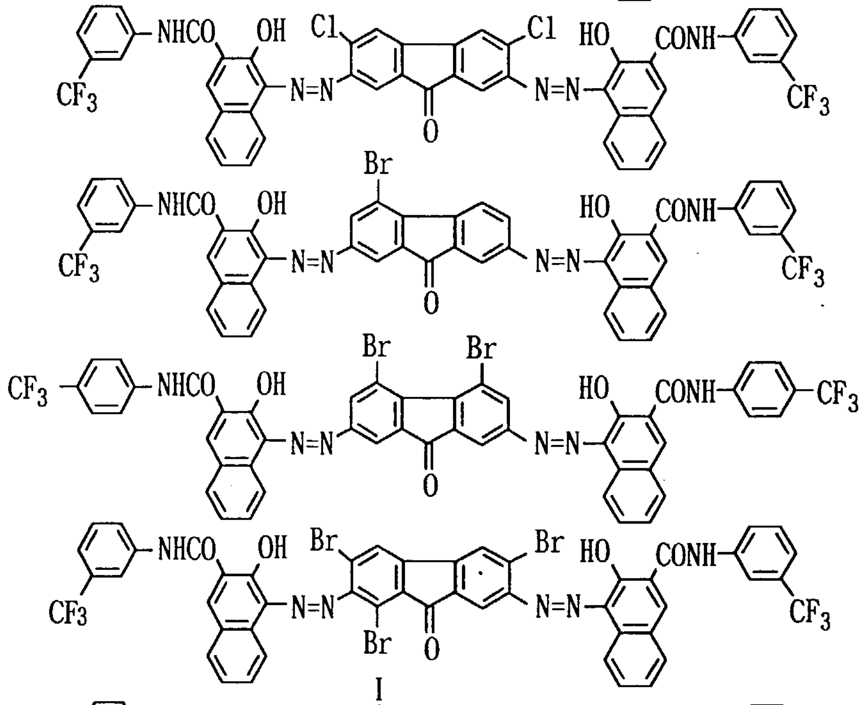

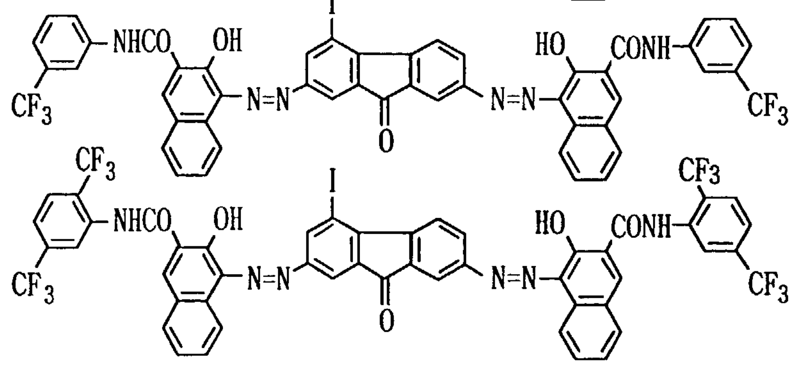

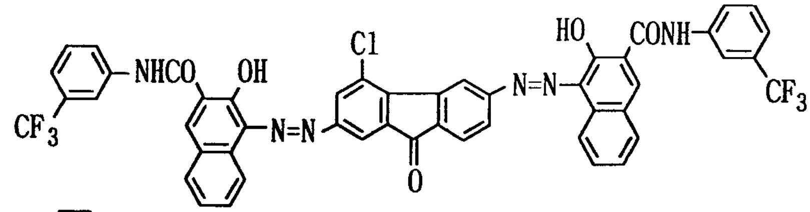

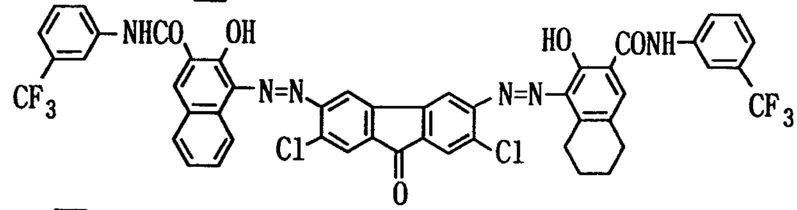

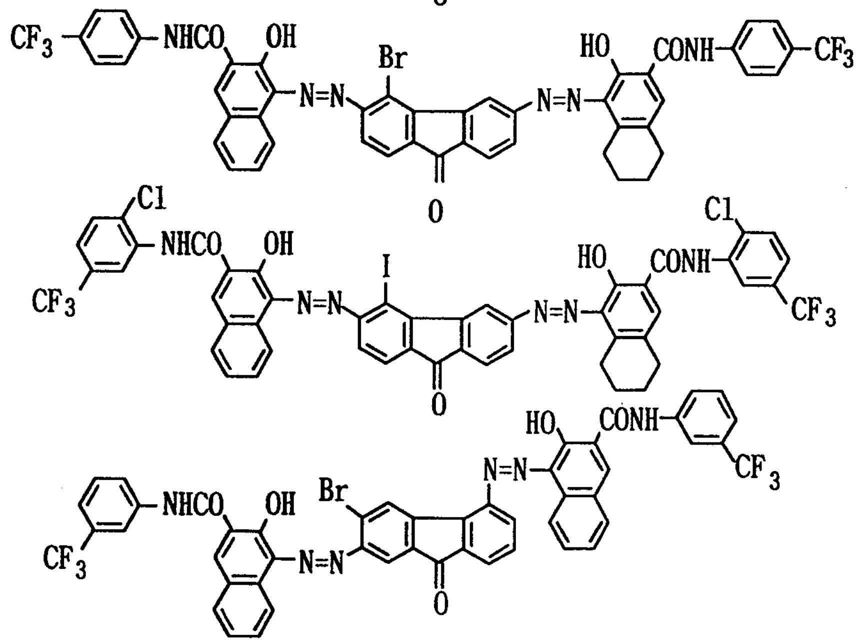

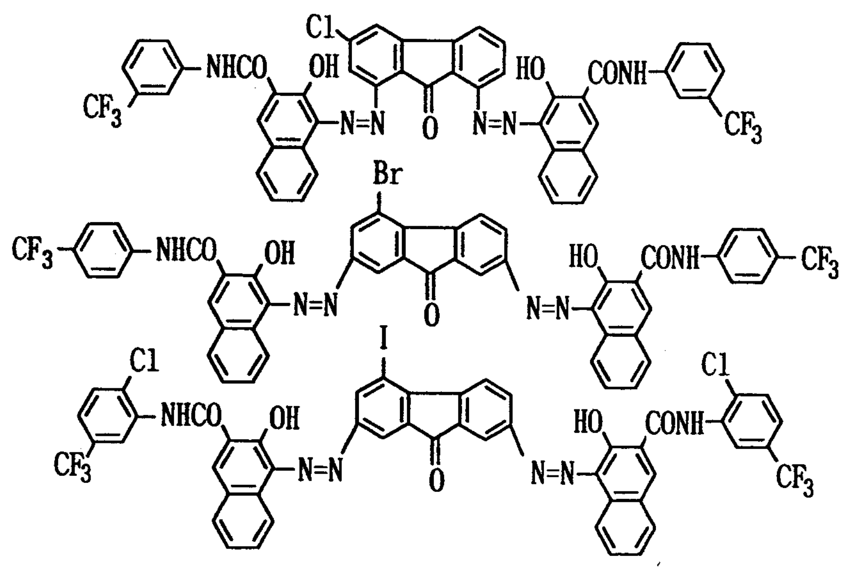

Examples of the perylene pigments are given bellow.

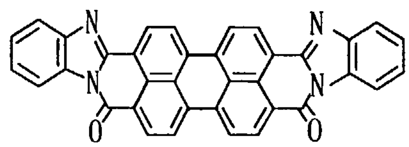

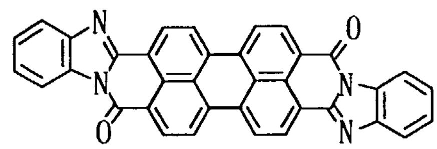

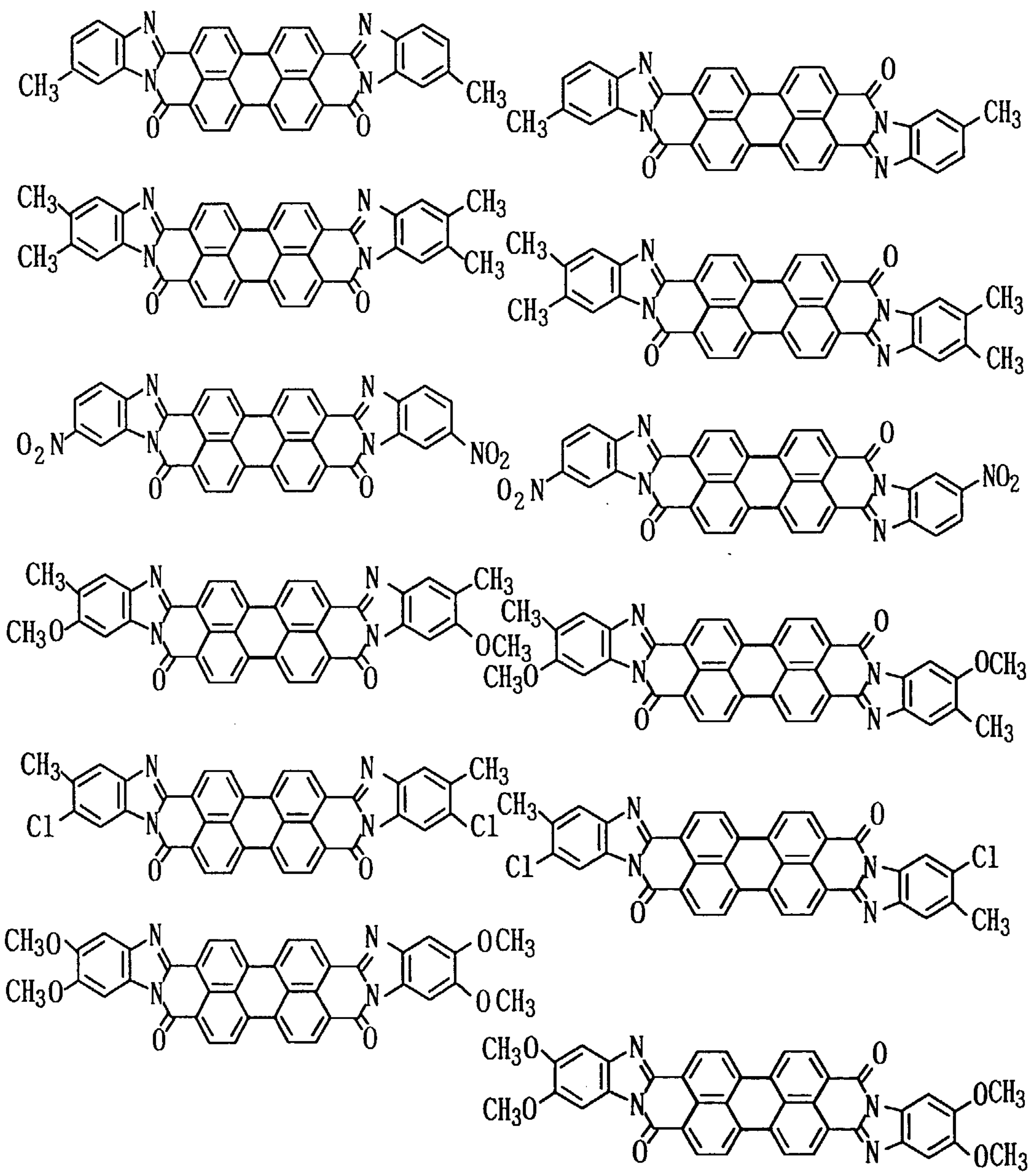

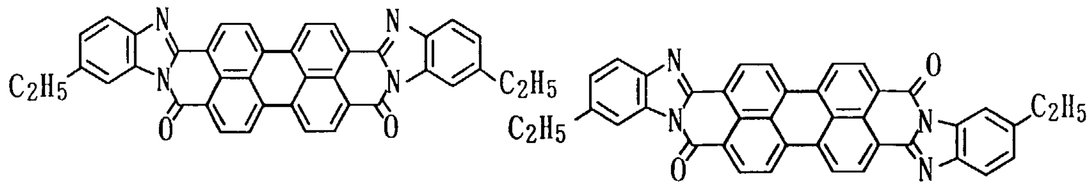

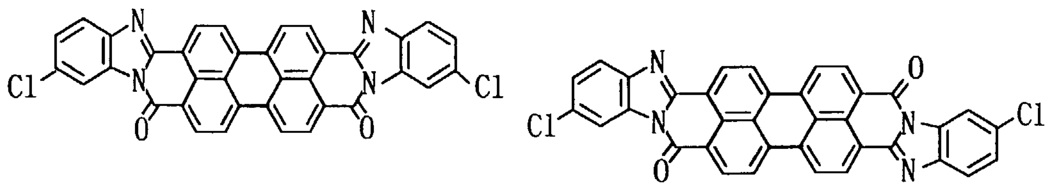

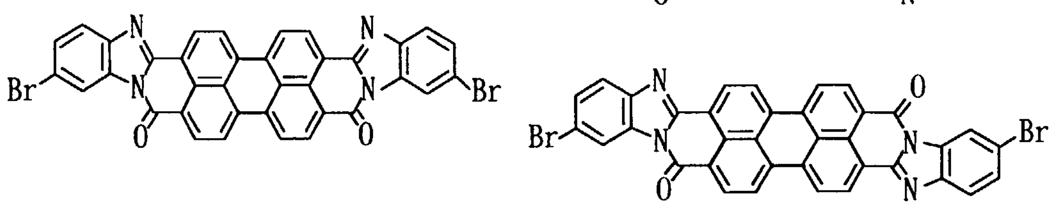

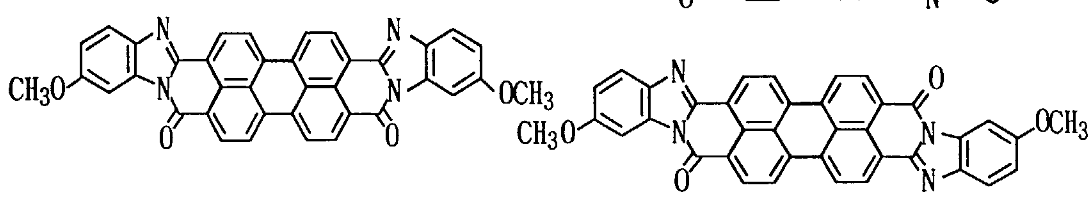

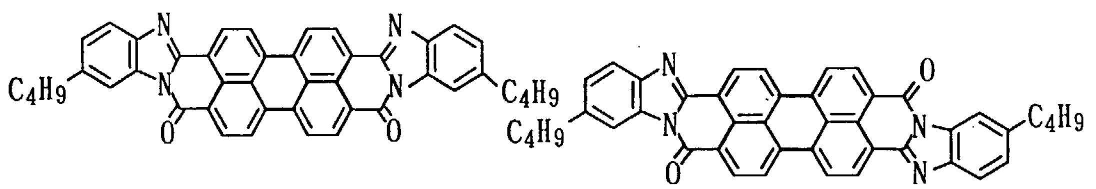

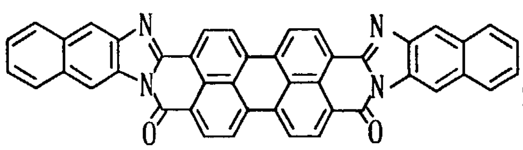

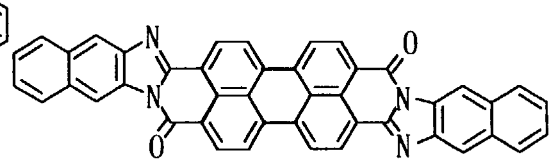

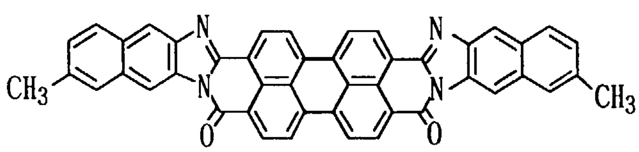

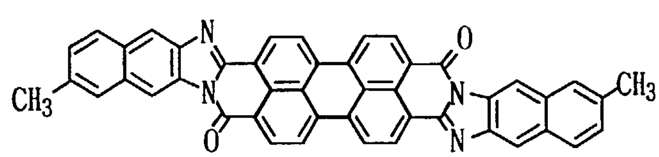

Examples of polycyclic quinone pigments are given bellow.

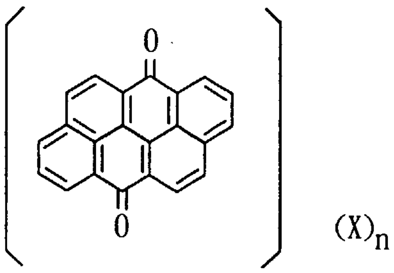

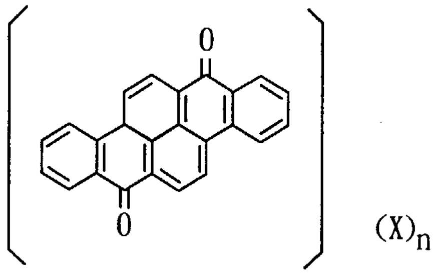

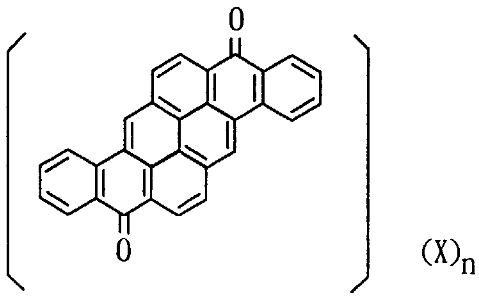

X: a halogen atom or
a nitro, cyano, acyl
or carboxyl group
n = an integer of 0 to 6

Examples of anthoanthrone pigments are given bellow.

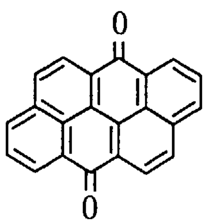

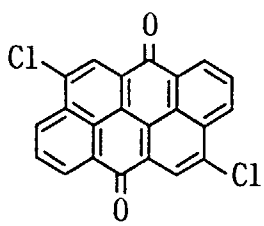

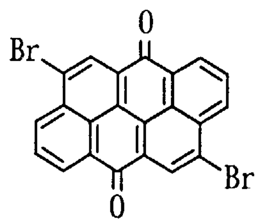

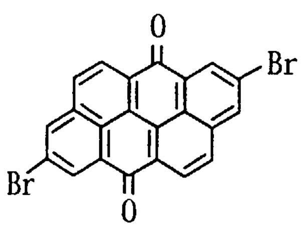

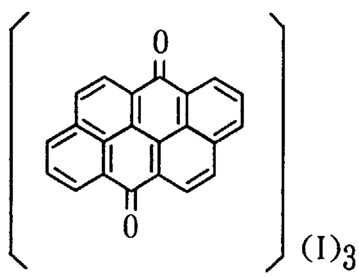

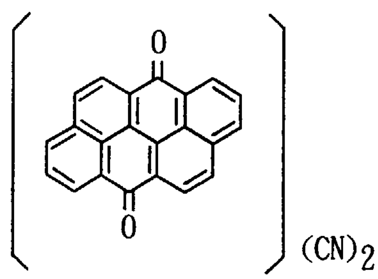

Examples of dibenzpyrenequinone pigments are given bellow.

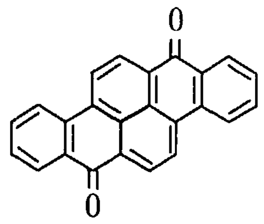

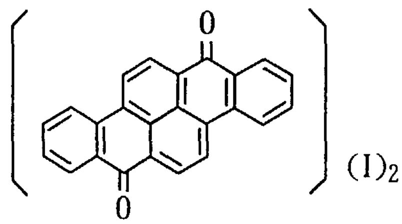

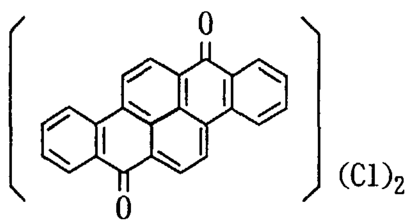

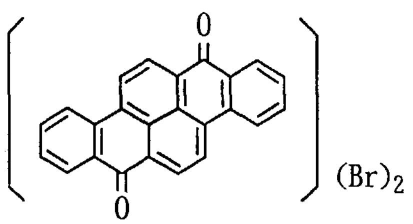

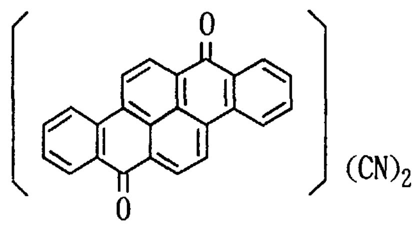

Examples of pyranthrone pigments are given bellow.

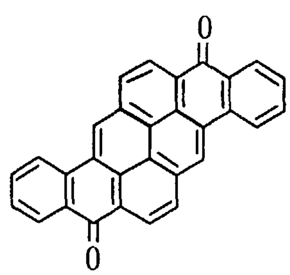

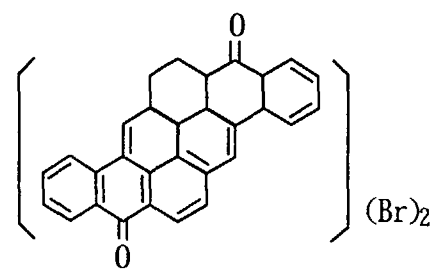

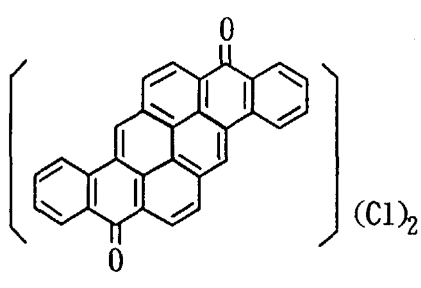

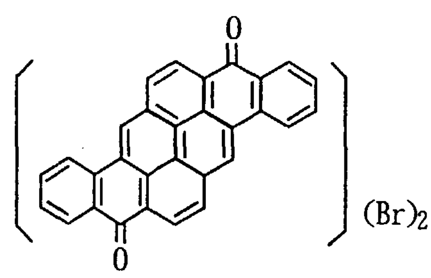

These pigments may be used individually or as a mixture of two or more.

The charge-generating layer is preferably 0.01 to 2.0 μm, more preferably 0.1 to 0.8 μm in thickness. A charge-generating layer of less than 0.01 μm is difficult to form evenly, and that of more than 2.0 μm tends to deteriorate the electrophotographic properties.

The binder resins which may be used in the charge-generating layer are not particularly limited and may be various ones including known ones. Representative binder resins are thermosetting resins, such as polystyrene, polyvinyl chloride, polyvinyl acetate, vinyl chloride-vinyl acetate copolymer, polyvinyl acetal, alkyd resins, acrylic resins, polyacrylonitrile, polycarbonates, polyurethanes, epoxy resins, phenolic resins, polyamides, polyketones, polyacrylamides, butyral resins, polyesters, vinylidene chloride-vinyl chloride copolymer, methacrylic resins, polystyrene, styrene-butadiene copolymer, vinylidene chloride-acrylonitrile copolymer, vinyl chloride-vinyl acetate-maleic anhydride copolymer, silicone resins, silicone-alkyd resins, phenol-formaldehyde resins, styrene-alkyd resins, poly-N-vinylcarbazole, polyvinyl butyral, polyvinylformal, polysulfones, casein, gelatin, polyvinyl alcohol, ethyl cellulose, nitro cellulose, carboxy-methyl cellulose, vinylidene chloride-base polymer latex, acrylonitrile-butadiene copolymer, vinyltoluene-styrene copolymer, soybean oil-modified alkyd resins, nitrated polystyrene, polymethylstyrene, polyisoprene, polythiocarbonates, polyallylates, polyhaloallylates, polyallyl ethers, polyvinyl acrylate, melamine resins, polyether resins, benzoguanamine resin, epoxy acrylate resins, urethane acrylate resins and polyester acrylates.

The polymer of the present invention may also be used as the binder resin in the charge-generating layer.

The charge-transfer layer may be produced by forming a layer wherein a charge-transfer substance is fixed by a binder resin on an underlying layer, for example, a charge-generating layer. The charge-transfer layer can be produced by various method including known methods, preferably by coating an underlying layer with a coating fluid prepared by dispersing or dissolving both a charge-transfer substance and the polymer of the present invention in an appropriate solvent, such as the resin coating fluid of the present invention, followed by drying. The weight ratios of the charge-transfer substance and the polymer of the present invention is preferably from 20:80 to 80:20, more preferably from 30:70 to 70:30.

In the charge-transfer layer, the polymers of the present invention may be used individually or as a mixture of two or more. Other resins, such as the above-described binder resins for the charge-generating layer, may also be used along with the resin of the present invention, so far as the attainment of the object of the present invention is not hindered.

The charge-transfer substances which may be used are various ones including known ones. Typical examples are carbazole compounds, indole compounds, imidazole compounds, oxazole compounds, pyrazole compounds, oxadiazole compounds, pyrazoline compounds, thiadiazole compounds, aniline compounds, hydrazone compounds, aromatic amine compounds, aliphatic amine compounds, stilbene compounds, fluorenone compounds, quinone compounds, quinodimethane compounds, thiazole compounds, triazole compounds, imidazolone compounds, imidazolidine compounds, bisimidazolidine compounds, oxazolone compounds, benzthiazole compounds, benzimidazole compounds, quinazoline compounds, benzfuran compounds, acridine compounds, phenazine compounds, poly-N-vinylcarbazole, polyvinylpyrene, polyvinylanthracene, polyvinylacridine, poly-9-vinylphenylanthracene, pyrene-formaldehyde resin, ethylcarbazole resins, and polymers containing these structures in main chains or side chains.

Preferred are those represented by the following general formulae.

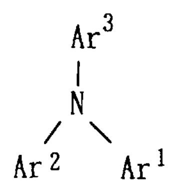

wherein $Ar^1$, $Ar^2$ and $Ar^3$ are each independently a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, substituted or non-substituted condensed-polycyclic hydrocarbon group, a heterocyclic group, a polycyclic-heterocyclic group or a condensed-polycyclic-heterocyclic group, $Ar^1$ and $Ar^2$, $Ar^2$ and $Ar^3$, and $Ar^3$ and $Ar^1$ may optionally be linked to each other to form a ring, respectively.

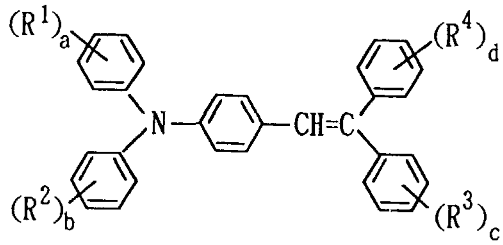

wherein $R^1$, $R^2$, $R^3$ and $R^4$ are each independently cyano group, a halogen atom, carboxyl group, an acyl group, hydroxyl group, nitro group, amino group, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, and a, b, c and d are each independently an integer of 0 to 5.

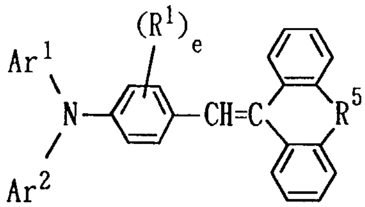

wherein $Ar^1$ and $Ar^2$ are each independently hydrogen atom, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, $Ar^1$ and $Ar^2$ may optionally be linked to form a ring, $R^1$ is cyano group, a halogen atom, carboxyl group, an acyl group, hydroxyl group, nitro group, amino group, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyciic-heterocyclic group, $R^5$ is ethylene or ethenylene group, and e is an integer of 0 to 4.

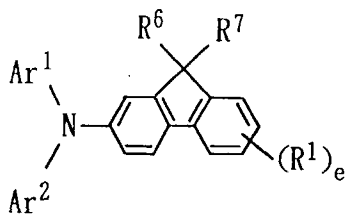

wherein $Ar^1$ and $Ar^2$ are each independently hydrogen atom, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, $Ar^1$ and $Ar^2$ may optionally be linked to form a ring, $R^1$ is cyano group, a halogen atom, carboxyl group, an acyl group, hydroxyl group, nitro group, amino group, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic

group or a condensed-polycyclic-heterocyclic group, $R^6$ and $R^7$ are each independently hydrogen atom, an alkyl group of 1 to 6 carbon atoms or a halogen atom, and e is an integer of 0 to 4.

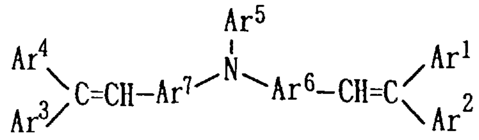

wherein $Ar^1$, $Ar^2$, $Ar^3$, $Ar^4$ and $Ar^5$ are each independently hydrogen atom, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, $Ar^6$ and $Ar^7$ are each independently a substituted or non-substituted alkylene group of 1 to 6 carbon atoms, or a divalent residue of a substituted or non-substituted aryl compound of 6 to 12 carbon atoms, a polycyclic hydrocarbon, a substituted or non-substituted condensed-polycyclic hydrocarbon compound, a heterocyclic compound, a polycyclic-heterocyclic compound or a condensed-polycyclic-heterocyclic compound, $Ar^1$ and $Ar^2$, and, $Ar^3$ and $Ar^4$ may optionally be linked to form a ring, respectively.

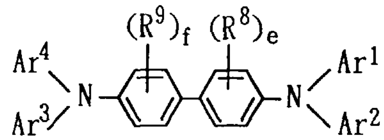

wherein $Ar^1$, $Ar^2$, $Ar^3$ and $Ar^4$ are each independently hydrogen atom, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, $Ar^1$ and $Ar^2$, and, $Ar^3$ and $Ar^4$ may optionally be linked to form a ring, respectively, $R^8$ and $R^9$ are each independently cyano group, a halogen atom, carboxyl group, an acyl group, hydroxyl group, nitro group, amino group, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, e and f are each independently an integer of 0 to 4.

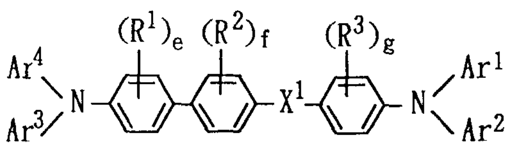

wherein $Ar^1$, $Ar^2$, $Ar^3$ and $Ar^4$ are each independently hydrogen atom, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, $Ar^1$ and $Ar^2$, and, $Ar^3$ and $Ar^4$ may optionally be linked to form a ring, respectively, $R^1$, $R^2$ and $R^3$ are each independently cyano group, a halogen atom, carboxyl group, an acyl group, hydroxyl group, nitro group, amino group, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-hetero-

cyclic hydrocarbon group, a heterocyclic group, a polycyclic-heterocyclic group or a condensed-polycyclic-heterocyclic group, e, f, and g are each independently an integer of 0 to 4, $X^1$ is -O-, -S-, -Se-, -Te-, $-CR^{10}R^{11}-$, $-SiR^{10}R^{11}-$, $-NR^{10}-$ or $-PR^{10}-$ (wherein $R^{10}$ and $R^{11}$ are each independently hydrogen, a halogen atom an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group).

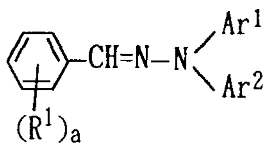

wherein $Ar^1$ and $Ar^2$ are each independently hydrogen atom, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, $Ar^1$ and $Ar^2$ may optionally be linked to form a ring, $R^1$ is cyano group, a halogen atom, carboxyl group, an acyl group, hydroxyl group, nitro group, amino group an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, and a is an integer of 0 to 5.

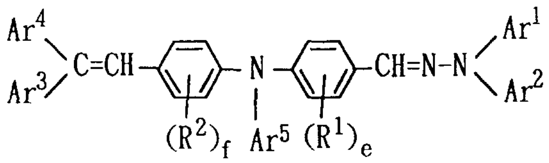

wherein $Ar^1$, $Ar^2$, $Ar^3$, $Ar^4$ and $Ar^5$ are each independently hydrogen atom, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, $R^1$ and $R^2$ are each independently cyano group, a halogen atom, carboxyl group, an acyl group, hydroxyl group, nitro group, amino group, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, $Ar^1$ and $Ar^2$, and, $Ar^3$ and $Ar^4$ may optionally be linked to form a ring, respectively, and f and e are each independently an integer of 0 to 4.

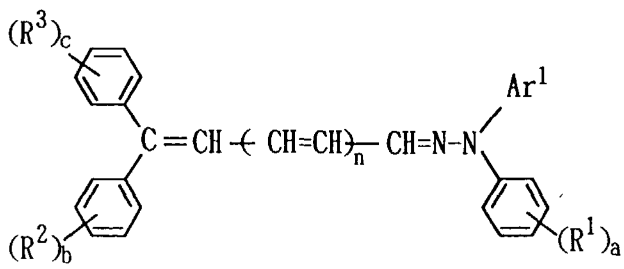

wherein $Ar^1$ is hydrogen atom, a substituted or non-substituted alkyl group of 1 to 10 carbon atoms, a substituted or

non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, $R^1$, $R^2$ and $R^3$ are each independently cyano group, a halogen atom, carboxyl group, an acyl group, hydroxyl group, nitro group, amino group an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, and n is 0 or 1, a, b and c are each independently an integer of 0 to 5.

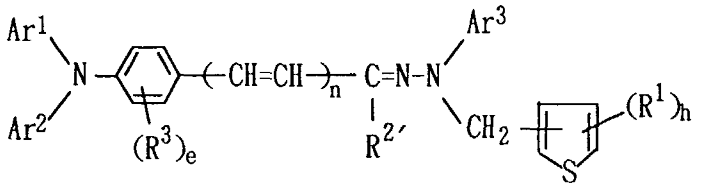

wherein $Ar^1$, $Ar^2$ and $Ar^3$ are each independently hydrogen atom, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, $R^1$ and $R^3$ are each independently cyano group, a halogen atom, carboxyl group, an acyl group, hydroxyl group, nitro group, amino group, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, $R^{2'}$ is hydrogen atom, cyano group, a halogen atom, carboxyl group, an acyl group, hydroxyl group, nitro group, amino group, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, n is 0 or 1, e is an integer of 0 to 4, and h is an integer of 0 to 3.

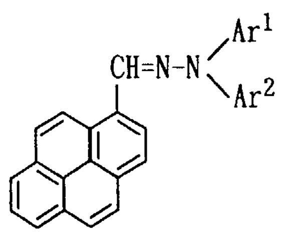

wherein $Ar^1$ and $Ar^2$ are each independently hydrogen atom, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, and $Ar^1$ and $Ar^2$ may optionally be linked to form a ring.

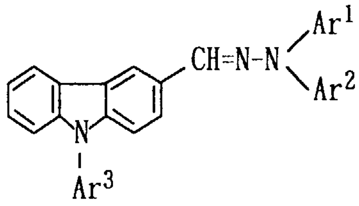

wherein $Ar^1$, $Ar^2$ and $Ar^3$ are each independently hydrogen atom, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, and $Ar^1$ and $Ar^2$ may optionally be linked to form a ring.

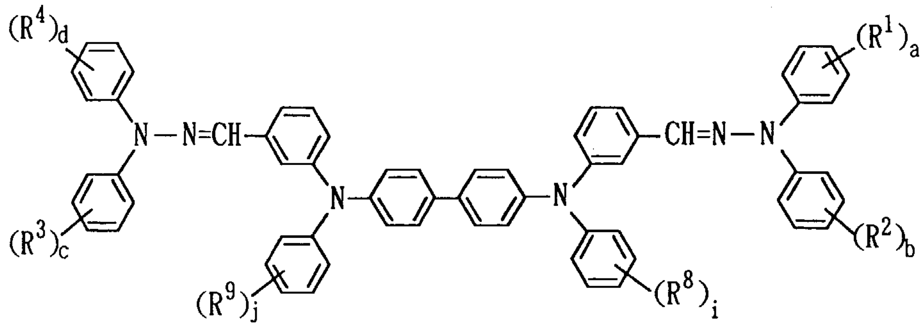

wherein $R^1$, $R^2$, $R^3$, $R^4$, $R^8$ and $R^9$ are each independently cyano group, a halogen atom, carboxyl group, an acyl group, hydroxyl group, nitro group, amino group, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, and a, b, c, d, i and j are each independently an integer of 0 to 5.

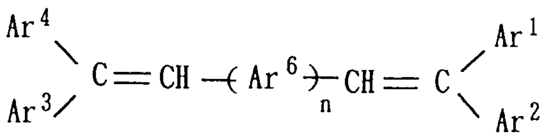

wherein $Ar^1$, $Ar^2$, $Ar^3$ and $Ar^4$ are each independently hydrogen atom, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, $Ar^6$ is a substituted or non-substituted alkylene group of 1 to 6 carbon atoms or a divalent residue of a substituted or non-substituted aryl compounds of 6 to 12 carbon atoms, a polycyclic hydrocarbon, a substituted or non-substituted condensed-polycyclic hydrocarbon, a heterocyclic compound, a polycyclic-heterocyclic compound or a condensed-polycyclic-heterocyclic compound, $Ar^1$ and $Ar^2$, and, $Ar^3$ and $Ar^4$ may optionally be linked to form a ring, respectively, and n is 0 or 1.

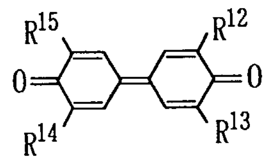

wherein $R^{12}$, $R^{13}$, $R^{14}$ and $R^{15}$ are each independently hydrogen atom, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group.

Representative examples are the following compounds.

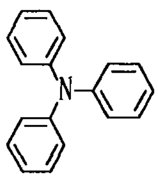
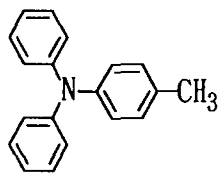
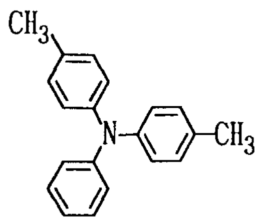
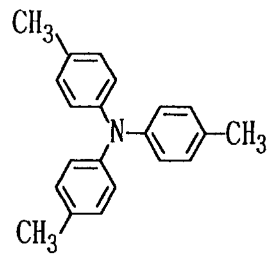

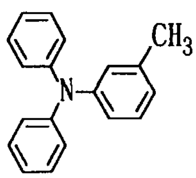
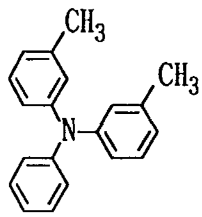
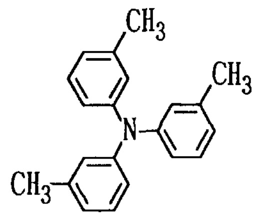
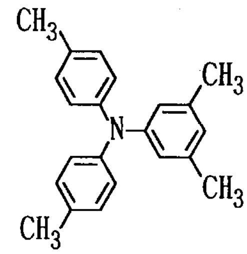

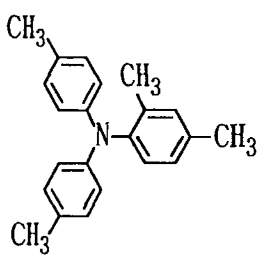
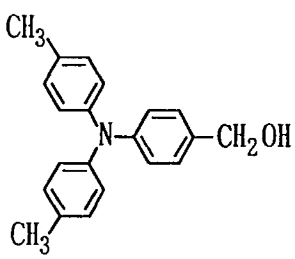
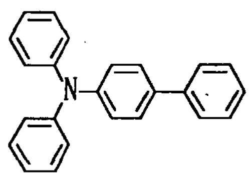
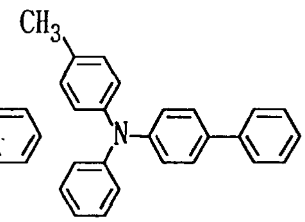

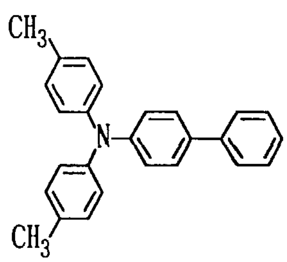
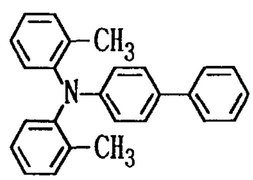
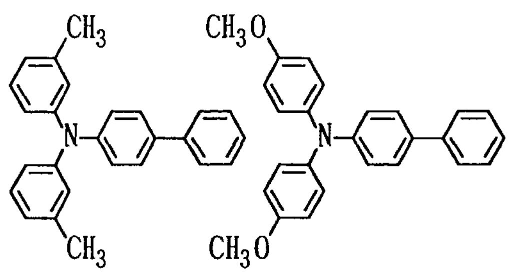

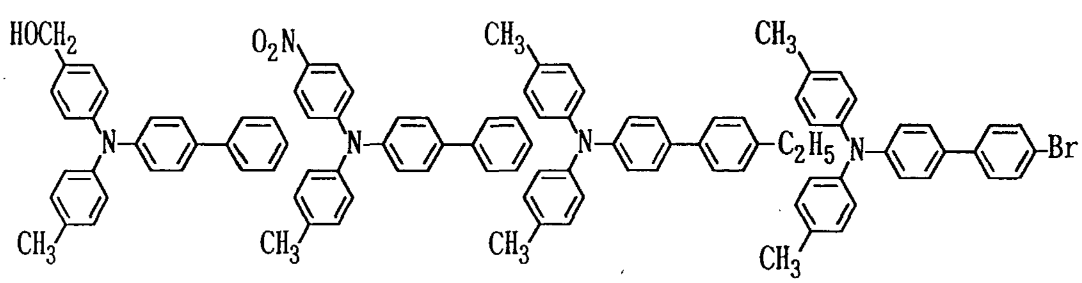

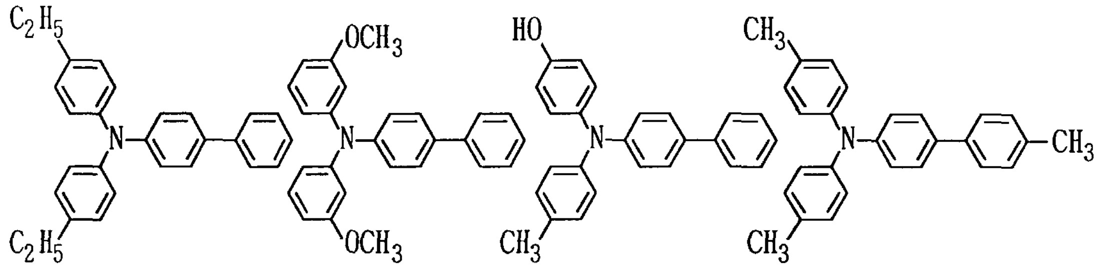

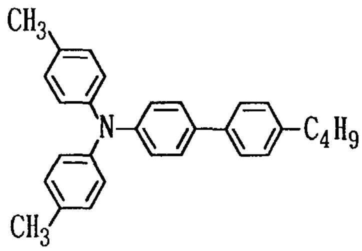

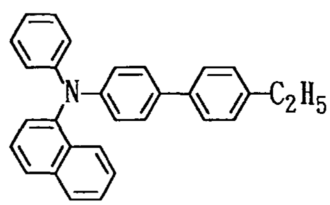

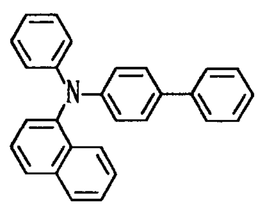

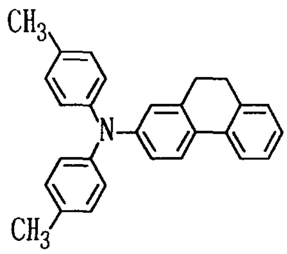

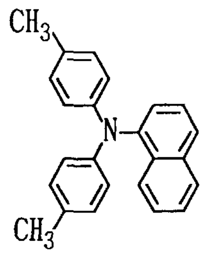

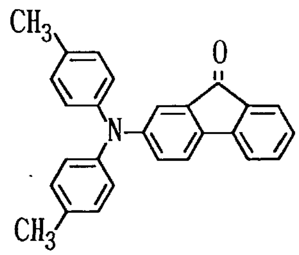

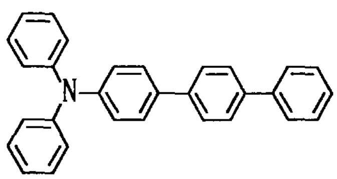

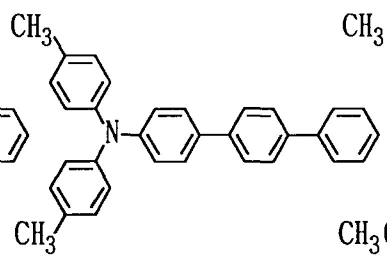

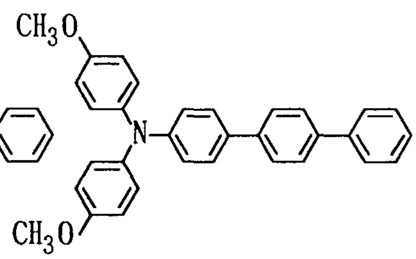

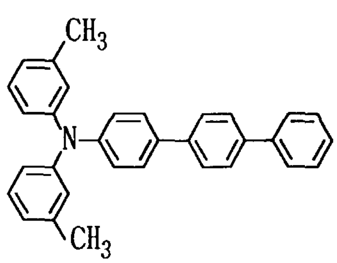

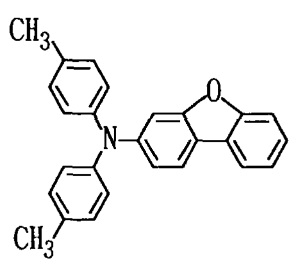

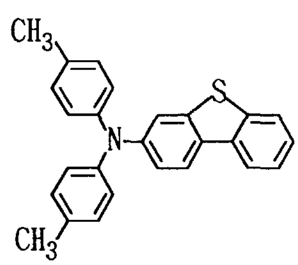

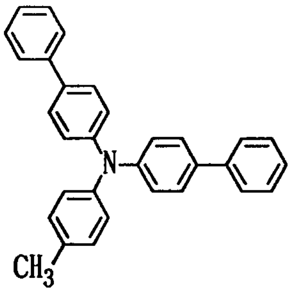
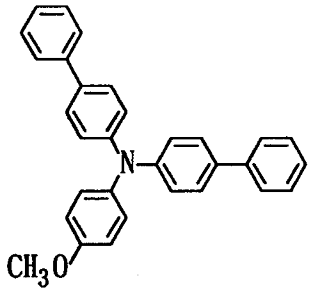
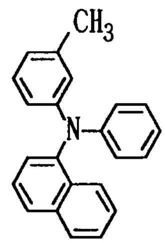
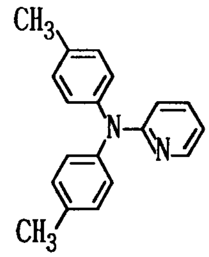

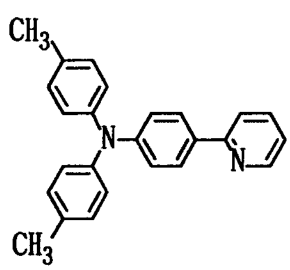
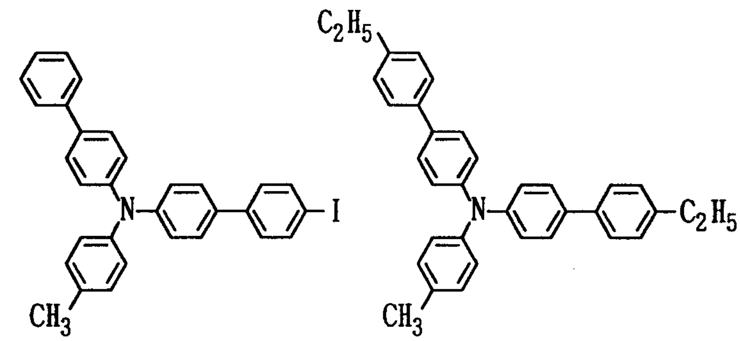

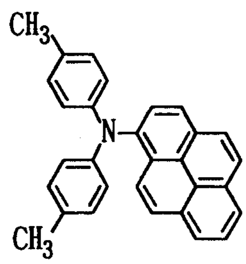
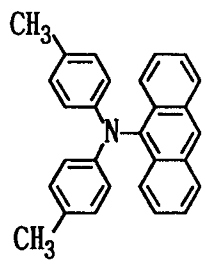
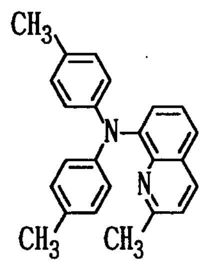
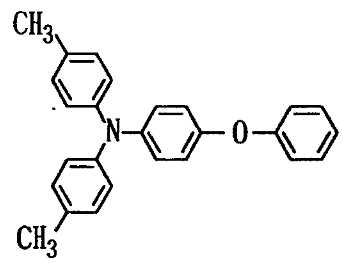

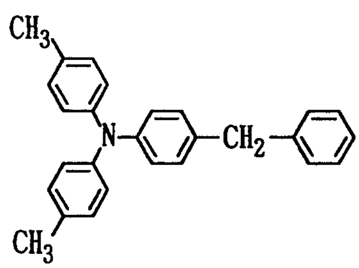
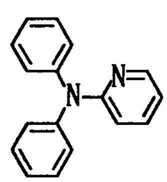
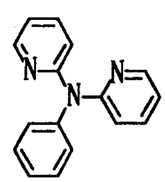
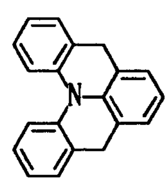

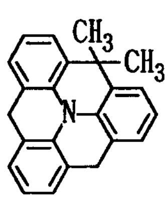

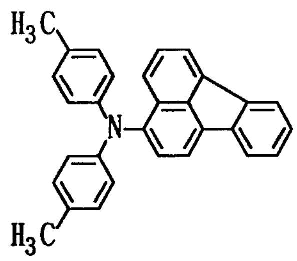
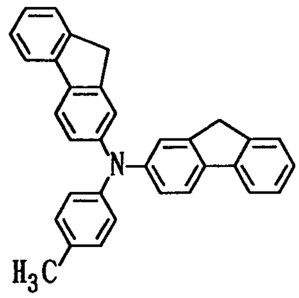
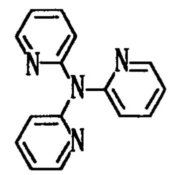
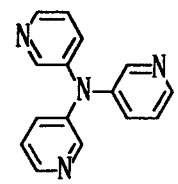
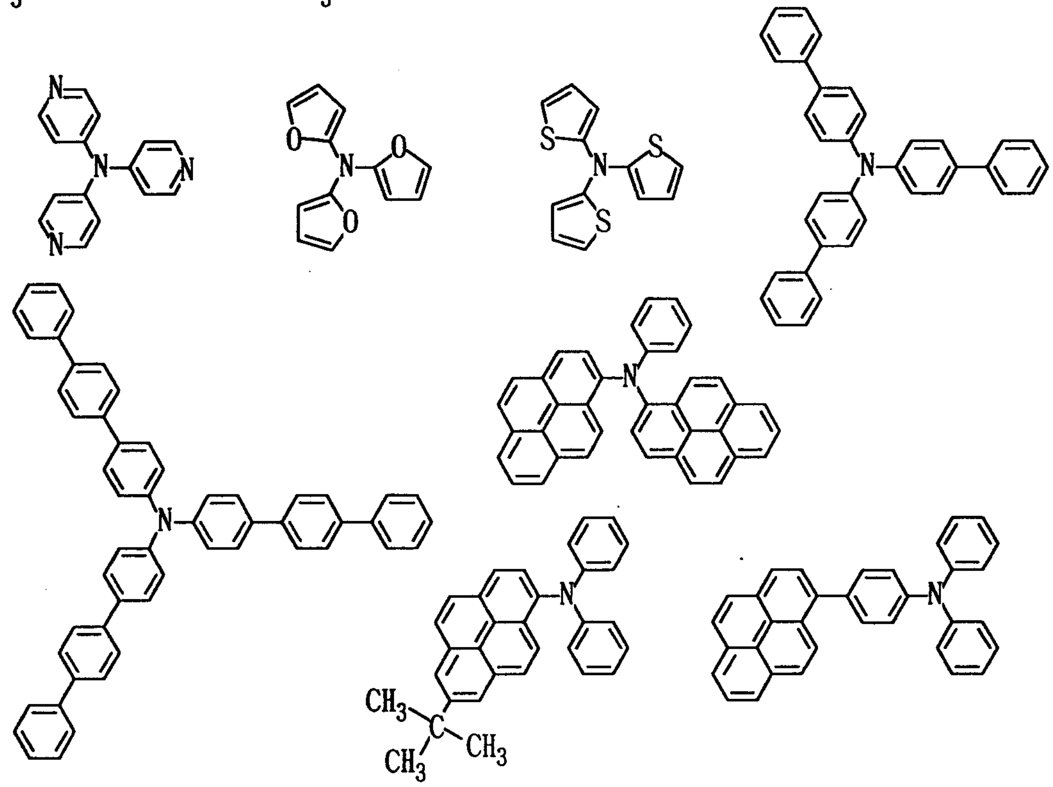
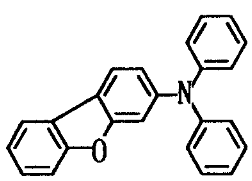
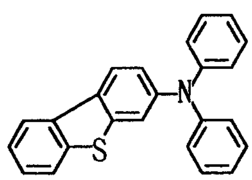
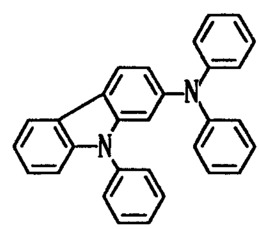
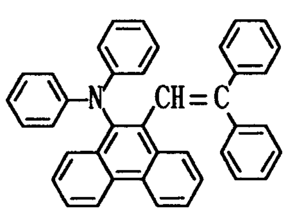
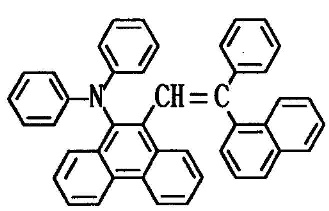
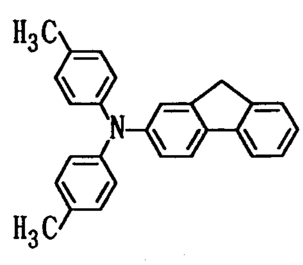

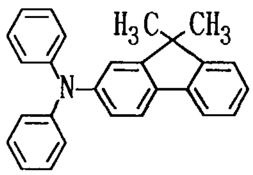

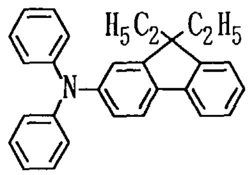

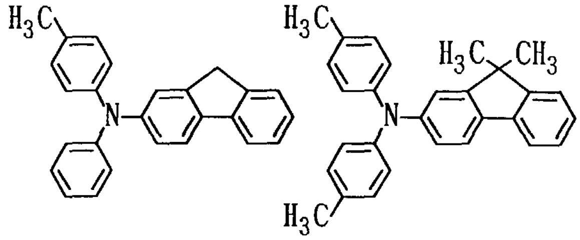

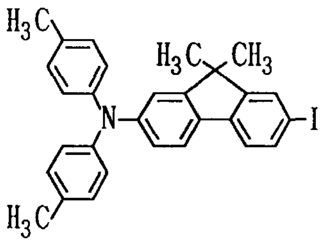

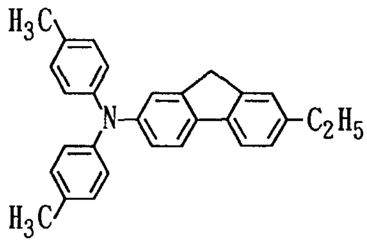

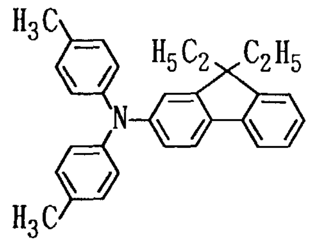

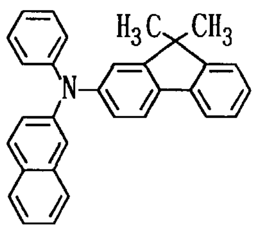

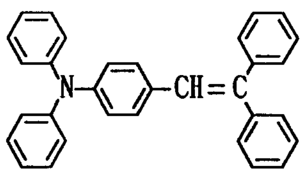
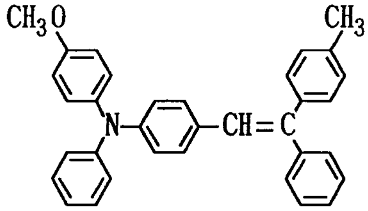
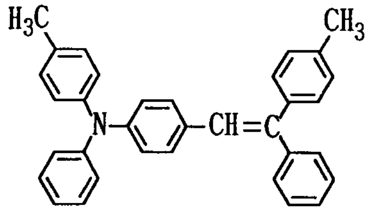

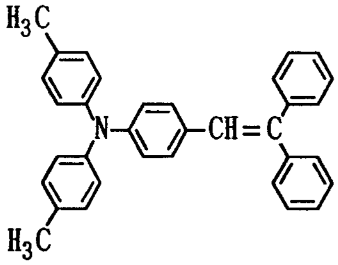
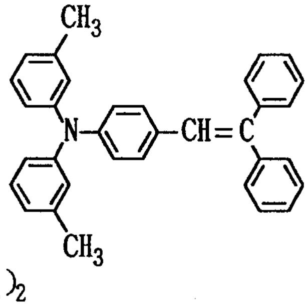
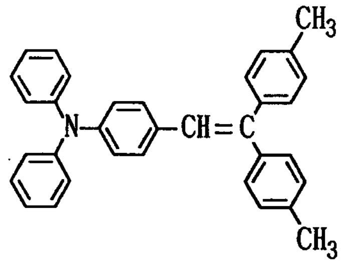

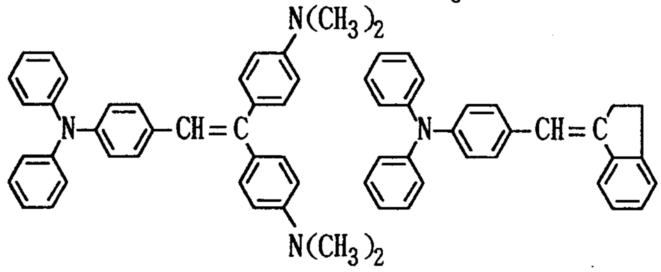
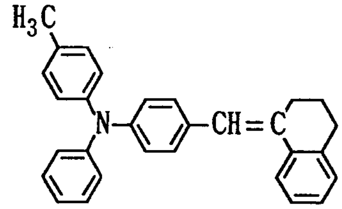

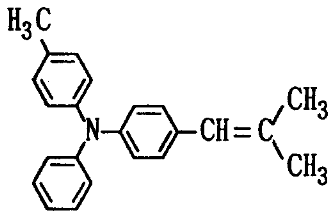
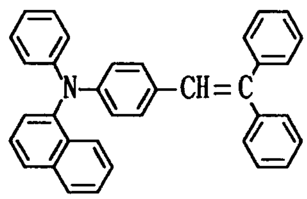
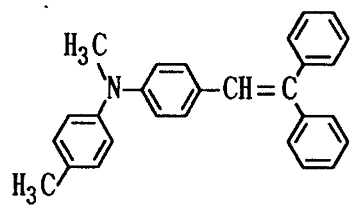

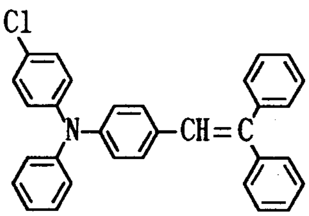
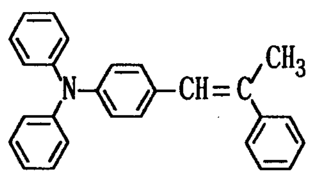
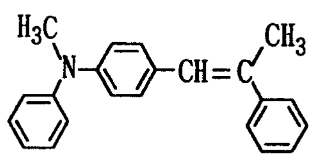

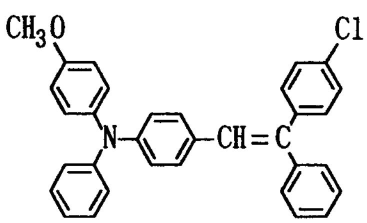
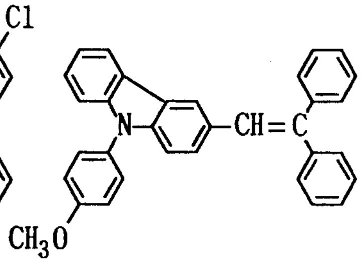
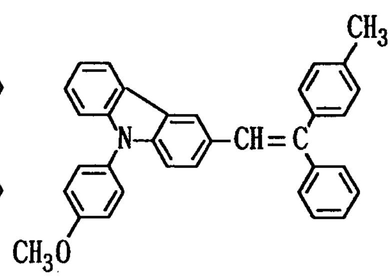

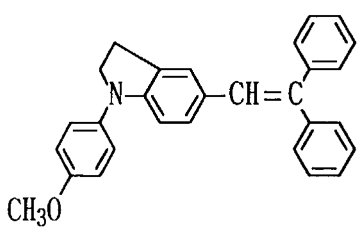
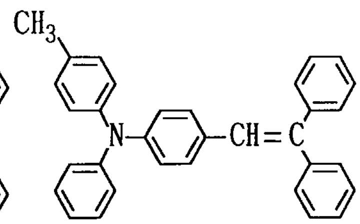
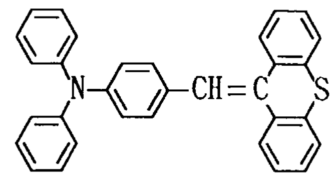

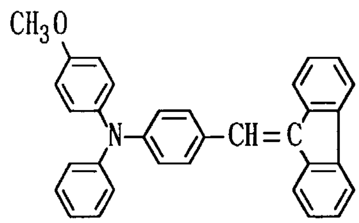
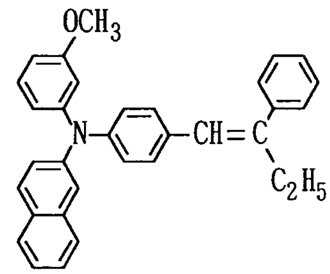
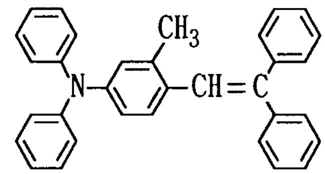

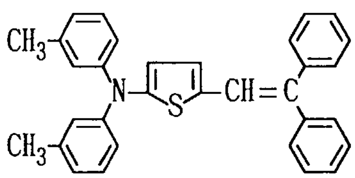
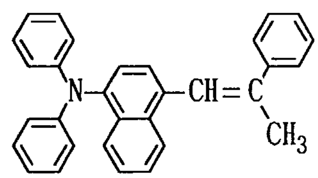
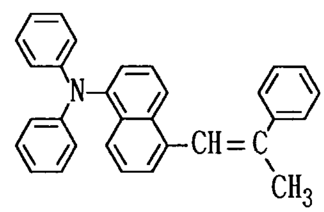

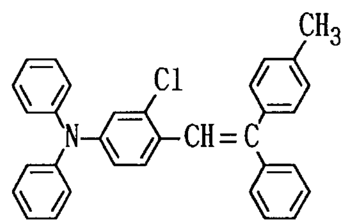
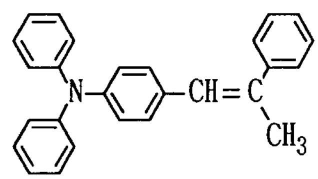
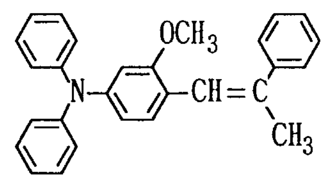

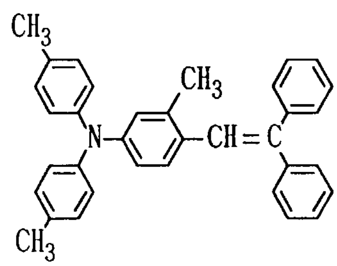
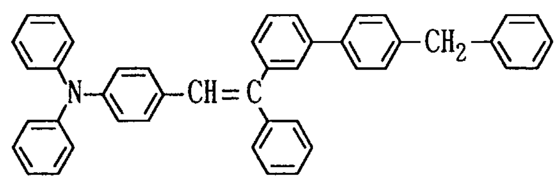

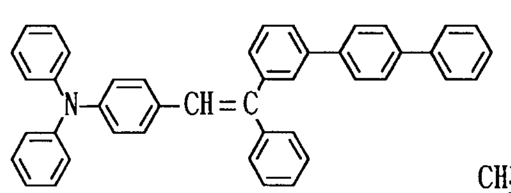
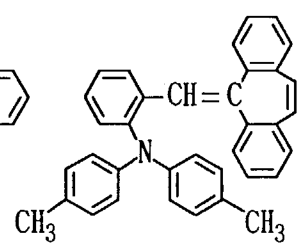

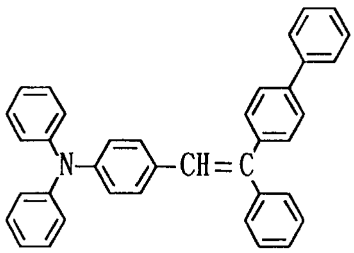

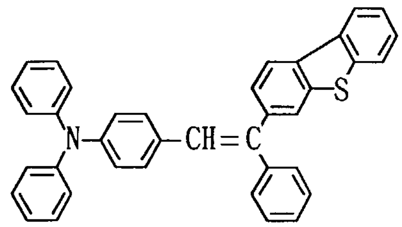

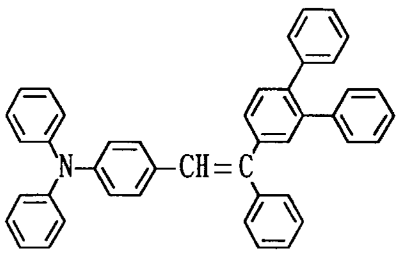

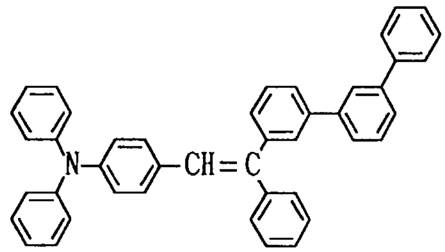

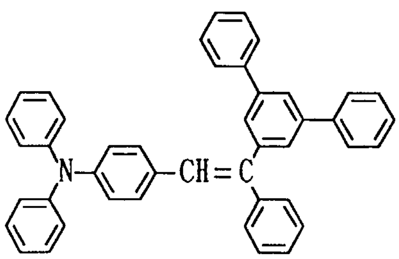

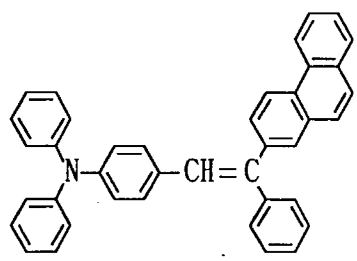

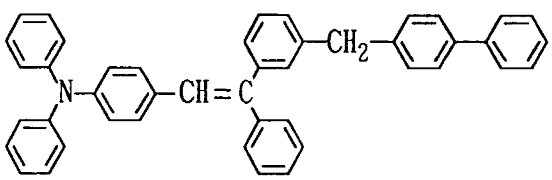

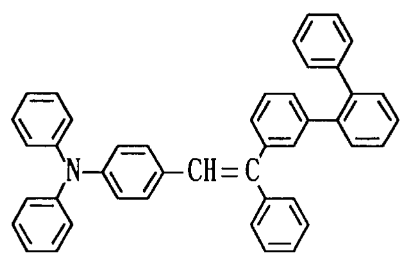

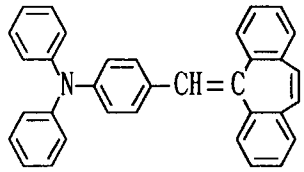

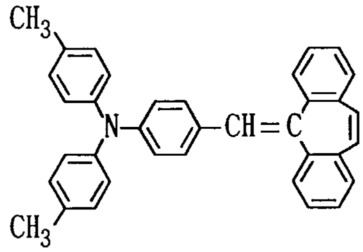

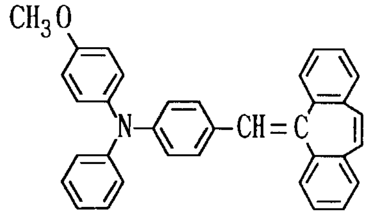

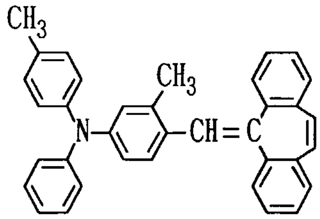

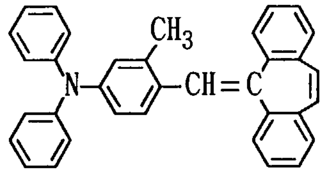

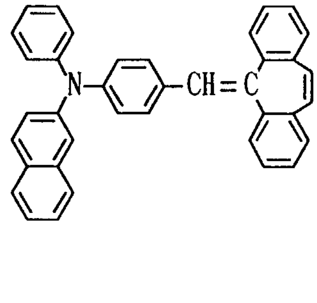

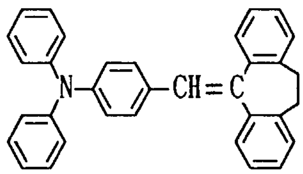

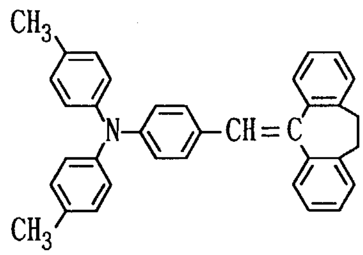

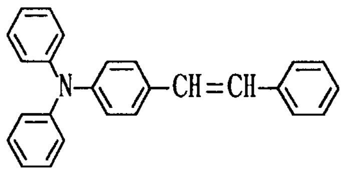

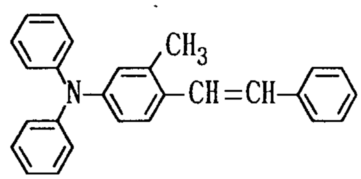

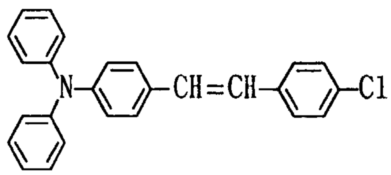

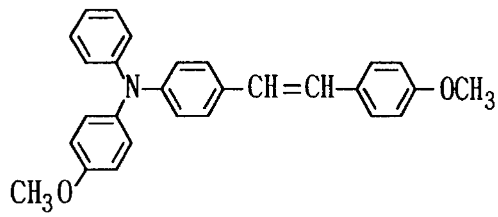

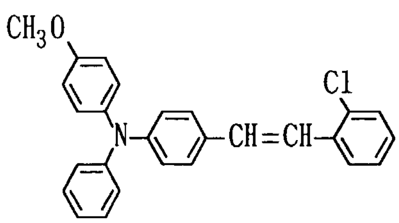

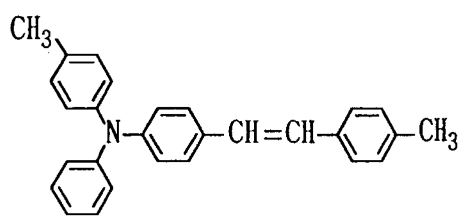

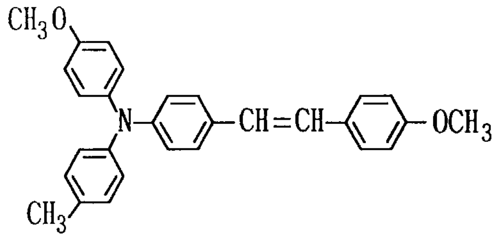

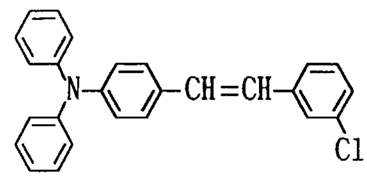

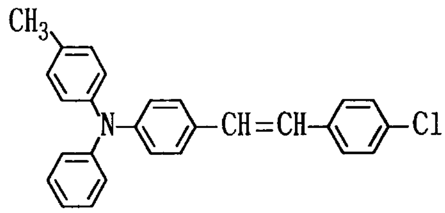

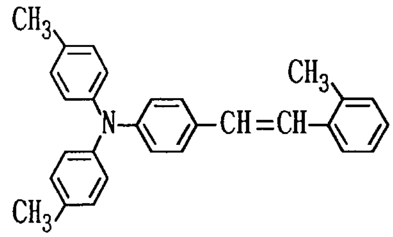

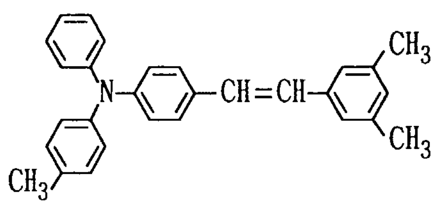

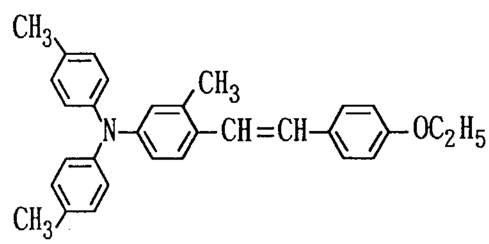

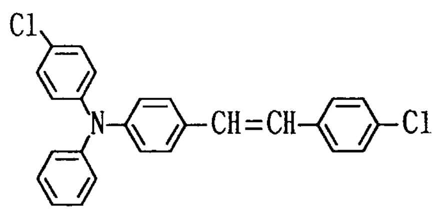

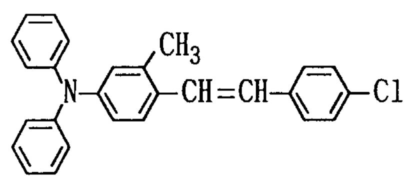

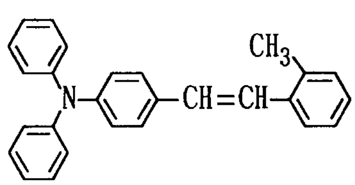

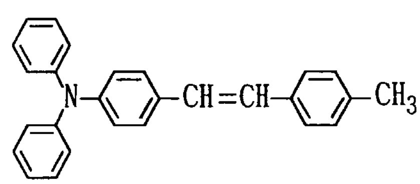

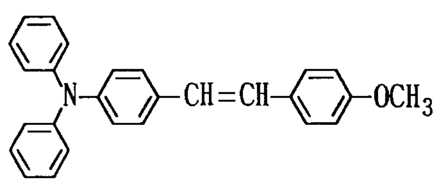

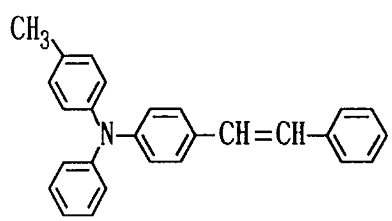

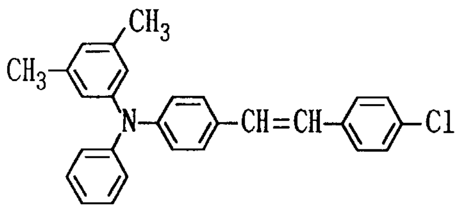

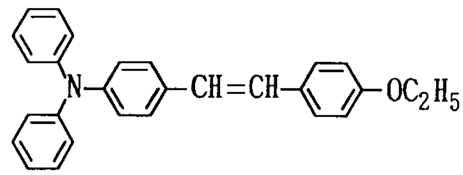

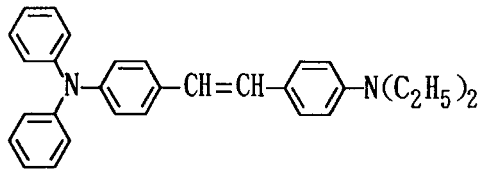

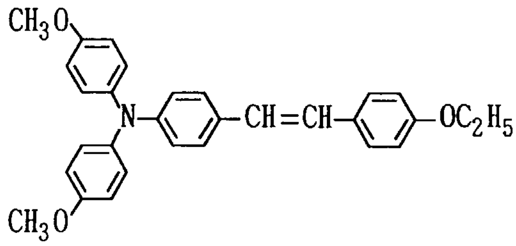

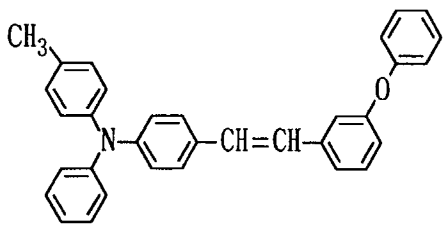

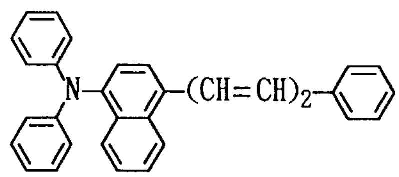

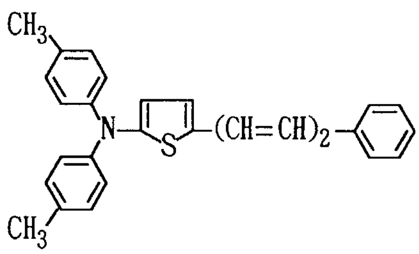

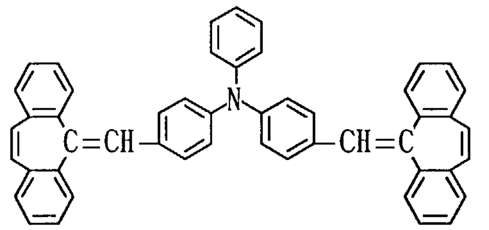

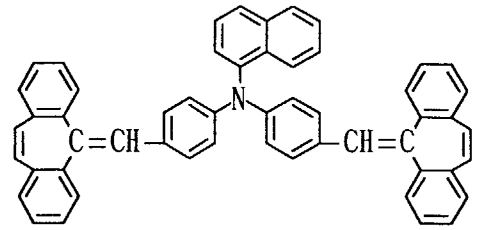

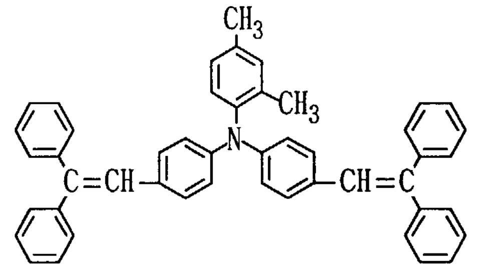

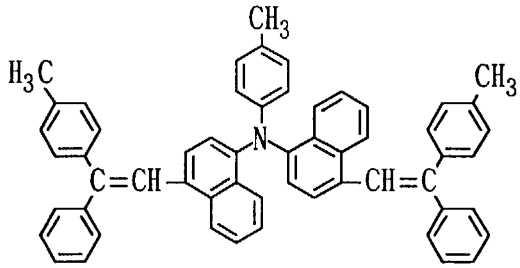

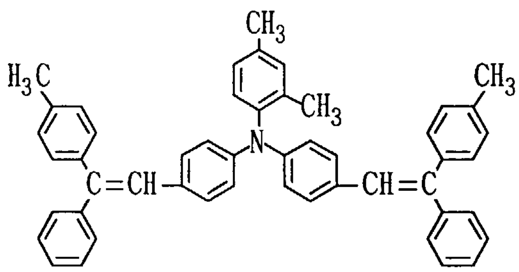

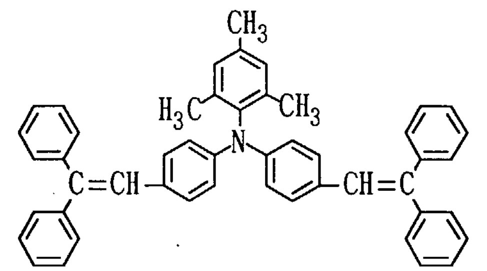

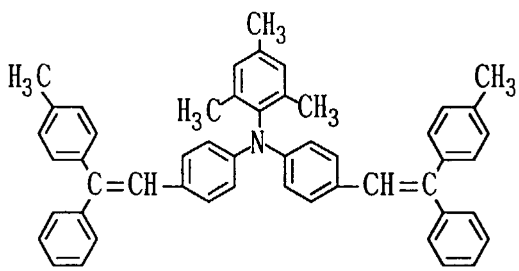

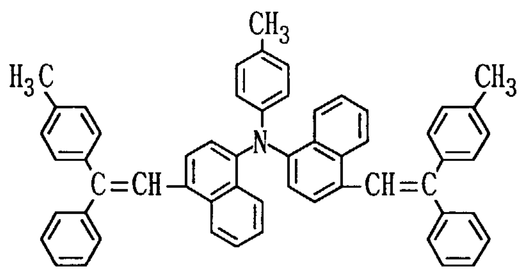

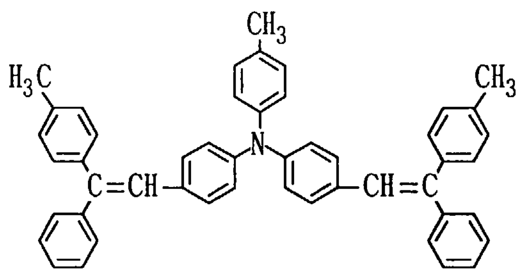

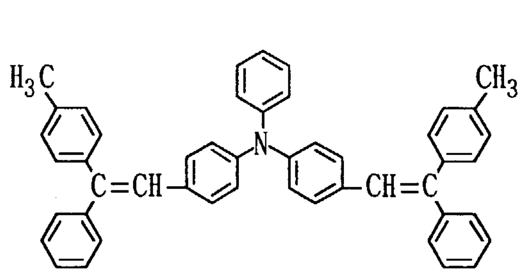

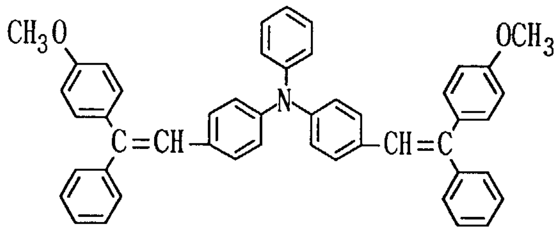

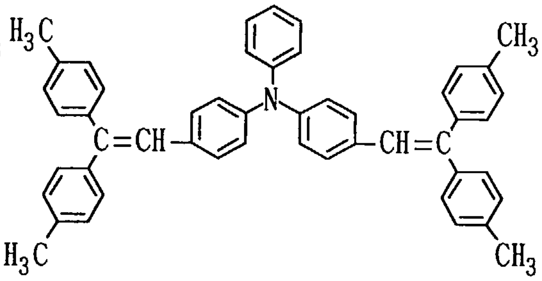

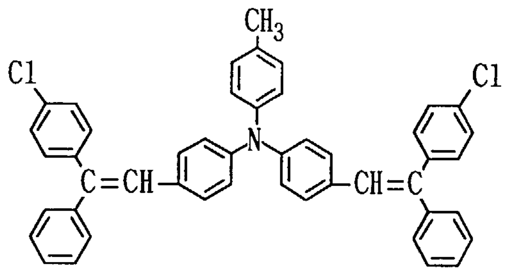

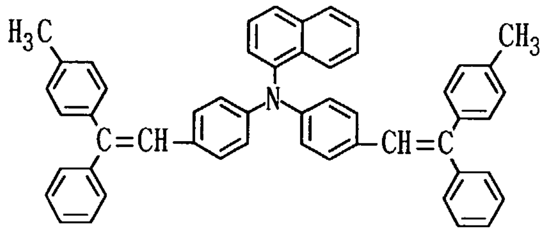

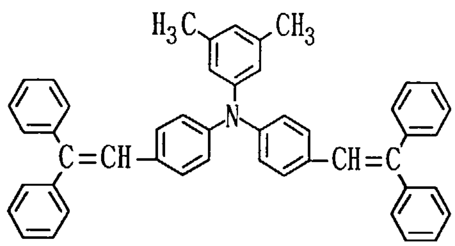

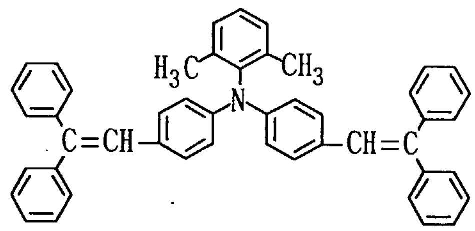

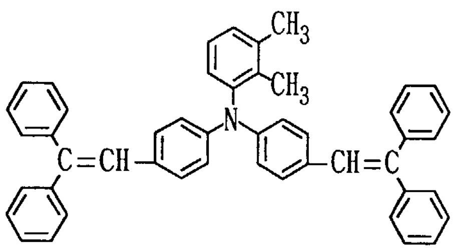

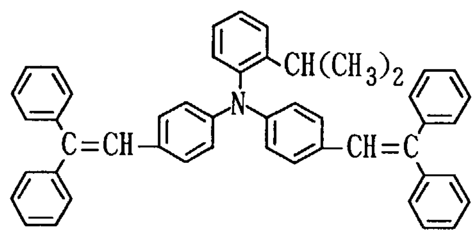

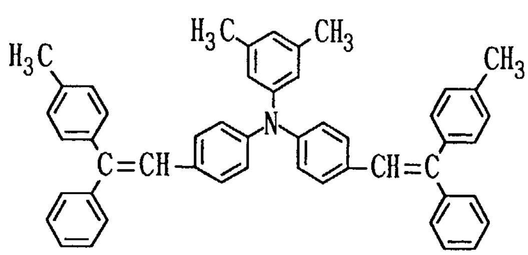

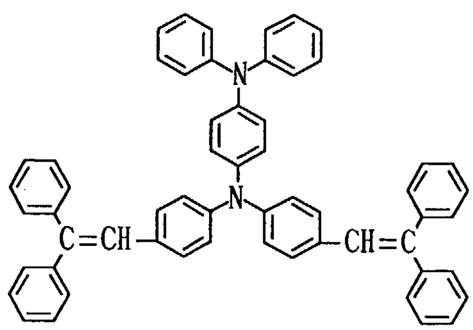

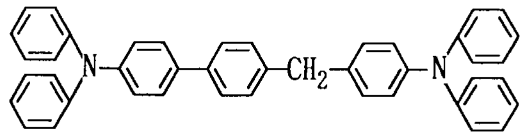

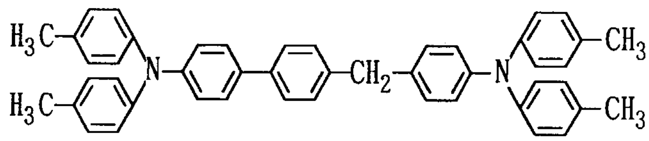

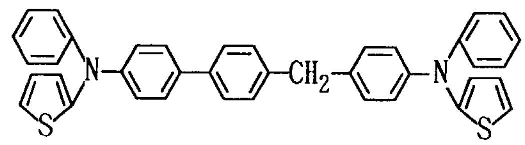

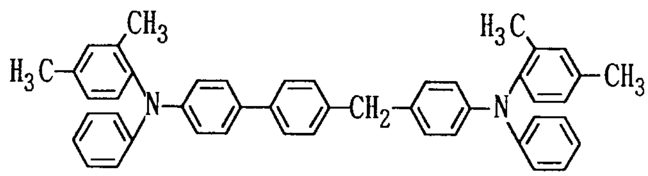

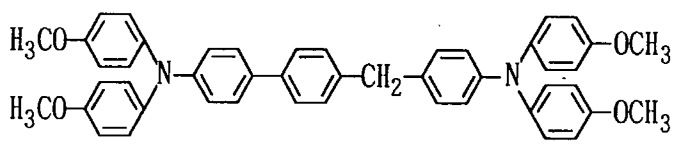

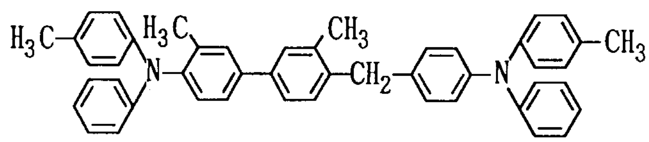

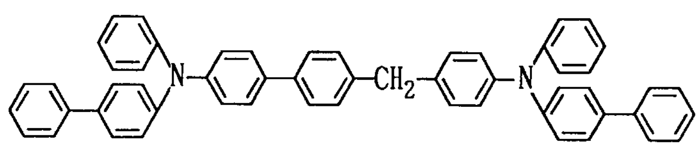

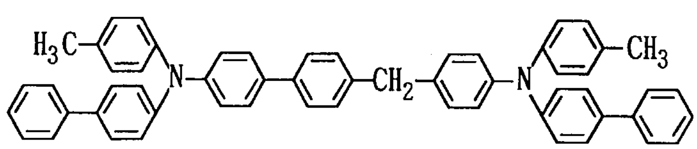

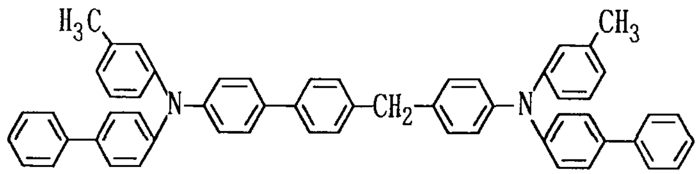

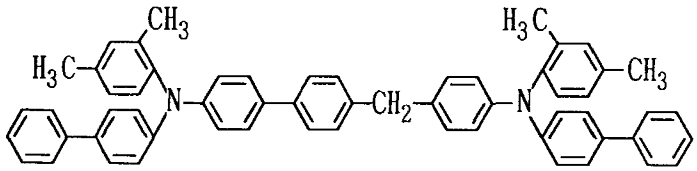

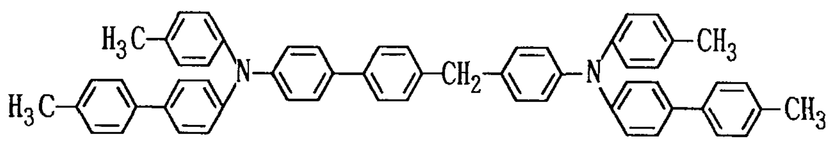

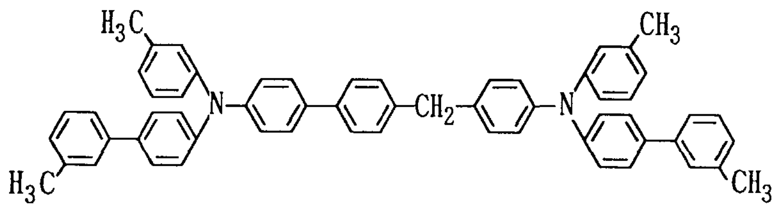

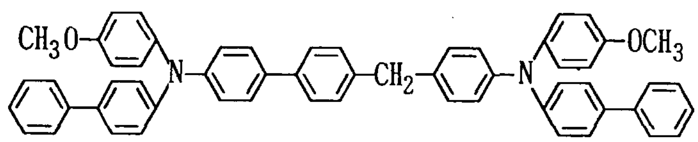

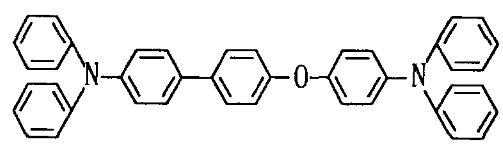

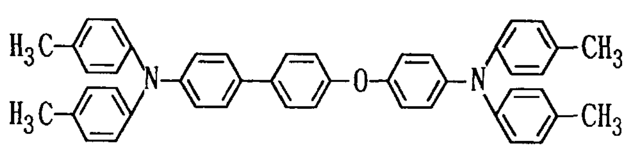

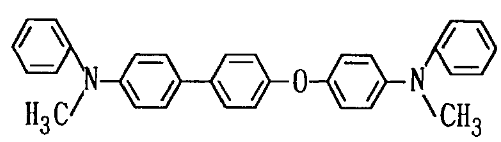

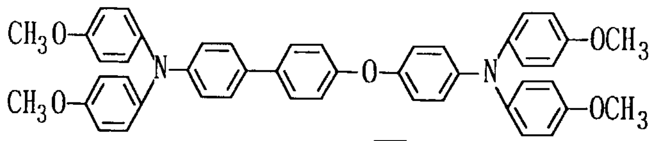

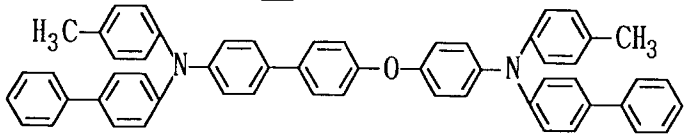

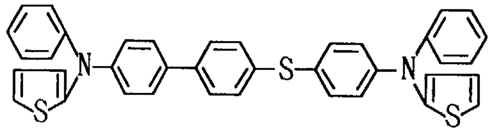

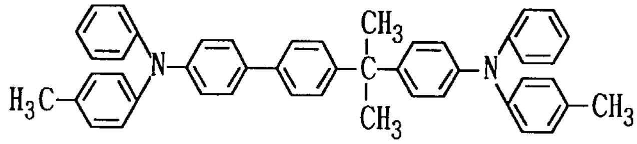

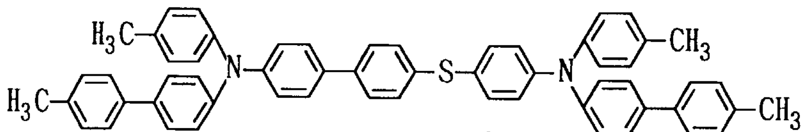

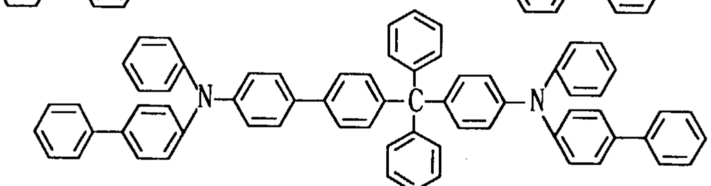

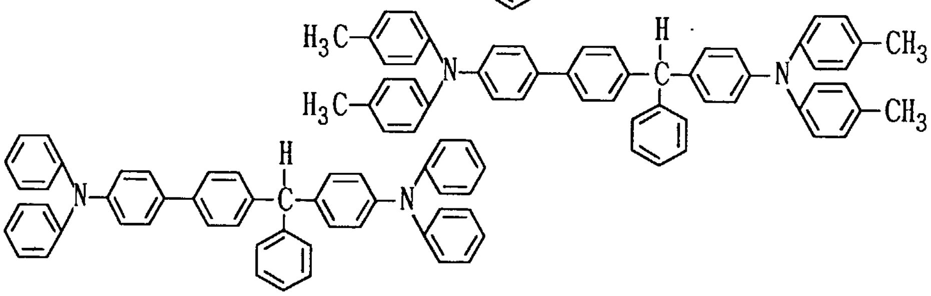

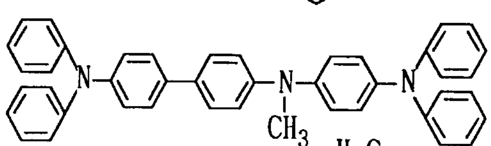

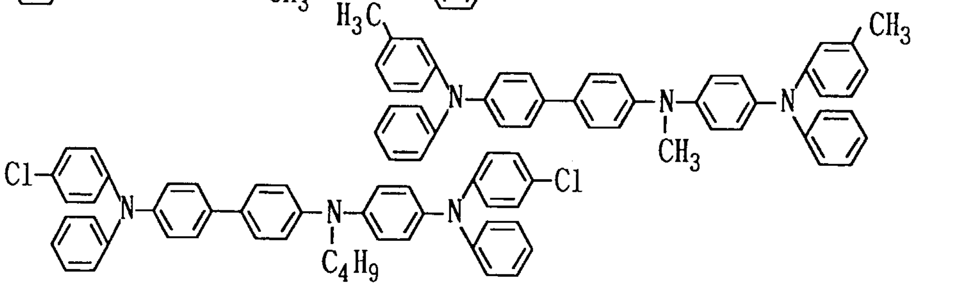

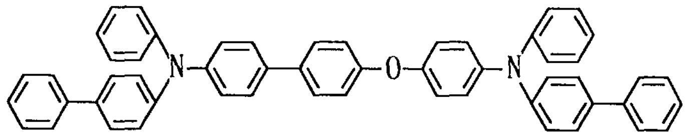

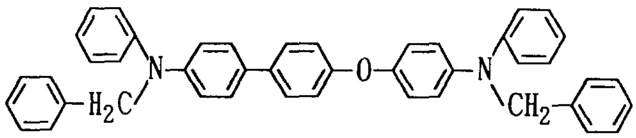

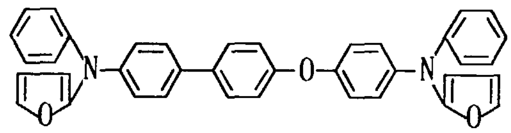

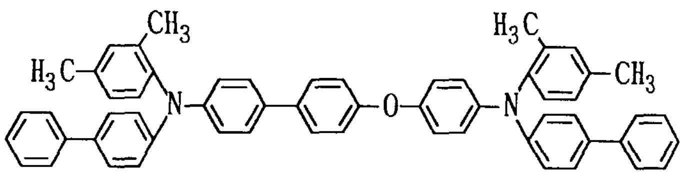

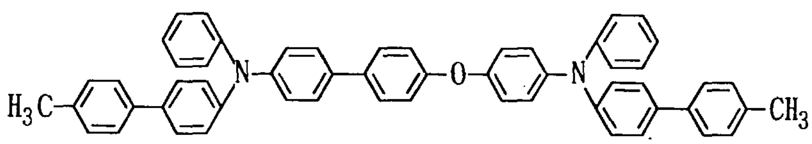

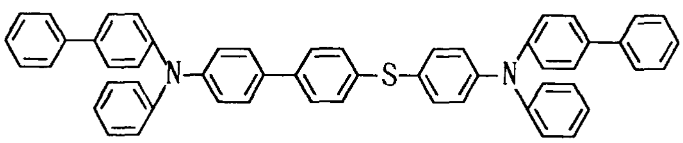

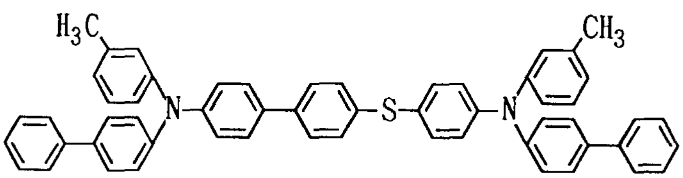

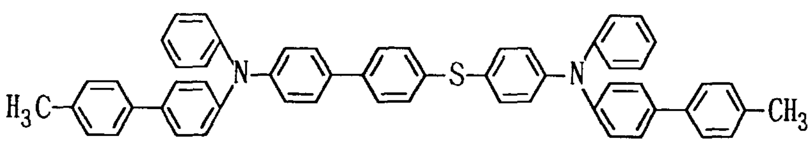

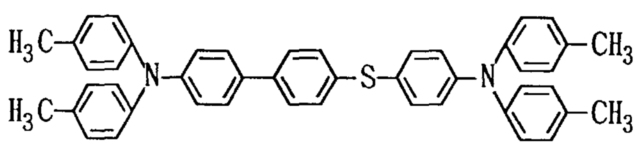

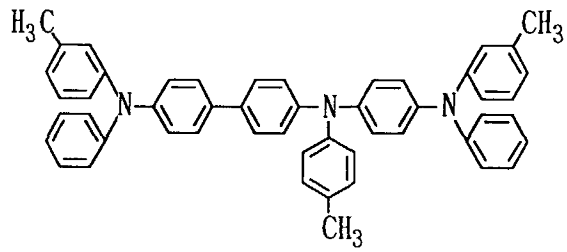

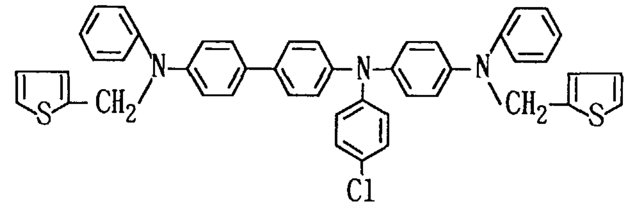

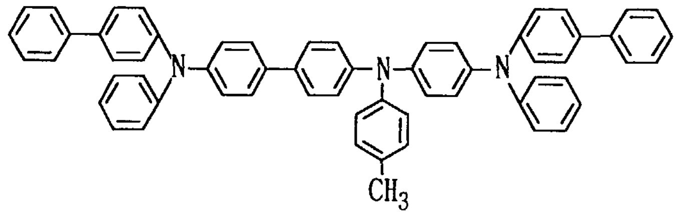

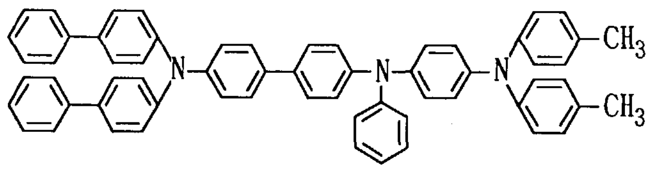

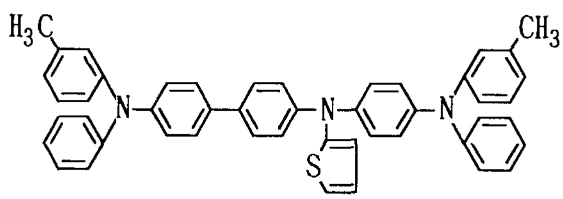

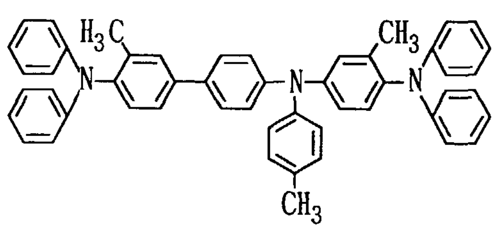

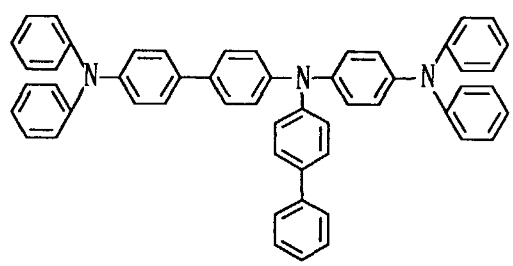

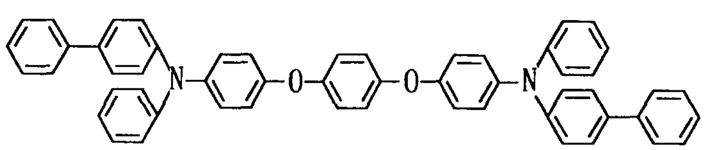

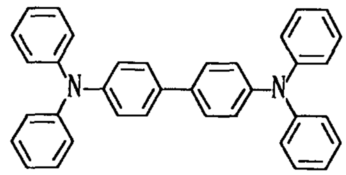
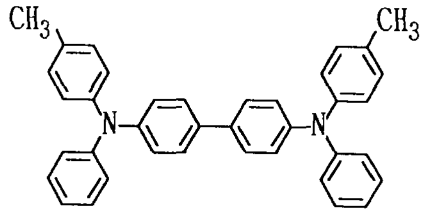
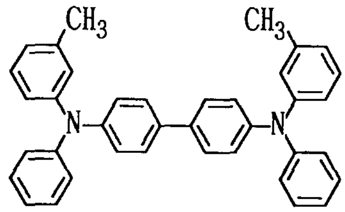
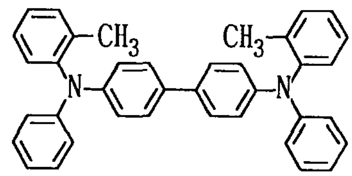
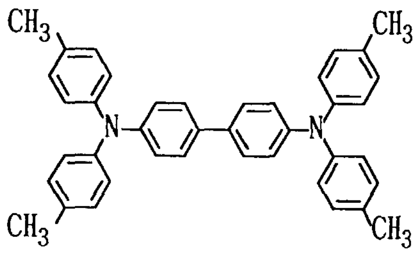
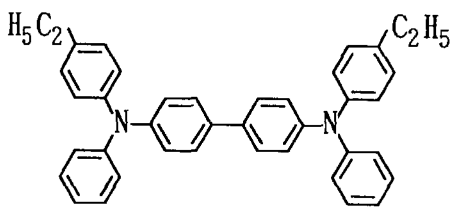
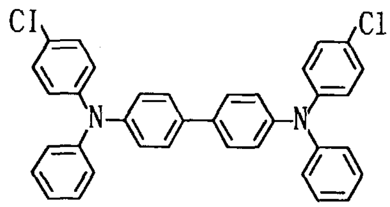
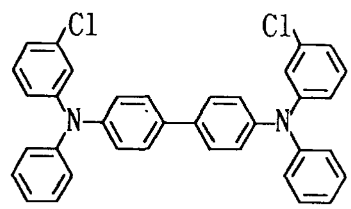
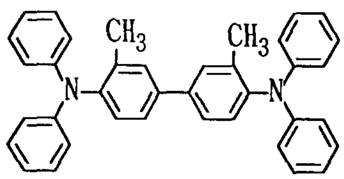
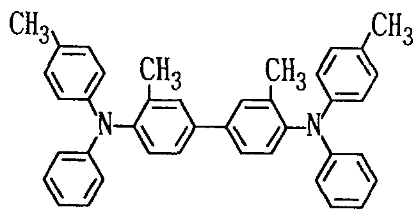
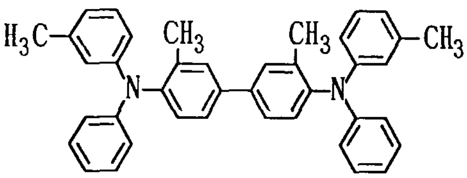
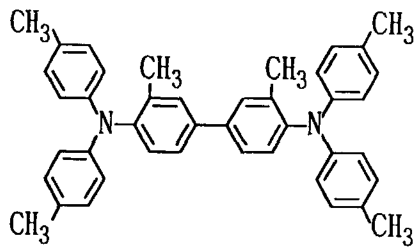

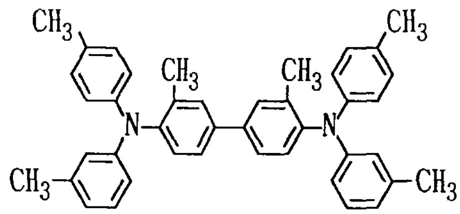
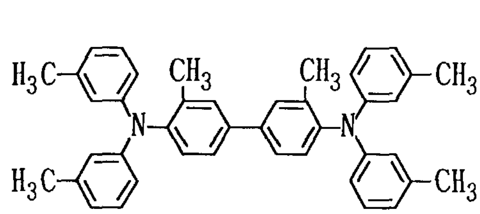

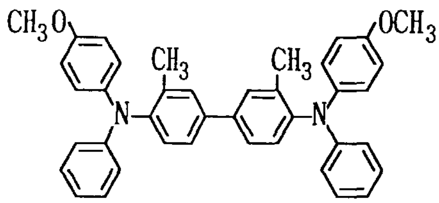
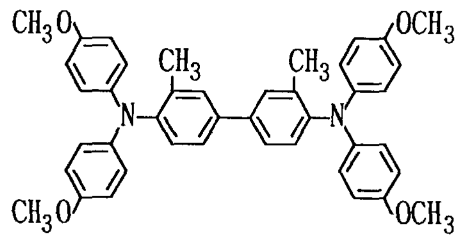

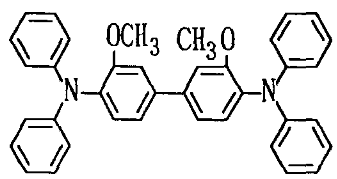
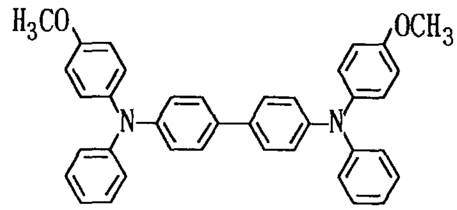

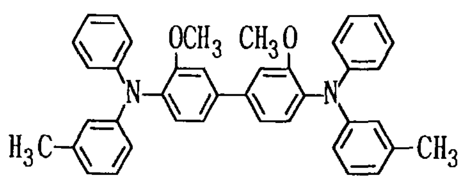
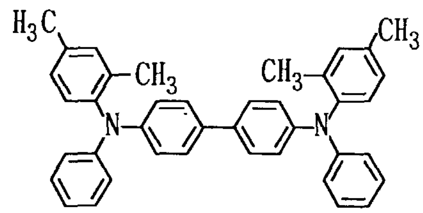

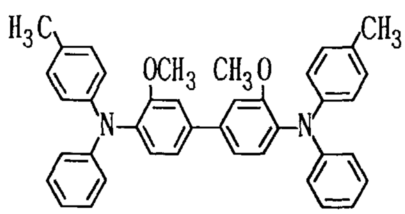
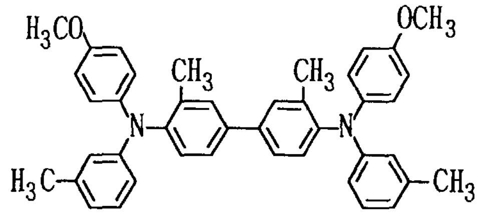

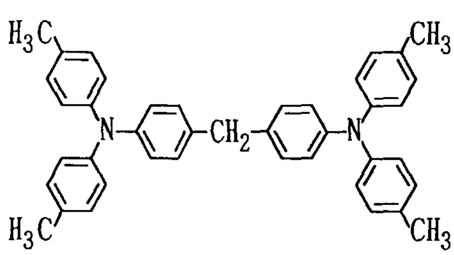
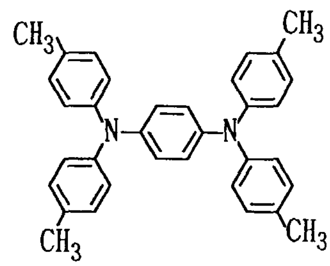

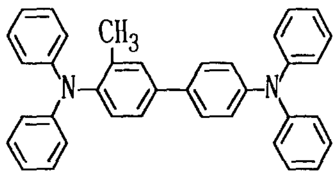
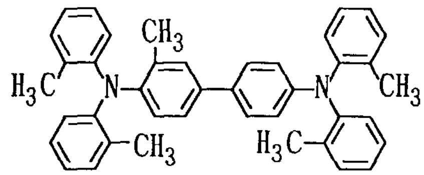
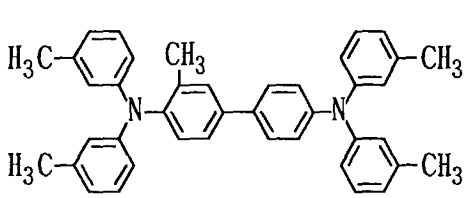
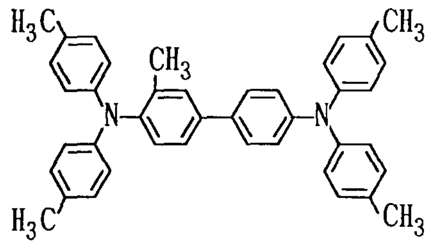
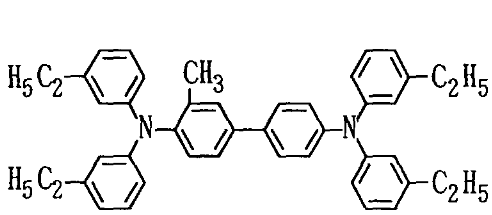
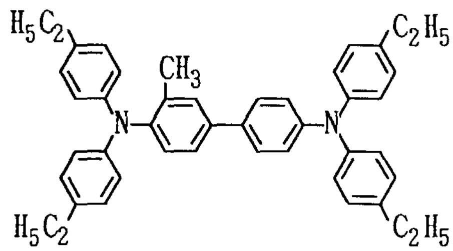
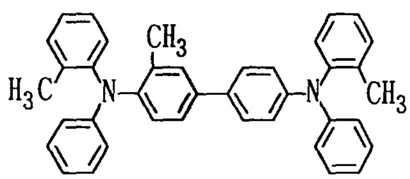
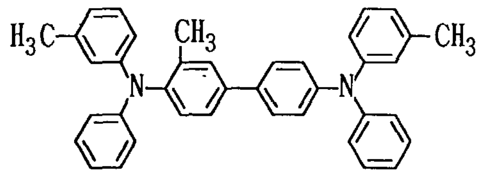
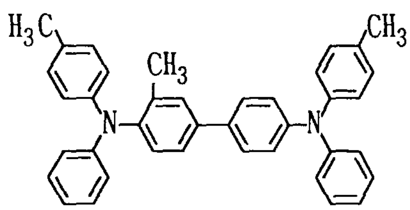
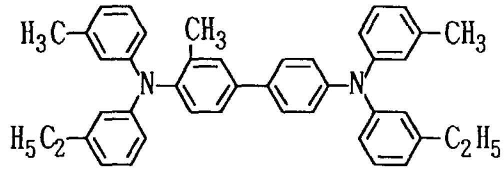
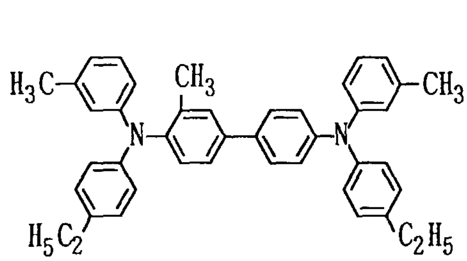
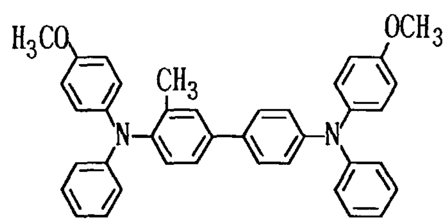

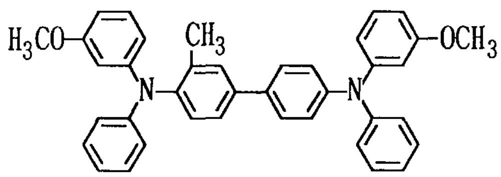

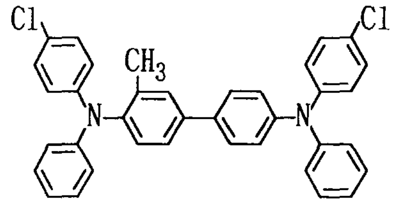

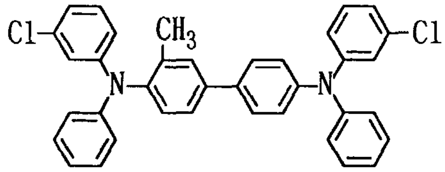

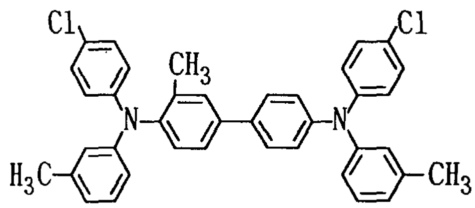

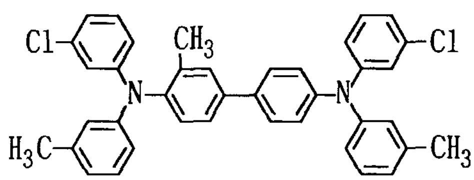

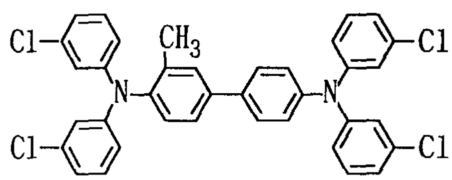

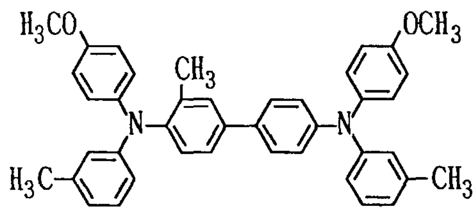

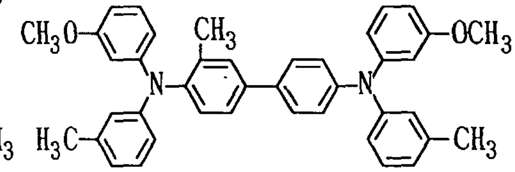

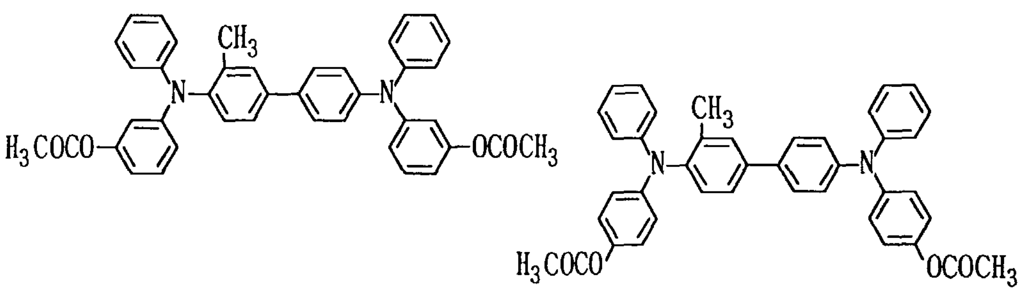

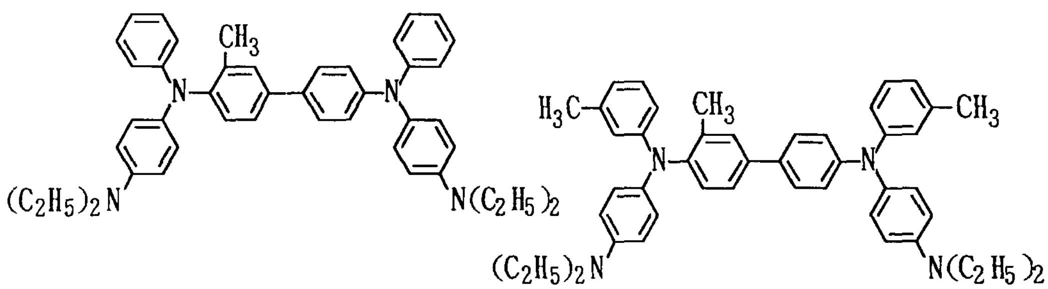

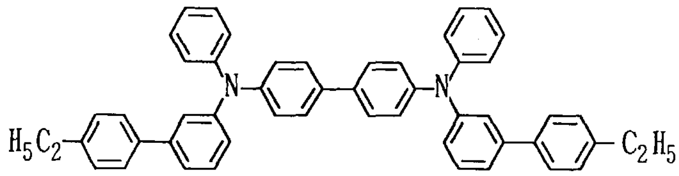

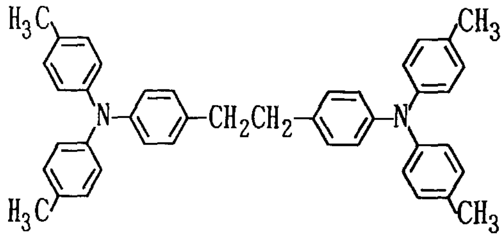

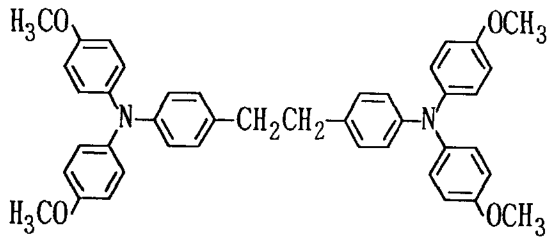

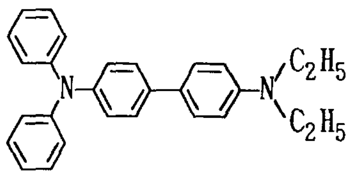

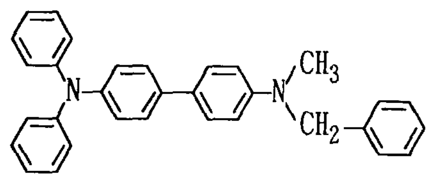

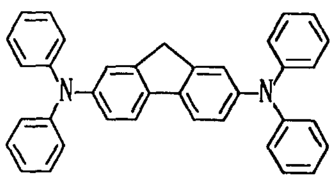

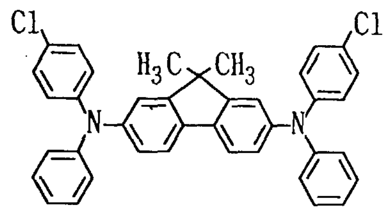

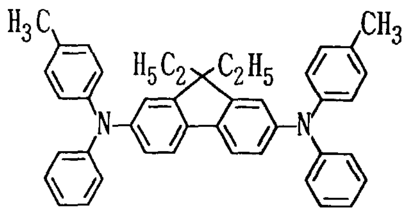

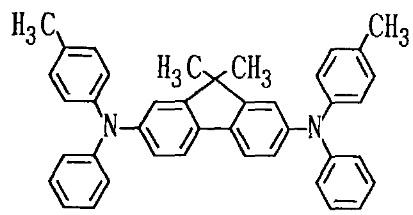

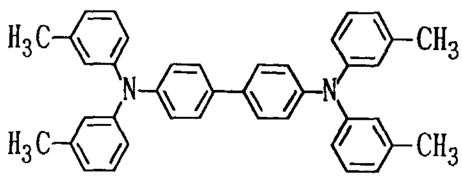

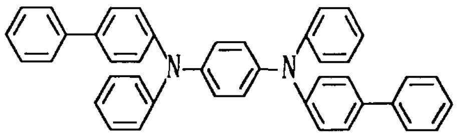
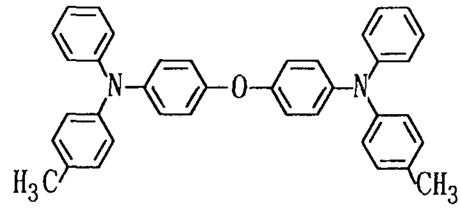
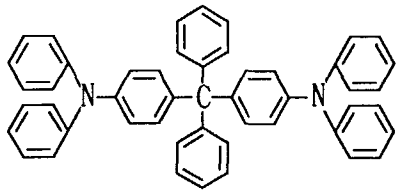
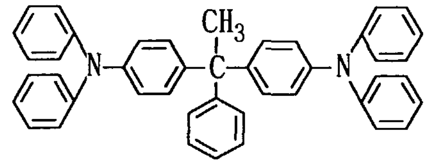
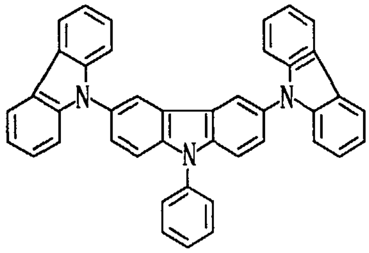
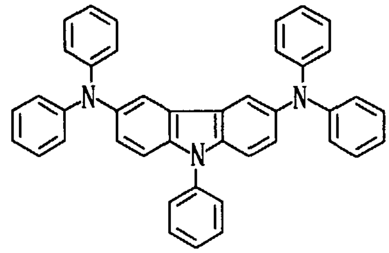
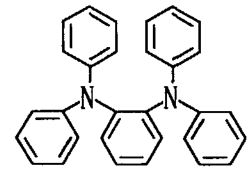
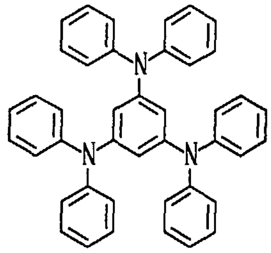
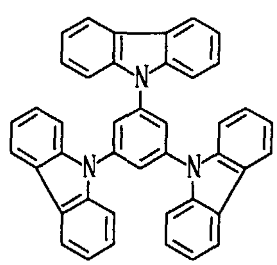
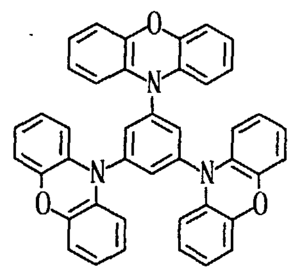
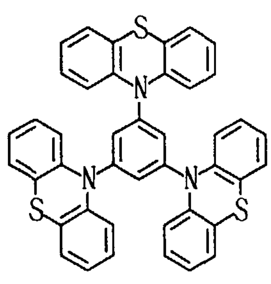
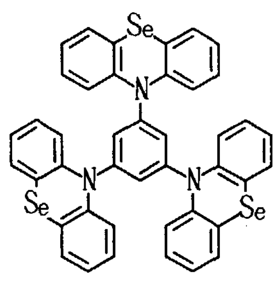
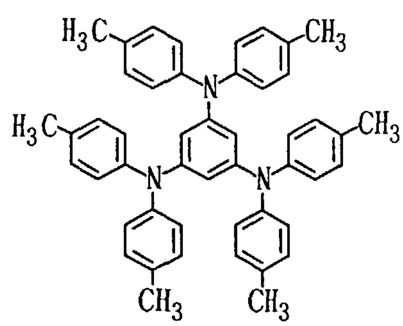

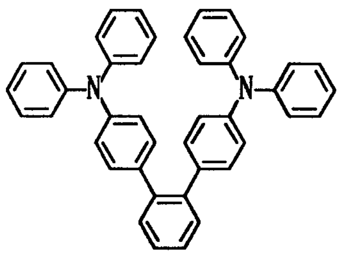
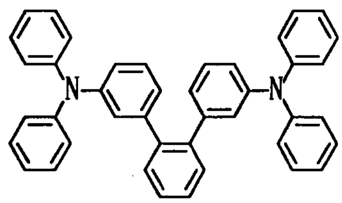
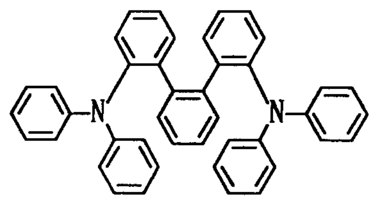
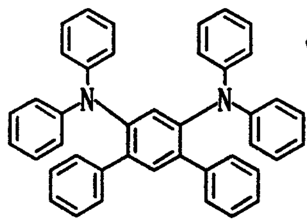
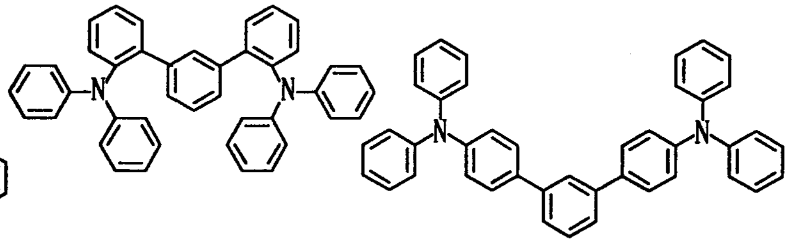
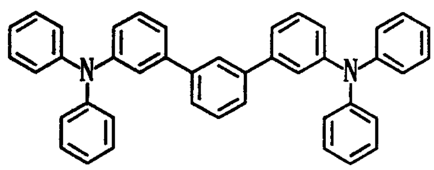
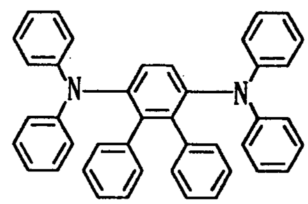
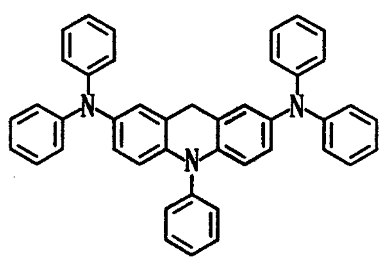
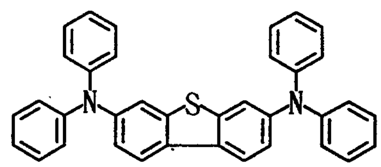
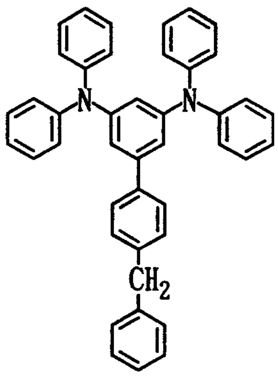
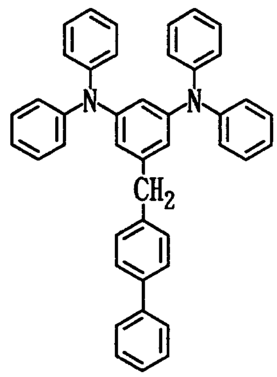
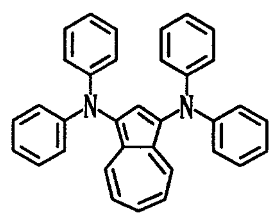
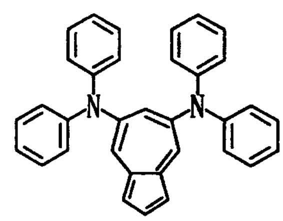
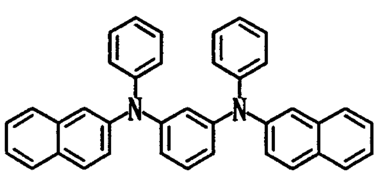
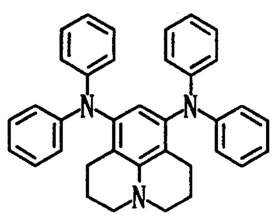
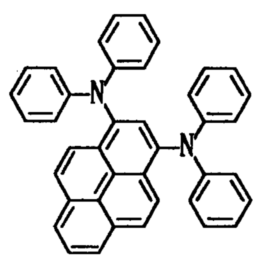

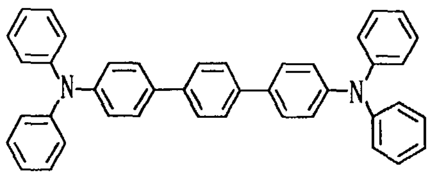

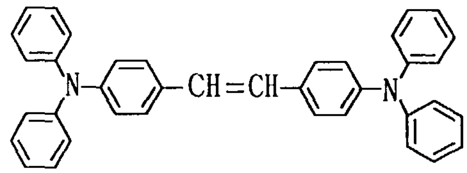

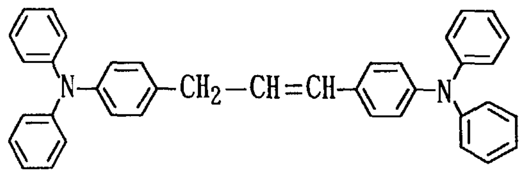

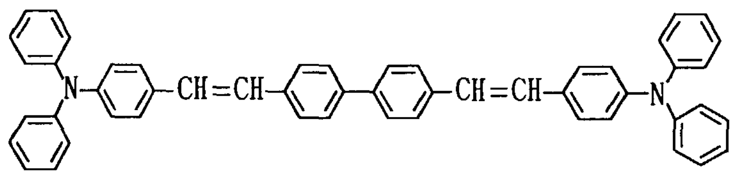

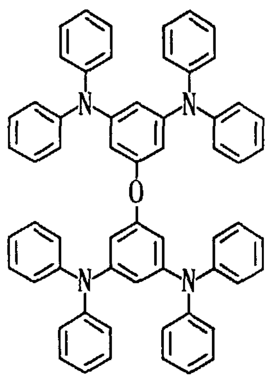

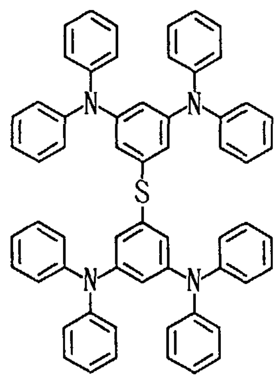

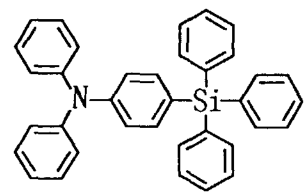

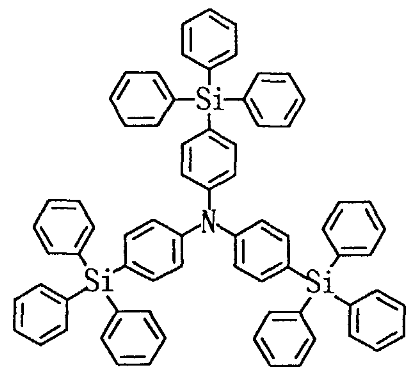

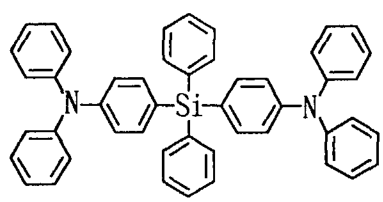

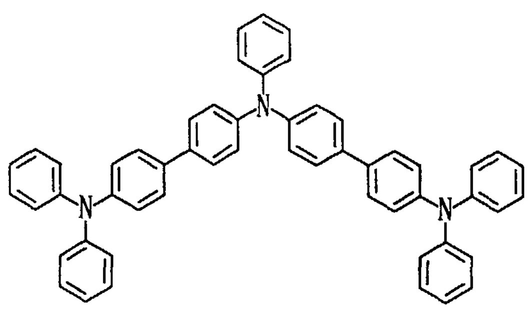

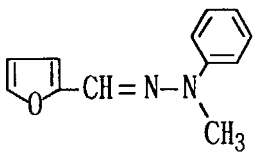

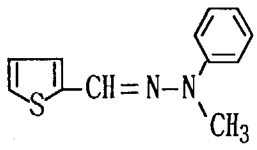

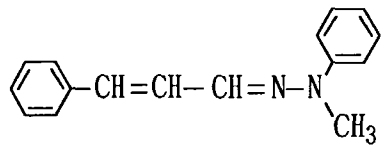

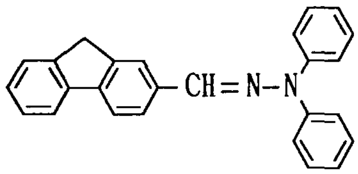

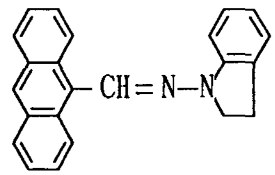

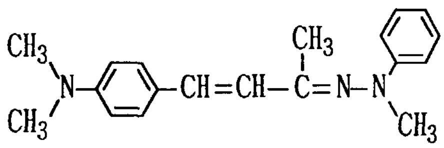

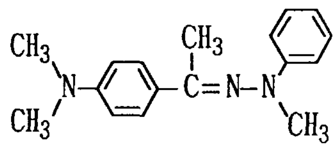

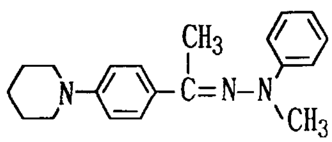

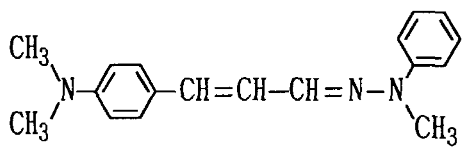

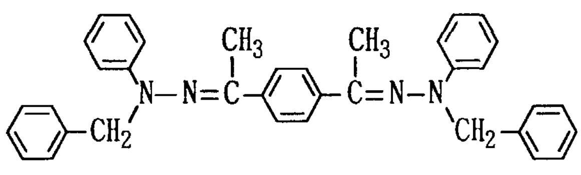

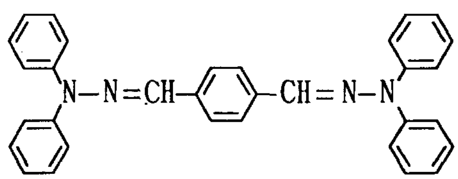

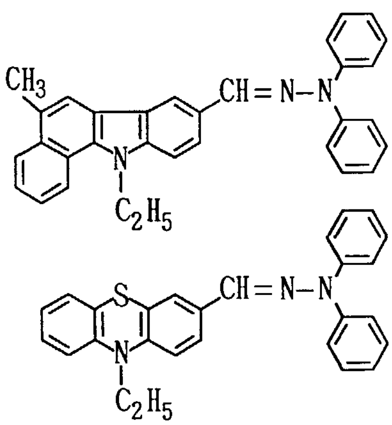

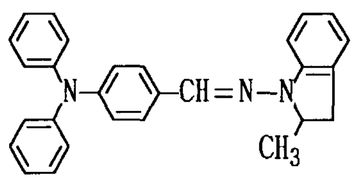

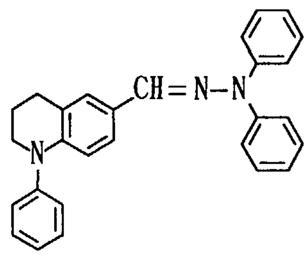

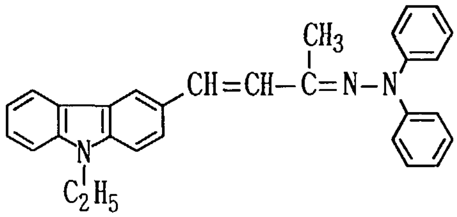

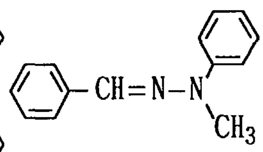

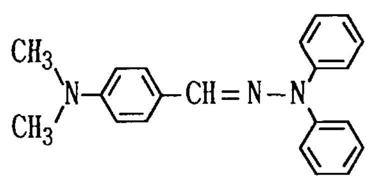

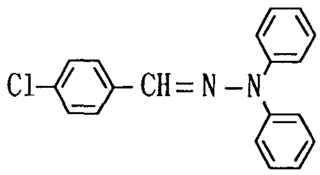
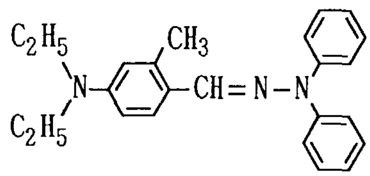
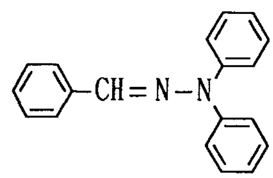

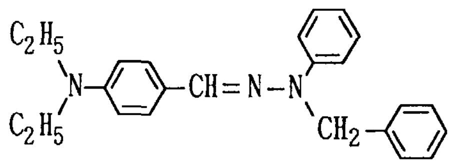
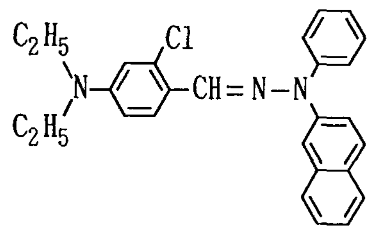

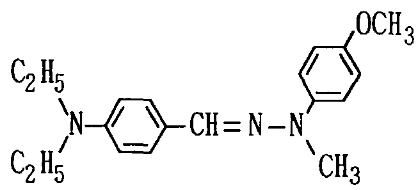
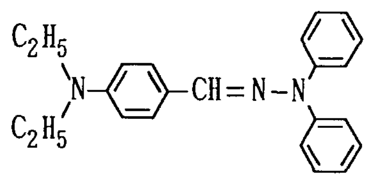

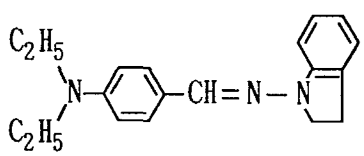
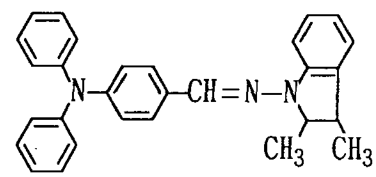

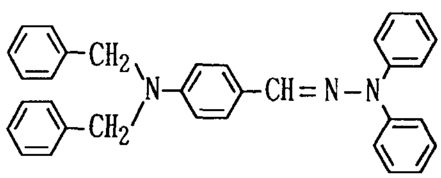
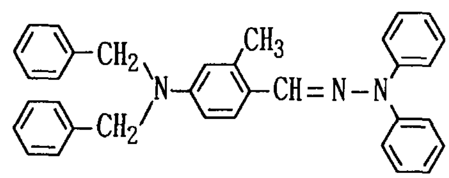

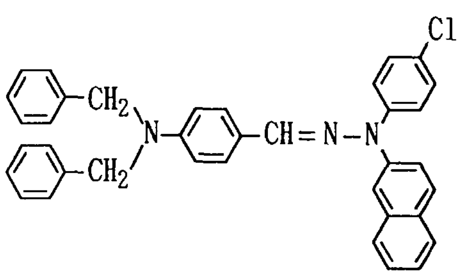
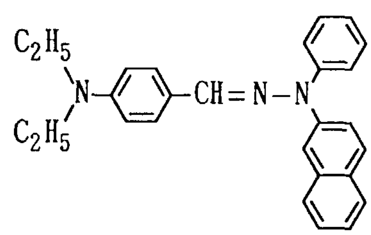

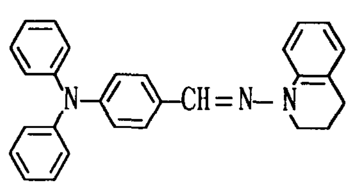
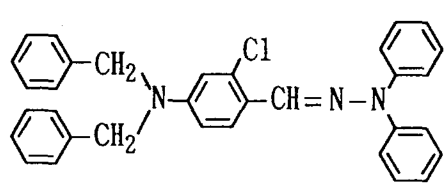

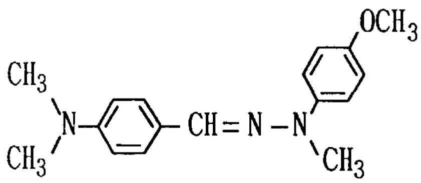
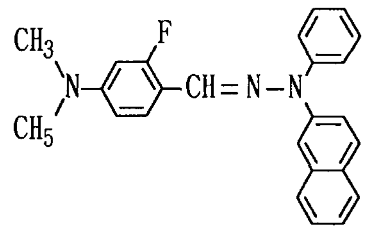
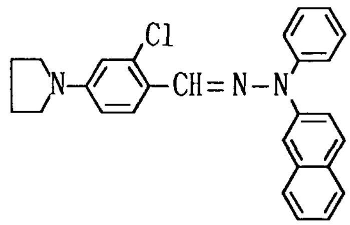
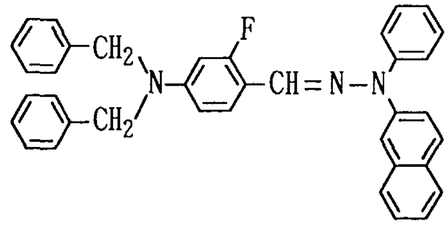
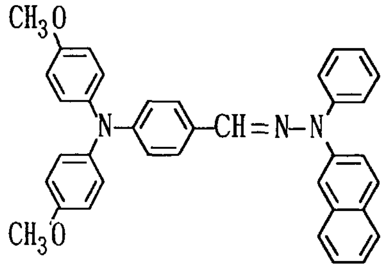
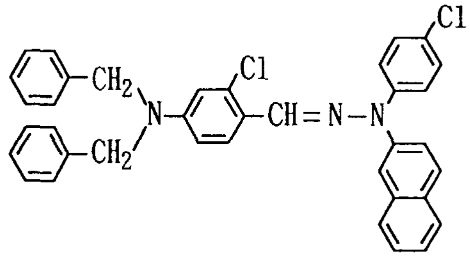
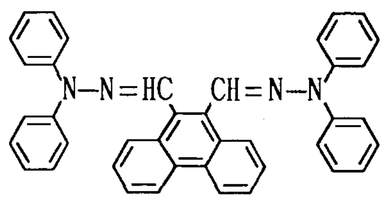
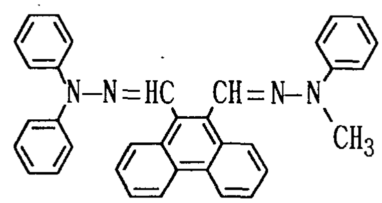
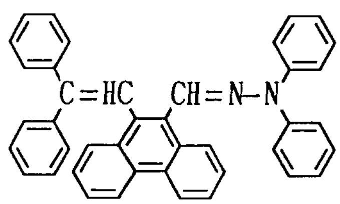
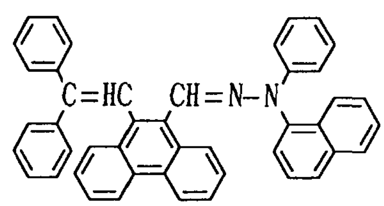
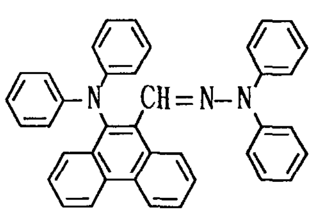
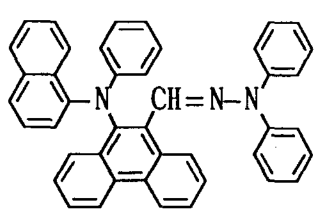
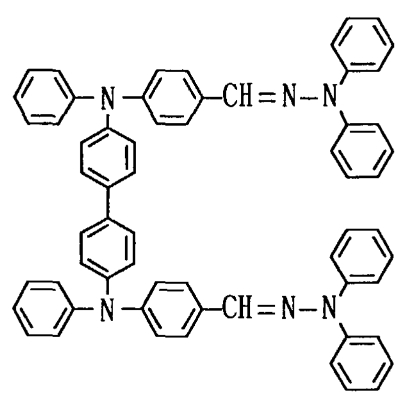

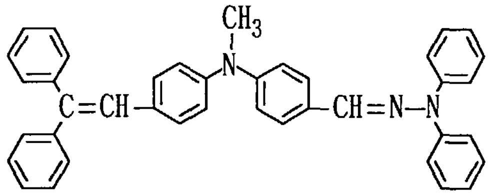

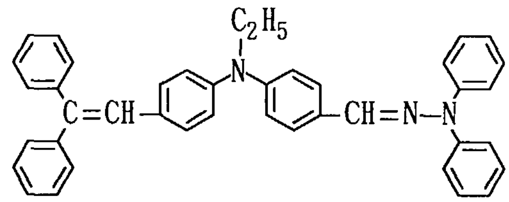

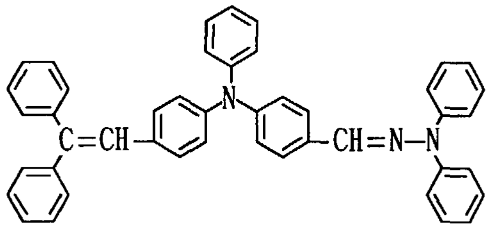

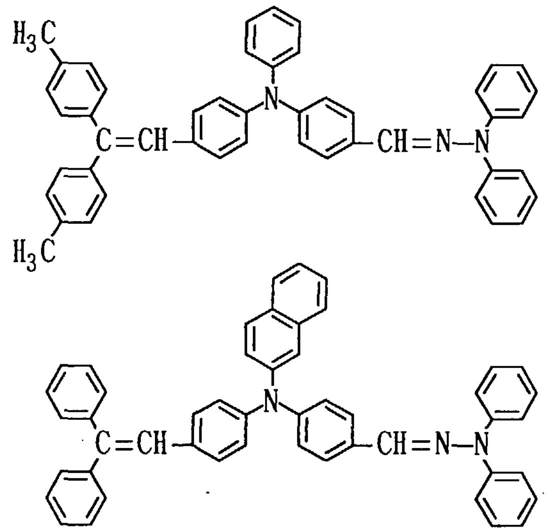

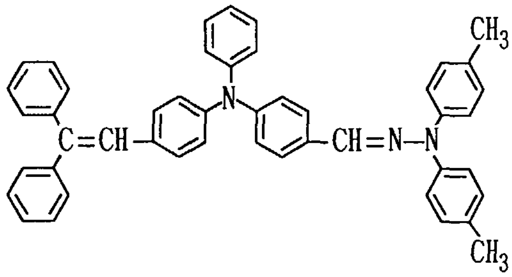

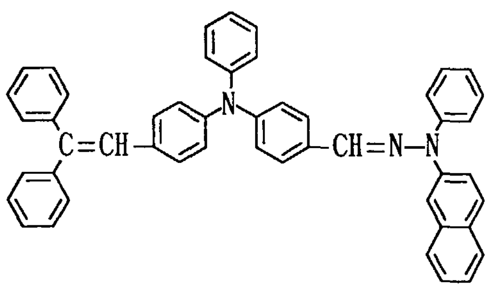

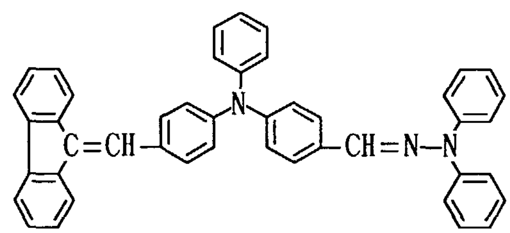

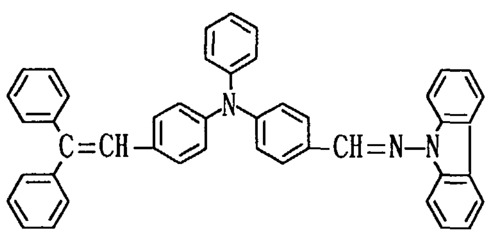

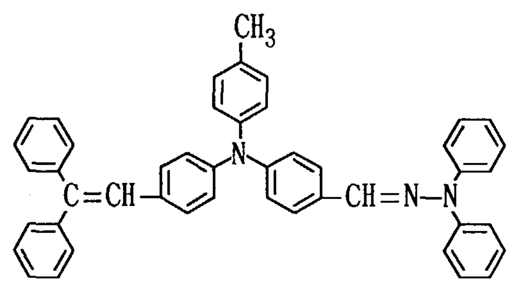

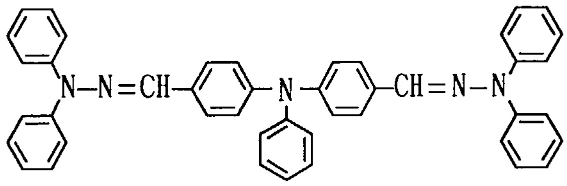

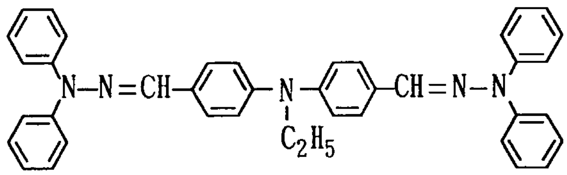

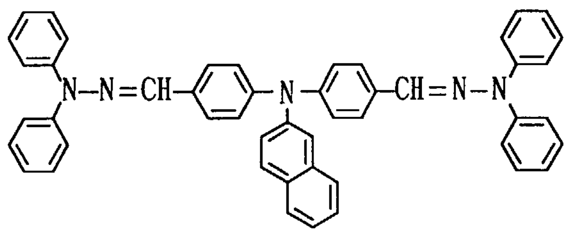

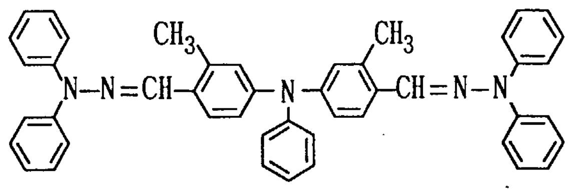

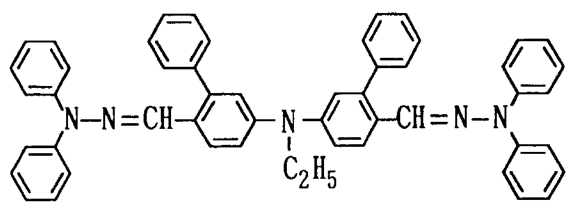

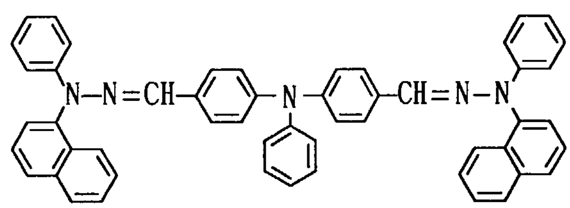

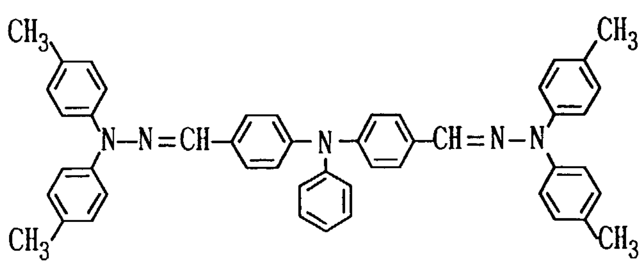

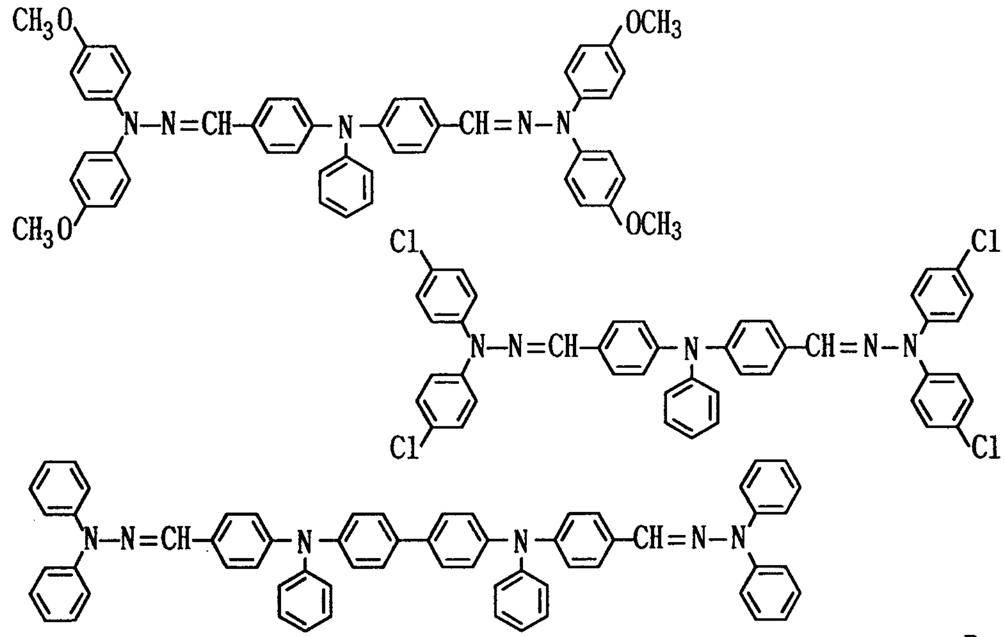

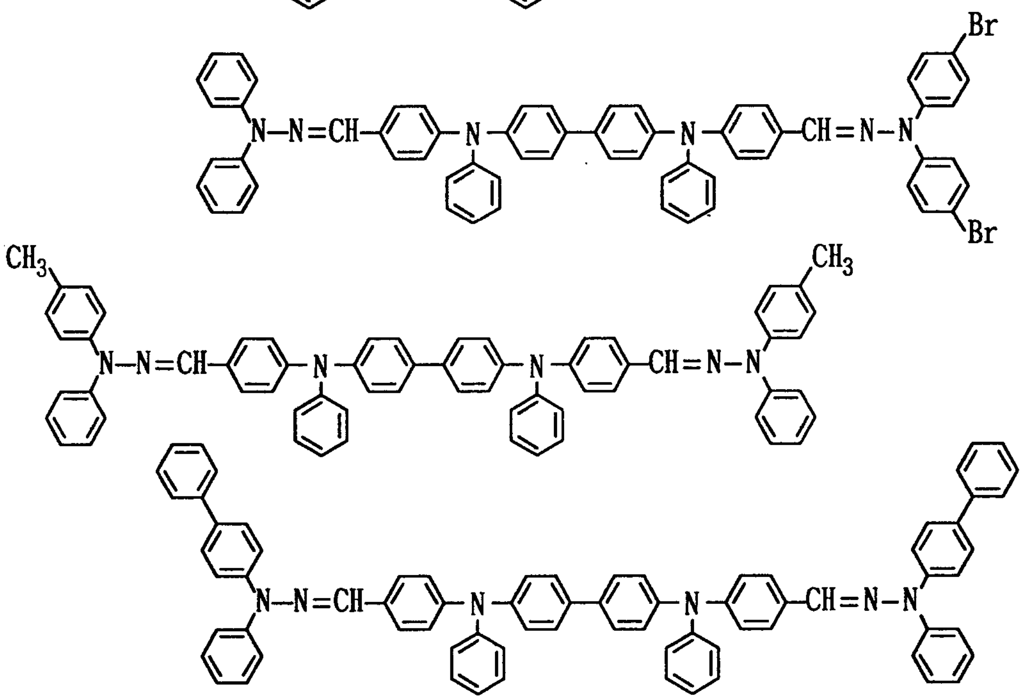

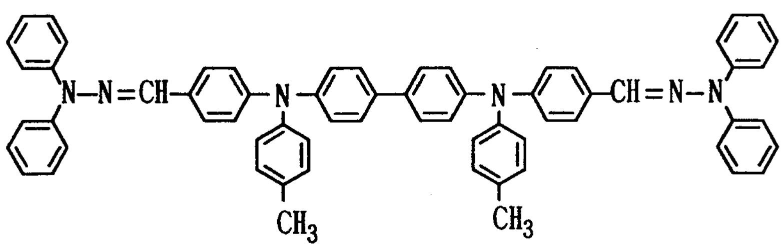

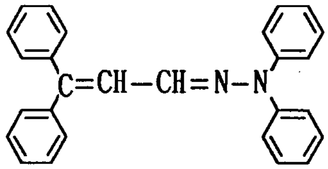

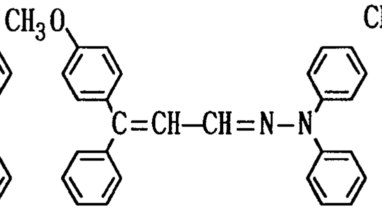

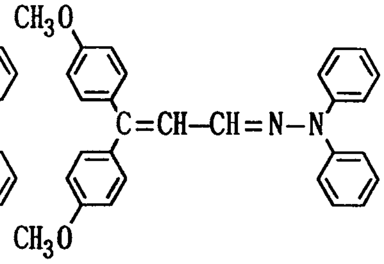

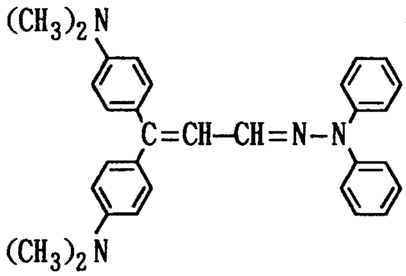

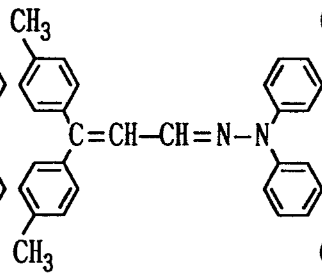

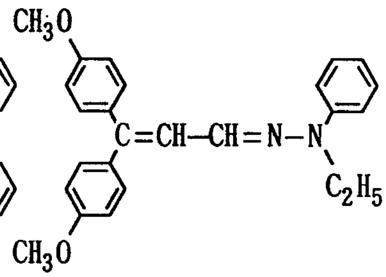

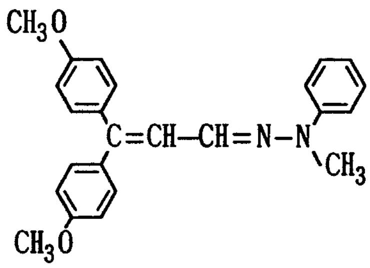

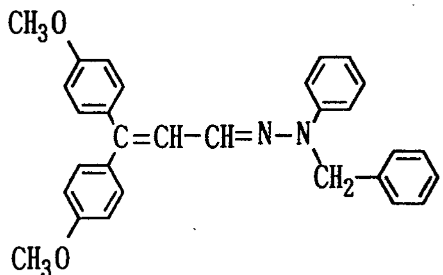

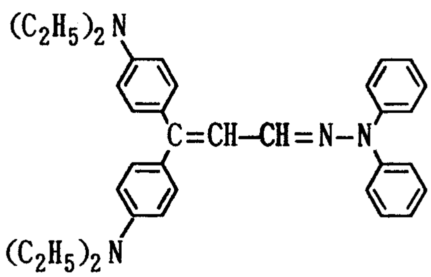

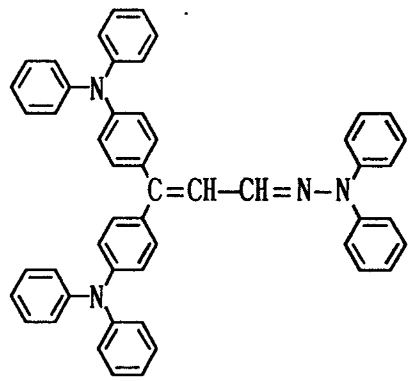

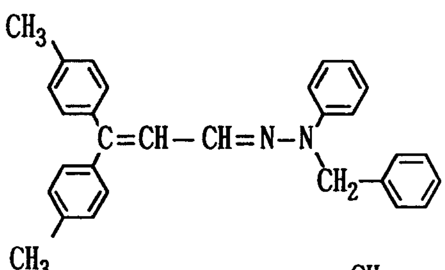

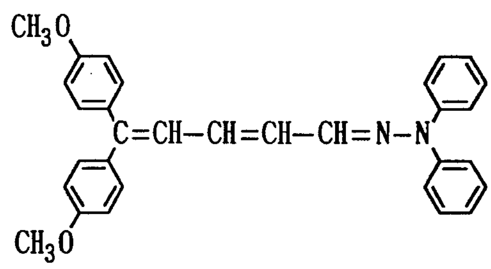

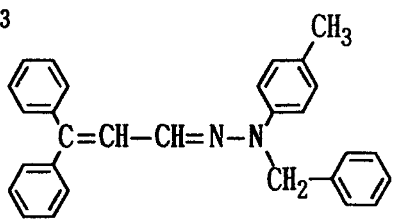

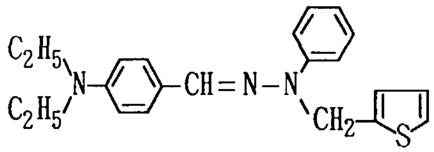

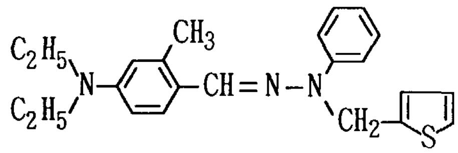

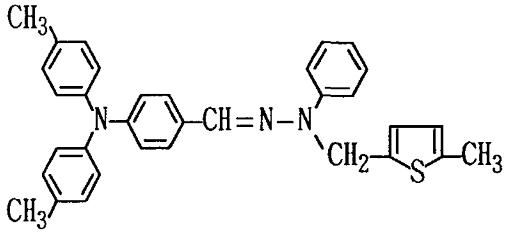

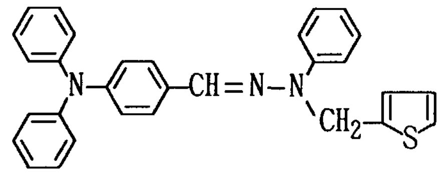

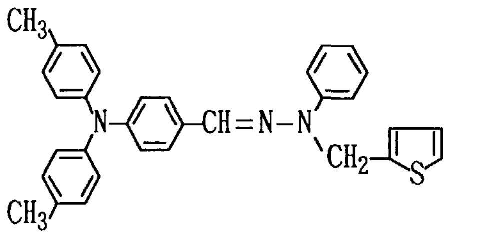

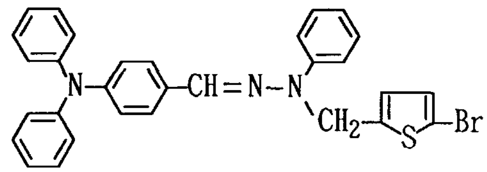

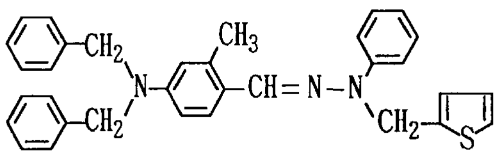

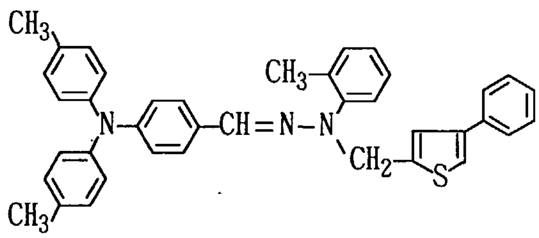

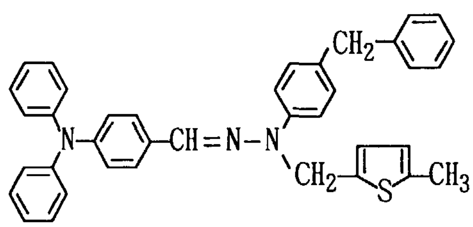

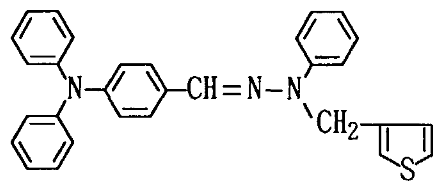

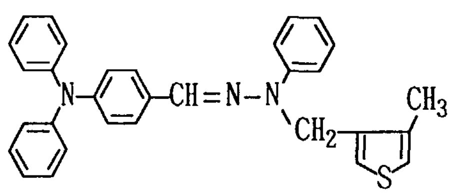

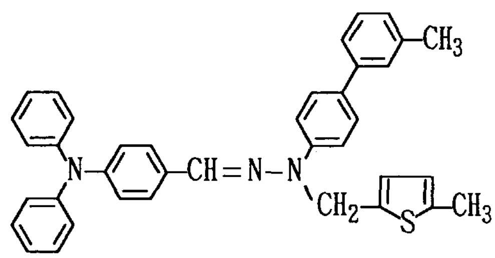

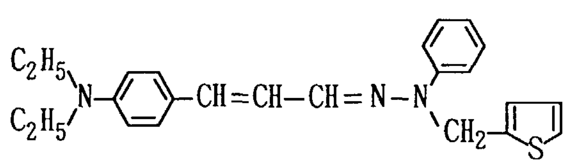

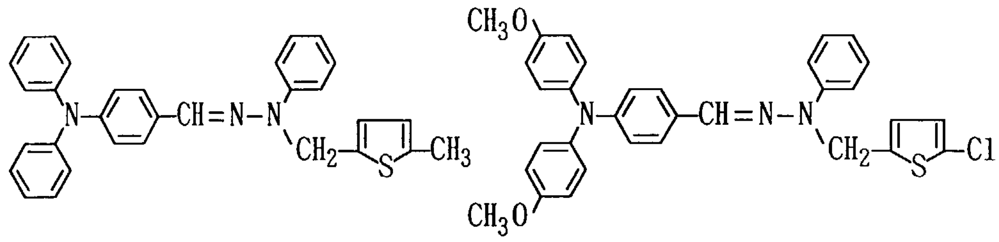

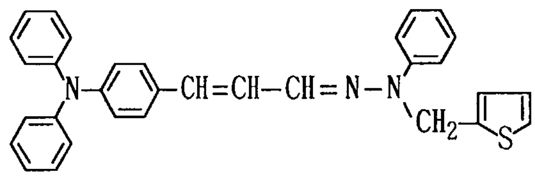

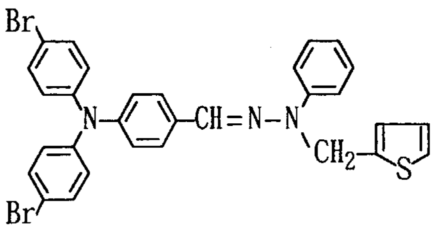

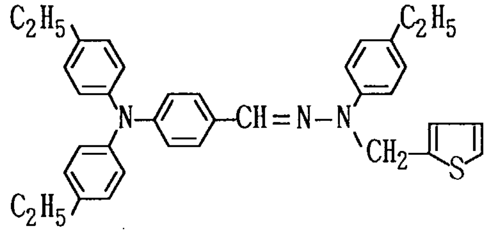

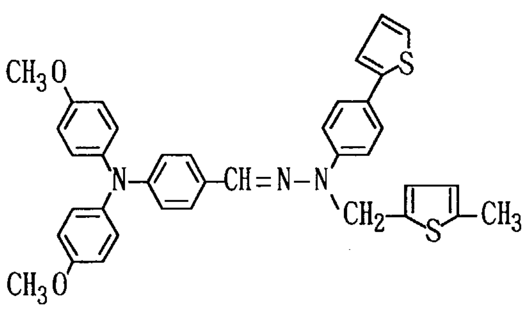

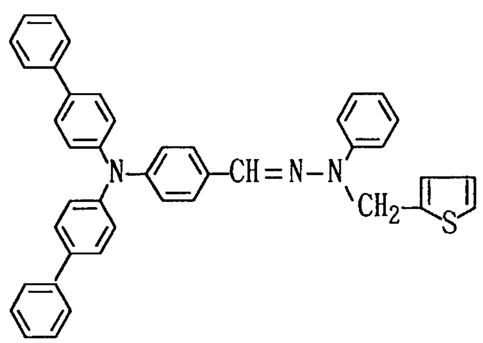

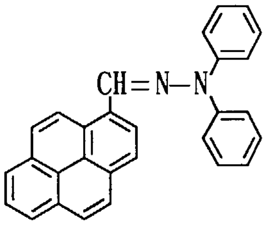
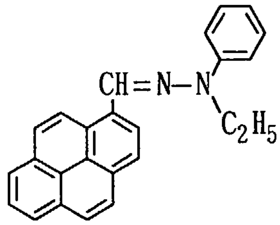
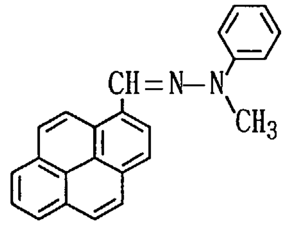

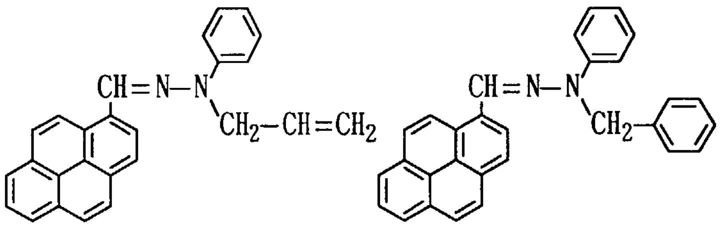
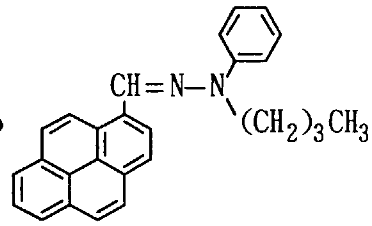

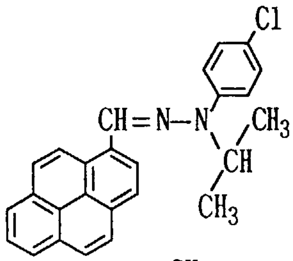
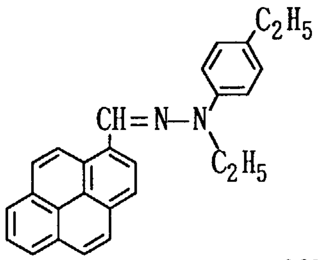
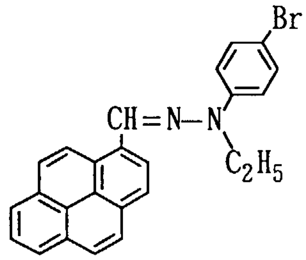

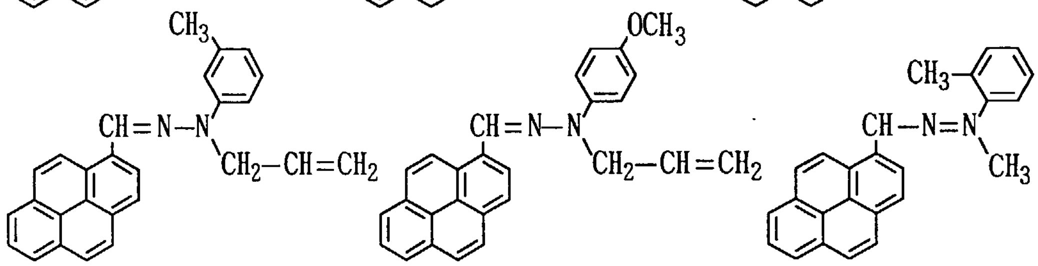

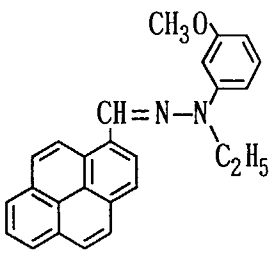
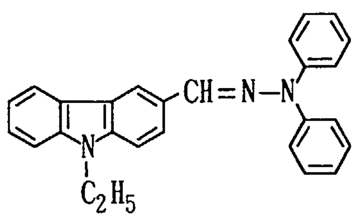
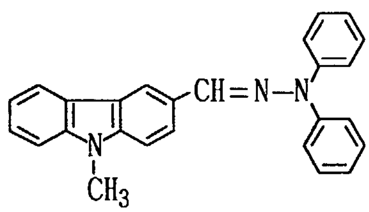

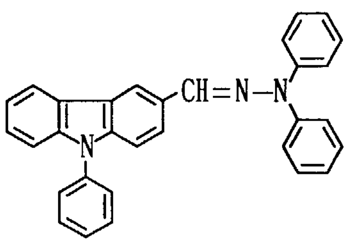
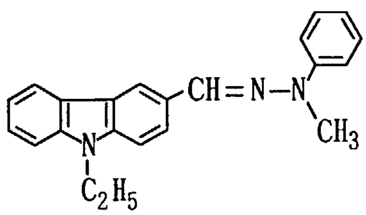

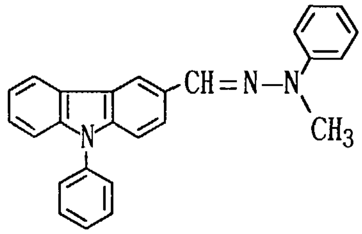

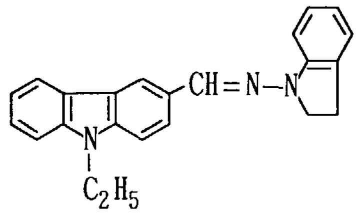

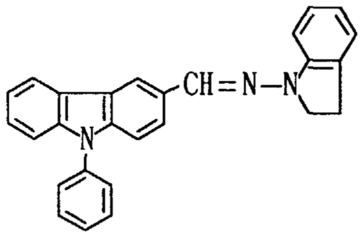

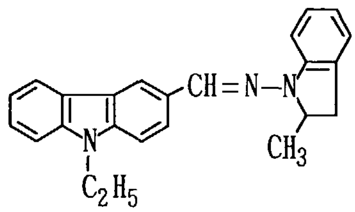

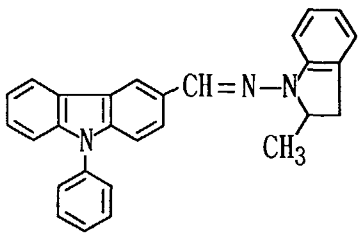

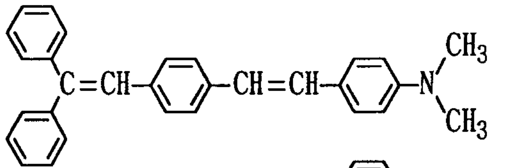

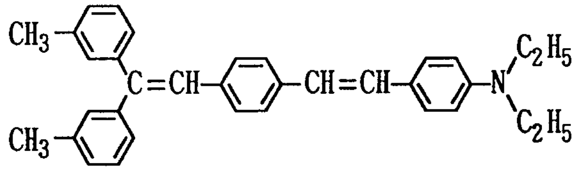

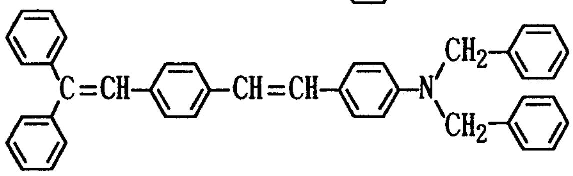

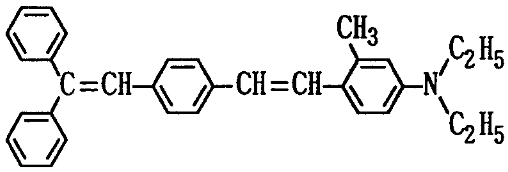

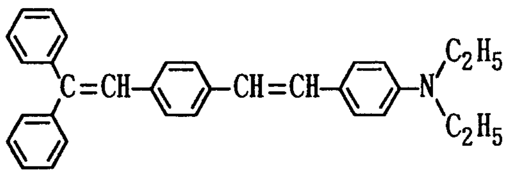

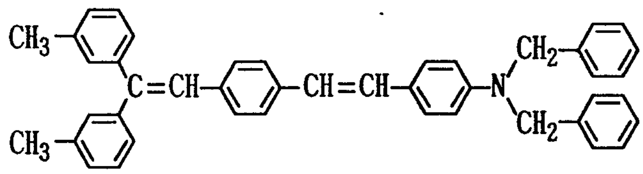

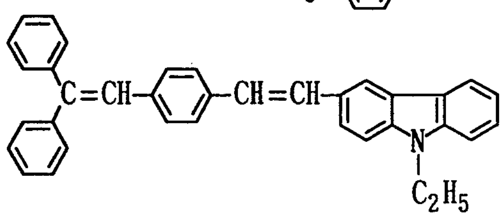

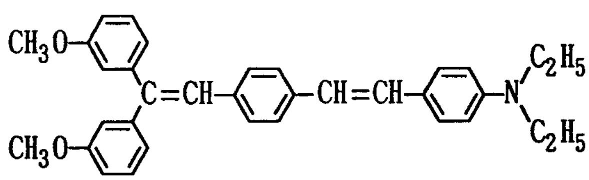

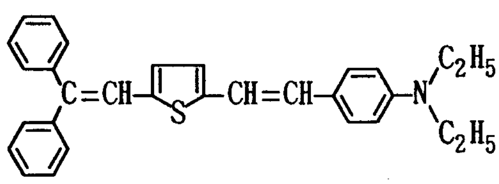

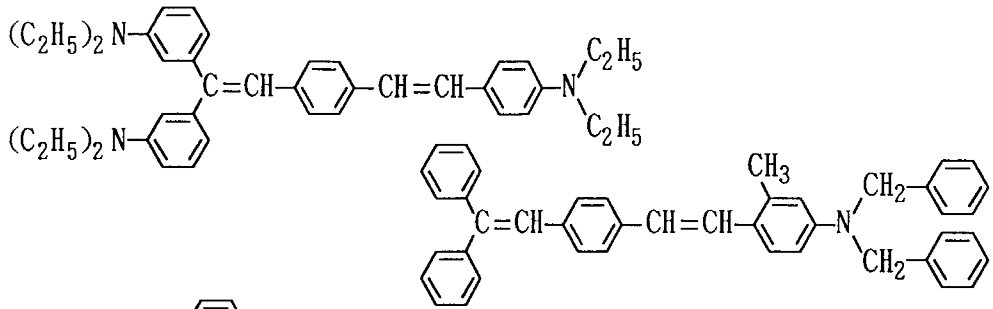

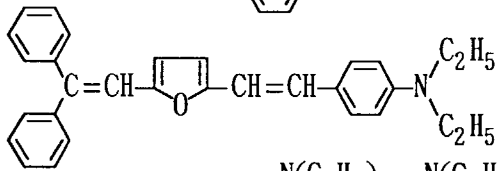

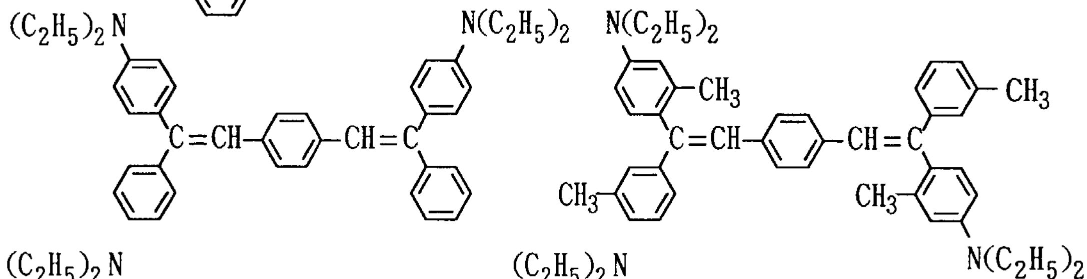

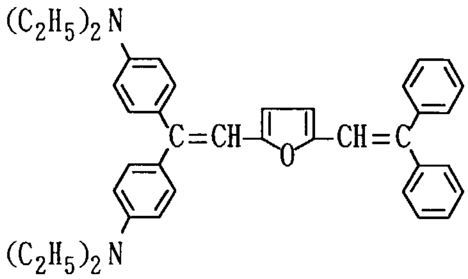

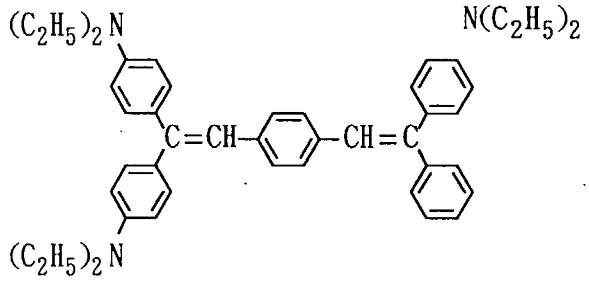

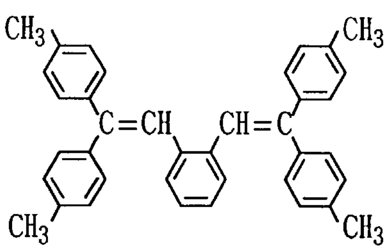

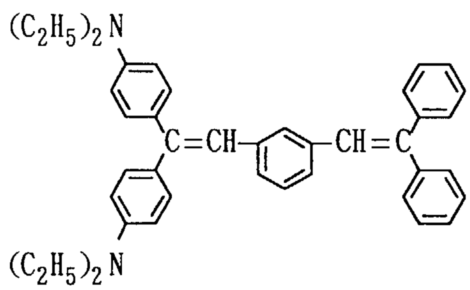

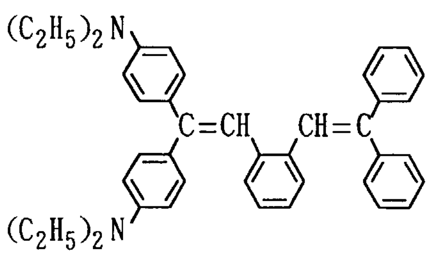

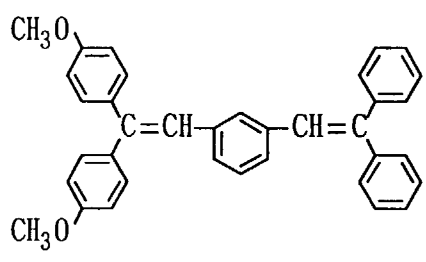

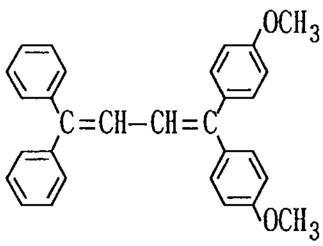
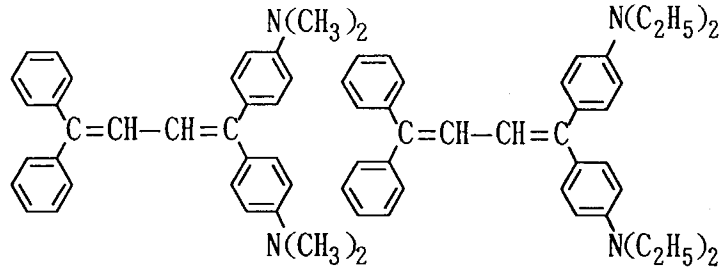

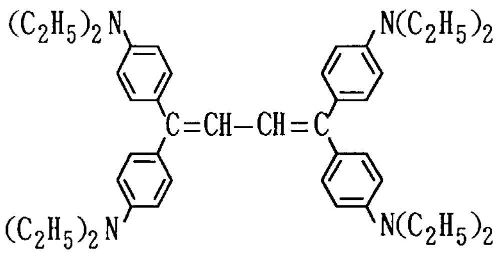
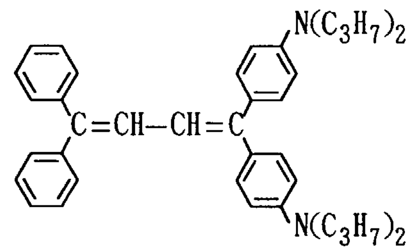

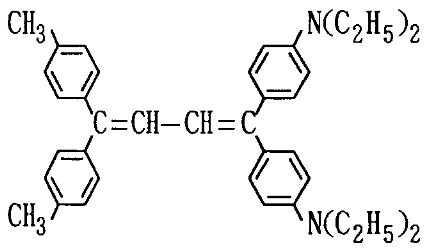
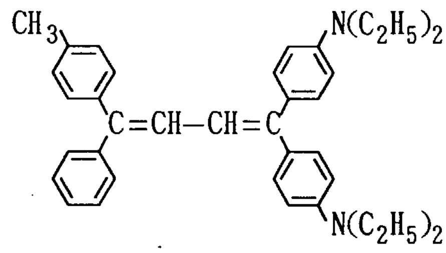

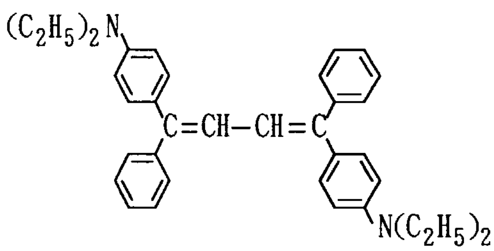
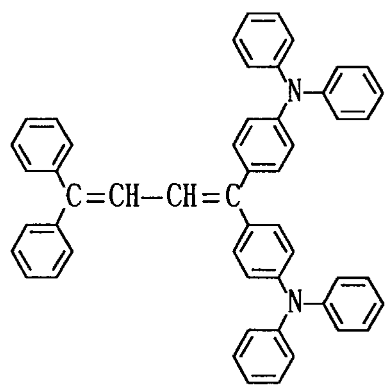

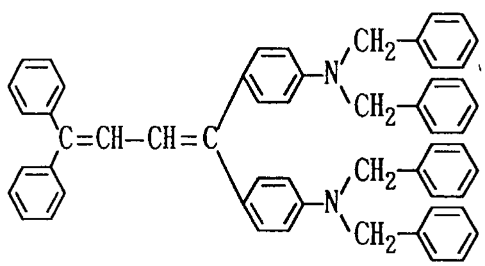
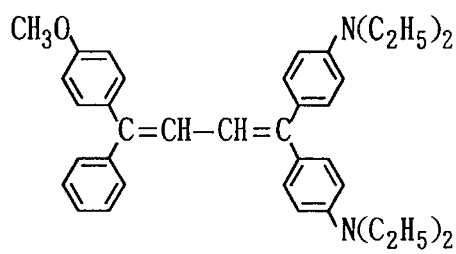

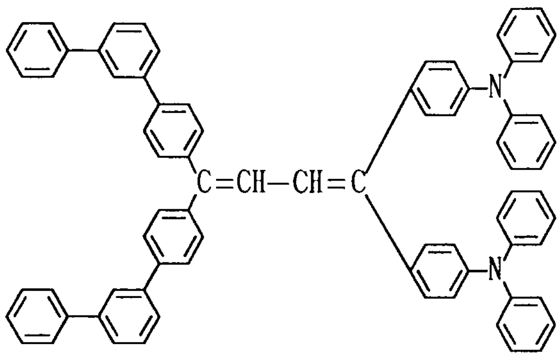

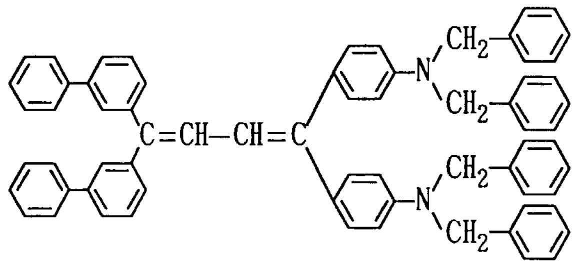

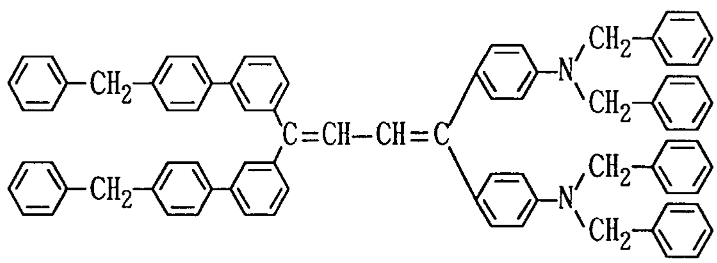

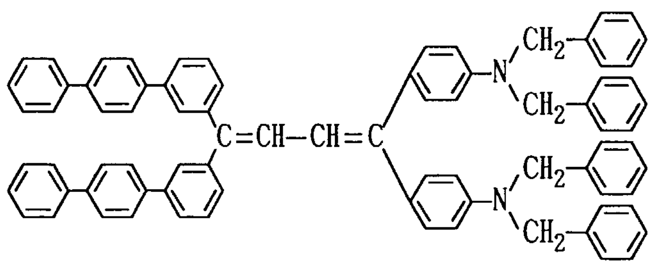

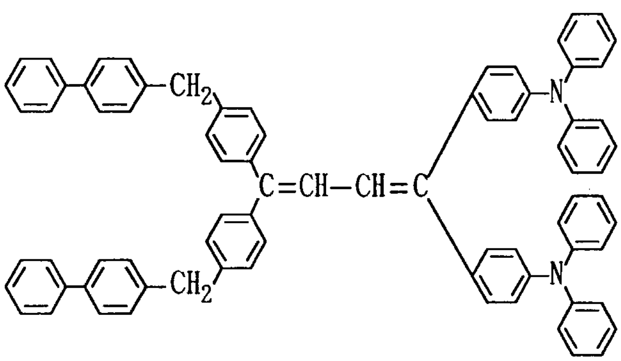

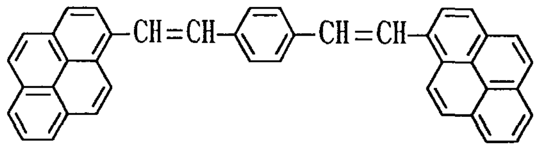
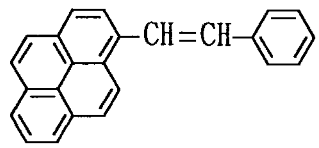
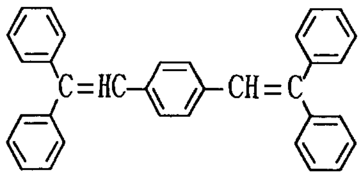
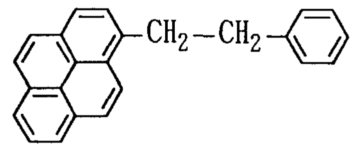
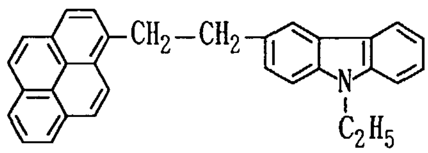
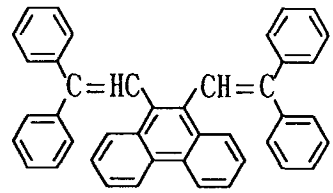
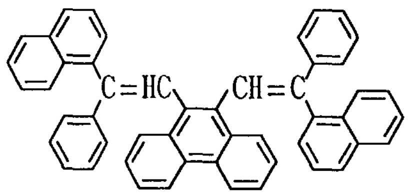
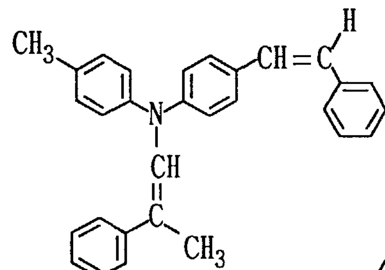
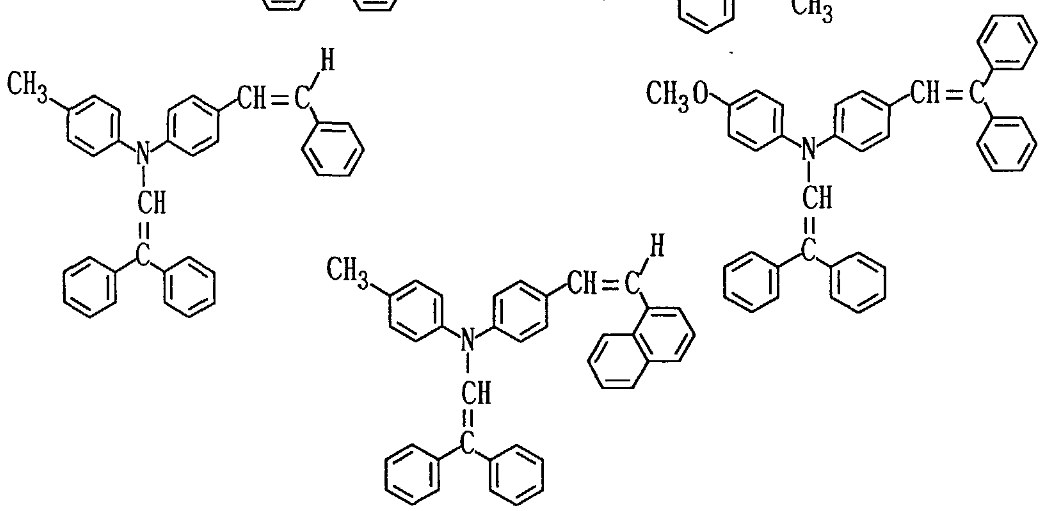
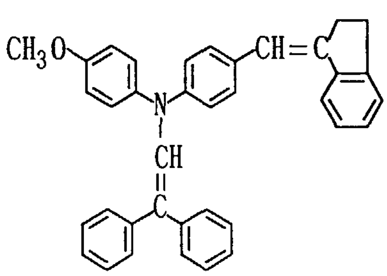
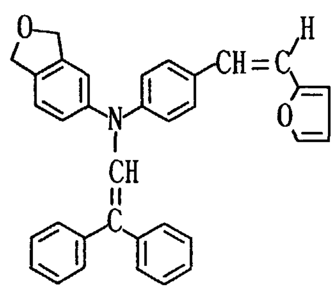

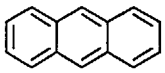
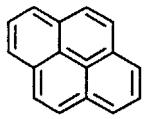
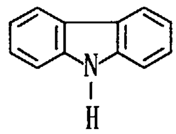
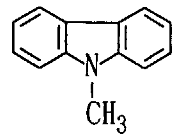

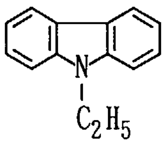
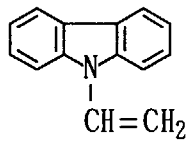
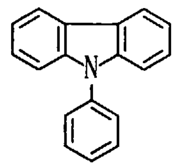

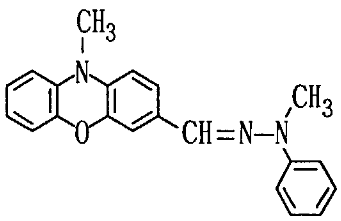
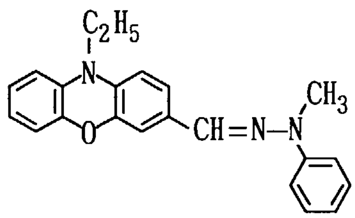
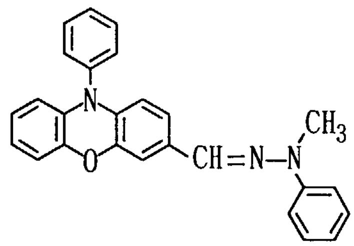

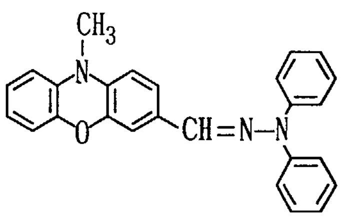
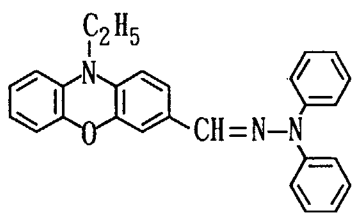
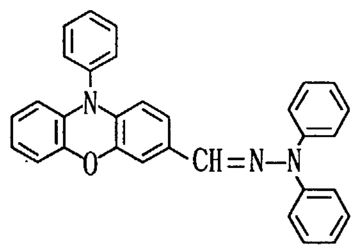

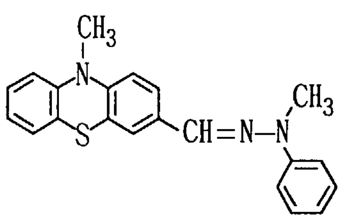
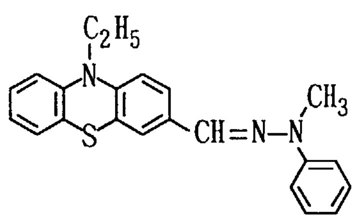
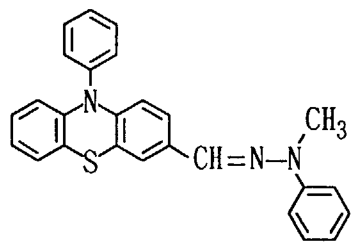

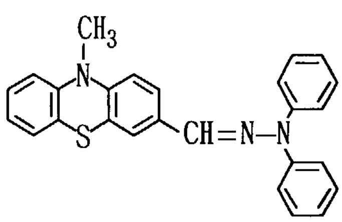
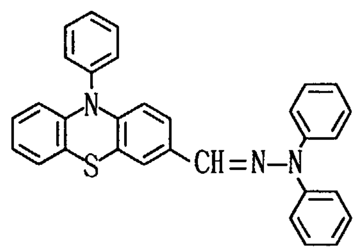

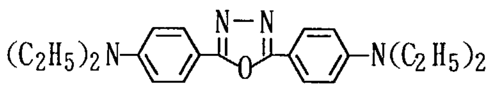

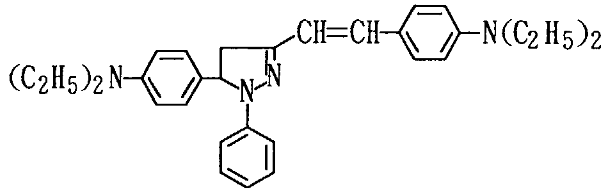

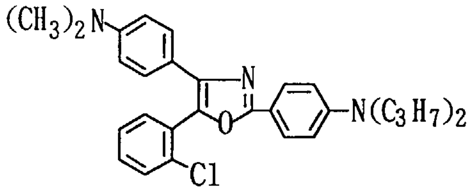

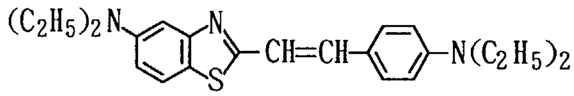

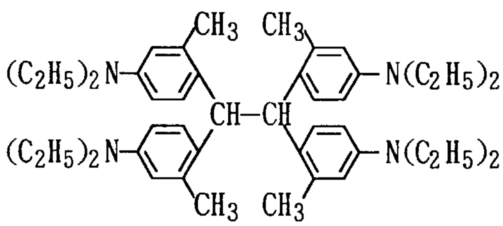

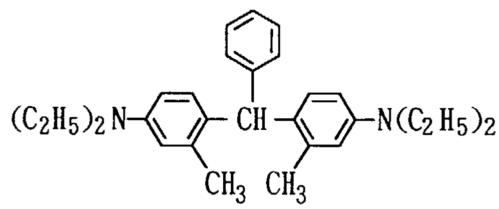

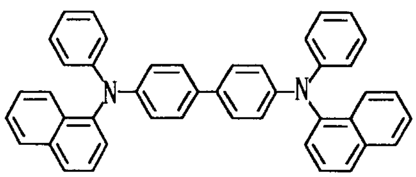

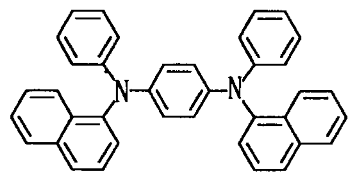

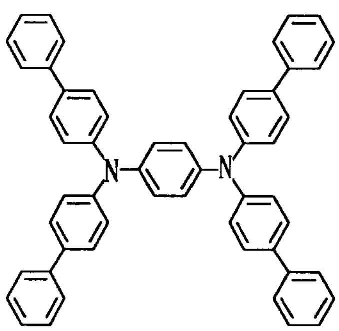

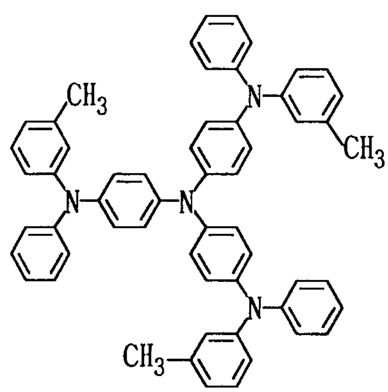

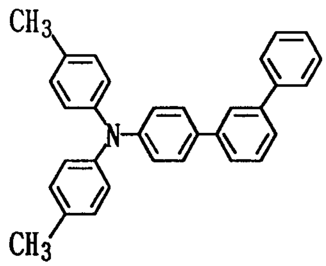
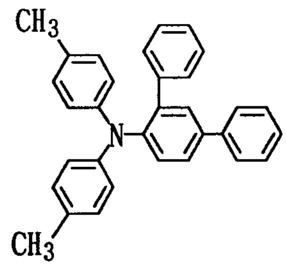
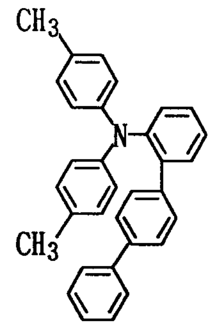
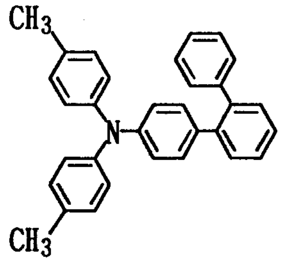
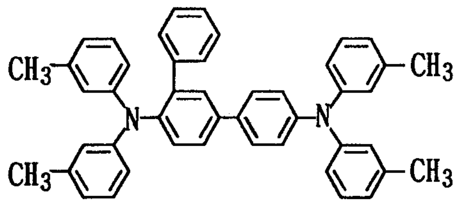
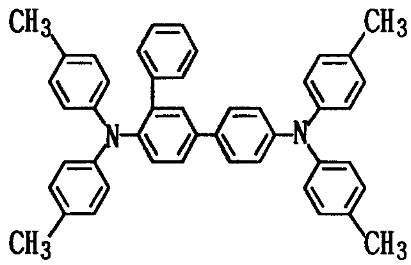
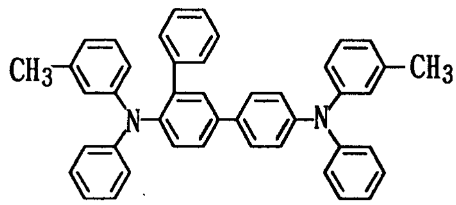
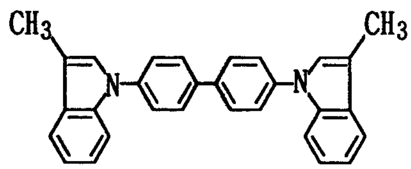
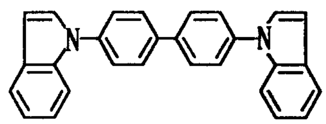
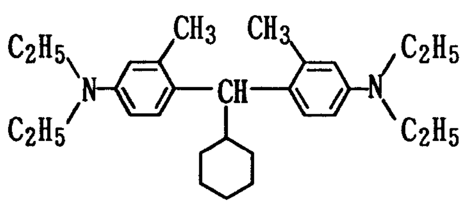
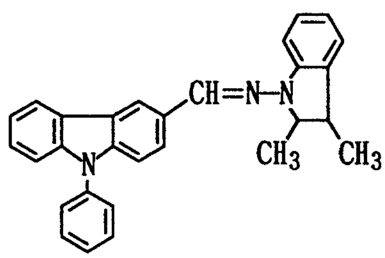
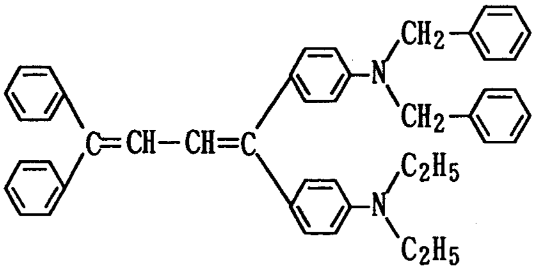

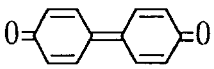
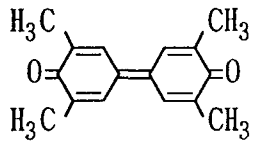
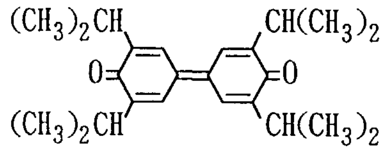

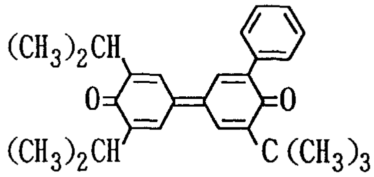
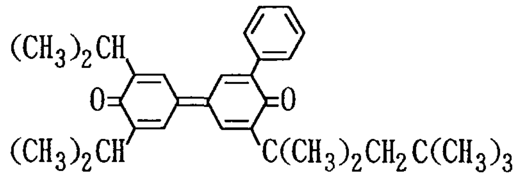

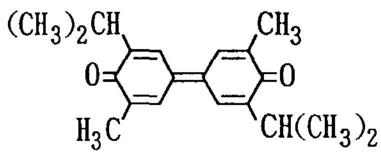
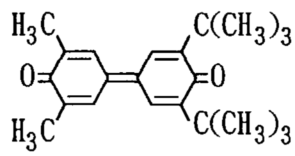

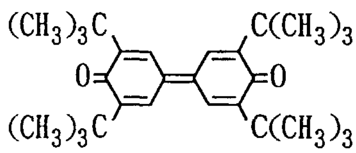
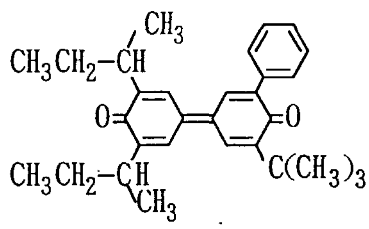

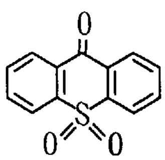
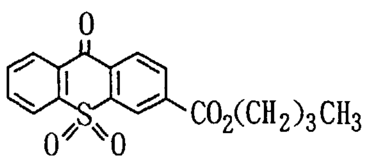
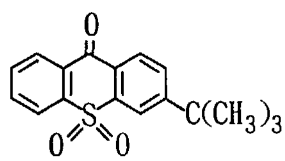
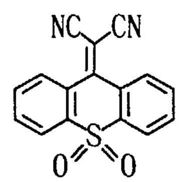

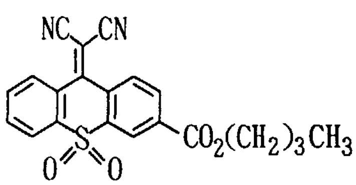
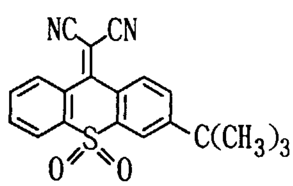
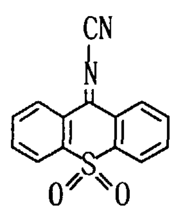

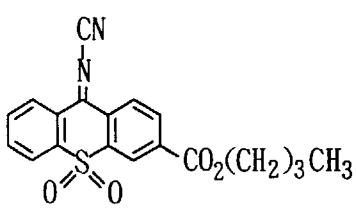
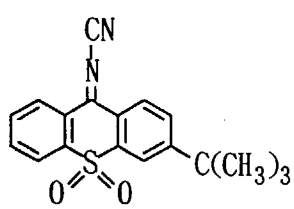
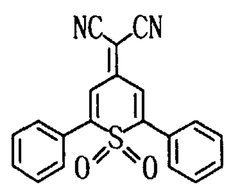

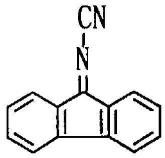
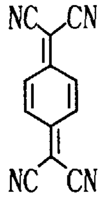
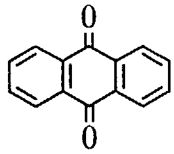
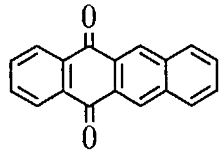
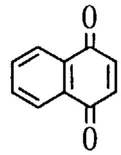
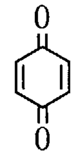
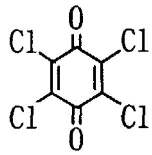
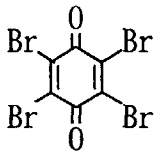
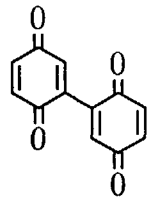
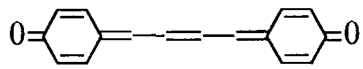
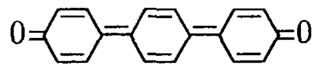
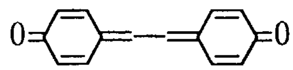
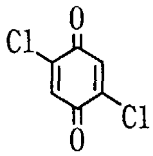
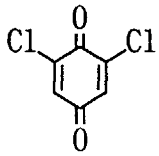
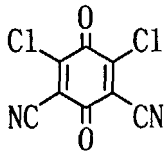
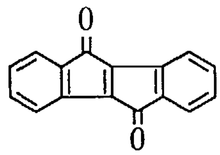
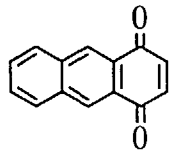
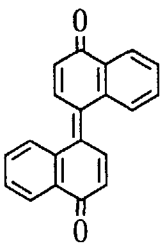
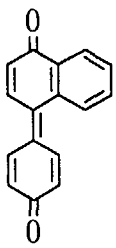
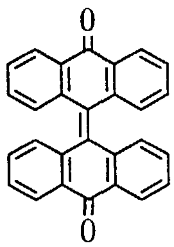
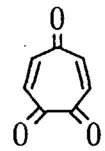
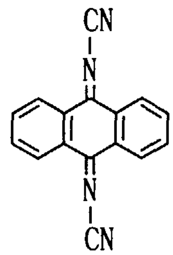
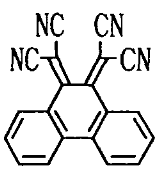
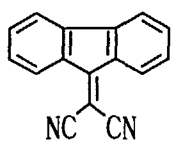
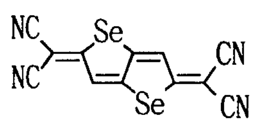
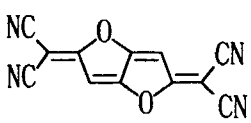
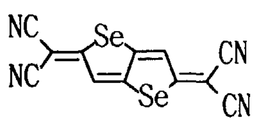

The charge-transfer substances may be used individually or as a mixture of two or more. The charge-transfer layer is preferably 5 to 100 μm, more preferably 10 to 30 μm, in thickness. If it is less than 5 μm, the initial potential may be low, and if it is more than 100 μm, the electrophotographic properties may be deteriorated.

A known conventional underlying layer may be disposed between the conductive substrate and the photosensitive layer. For example, the underlying layer may be composed of fine particles of titanium oxide, aluminum oxide, zirconia, titanic acid, zirconic acid, lanthanum lead, titanium black, silica, lead titanate, barium titanate, tin oxide, indium oxide or silicon oxide, polyamide resins, phenolic resins, casein, melamine resins, benzoguanamine resin, polyurethane resins, epoxy resins, cellulose, nitrocellulose, polyvinyl alcohol or polyvinyl butyral resin. These fine particles and resins may be used individually or as a mixture of two or more. It is desirable to use both the fine particles and the resins since the fine particles adsorb the resins to form even coating. The underlying layer may also contain the above-described binder

resins. The polymers of the present invention may also be used.

The underlying layer is generally 0.01 to 10.0 μm, preferably 0.01 to 1.0 μm, in thickness. If it is less than 0.01 μm, it may be difficult to form an even underlying layer, and if it is more than 10.0 μm, the electrophotographic properties may be deteriorated.

A known conventional blocking layer may also be disposed between the conductive substrate and the photosensitive layer. The blocking layer may be a layer of the above-described binder resins. The blocking layer is generally 0.01 to 20.0 μm, preferably 0.1 to 10.0 μm, in thickness. If it is less than 0.01 μm, it may be difficult to form an even blocking layer, and if it is more than 20.0 μm, the electrophotographic properties may be deteriorated.

The electrophotographic photoreceptor of the present invention may have a protecting layer on the photosensitive layer. The protecting layer may be 0.01 to 20 μm, preferably 0.1 to 10 μm, in thickness. The protecting layer may be a layer of the above-described binder resin. The protecting layer may contain conductive substances, such as the above-described charge-generating substance and charge-transfer substances, additives, metals, oxides, nitrides, salts and alloys thereof, and carbon.

To improve the efficiency of the electrophotographic photoreceptor of the present invention, the charge-generating layer and the charge-transfer layer may contain additives, such as binders, plasticizers, curing catalysts, fluidizing agents, anti-pinhole agents, spectral sensitivity sensitizers (sensitizing dyes) for improving the electrophotographic sensitivity, other various chemical substances for preventing an increase of residual potential and decreases of charging potential and sensitivity during repeated uses, antioxidants, surfactants, anti-curling agents and leveling agents.

Examples of the binders are silicone resins, polyamide resins, polyurethane resins, polyester resins, epoxy resins, polyketone resins, polycarbonate resins, polystyrene resins, polymethacrylate resins, polyacrylamide resins, polybutadiene resins, polyisoprene resin, melamine resin, benzoguanamine resin, polychloroprene resin, polyacrylonitrile resin, ethyl cellulose resin, nitrocellulose resin, urea resins, phenolic resins, phenoxy resins, polyvinyl butyral resins, formal resins, vinyl acetate resins, vinyl acetate/vinyl chloride copolymer and polyestercarbonate resins. Thermo- or photo-setting resins may also be used. That is, it is possible to use any resin which is an insulator and can form coating in ordinary conditions.

The binders are preferably 5 to 200 % by weight, more preferably 10 to 100 % by weight, based on the charge-transfer substance used. Photosensitive layers containing less than 5 % by weight of binders may be so uneven as to deteriorate the image quality. Those containing more than 20 % by weight of binders may have poor sensitivity so as to increase the residual potential.

Examples of the plasticizers are biphenyl, biphenyl chloride, *o*-terphenyl, paraffin halides, dimethylnaphthalene, dimethyl phthalate, dibutyl phthalate, dioctyl phthalate, diethyleneglycol phthalate, triphenyl phosphate, diisobutyl adipate, dimethyl sebacate, dibutyl sebacate, butyl laurate, methylphthalyl ethyl glycolate, dimethylglycol phthalate, methylnaphthalene, benzophenone, polypropylene, polystyrene and various fluorohydrocarbons.

Examples of the curing catalysts are methanesulfonic acid, dodecylbenzenesulfonic acid and dinonylnaphthalenesulfonic acid.

Examples of the fluidizing agents are Modaflow and Acronal 4F.

Examples of the anti-pinhole agents are benzoin and dimethyl phthalate.

The total amount of the plasticizers, the fluidizing agents and the anti-pinhole agents is preferably 5 % by weight or less, based on the charge-transfer substance.

Examples of the sensitizing dyes are triphenylmethane dyes, such as Methyl Violet, Crystal Violet, Night Blue and Victoria Blue, acridine dyes, such as Erythrosin, Rhodamine B, Rhodamine 3R, Acridine Orange and Flapeosin, thiazine dyes, such as Methylene Blue and Methylene Green, oxazine dyes, such as Capri Blue and Meldora Blue, cyanine dyes, merocyanine dyes, styryl dyes, pyrylium salt dyes and thiopyrylium salt dyes.

An electron acceptor may be added to the photosensitive layer to improve the sensitivity and to reduce the residual potential and fatigue during repeated uses.

Examples of the electron acceptor are compounds having high electron affinity, such as succinic anhydride, maleic anhydride, dibromomaleic anhydride, phthalic anhydride, tetrachlorophthalic anhydride, tetrabromophthalic anhydride, 3-nitrophthalic anhydride, 4-nitropyhthalic anhydride, pyromellitic anhydride, mellitic anhydride, tetracyanoethylene, tetracyanoquinodimethane, *o*-dinitrobenzene, *m*-dinitrobenzene, 1,3,5-trinitrobenzene, paranitrobenzonitrile, picryl chloride, quinonechloroimide, chloranyl, bromanyl, benzoquinone, 2,3-dichlorobenzoquinone, dichlorodicyanoparabenzoquinone, naphthoquinone, diphenoquinone, tropoquinone, anthraquinone, 1-chloroanthraquinone, dinitroanthraquinone, 4-nitrobenzophenone, 4,4-nitrobenzophenone, 4-nitrobenzalmalondinitril, ethyl α-cyano-β-(*p*-cyanophenyl)acrylate, 9-anthracenylmethylmalondinitril, 1-cyano-(*p*-nitrophenyl)-2-(*p*-chlorophenyl)ethylene, 2,7-dinitrofluorenone, 2,4,7-trinitrofluorenone, 2,4,5,7-tetranitrofluorenone, 9-fluorenylidene-[dicyanomethylenemalononitrile], polynitro-9-fluorenylidene-[dicyanomethylenemalonodinitrile], picric acid, *o*-nitrobenzoic acid, *p*-nitrobenzoic acid, 3,5-dinitrobenzoic acid, pentafluorobenzoic acid, 5-nitrosalicylic acid, 3,5-dinitrosalicylic acid, phthalic acid and mellitic acid.

The electron acceptor may be added to either the charge-transfer layer or the charge-generating layer, and is generally 0.01 to 200 % by weight, preferably 0.1 to 50 % by weight, based on the charge-transfer substances or the charge-generating acceptors.

To improve the surface quality, tetrafluoroethylene resin, trifluoroethylene chloride resin, tetrafluoroethylene-hexafluoropropylene resin, fluorovinyl resins, fluorovinylidene resins, difluorodichloroethylene resin, copolymers thereof and fluorinated graft copolymers may also be used.

The amount of these surface modifiers is generally 0.1 to 60 % by weight, preferably 5 to 40 % by weight, based on the binder resin. If it is less than 0.1 % by weight, surface modification will be insufficient for improving the wear-resistance and surface durability and for decreasing the surface energy, and if it is more than 60 % by weight, the electrophotographic properties may be deteriorated.

Examples of usable antioxidants are hindered phenol antioxidants, aromatic amine antioxidants, hindered amine antioxidants, sulfide antioxidants and organic phosphoric acid antioxidants.

These antioxidants are generally 0.01 to 10 % by weight, preferably 0.1 to 2 % by weight, based on the charge-transfer substances.

Examples of the hindered phenol antioxidants are given bellow.

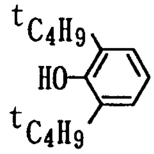
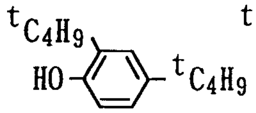
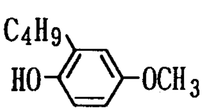
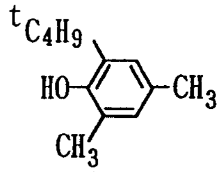
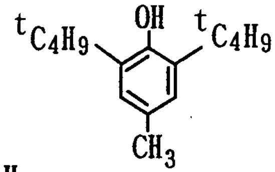
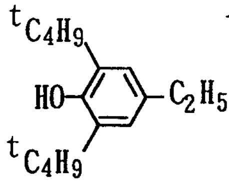
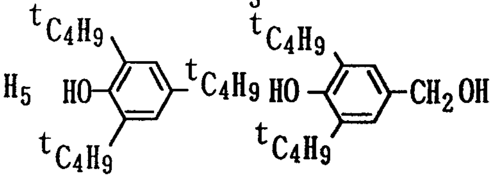
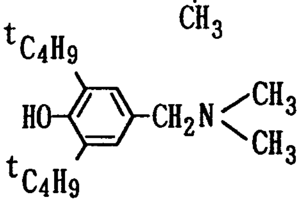
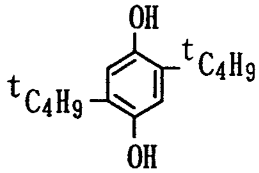
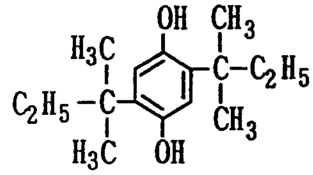
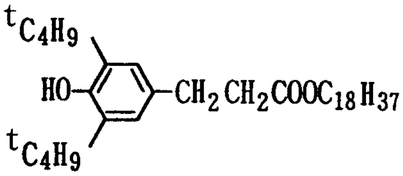
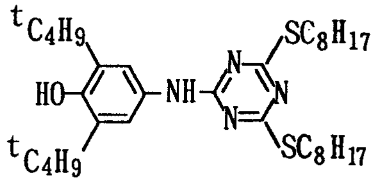
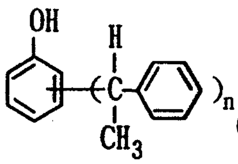
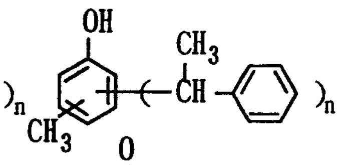
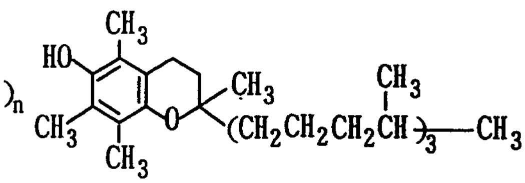
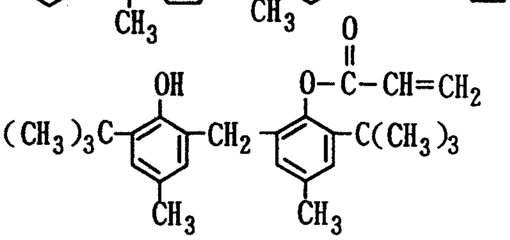
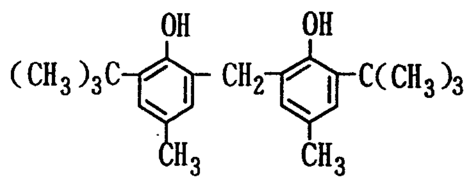
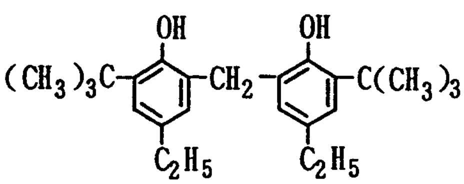
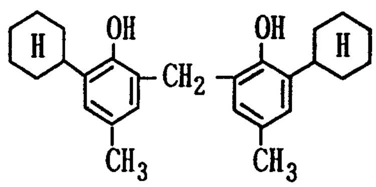
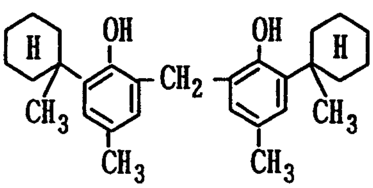
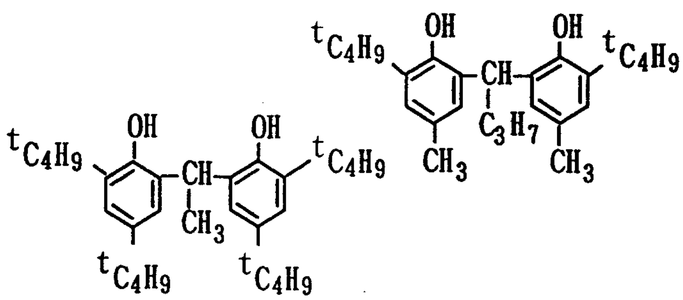

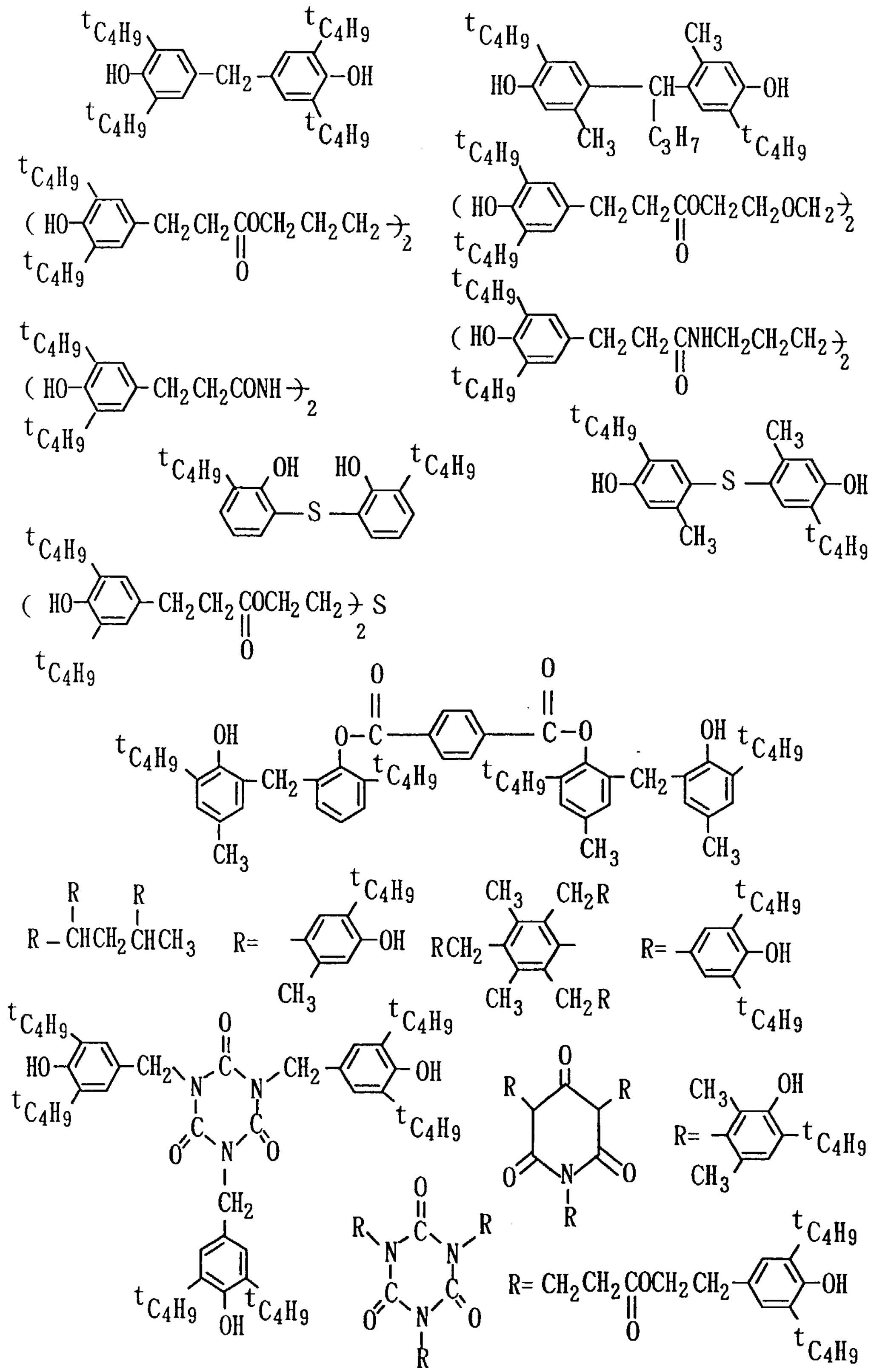

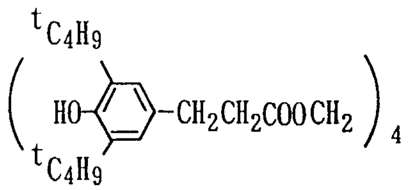

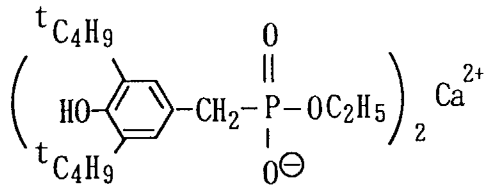

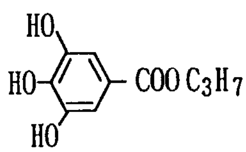

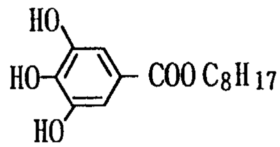

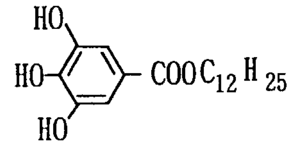

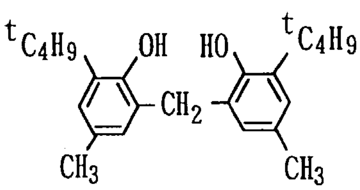

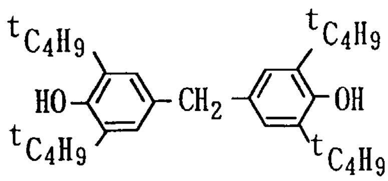

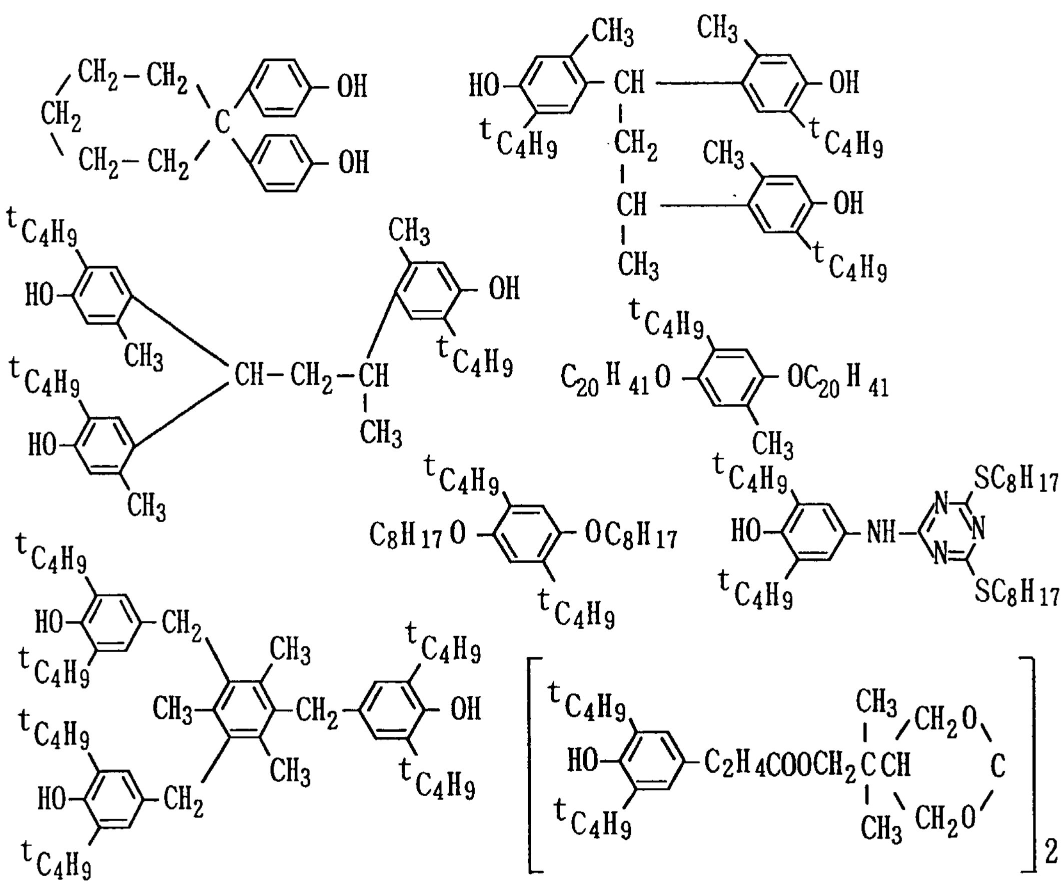

Examples of the aromatic amine antioxidants are given bellow.

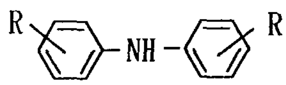

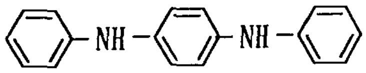

(R: an alkyl group, such as methyl or ethyl)

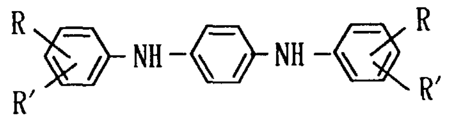

(R: an alkyl group, such as methyl or ethyl,
R′: an alkyl group, such as methyl or ethyl)

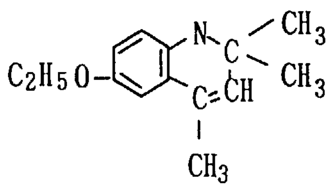

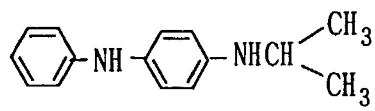

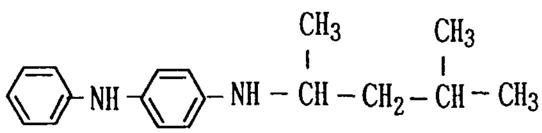

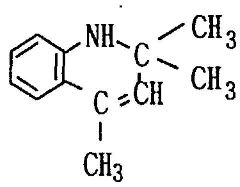

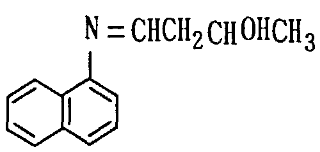

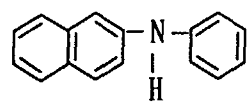

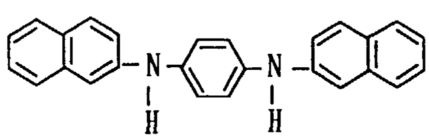

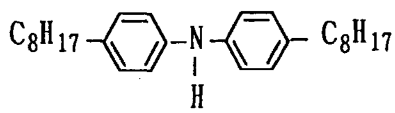

Examples of the hindered amine antioxidants are given bellow.

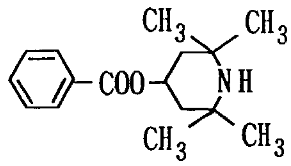

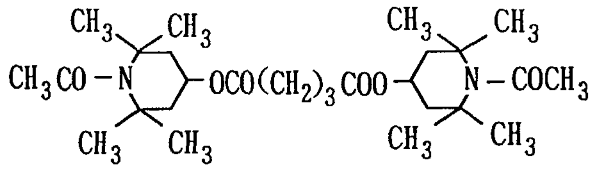

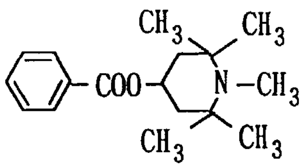

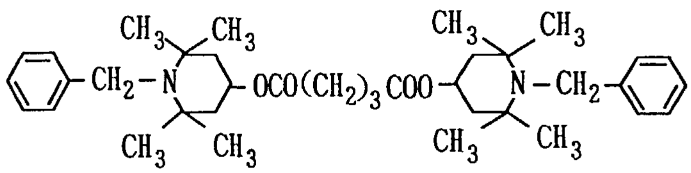

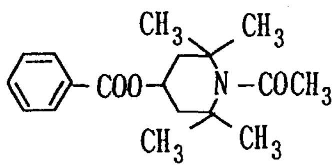

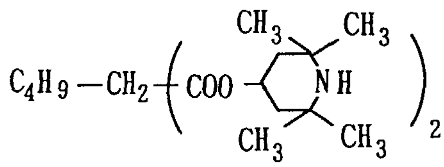

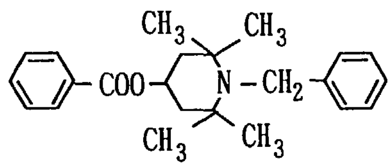

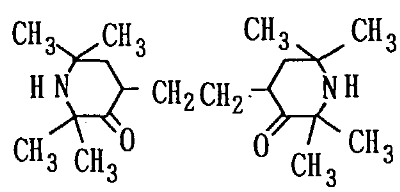

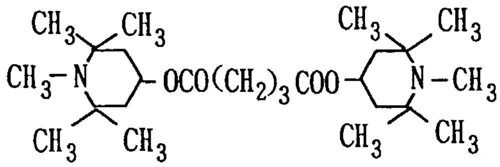

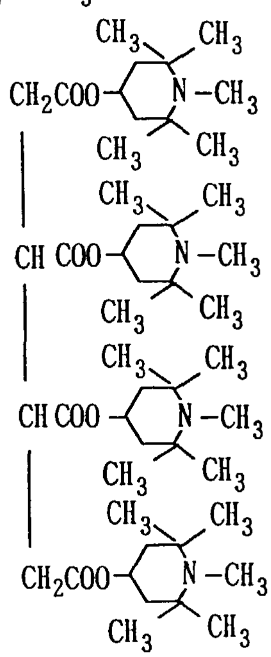

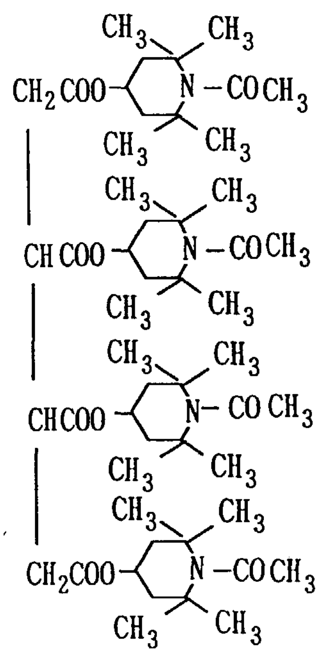

examples of the sulfide antioxidants are given bellow.

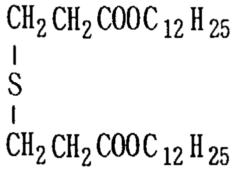

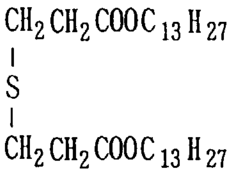

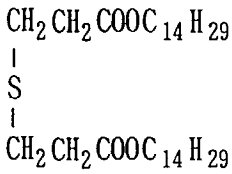

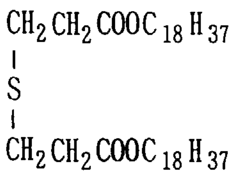

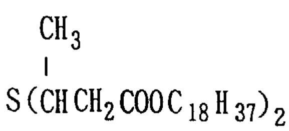

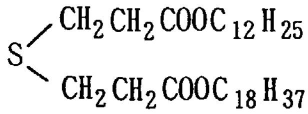

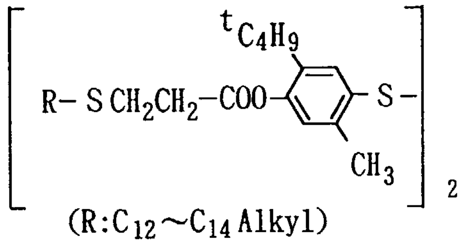

$(C_{12}H_{25}SCH_2CH_2COOCH_2)_4C$

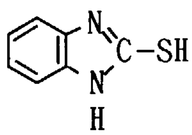

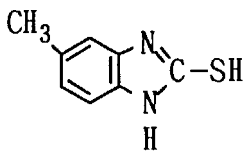

Examples of the organic phosphoric acid antioxidants are given bellow.

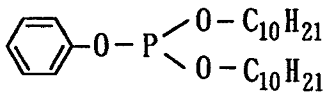
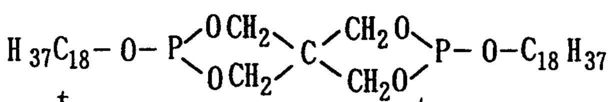

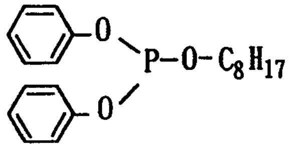
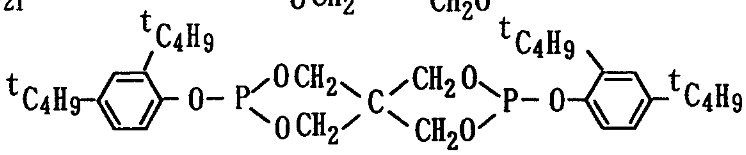

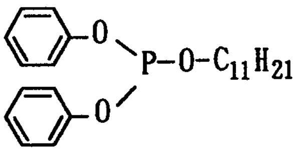
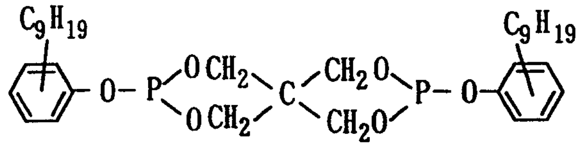

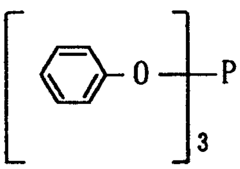
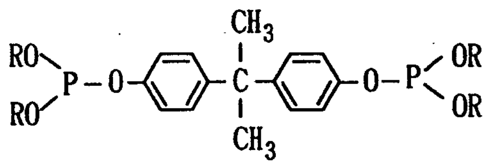

(R:$C_{12}$ ~$C_{15}$alkyl)

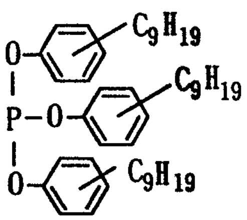
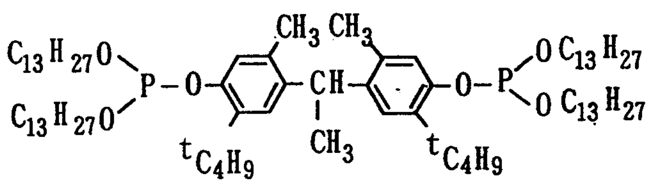

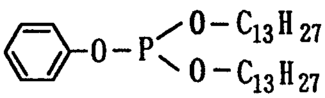
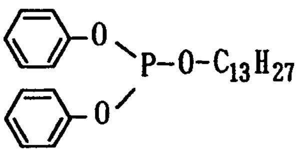
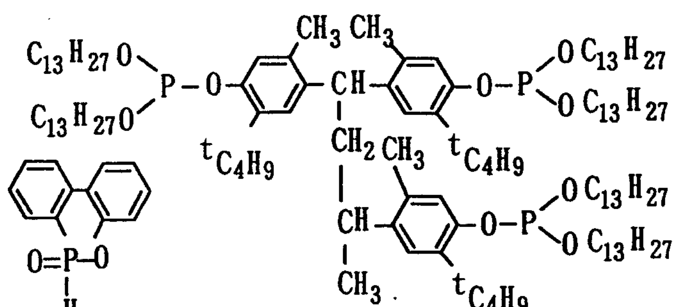

$P{-}(S-C_{12}H_{25})_3$

$P{-}(S-C_{10}H_{21})_3$

$P{-}(O-C_{13}H_{27})_3$

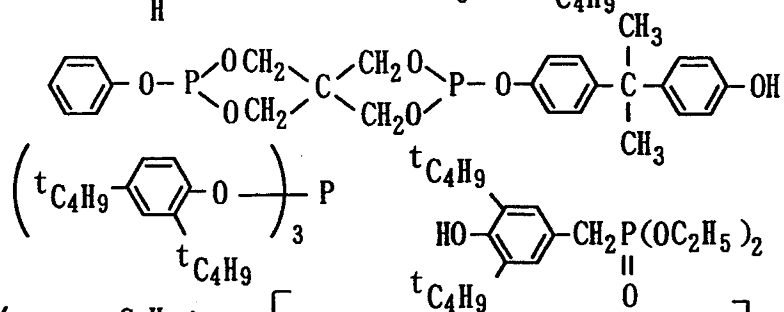

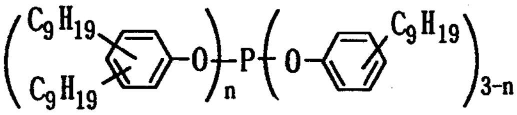

(n = 1 or 2)

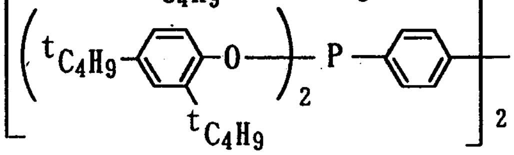

Examples of the antioxidants containing in molecules both hindered phenol structure units and hindered amine structure units are given bellow.

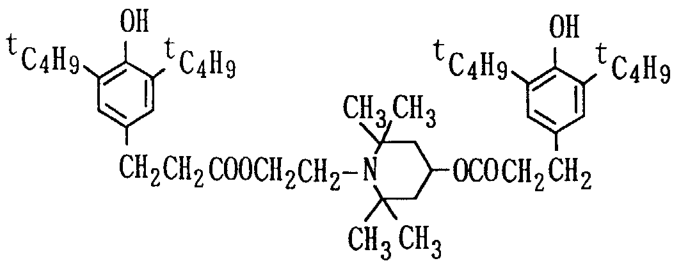

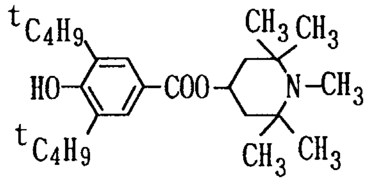

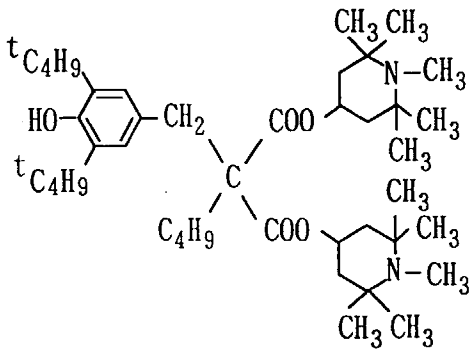

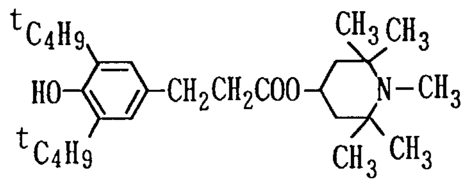

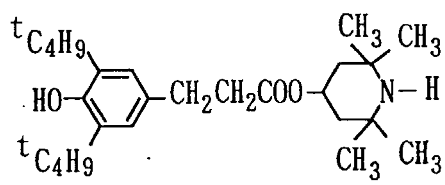

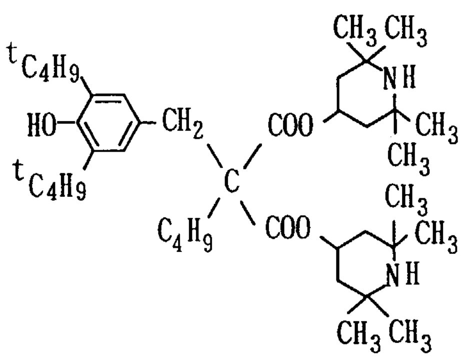

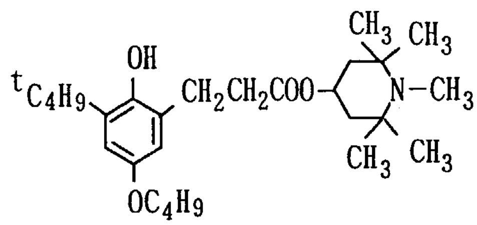

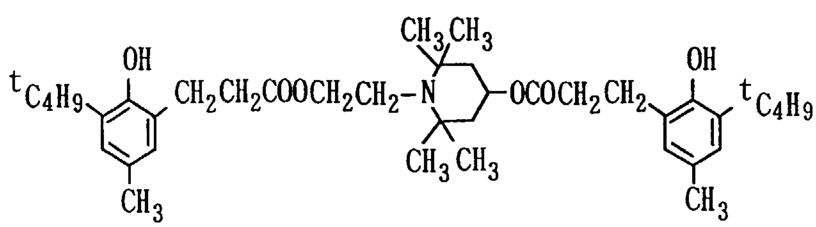

These additives may be used individually or in a combination thereof, for example, as a mixture of two or more. These additives may also be added to the protection layer, the underlying layer and the blocking layer.

Examples of solvents, which may be used for the production of the charge-generating layer and the charge-transfer layer are, aromatic solvents, such as benzene, toluene, xylene and chlorobenzene, ketones, such as acetone, methyl ethyl ketone and cyclohexanone, alcohols, such as methanol, ethanol and isopropanol, esters, such as ethyl acetate and ethyl cellosolve, hydrocarbon halides, such as carbon tetrachloride, chloroform, dichloromethane and tetrachloroethane, ethers, such as tetrahydrofuran and dioxane, dimethylformamide, dimethyl sulfoxide and diethylformamide.

These solvents may be used individually or as a solvent mixture of two or more.

The photoreceptor may be produced by coating the substrate or an underlying layer with a solution wherein the

above-described charge-generating substance, charge-transfer substance, additives and a binder resin are dissolved or dispersed in a solvent by various coating techniques, such as dipping, statistic coating, powder coating, spraying, role coating, applicator coating, spray-coater coating, bar-coater coating, role-coater coating, dip-coater coating, doctor-blade coating, wire-bar coating, knife-coater coating, attritor coating, spinner coating, bead coating, blade coating or curtain coating, followed by drying.

The mixing may be performed by using, for example, a ball mill, ultrasound, a paint shaker, a red devil, a sand mill, a mixer or an attritor.

The photosensitive layers of single-layer type electrophotographic photoreceptors may also contain the above-described binder resins. The above-described charge-generating substances and charge-transfer substances may also be used for the production of the photosensitive layer of single-layer type photoreceptors. The above-described additives may also be used to improve the electrophotographic properties of the photosensitive layers. It is also possible to provide the above-described protecting layer, underlying layer and blocking layer.

The single-layer type photoreceptor is preferably 5 to 100 $\mu m$, more preferably 8 to 50 $\mu m$, in thickness. If it is less than 5 $\mu m$, initial potential may be low, and if it is more than 50 $\mu m$, the electrophotographic properties may be deteriorated.

The weight ratio of [the charge-generating substance]:[the polymer of the present invention] in the photosensitive layer of the single-layer type electrophotographic photoreceptor is preferably from 20:80 to 80:20, more preferably from 30:70 to 60:40. The weight ratio of [the charge-transfer substance]:[the polymer of the present invention] is preferably from 20:80 to 80:20, more preferably from 30:70 to 70:30. The weight ratio of [the charge-generating substance]:[the charge-transfer substance] is preferably from 20:80 to 70:30, more preferably from 30:70 to 60:40.

Other resins may be used along with the polymer of the present invention so far as the attainment of the objects of the present invention is not hindered.

The preferred electrophotographic photoreceptor of the present invention has a layer structure wherein the photosensitive layer has a surface layer containing the polymer of the present invention. Such an electrophotographic photoreceptor of the present invention has high surface hardness and maintains excellent printing life and good cleaning efficiency, and is suitably applicable in various electrophotographic fields, such as duplicators, (monochrome duplicators, multicolor duplicators, full-color duplicators; analog duplicators, digital duplicators), printers (laser printers, LED printers, liquid crystal shutter printers), FAX and plate making machines.

The electrophotographic photoreceptor of the present invention is electrified by, for example, corona discharge (corotron or scoroton), or contact electrification (electrification rollers, electrification brushes). Exposure is performed by, for example, a halogen lamp, a fluorescent lamp, laser (semiconductor, He-Ne), LED or an intraphotoreceptor exposure system. Development is performed by, for example, dry development, such as cascade development, two-component magnetic brush development, one-component insulating toner development or one-component conductive toner development, or wet development. Image transfer is performed by, for example, electrostatic transfer, such as corona transfer, roller transfer or belt transfer, pressure transfer or adhesion transfer. Fixing is performed by, for example, hot-roller fixing, radiant-flash fixing, oven fixing or pressure fixing. Cleaning and de-electrification is performed by using, for example, a brush cleaner, a magnetic brush cleaner, a electrostatic brush cleaner, a magnetic roller cleaner or a blade cleaner.

[PROCESS OF PRODUCING POLYCARBONATE]

The process of the present invention comprises carrying out interfacial polycondensation of a carbonate precursor with a dioxy compound in the presence of an aqueous alkali solution in a liquid mixture of a water-insoluble organic solvent and the aqueous alkali solution, and is characterized in using as the dioxy compound a dihydric alcohol having a $pK_a$ of less than 15.74 as measured in water at 25°C.

The dihydric alcohol to be used in the present invention may be any dihydric alcohol which has a $pK_a$ of less than 15.74. Preferred dihydric alcohols have a $pK_a$ of less than 14, more preferably a $pK_a$ of less than 12.

Examples of dihydric alcohols having a $pK_a$ of less than 15.74 are 2,2-difluoro-1,3-propanediol, 2,2,3,3-tetrafluoro-1,4-butanediol, 2,2,3,3,4,4-hexafluoro-1,5-pentanediol, 1H,1H,6H,6H-perfluoro-1,6-hexanediol, 1H,1H,7H,7H-perfluoro-1,7-heptanediol, 1H,1H,8H,8H-perfluoro-1,8-octanediol, 1H,1H,9H,9H-perfluoro-1,9-nonanediol, 1H,1H,10H,10H-perfluoro-1,10-decanediol, 1H,1H,11H,11H-perfluoro-1,11-undecanediol, 1H,1H,12H,12H-perfluoro-1,12-dodecanediol, 2,2,2-trifluoro-1,1-ethanediol, 2,2,3,3,3-pentafluoro-1,1-ethanediol, 1H-perfluoro-1,1-butanediol, 1H-perfluoro-1,1-pentanediol, 1H-perfluoro-1,1-hexanediol, 1H-perfluoro-1,1-heptanediol, 1H-perfluoro-1,1-octanediol, 1H-perfluoro-1,1-nonanediol, 1H-perfluoro-1,1-decanediol, 1H-perfluoro-1,1-undecanediol, 1H-perfluoro-1,1-dodecanediol, perfluoropropane-2,2-diol, perfluorobutane-2,2-diol, perfluoropentane-3,3-diol, perfluorodecane-2,2-diol, perfluorododecane-2,2-diol, perfluorotetradecane-2,2-diol, 1,3-bis(2-hydroxy-2-perfluoropropyl)benzene and 1,4-bis(2-hydroxy-2-perfluorodecyl)benzene.

In the process of the present invention, these dihydric alcohols may be used individually or in a combination of two

or more.

In the process of the present invention, a dihydroxyaryl compound (a bisphenol compound) may also be used as an additional dioxy compound to be copolymerized with the dihydric alcohol having a p$K_a$ of less than 15.74 as measured in water at 25°C.

Dihydroxyaryl compounds which may be used as the copolymerization component are not particularly limited and may be of various kinds, and preferred examples are the dihydroxyaryl compounds represented by the following general formula (II);

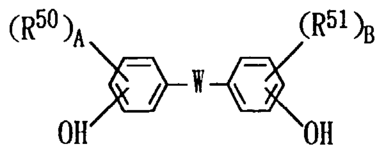

(II)

wherein $R^{50}$, $R^{51}$, W, A, B and $R^{52}$ and $R^{53}$ in W are as defined above.

Examples and preferred examples of the groups represented by $R^{50}$ and $R^{51}$ are the same as those exemplified in the description of the polymers of the present invention. As to $-CR^{52}R^{53}-$, which is an example of W in the general formula (II), examples and preferred examples of the groups represented by $R^{52}$ and $R^{53}$ are the same as those exemplified in the description of the polymers of the present invention.

Examples of the dihydroxyaryl compounds represented by the general formula (II) are the same as the dihydroxyaryl compounds (II-a) exemplified in the description of the polymers of the present invention.

Preferred examples thereof are the same as the dihydroxyaryl compounds (II-b) exemplified in the description of the polymers of the present invention.

It is also possible to use copolymerization components other than the dihydroxyaryl compounds represented by the general formula (II), for example, dihydroxybisindanes, such as 6,6'-dihydroxy-3,3,3',3'-tetramethylbisindane, and dihydroxynaphthalenes, such as 1,3-dihydroxynaphthalene, 1,4-dihydroxynaphthalene, 1,5-dihydroxynaphthalene, 2,6-dihydroxynaphthalene and 2,7-dihydroxynaphthalene.

These dihydroxyaryl compounds may be used individually or in a combination of two or more.

The amounts of the dihydric alcohol having a p$K_a$ of less than 15.74 as measured in water at 25°C and the dihydroxyaryl compound represented by the general formula (II) are preferably such that the repeating units derived from the dihydric alcohol is 0.1 to 99 mol%, more preferably 1 to 50 mol%, based on the total of the repeating units derived from both of them.

According to the method of the present invention, polycarbonates having aliphatic terminal groups may be produced by using a monohydric alcohol having a p$K_a$ of less than 15.74 as measured in water at 25°C along with the dioxy compound (namely, the dihydric alcohol having a p$K_a$ of less than 15.74, as measured in water at 25°C, or the dihydric alcohol and a dihydroxyaryl compound, such as the dihydroxyaryl compound represented by the general formula (II).

Any monohydric alcohol having a p$K_a$ of less than 15.74 may be used in the present invention without particular limitation. Preferred monohydric alcohols have a p$K_a$ of not more than 14, more preferably a p$k_a$ of not more than 12.

Examples of monohydric alcohols having a p$K_a$ of less than 15.74 are 2,2,2-trifluoroethanol, 2,2,3,3,3-pentafluoropropanol, 1H,1H-perfluorobutanol, 1H,1H-perfluoropentanol, 1H,1H-perfluorohexanol, 1H,1H-perfluoroheptanol, 1H,1H-perfluorooctanol, 1H,1H-perfluorononanol, 1H,1H-perfluorodecanol, 1H,1H-perfluoroundecanol, 1H,1H-perfluorododecanol, 1H,1H-perfluorotridecanol, 1H,1H-perfluorotetradecanol, 1H,1H-perfluoropentadecanol, α,α,ω-trihydroperfluoroethanol, α, α,ω-trihydroperfluoropropanol, α,α,ω-trihydroperfluorobutanol, α,α,ω-trihydroperfluoropentanol, α,α,ω-trihydroperfluorohexanol, α,α,ω-trihydroperfluoroheptanol, α,α,ω-trihydroperfluorooctanol, α,α,ω-trihydroperfluorononanol, α,α,ω-trihydroperfluorodecanol, α,α,ω-trihydroperfluoroundecanol, α,α,ω-trihydroperfluorododecanol, perfluorocyclohexylethanol, 1,1,1,3,3,3-hexafluoro-2-propanol, 1,1,1-trifluoro-2-propanol, 1H,1H,1H,2H-perfluoro-2-pentanol, perfluoro-*tert*-butanol, 2-cyano-1,1,1-trifluoro-2-propanol and 2-cyano-1,1,1-trifluoro-2-butanol.

These dihydric alcohols may be used individually or in a combination of two or more.

In cases where the monohydric alcohol is used as an end-terminating agent, the amount of the monohydric alcohol is generally 0.01 to 30 mol%, preferably 0.1 to 10 mol%, based on the total of the dioxy compound and the monohydric alcohol.

The present invention further provides a process of producing a polycarbonate, comprising carrying out interfacial polycondensation of a carbonate precursor with a dioxy compound in the presence of an aqueous alkali solution and an end-terminating agent in a liquid mixture of a water-insoluble organic solvent and the aqueous alkali solution, the dioxy compound being the dihydroxyaryl compound represented by the general formula (II), and the end-terminating

agent being a monohydric alcohol having a p$K_a$ of less than 15.74 as measured in water at 25°C.

In this production process, the examples and amount of the monohydric alcohol are the same as those described above. This process makes it easy to introduce aliphatic terminal groups into polycarbonates containing dihydroxyaryl repeating units by interfacial polymerization.

In this production process, the dihydroxyaryl compounds represented by the general formula (I) and the monohydric alcohols, respectively, may be used individually or in a combination of two or more.

The polycarbonate produced by the process of the present invention preferably has a reduced viscosity of 0.2 to 10.0 dl/g as measured in a 0.5 g/dl solution thereof in methylene chloride at 20°C. Polycarbonates having a reduced viscosity of less than 0.2 dl/g are inferior in mechanical properties, such as surface hardness, and polycarbonates having a reduced viscosity of more than 10.0 dl/g increase the viscosity of solutions thereof, and may be difficult to produce or use. The reduced viscosity is more preferably 0.3 to 2.0 dl/g.

In the production process of the present invention, other conventional end-terminating agents than the monohydric alcohols may also be used, and conventional branching agents may be used to produce polycarbonates containing branching structures or ring structures.

Examples of end-terminating agents which may be used in addition to the monohydric alcohol are monovalent carboxylic acids and derivatives thereof and monohydric phenols.

Examples of such end-terminating agents are the same as the end-terminating agents (Y-1) exemplified in the description of the polymers of the present invention.

Preferred examples are the same as the end-terminating agents (Y-2) exemplified in the description of the polymers of the present invention.

Branching agents which may be used are phenols or carboxylic acids of three- or more-valence.

Examples of such branching agents are the same as the branching agents (X) exemplified in the description of the polymers of the present invention.

Preferred examples are phloroglucitol and 1,3,5-tris(4-hydroxyphenyl)benzene. The trihydric phenols represented by the general formula (IV), such as 1,1,1-tris(4-hydroxyphenyl)ethane, are also be suitable.

The total amount of the end-terminating agents is preferably 0.01 to 30 mol%, more preferably 1 to 10 mol%, in copolymerization ratio.

The total amount of the branching agents is preferably 0.01 to 30 mol%, more preferably 1 to 10 mol%, in copolymerization ratio.

The end-terminating agent and the branching agent are used in the presence of the above-described starting dioxy compound by taking various methods. For example, they are made coexistent with the dioxy compound from the beginning, to perform polymerization in one stage; or, after oligomerization of the dioxy compound, both of them are added in the following polymerization stage; or, after oligomerization of the dioxy compound, the end-terminating agents is added to react with the oligomer, and then the branching agent is added to perform polymerization; or, after oligomerization of the dioxy compound, polymerization is performed by adding the branching agent to react with the oligomer, followed by addition of the end-terminating agent.

The polymerization may be performed by carrying out the interfacial polycondensation of the dioxy compound and the carbonate precursor in the presence of an alkali as an acid acceptor to directly obtain a high molecular weight polymer, or by a two-stage process wherein first a portion of the dioxy compound is allowed to react with the carbonate precursor in the presence of an alkali to form a bishaloformate oligomer, preferably a bischloroformate oligomer, and the oligomer is then allowed to react with the remaining dioxy compound to obtain a high molecular weight polymer. The two-stage process facilitates the control of the reaction, thereby enabling highly accurate adjustment of molecular weight.

Examples of suitable carbonate precursors are phosgene, bischlorocarbonates of dioxy compounds, dialkyl carbonates, such as dimethyl carbonate, diethyl carbonate, dibutyl carbonate and dicyclohexyl carbonate, bisaryl carbonates, such as diphenyl carbonate, ditolyl carbonate, di-*m*-cresyl carbonate, dinaphthyl carbonate, bis(diphenylyl) carbonate, bisphenol A biphenyl carbonate, bis(4-fluorophenyl)carbonate, bis(4-chlorophenyl) carbonate, bis(4-trifluoromethylphenyl) carbonate, bis(4-cyanophenyl) carbonate and bis(4-nitrophenyl)carbonate, and alkyl aryl carbonates, such as methyl phenyl carbonate, ethyl phenyl carbonate and cyclohexyl phenyl carbonate.

The dioxy compounds forming the bischlorocarbonates are not particularly limited, and are preferably dihydric alcohols having a p$K_a$ of less than 15.74 as measured in water at 25°C or the dihydroxyaryl compounds represented by the general formula (II).

Among these carbonate precursors, preferred are phosgene, bischlorocarbonates derived from dioxy compounds, particularly those derived from dihydric alcohols having a p$K_a$ of less than 15.74 as measured in water at 25°C or the dioxy compounds represented by the general formula (II), and bis(4-nitrophenyl) carbonate.

In cases where a gaseous carbonate precursor, such as phosgene, is used, it is preferable to blow it into the reaction system.

The amount of the carbonate precursor may be determined properly based on the stoichiometric ratio (equivalent)

for the reaction thereof, and is preferably at least one equivalent per equivalent of the total of the dioxy compound, the monohydric alcohol, the monohydric phenol and the tri- or more-hydric phenol.

Examples of alkalis which may be used as acid acceptors in the form of aqueous solutions are alkali metal hydroxides, such as sodium hydroxide and potassium hydroxide, alkali metal carbonate, such as sodium carbonate and potassium carbonate, and mixtures thereof.

These alkalis are used in the form of aqueous solutions.

The amount of the acid acceptor used may be determined properly based on the stoichiometric ratio (equivalent) for the reaction thereof. Particularly, it is preferable to use at least one equivalent, preferably 2 to 10 equivalents of the acid acceptor per equivalent of the total of the dioxy compound, the monohydric alcohol, the monohydric phenol and tri- or more-hydric phenol.

The polymerization solvent to be used for the interfacial polycondensation of the present invention may be any one so far as it is inert to the reaction and incompatible with water and dissolves the product polymer.

Usable solvents are various ones including the solvents conventional in the production of known polycarbonates, and may be used individually or as a solvent mixture. Typical examples include hydrocarbon halides, such as methylene chloride (dichloromethane), 1,2-dichloroethane, 1,1,2,2-tetrachloroethane, chloroform, 1,1,1-trichloroethane, carbon tetrachloride, monochlorobenzene and dichlorobenzene, hydrocarbons, such as benzene, toluene, xylene, cumene and ethylbenzene, ethers, such as diethyl ether. Methylene chloride is preferable.

These organic solvents may be used individually or as a solvent mixture of two or more.

A polymerization catalyst may be used to accelerate the polycondensation. Examples of polymerization catalysts suitable for the present invention are tertiary amines, such as trimethylamine, triethylamine, tripropylamine, tributylamine, dimethylbenzylamine and triphenylamine, aromatic basic compounds, such as N,N-dimethylaniline, pyridine, 4-dimethylaminopyridine, 4-diethylaminopyridine, 4-pirrolidinopyridine, 4-aminopyridine, 2-aminopyridine, 2-hydroxypyridine, 4-hydroxypyridine, imidazole, 2-methylimidazole, 2-dimethylaminoimidazole and quinoline, quaternary ammonium salts, such as tetrabutylammonium chloride and trimethylbenzylammonium bromide, quaternary ammonium hydroxides, such as tetramethylammonium hydroxide, tetraethylammonium hydroxide and tetrabutylammonium hydroxide, quaternary phosphonium salts, such as trimethylbenzylphosphonium halides, tetramethylbenzylphosphonium halides and triethylbenzylphosphonium halides, and crown ethers, such as 18-crown-6, 18-benzocrown-6 and 15-crown-5.

These polymerization catalysts may be used individually or in a combination of two or more.

The amount of the polymerization catalyst is preferably at least $10^{-6}$ equivalent, more preferably $10^{-6}$ to $10^{-2}$ equivalent per equivalent of the total of the dioxy compound, the monohydric alcohol, the monohydric phenol and the tri- or more-hydric phenol.

A small amount of an antioxidant, for example, sodium sulfite, hydrosulfite, trimethyl phosphate or triphenyl phosphate, may be used according to demands.

The amount of the antioxidant is preferably at least $10^{-6}$ equivalent, more preferably $10^{-6}$ to $10^{-2}$ equivalent, per equivalent of the total of the dioxy compound, the monohydric alcohol, the monohydric phenol and the tri- or more-hydric phenol.

The polymerization may be carried out in the atmosphere of an inert gas, such as nitrogen or argon.

The polymerization is generally carried out at a temperature of 0 to 150°C, preferably 0 to 60°C. The reaction may be carried out at a reduced pressure, atmospheric pressure or an increased pressure, and generally proceeds sufficiently at atmospheric pressure or at the pressure in the reaction system. The reaction time depends on the reaction temperature or the like, and is generally 0.5 minutes to 10 hours, preferably one minute to two hours. The polymerization reaction is carried out with stirring.

The present invention will be described in detail referring to Examples of the present invention and Comparative Examples, which, however, should not be construed to limit the scope of the present invention.

## EXAMPLE 1

While a mixture of a solution of 2,2-bis(4-hydroxyphenyl)propane (74 g) in a 5 % sodium hydroxide aqueous solution (550 ml) and methylene chloride (250 ml) was stirred and cooled, phosgene gas was blown into the mixture at a rate of 950 ml/sec for 15 minutes. The reaction fluid was then allowed to stand, to separate a methylene chloride solution of an oligomer which had a polymerization degree of 2 to 4 and had chloroformate groups at the polymer ends.

After 450 ml of a solution was prepared by adding methylene chloride to the obtained methylene chloride solution (250 ml) of the oligomer, a solution of 2,2,3,3,4,4-hexafluoro-1,5-pentanediol (15 g, $pK_a$=11) in a 8 % aqueous sodium hydroxide solution (150 ml) was mixed thereto, followed by *tert*-butylphenol (2.0 g) as a molecular weight regulator. While the solution mixture was vigorously stirred, a 7% aqueous triethylamine solution (2 ml) was added thereto as a catalyst, and reaction was carried out for 1.5 hours at 28°C with stirring. After the completion of the reaction, the reaction product was diluted with methylene chloride (one liter), and was then washed twice with two portions of pure water (1.5 l), once with 0.01N-hydrochloric acid (one liter) and twice with two portions of pure water (one liter), sequentially.

The organic phase was introduced in methanol, to collect a polymer.

Thus obtained copolymer (PC-1) had a glass transition temperature (Tg) of 122°C and a reduced viscosity [$\eta_{sp}$/c] of 0.42 dl/g as measured in a 0.5 g/dl solution thereof in methylene chloride at 20°C. The measurement of viscosity was carried out by using automatic viscosity measuring apparatuses VMR-042 (produced by Kabushiki Kaisha Rigosha) and an improved Ubbelohde viscometer (RM-type). From an $^{1}$H-NMR chart (Fig. 1), the copolymer (PC-1) was determined to have the following structure.

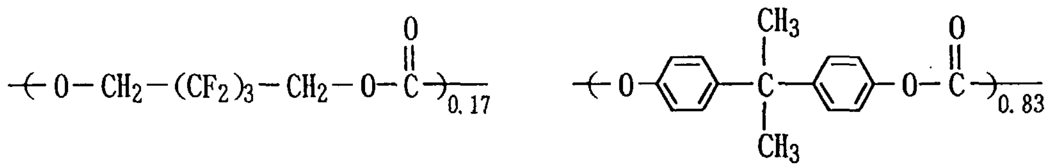

(PC-1)

0.5 parts (weight parts, the same will be applied hereinafter) of oxotitaniumphthalocyanine and 0.5 parts of a butyral resin were dispersed in 19 parts of methylene chloride, and the dispersion was applied by using a bar coater to a conductive substrate which was a PET film bearing an aluminum layer deposited thereon and then dried, to form a charge-generating layer (thickness: about 0.5 μm). By using (C-1) described below as a charge-transfer substance, a solution comprising one part of (C-1), one part of (PC-1) and 8 parts of methylene chloride was prepared to use as a coating fluid. A lamination-type electrophotographic photoreceptor was produced by coating the charge-generating layer with the coating fluid to form thereon a charge-transfer layer (thickness: about 20 μm). During the coating, crystallization did not occur in the charge-transfer layer. While the coating fluid was allowed to stand for one month, whitening or gelation did not occur.

The electrophotographic properties of the electrophotographic photoreceptor were evaluated by measuring initial surface potential ($V_0$) after a corona charge of -6 kV, residual potential ($V_R$) after a radiation of light (10 Lux) for 5 seconds, and half exposure ($E_{1/2}$), by using an electrostatic electrification tester EPA-8100 (produced by Kabushiki Kaisha Kawaguchi Denki Seisakusho). The results are shown in Table 1.

The charge-transfer layer was tested for wear-resistance by using a Suga abrasion testing machine NUS-ISO-3 (produced by Suga Shikenki Kabushiki Kaisha). The test was conducted by reciprocating a sample 1200 times on a abrasion paper applied with a load of 200 g and measuring the weight loss. The result is shown in Table 2.

EXAMPLES 2 AND 3

Electrophotographic photoreceptors were produced in the same manner as in Example 1, except that the charge-transfer substances (C-2) and (C-3) described below were used, respectively, in place of (C-1). While the coating fluids were allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layers were carried out in the same manner as in Example 1. The results are shown in Table 1 and Table 2.

EXAMPLE 4

A copolymer (PC-2, Tg: 117°C, [$\eta_{sp}$/c]=0.52 dl/g) having the following structure was produced in the same manner as in Example 1, except that 1H,1H,6H,6H-perfluoro-1,6-hexanediol (17 g, p$K_a$=11) was used in place of the 2,2,3,3,4,4-hexafluoro-1,5-pentanediol (15 g). The copolymerization ratios were determined from an $^{1}$H-NMR chart (Fig. 2).

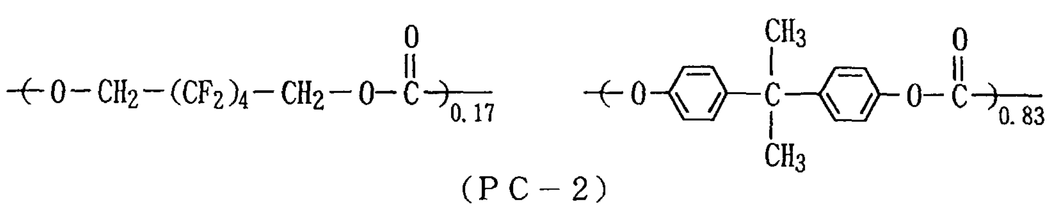

(PC-2)

An electrophotographic photoreceptor was produced by using (C-1) as a charge-transfer substance in the same manner as in Example 1, except that (PC-2) was used as the binder resin. While the coating fluid was allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layer were carried out in the same manner as in Example 1. The results are shown in Table 1 and Table 2.

EXAMPLES 5 AND 6

Electrophotographic photoreceptors were produced in the same manner as in Example 4, except that the charge-transfer substances (C-2) and (C-3) described below were used, respectively, in place of (C-1). While the coating fluids were allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layers were carried out in the same manner as in Example 1. The results are shown in Table 1 and Table 2.

EXAMPLE 7

A copolymer (PC-3, Tg: 114°C, [$\eta_{sp}$/c]=0.57 dl/g) having the following structure was produced in the same manner as in Example 1, except that 1H,1H,8H,8H-perfluoro-1,8-octanediol (23 g, p$K_a$=11) was used in place of the 2,2,3,3,4,4-hexafluoro-1,5-pentanediol (15 g). The copolymerization ratios were determined from an $^1$H-NMR chart (Fig. 3).

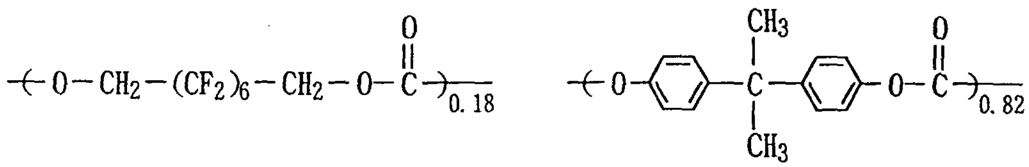

(PC-3)

An electrophotographic photoreceptor was produced by using (C-1) as a charge-transfer substance in the same manner as in Example 1 with the exception that (PC-3) was used as the binder resin. While the coating fluid was allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layer were carried out in the same manner as in Example 1. The results are shown in Table 1 and Table 2.

EXAMPLES 8 AND 9

Electrophotographic photoreceptors were produced in the same manner as in Example 7, except that the charge-transfer substances (C-2) and (C-3) described below were used, respectively, in place of (C-1). While the coating fluids were allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layers were carried out in the same manner as in Example 1. The results are shown in Table 1 and Table 2.

EXAMPLE 10

A copolymer (PC-4, Tg: 149°C, [$\eta_{sp}$/c]=0.43 dl/g) having the following structure was produced in the same manner as in Example 1, except that 4,4'-biphenol (12 g) and 2,2,2-trifluoroethanol (1.35 g, p$K_a$=11) were used in place of the 2,2,3,3,4,4-hexafluoro-1,5-pentanediol (15 g). The copolymerization ratios were determined from an $^1$H-NMR chart (Fig. 4).

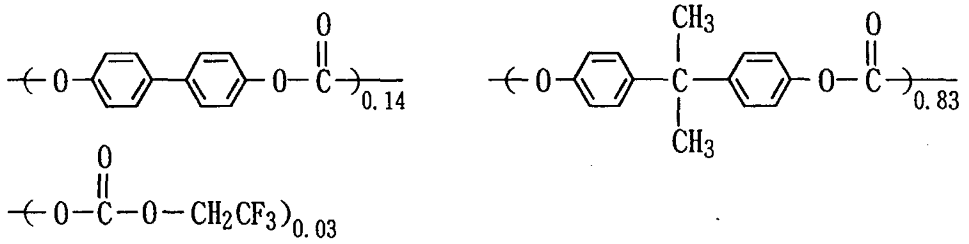

(PC-4)

An electrophotographic photoreceptor was produced by using (C-1) as a charge-transfer substance in the same manner as in Example 1, except that (PC-4) was used as the binder resin. While the coating fluid was allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layer were carried out in the same manner as in Example 1. The results are shown in Table 1 and Table 2.

EXAMPLES 11 AND 12

Electrophotographic photoreceptors were produced in the same manner as in Example 10, except that the charge-transfer substances (C-2) and (C-3) described below were used, respectively, in place of (C-1). While the coating fluids were allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layers were carried out in the same manner as in Example 1. The results are shown in Table 1 and Table 2.

EXAMPLE 13

A copolymer (PC-5, Tg: 150°C, [$\eta_{sp}$/c]=0.42 dl/g) having the following structure was produced in the same manner as in Example 1 except that 4,4'-biphenol (12 g) and 1,1,3,3,3-tetrafluoro-2-propanol (2.2 g, p$K_a$=5) were used in place of the 2,2,3,3,4,4-hexafluoro-1,5-pentanediol (15 g). The copolymerization ratios were determined from an $^1$H-NMR chart (Fig. 5).

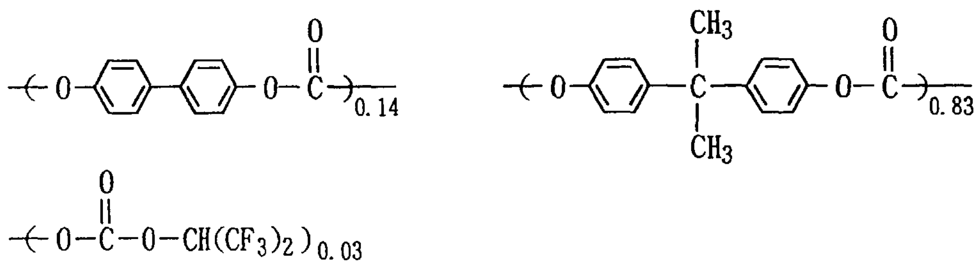

(PC-5)

An electrophotographic photoreceptor was produced by using (C-1) as a charge-transfer substance in the same manner as in Example 1 with the exception that (PC-5) was used as the binder resin. While the coating fluid was allowed to stand for one month, whitening or gelation did not occur. Measurements of initial surface potential ($V_0$), residual potential ($V_R$) after a light radiation (10 Lux) for 5 seconds, half exposure ($E_{1/2}$) and weight loss of the charge-transfer layer by abrasion were carried out in the same manner as in Example 1. The results are shown in Table 1 and Table 2.

EXAMPLES 14 AND 15

Electrophotographic photoreceptors were produced in the same manner as in Example 13, except that the charge-transfer substances (C-2) and (C-3) described below were used, respectively, in place of (C-1). While the coating fluids were allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layers were carried out in the same manner as in Example 1. The results are shown in Table 1 and Table 2.

EXAMPLE 16

A copolymer (PC-6, Tg: 124°C, $[\eta_{sp}/c]$=0.28 dl/g) having the following structure was produced in the same manner as in Example 1, except that 4,4'-biphenol (6 g), 2,2,2-trifluoroethanol (7.8 g, p$K_a$=11) and tris(4-hydroxyphenyl)ethane (2 g) were used in place of the 2,2,3,3,4,4-hexafluoro-1,5-pentanediol (15 g). The copolymerization ratios were determined from an $^1$H-NMR chart (Fig. 6).

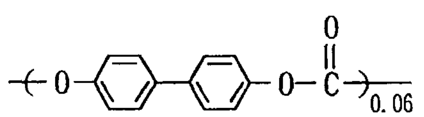
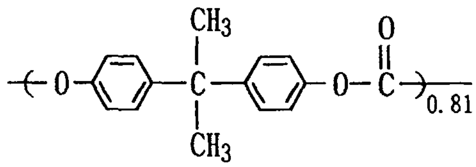
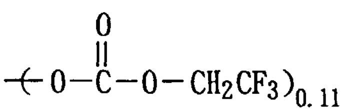
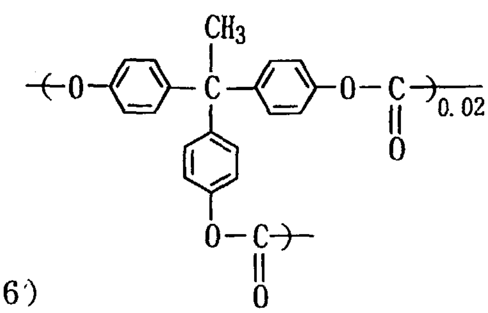

(PC-6)

An electrophotographic photoreceptor was produced by using (C-1) as a charge-transfer substance in the same manner as in Example 1, except that (PC-6) was used as the binder resin. While the coating fluid was allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layer were carried out in the same manner as in Example 1. The results are shown in Table 1 and Table 2.

EXAMPLES 17 AND 18

Electrophotographic photoreceptors were produced in the same manner as in Example 16, except that the charge-transfer substances (C-2) and (C-3) described below were used, respectively, in place of (C-1). While the coating fluids were allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layers were carried out in the same manner as in Example 1. The results are shown in Table 1 and Table 2.

COMPARATIVE EXAMPLE 1

An electrophotographic photoreceptor was produced by using (C-1) as a charge-transfer substance in the same manner as in Example 1, except that the polycarbonate (reduced viscosity: 0.78 dl/g) that was produced by using bisphenol A as a starting material and comprised the following repeating units was used as the binder resin. The coating fluid whitened and set to gel two days after. At the time of coating, whitening (crystallization) occurred partially in the charge-transfer layer. Measurements of initial surface potential ($V_0$), residual potential ($V_R$) after a light radiation (10 Lux) for 5 seconds, half exposure ($E_{1/2}$) and wear loss of the charge-transfer layer were carried out in the same manner

as in Example 1. The results are shown in Table 1 and Table 2.

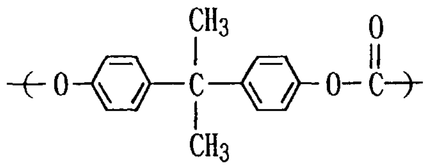

COMPARATIVE EXAMPLE 2

An electrophotographic photoreceptor was produced in the same manner as in Comparative Example 1, except that the charge-transfer substance (C-2) was used in place of (C-1). The results of the evaluations of the stability of the coating fluid and the crystallization at the time of coating were the same as those in Comparative Example 1. Measurements of initial surface potential ($V_0$), residual potential ($V_R$) after a light radiation (10 Lux) for 5 seconds, half exposure ($E_{1/2}$) and wear loss of the charge-transfer layers were carried out in the same manner as in Example 1. The results are shown in Table 1 and Table 2.

COMPARATIVE EXAMPLE 3

An electrophotographic photoreceptor was produced by using (C-1) as a charge-transfer substance in the same manner as in Example 1, except that the polycarbonate (reduced viscosity: 0.84 dl/g) that was produced by using bisphenol Z as a starting material and comprised the following repeating units was used as a binder resin. The results of the evaluations of the stability of the coating fluid and the crystallization at the time of coating were the same as those in Comparative Example 1. Measurements of initial surface potential ($V_0$), residual potential ($V_R$) after a light radiation (10 Lux) for 5 seconds, half exposure ($E_{1/2}$) and wear loss of the charge-transfer layers were carried out in the same manner as in Example 1. The results are shown in Table 1 and Table 2.

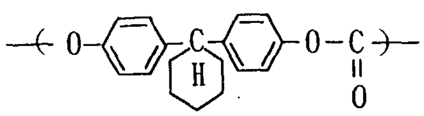

COMPARATIVE EXAMPLE 4

An electrophotographic photoreceptor was produced in the same manner as in Comparative Example 3, except that the charge-transfer substance (C-2) was used in place of (C-1). The results of the evaluations of the stability of the coating fluid and the crystallization at the time of coating were the same as those in Comparative Example 1. Measurements of initial surface potential ($V_0$), residual potential ($V_R$) after a light radiation (10 Lux) for 5 seconds, half exposure ($E_{1/2}$) and wear loss of the charge-transfer layers were carried out in the same manner as in Example 1. The results are shown in Table 1 and Table 2.

TABLE 1

| | Initial surface potential $V_0$ (V) | Residual potential $V_R$ (V) | Half exposure $E_{1/2}$ (lux • sec) |
|---|---|---|---|
| Example Nos. | | | |
| 1 | -747 | -3 | 0.77 |
| 2 | -756 | -4 | 0.71 |
| 3 | -735 | -5 | 0.77 |
| 4 | -725 | -4 | 0.72 |
| 5 | -750 | -6 | 0.70 |
| 6 | -743 | -6 | 0.71 |
| 7 | -742 | -2 | 0.78 |
| 8 | -768 | -6 | 0.75 |
| 9 | -747 | -6 | 0.76 |
| 10 | -738 | -2 | 0.70 |
| 11 | -763 | -6 | 0.71 |
| 12 | -748 | -5 | 0.75 |
| 13 | -729 | -2 | 0.76 |
| 14 | -755 | -1 | 0.72 |
| 15 | -760 | -4 | 0.71 |
| 16 | -760 | -5 | 0.76 |
| 17 | -741 | -3 | 0.72 |
| 18 | -763 | -1 | 0.78 |
| Comparative example Nos. | | | |
| 1 | -756 | -4 | 0.85 |
| 2 | -752 | -3 | 0.84 |
| 3 | -766 | -4 | 0.81 |
| 4 | -732 | -4 | 0.85 |

TABLE 2

| | Wear loss (mg) | | Wear loss (mg) |
|---|---|---|---|
| Example Nos. | | Example Nos. | |
| 1 | 1.58 | 13 | 1.51 |
| 2 | 1.55 | 14 | 1.55 |
| 3 | 1.54 | 15 | 1.51 |
| 4 | 1.53 | 16 | 1.45 |
| 5 | 1.53 | 17 | 1.42 |
| 6 | 1.52 | 18 | 1.46 |
| 7 | 1.58 | Comparative Example Nos. | |
| 8 | 1.57 | | |
| 9 | 1.57 | 1 | 2.45 |
| 10 | 1.53 | 2 | 2.28 |
| 11 | 1.52 | 3 | 2.05 |
| 12 | 1.56 | 4 | 1.78 |

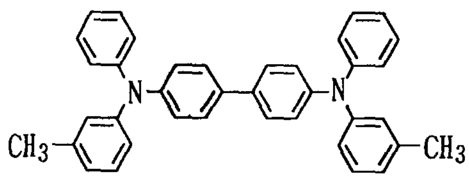

C-1

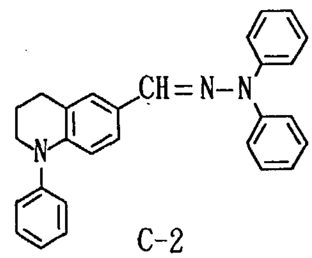

C-2

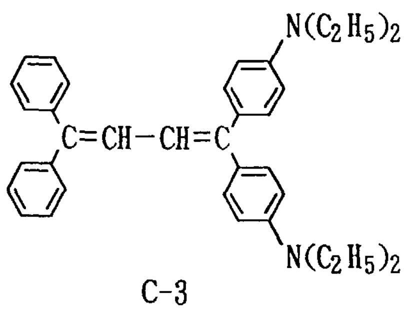

C-3

EXAMPLE 19

A copolymer (PC-7, Tg: 123°C, $[\eta_{sp}/c]$=0.86 dl/g) having the following structure was produced in the same manner as in Example 1, except that 1H,1H,6H,6H-perfluoro-1,6-hexanediol (16 g, p$K_a$=11) and 2,2,2-tris(4-hydroxyphenyl)ethane (0.3 g) were used in place of the 2,2,3,3,4,4-hexafluoro-1,5-pentanediol (15 g). The copolymerization ratios were determined from an $^1$H-NMR chart (Fig. 7).

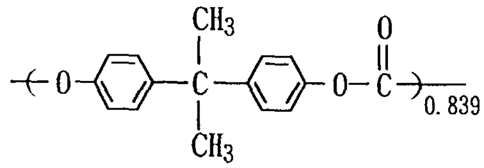
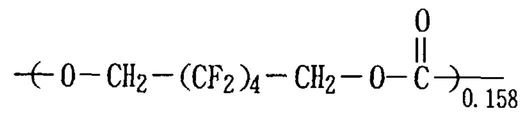
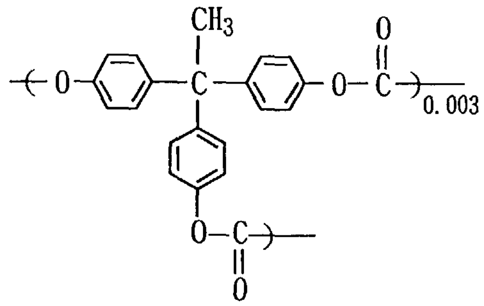

(PC-7)

An electrophotographic photoreceptor was produced in the same manner as in Example 1, except that (PC-7) was used as a binder resin and that (C-2) was used as a charge-transfer substance. While the coating fluid was allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layer were carried out in the same manner as in Example 1. The results are shown in Table 3 and Table 4.

EXAMPLE 20

A copolymer (PC-8, Tg: 183°C, [$\eta_{sp}$/c]=1.23 dl/g) having the following structure was produced in the same manner as in Example 1, except that 1,1-bis(4-hydroxyphenyl)cyclohexane (87 g) was used in place of the 2,2-bis(4-hydroxyphenyl)propane (74 g), 1,1-bis(4-hydroxyphenyl)cyclohexane (15 g) in place of the 2,2,3,3,4,4-hexafluoro-1,5-pentanediol (15 g), and 1H,1H-perfluorobutanol (0.6 g, p$K_a$=11) in place of the p-*tert*-butylphenol (2.0 g). The copolymerization ratios were determined from an $^1$H-NMR chart (Fig. 8).

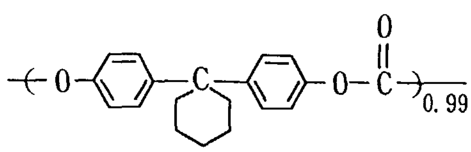
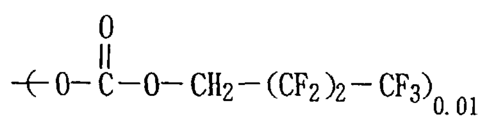

(PC-8)

An electrophotographic photoreceptor was produced in the same manner as in Example 1, except that (PC-8) was used as the binder resin and that (C-2) was used as the charge-transfer substance. While the coating fluid was allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layer were carried out in the same manner as in Example 1. The results are shown in Table 3 and Table 4.

EXAMPLE 21

A copolymer (PC-9, Tg: 154°C, [$\eta_{sp}$/c]=0.78 dl/g) having the following structure was produced in the same manner as in Example 1, except that 1,1-bis(4-hydroxyphenyl)cyclohexane (87 g) was used in place of the 2,2-bis(4-hydroxyphenyl)propane (74 g), 1H,1H,6H,6H-perfluoro-1,6-hexanediol (14 g, p$K_a$=11) in place of the 2,2,3,3,4,4-hexafluoro-1,5-pentanediol (15 g), and 1H,1H-perfluorobutanol (0.6 g, p$K_a$=11) in place of the p-*tert*-butylphenol (2.0 g). The copolymerization ratios were determined from an $^1$H-NMR chart (Fig. 9).

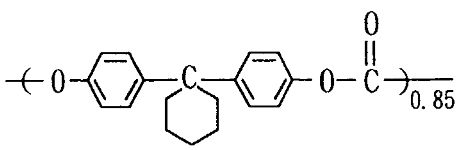

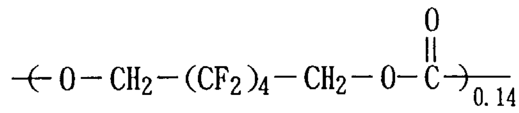

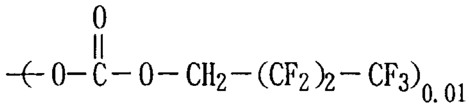

(PC-9)

An electrophotographic photoreceptor was produced in the same manner as in Example 1, except that (PC-9) was used as the binder resin and that (C-2) was used as the charge-transfer substance. While the coating fluid was allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layer were carried out in the same manner as in Example 1. The results are shown in Table 3 and Table 4.

EXAMPLE 22

A copolymer (PC-10, Tg: 157°C, [$\eta_{sp}$/c]=0.87 dl/g) having the following structure was produced in the same manner as in Example 1, except that 1,1-bis(4-hydroxyphenyl)cyclohexane (87 g) was used in place of the 2,2-bis(4-hydroxyphenyl)propane (74 g), 1H,1H,6H,6H-perfluoro-1,6-hexanediol (13 g, p$K_a$=11) and 2,2,2-tris(4-hydroxyphenylethane (0.3 g) in place of the 2,2,3,3,4,4-hexafluoro-1,5-pentanediol (15 g), and 1H,1H-perfluorobutanol (0.6 g, p$K_a$=11) in place of the p-*tert*-butylphenol (2.0 g). The copolymerization ratios were determined from an $^1$H-NMR chart (Fig. 10).

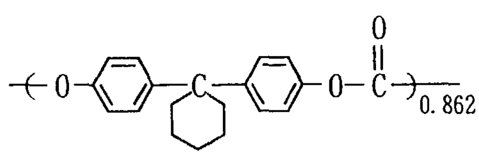

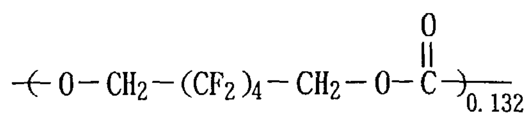

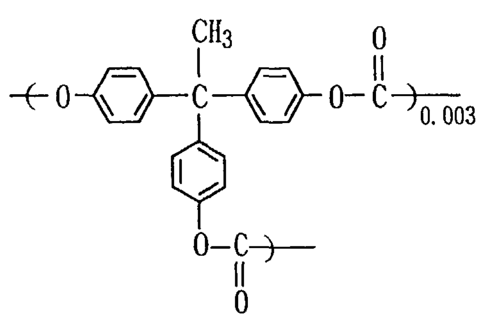

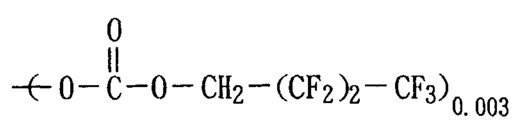

(PC-10)

An electrophotographic photoreceptor was produced in the same manner as in Example 1, except that (PC-10) was used as the binder resin and that (C-2) was used as the charge-transfer substance. While the coating fluid was allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layer were carried out in the same manner as in Example 1. The results are shown in Table 3 and Table 4.

EXAMPLE 23

A copolymer (PC-11, Tg: 152°C, $[\eta_{sp}/c]$=0.55 dl/g) having the following structure was produced in the same manner as in Example 1, except that 1H,1H,6H,6H-perfluoro-1,6-hexanediol (4.3 g, p$K_a$=11) and bis(4-hydroxyphenyl)diphenylmethane (17 g) were used in place of the 2,2,3,3,4,4-hexafluoro-1,5-pentanediol (15 g). The copolymerization ratios were determined from an $^1$H-NMR chart (Fig. 11).

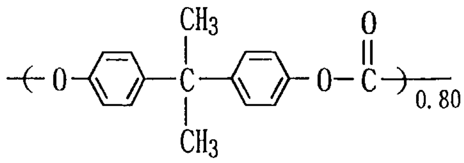

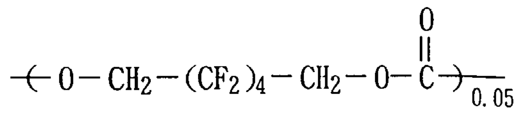

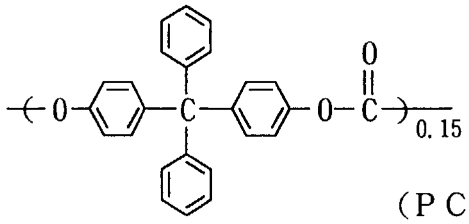

(PC-11)

An electrophotographic photoreceptor was produced in the same manner as in Example 1, except that (PC-11) was used as the binder resin and that (C-2) was used as the charge-transfer substance. While the coating fluid was allowed to stand for one month, whitening or gelation did not occur. Measurements of initial surface potential ($V_0$), residual potential ($V_R$) after a light radiation (10 Lux) for 5 seconds, half exposure ($E_{1/2}$) and loss of the charge-transfer layer were carried out in the same manner as in Example 1. The results are shown in Table 3 and Table 4.

EXAMPLE 24

An electrophotographic photoreceptor was produced in the same manner as in Example 1, except that one part of the binder resin (PC-1) was replaced by 0.5 parts of the binder resin (PC-2) and 0.5 parts of the resin used in Comparative Example 1. While the coating fluid was allowed to stand for one month, whitening or gelation did not occur. Measurements of initial surface potential ($V_0$), residual potential ($V_R$) after a light radiation (10 Lux) for 5 seconds, half exposure ($E_{1/2}$) and wear loss of the charge-transfer layer were carried out in the same manner as in Example 1. The results are shown in Table 3 and Table 4.

EXAMPLE 25

A copolymer (PC-12, $[\eta_{sp}/c]$=0.62 dl/g) having the following structure was produced in the same manner as in Example 1, except that 2,2,3,3,4,4-hexafluoro-1,5-pentanediol (69 g, p$K_a$=11) was used in place of the 2,2-bis(4-hydroxyphenyl)propane (74 g). The results of the $^1$H-NMR spectral analysis of the obtained polymer are as follows. $^1$H-NMR ($CD_2Cl_2$): δ=4.74 (4H, t, J=13.5 Hz) ppm

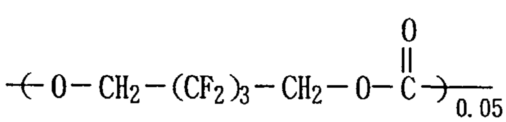

(PC-12)

An electrophotographic photoreceptor was produced in the same manner as in Example 1, except that (PC-12) was used as the binder resin and that (C-2) was used as the charge-transfer substance. While the coating fluid was allowed to stand for one month, whitening or gelation did not occur. Measurements of initial surface potential ($V_0$), residual potential ($V_R$) after a light radiation (10 Lux) for 5 seconds, half exposure ($E_{1/2}$) and loss of the charge-transfer layer

were carried out in the same manner as in Example 1. The results are shown in Table 3 and Table 4.

TABLE 3

| | Initial surface potential $V_0$ (V) | Residual potential $V_R$ (V) | Half exposure $E_{1/2}$ (lux • sec) |
|---|---|---|---|
| Example Nos. | | | |
| 19 | -756 | -2 | 0.75 |
| 20 | -723 | -5 | 0.72 |
| 21 | -734 | -4 | 0.73 |
| 22 | -753 | -3 | 0.75 |
| 23 | -734 | -4 | 0.72 |
| 24 | -737 | -6 | 0.74 |
| 25 | -752 | -2 | 0.73 |

TABLE 4

| | Wear loss (mg) |
|---|---|
| Example Nos. | |
| 19 | 1.51 |
| 20 | 1.48 |
| 21 | 1.53 |
| 22 | 1.51 |
| 23 | 1.55 |
| 24 | 1.53 |
| 25 | 1.52 |

COPMPARATIVE EXAMPLE 5

Synthesis of a polymer was tried by repeating the procedure of Example 1, except that 1,5-pentanediol (15g, p$K_a$=17) was used in place of the 2,2,3,3,4,4-hexafluoro-1,5-pentanediol (15 g). No polymer was obtained.

**INDUSTRIAL APPLICABILITY**

The polymers of the present invention have good compatibility with charge-transfer substances, do not cause in solutions thereof whitening or gelation and are excellent in mechanical properties. When used as binder resins in the photosensitive layers of electrophotographic photoreceptors, they therefore provide the electrophotographic photoreceptors with high surface hardness and excellent wear-resistance. The coating fluids of the present invention wherein the polymers are dissolved in solvents are so stable that whitening and gelation do not occur during a long term storage, and do not cause crystallization of binder resins at the time of coating. Therefore, the use of them for the production of photosensitive layer of electrophotographic photoreceptors provides electrophotographic photoreceptors which exhibit excellent electrophotographic properties for a long term. The electrophotographic photoreceptors of the present invention containing the polymers of the present invention as binder resins maintain excellent wear-resistance and good electrophotographic properties for a long term, and also have good cleaning properties.

## Claims

1. A polymer comprising mainly repeating units (1) represented by the following general formula (1) and having a reduced viscosity [$\eta_{sp}/c$] of 0.2 to 10.0 dl/g as measured in a 0.5 g/dl solution thereof in methylene chloride at 20°C;

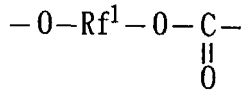 (1)

wherein $Rf^1$ is a group that is composed of at least carbon atoms and fluorine atoms and bonded directly to the two oxygen atoms of the carbonate linkage in the general formula (1) without any intervening arylene group.

2. The polymer of claim 1, wherein $Rf^1$ is a group selected from the group consisting of the following groups;

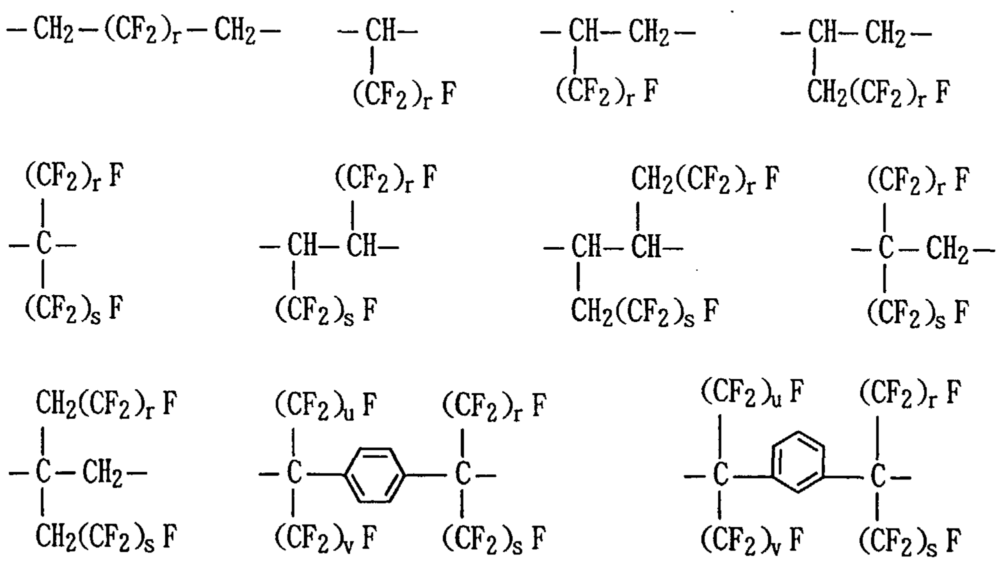

wherein r, s, u and v are each independently an integer of 1 to 20.

3. The polymer of claim 1, which comprises mainly the repeating units (1) represented by the general formula (1) and has polymer ends partially or wholly terminated by terminal groups (3) represented by the following general formula (3);

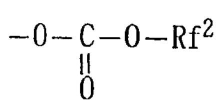 (3)

wherein, in the general formula (3), $Rf^2$ is a group that is composed of at least carbon atoms and fluorine atoms and bonded directly to the oxygen atom of the carbonate linkage in the general formula (3) without any intervening arylene group.

4. The polymer of claim 3, wherein $Rf^2$ is a group selected from the group consisting of the following groups;

$F-(CF_2)_r-CH_2-$ $F-(CF_2)_r-CHFCF_2CH_2-$ $F-(CF_2)_r-(CH_2)_s-$

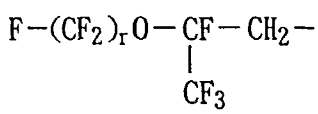 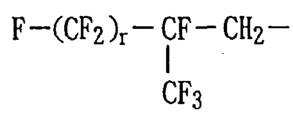 $H-(CF_2)_r-CH_2-$

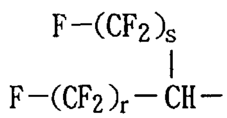 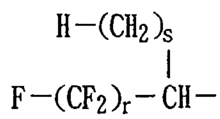 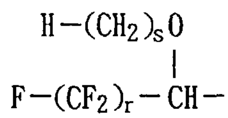

wherein r and s are each independently an integer of 1 to 20.

**5.** The polymer of claim 1 or 3, which further comprises, as branching units, 0.01 to 30 mol% of repeating units (4) represented by the following general formula (4), based on a total of the repeating units (4) and all repeating units other than the repeating units (4);

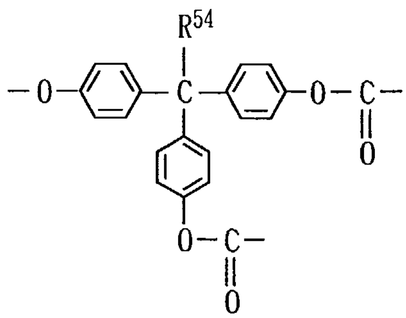 (4)

wherein, in the general formula (4), $R^{54}$ is an alkyl group of 1 to 10 carbon atoms.

**6.** A polymer comprising mainly repeating units (1) represented by the following general formula (1) and repeating units (2) represented by the following general formula (2) and having a reduced viscosity [$\eta_{sp}/c$] of 0.2 to 10.0 dl/g as measured in a 0.5 g/dl solution thereof in methylene chloride at 20°C, the repeating units (1) being 0.1 to 99 mol%, based on a total of the repeating units (1) and the repeating units (2);

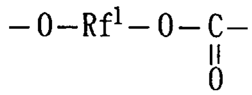 (1)

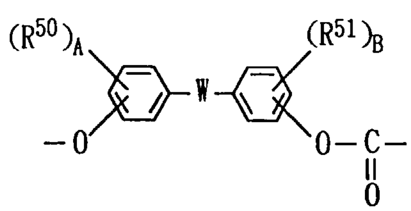 (2)

wherein $Rf^1$ is a group that is composed of at least carbon atoms and fluorine atoms and bonded directly to the two oxygen atoms of the carbonate linkage in the general formula (1) without any intervening arylene group, and in the

general formula (2), $R^{50}$ and $R^{51}$ are each independently a halogen atom, an alkyl group of 1 to 6 carbon atoms, a cycloalkyl group of 5 to 7 carbon atoms or a substituted or non-substituted aryl group of 6 to 12 carbon atoms, W is a single bond, -O-, -CO-, -S-, -SO-, $-SO_2-$, $-CR^{52}R^{53}-$ ($R^{52}$ and $R^{53}$ are each independently hydrogen atom, trifluoromethyl, an alkyl group of 1 to 10 carbon atoms or a substituted or non-substituted aryl group of 6 to 12 carbon atoms), a cycloalkylidene group of 5 to 11 carbon atoms, an α,ω-alkylene group of 2 to 12 carbon atoms, 9-fluolenylidene, 1,9-menthanediyl, a substituted or non-substituted pyrazinylidene group, a substituted or non-substituted arylene group of 6 to 12 carbon atoms or an α,ω-siloxanediyl group, and A and B are each independently an integer of 0 to 4.

**7.** The polymer of claim 6, wherein $Rf^1$ is a group selected from the group consisting of the following groups;

$-CH_2-(CF_2)_r-CH_2-$

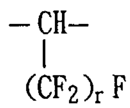

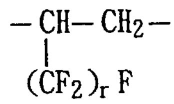

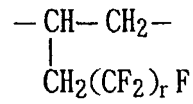

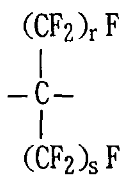

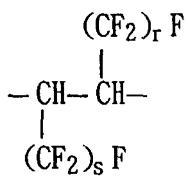

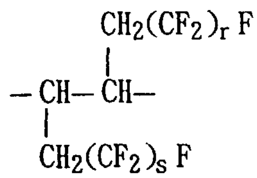

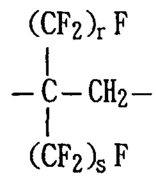

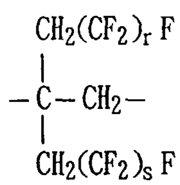

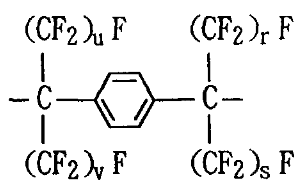

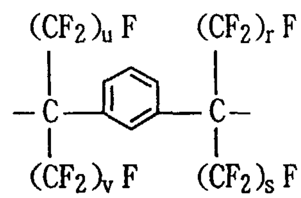

wherein r, s, u and v are each independently an integer of 1 to 20.

**8.** The polymer of claim 6, which comprises mainly the repeating units (1) represented by the general formula (1) and the repeating units (2) represented by the general formula (2) and has polymer ends partially or wholly terminated by terminal groups (3) represented by the following general formula (3);

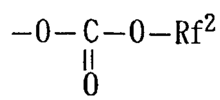 (3)

wherein, in the general formula (3), $Rf^2$ is a group that is composed of at least carbon atoms and fluorine atoms and bonded directly to the oxygen atom of the carbonate linkage in the general formula (3) without any intervening arylene group.

**9.** The polymer of claim 8, wherein $Rf^2$ is a group selected from the group consisting of the following groups;

$F-(CF_2)_r-CH_2-$ $F-(CF_2)_r-CHFCF_2CH_2-$ $F-(CF_2)_r-(CH_2)_s-$

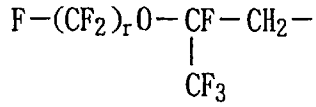 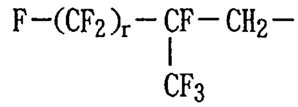 $H-(CF_2)_r-CH_2-$ ,

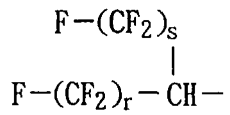 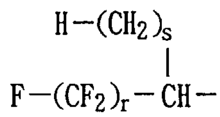 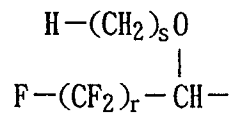

wherein r and s are each independently an integer of 1 to 20.

**10.** The polymer of claim 6 or 8, which further comprises, as branching units, 0.01 to 30 mol% of repeating units (4) represented by the following general formula (4), based on a total of the repeating units (4) and all repeating units other than the repeating units (4);

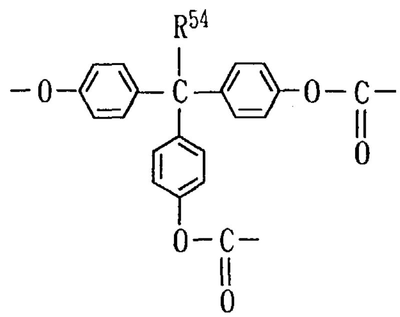 (4)

wherein, in the general formula (4), $R^{54}$ is an alkyl group of 1 to 10 carbon atoms.

**11.** A polymer comprising mainly repeating units (2) represented by the following general formula (2), having polymer ends partially or wholly terminated by terminal groups (3) represented by the following general formula (3), and having a reduced viscosity [$\eta_{sp}$/c] of 0.2 to 10.0 dl/g as measured in a 0.5 g/dl solution thereof in methylene chloride at 20°C;

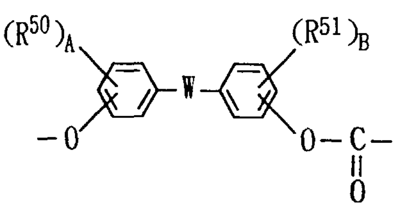 (2)

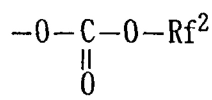 (3)

wherein, in the general formula (2), $R^{50}$ and $R^{51}$ are each independently a halogen atom, an alkyl group of 1 to 6 carbon atoms, a cycloalkyl group of 5 to 7 carbon atoms or a substituted or non-substituted aryl group of 6 to 12 carbon atoms, W is a single bond, -O-, -CO-, -S-, -SO-, $-SO_2-$, $-CR^{52}R^{53}-$ ($R^{52}$ and $R^{53}$ are each independently hydrogen atom, trifluoromethyl, an alkyl group of 1 to 10 carbon atoms or a substituted or non-substituted aryl

group of 6 to 12 carbon atoms), a cycloalkylidene group of 5 to 11 carbon atoms, an α,ω-alkylene group of 2 to 12 carbon atoms, 9-fluolenylidene, 1,9-menthanediyl, a substituted or non-substituted pyrazinylidene group, a substituted or non-substituted arylene group of 6 to 12 carbon atoms or an α, ω-siloxanediyl group, and A and B are each independently an integer of 0 to 4, and,
in the general formula (3), $Rf^2$ is a group that is composed of at least carbon atoms and fluorine atoms and bonded directly to the oxygen atom of the carbonate linkage in the general formula (3) without any intervening arylene group.

**12.** The polymer of claim 11, wherein $Rf^2$ is a group selected from the group consisting of the following groups;

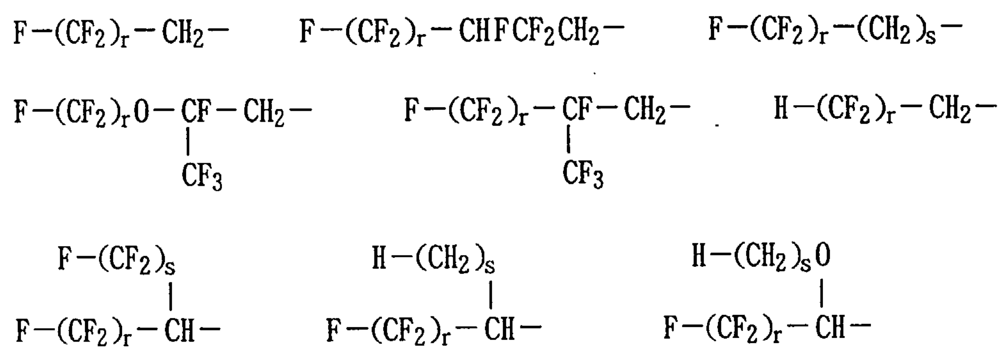

wherein r and s are each independently an integer of 1 to 20.

**13.** The polymer of claim 11, which further comprises, as branching units, 0.01 to 30 mol% of repeating units (4) represented by the following general formula (4), based on a total of the repeating units (4) and all repeating units other than the repeating units (4);

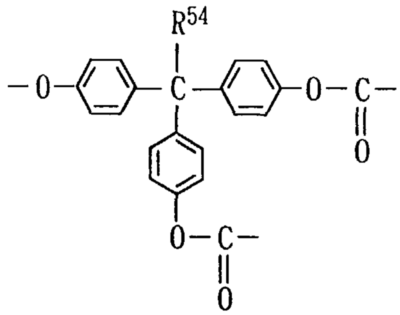
(4)

wherein, in the general formula (4), $R^{54}$ is an alkyl group of 1 to 10 carbon atoms.

**14.** A resin coating fluid comprising the polymer of claim 1, a charge-transfer substance and a solvent.

**15.** A resin coating fluid comprising the polymer of claim 6, a charge-transfer substance and a solvent.

**16.** A resin coating fluid comprising the polymer of claim 11, a charge-transfer substance and a solvent.

**17.** An electrophotographic photoreceptor comprising a conductive substrate and a photosensitive layer that is disposed on the electroconductive substrate and contains a charge-generating substance, a charge-transfer substance and a binder resin, the binder resin being the polymer of claim 1.

**18.** An electrophotographic photoreceptor comprising a conductive substrate and a photosensitive layer that is disposed on the electroconductive substrate and contains a charge-generating substance, a charge-transfer substance and a binder resin, the binder resin being the polymer of claim 6.

**19.** An electrophotographic photoreceptor comprising a conductive substrate and a photosensitive layer that is disposed on the electroconductive substrate and contains a charge-generating substance, a charge-transfer substance and a binder resin, the binder resin being the polymer of claim 11.

**20.** A process for producing a polycarbonate, comprising carrying out interfacial polycondensation of a carbonate precursor with a dioxy compound in the presence of an aqueous alkali solution in a liquid mixture of a water-insoluble organic solvent and the aqueous alkali solution, the dioxy compound being a dihydric alcohol having a p$K_a$ of less than 15.74 as measured in water at 25°C.

**21.** The process of claim 20, wherein the dihydric alcohol having a p$K_a$ of less than 15.74 as measured in water at 25°C is used as the dioxy compound, and a monohydric alcohol having a p$K_a$ of less than 15.74 as measured in water at 25°C is further used as an end-terminating agent.

**22.** The process of claim 20, wherein both the dihydric alcohol having a p$K_a$ of less than 15.74 as measured in water at 25°C and a dihydroxyaryl compound represented by the following general formula (II) are used as the dioxy compound;

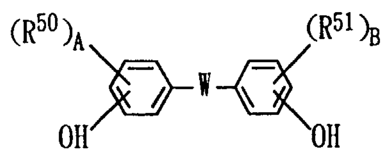

(II)

wherein $R^{50}$ and $R^{51}$ are each independently a halogen atom, an alkyl group of 1 to 6 carbon atoms, a cycloalkyl group of 5 to 7 carbon atoms or a substituted or non-substituted aryl group of 6 to 12 carbon atoms, W is a single bond, -O-, -CO-, -S-, -SO-, $-SO_2-$, $-CR^{52}R^{53}-$ ($R^{52}$ and $R^{53}$ are each independently hydrogen atom, trifluoromethyl, an alkyl group of 1 to 10 carbon atoms or a substituted or non-substituted aryl group of 6 to 12 carbon atoms), a cycloalkylidene group of 5 to 11 carbon atoms, an α,ω-alkylene group of 2 to 12 carbon atoms, 9-fluolenylidene, 1,9-menthanediyl, a substituted or non-substituted pyrazinylidene group, a substituted or non-substituted arylene group of 6 to 12 carbon atoms or an α,ω-siloxanediyl group, and A and B are each independently an integer of 0 to 4.

**23.** The process of claim 22, wherein the dihydric alcohol having a p$K_a$ of less than 15.74 as measured in water at 25°C and the dihydroxyaryl compound represented by the general formula (II) are used as the dioxy compound, and a monohydric alcohol having a p$K_a$ of less than 15.74 as measured in water at 25°C is further used as an end-terminating agent.

**24.** A process for producing a polycarbonate, comprising carrying out interfacial polycondensation of a carbonate precursor with a dioxy compound in the presence of an aqueous alkali solution and an end-terminating agent in a liquid mixture of a water-insoluble organic solvent and the aqueous alkali solution, the dioxy compound being a dihydroxyaryl compound represented by the following general formula (II), and the end-terminating agent being a monohydric alcohol having a p$K_a$ of less than 15.74 as measured in water at 25°C;

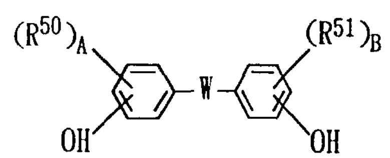

(II)

wherein $R^{50}$ and $R^{51}$ are each independently a halogen atom, an alkyl group of 1 to 6 carbon atoms, a cycloalkyl group of 5 to 7 carbon atoms or a substituted or non-substituted aryl group of 6 to 12 carbon atoms, W is a single bond, -O-, -CO-, -S-, -SO-, $-SO_2-$, $-CR^{52}R^{53}-$ ($R^{52}$ and $R^{53}$ are each independently hydrogen atom, trifluoromethyl, an alkyl group of 1 to 10 carbon atoms or a substituted or non-substituted aryl group of 6 to 12 carbon atoms), a cycloalkylidene group of 5 to 11 carbon atoms, an α,ω-alkylene group of 2 to 12 carbon atoms, 9-fluolenylidene,

1,9-menthanediyl, a substituted or non-substituted pyrazinylidene group, a substituted or non-substituted arylene group of 6 to 12 carbon atoms or an α,ω-siloxanediyl group, and A and B are each independently an integer of 0 to 4.

Fig. 1

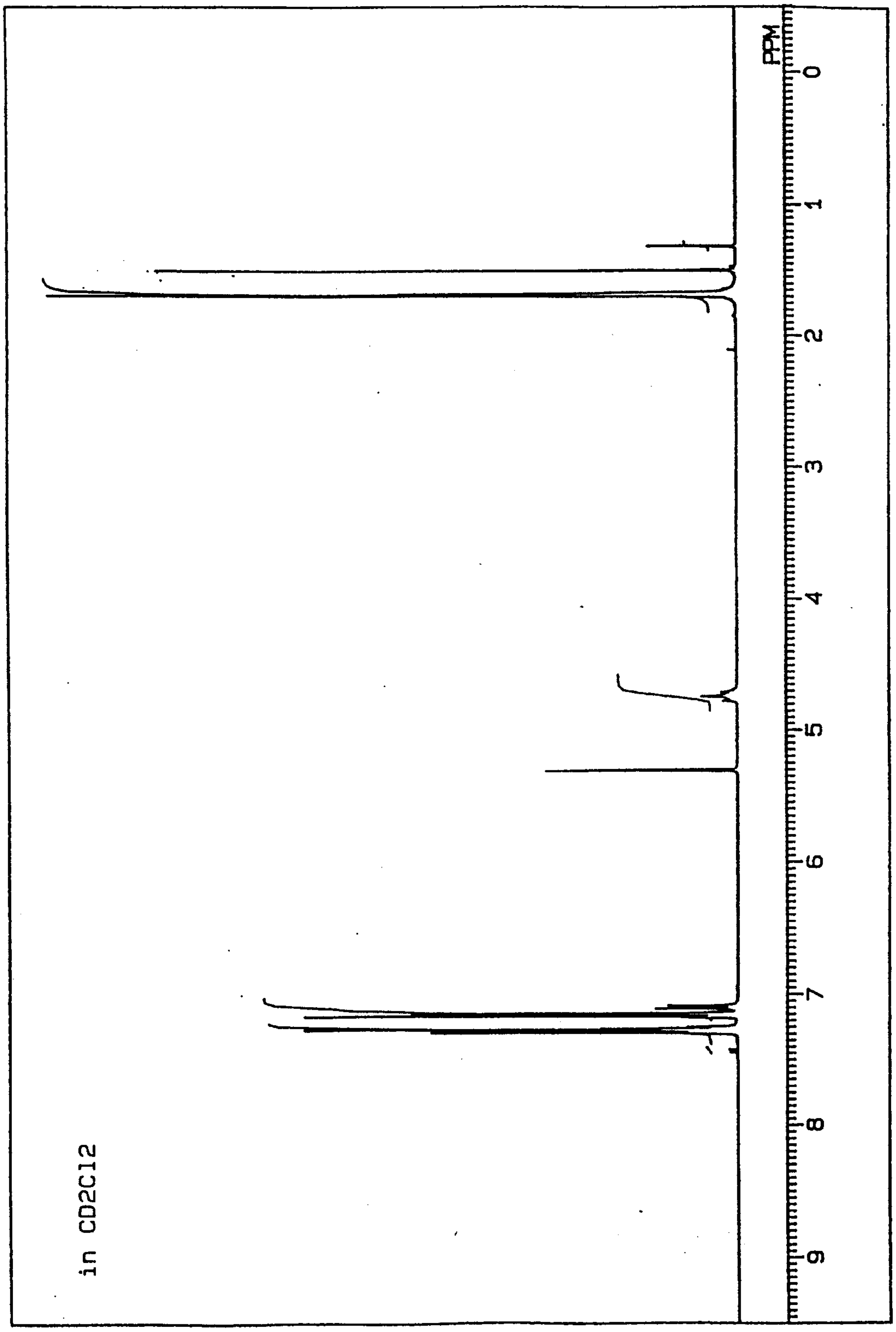

Fig. 2

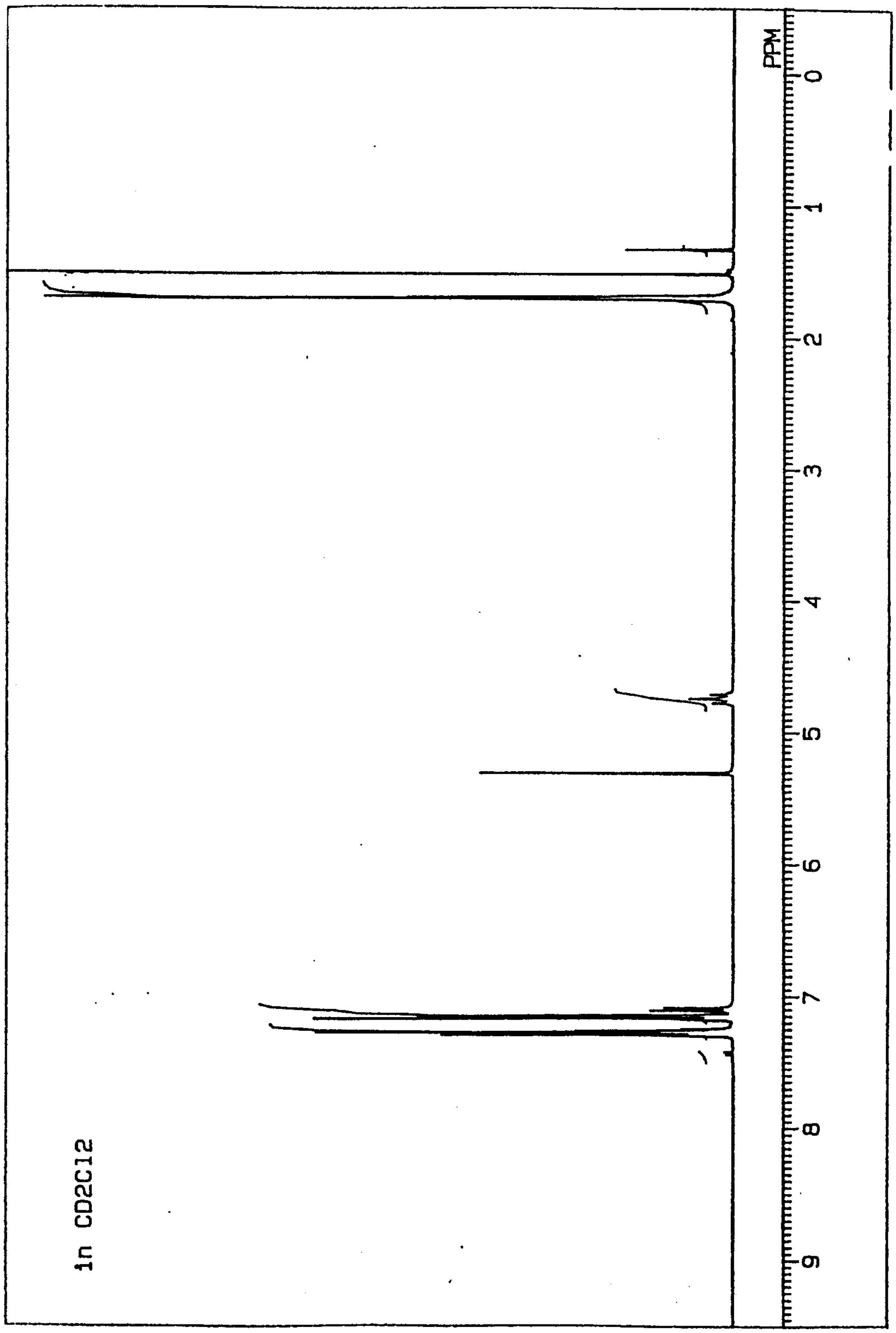

Fig. 3

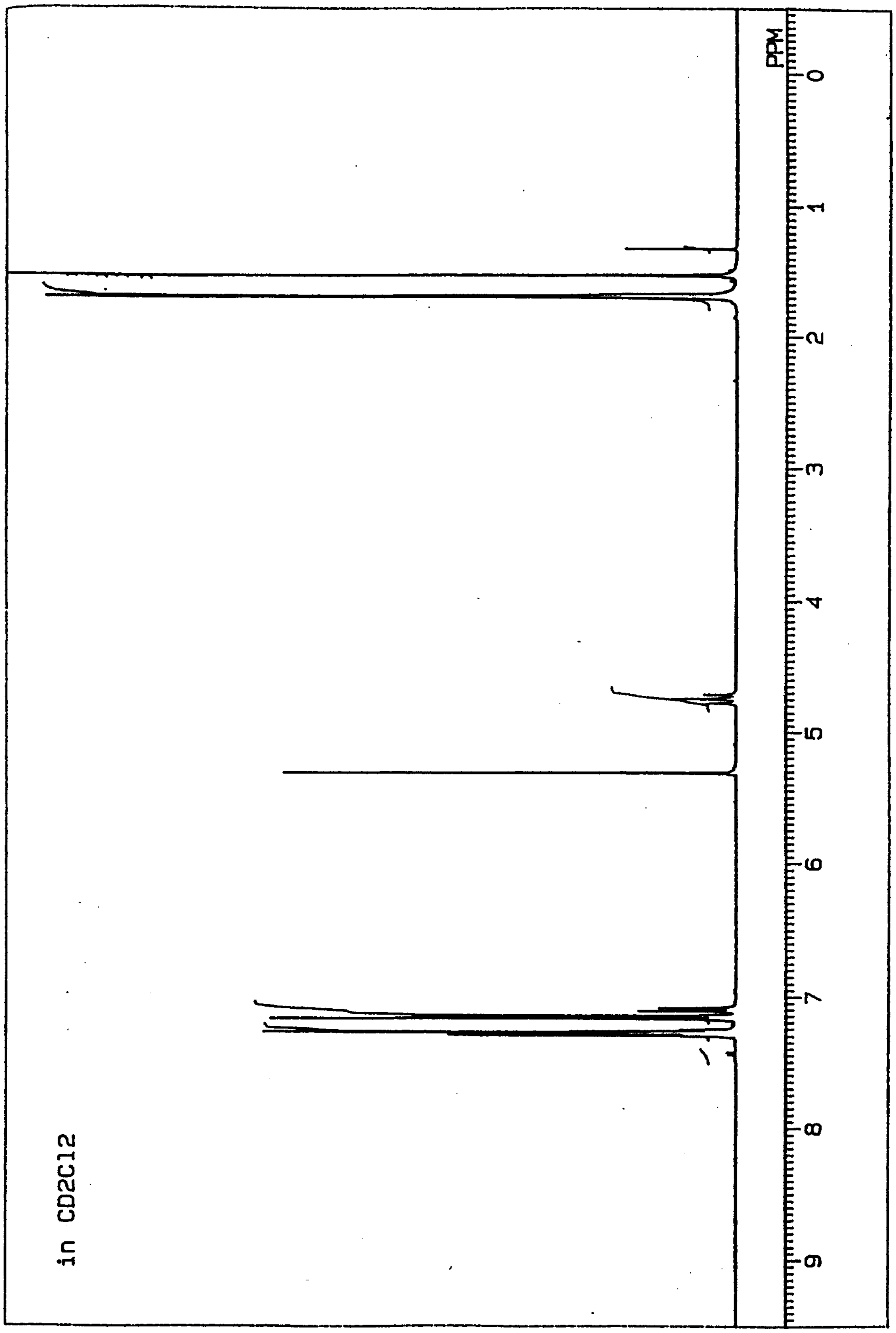

Fig. 4

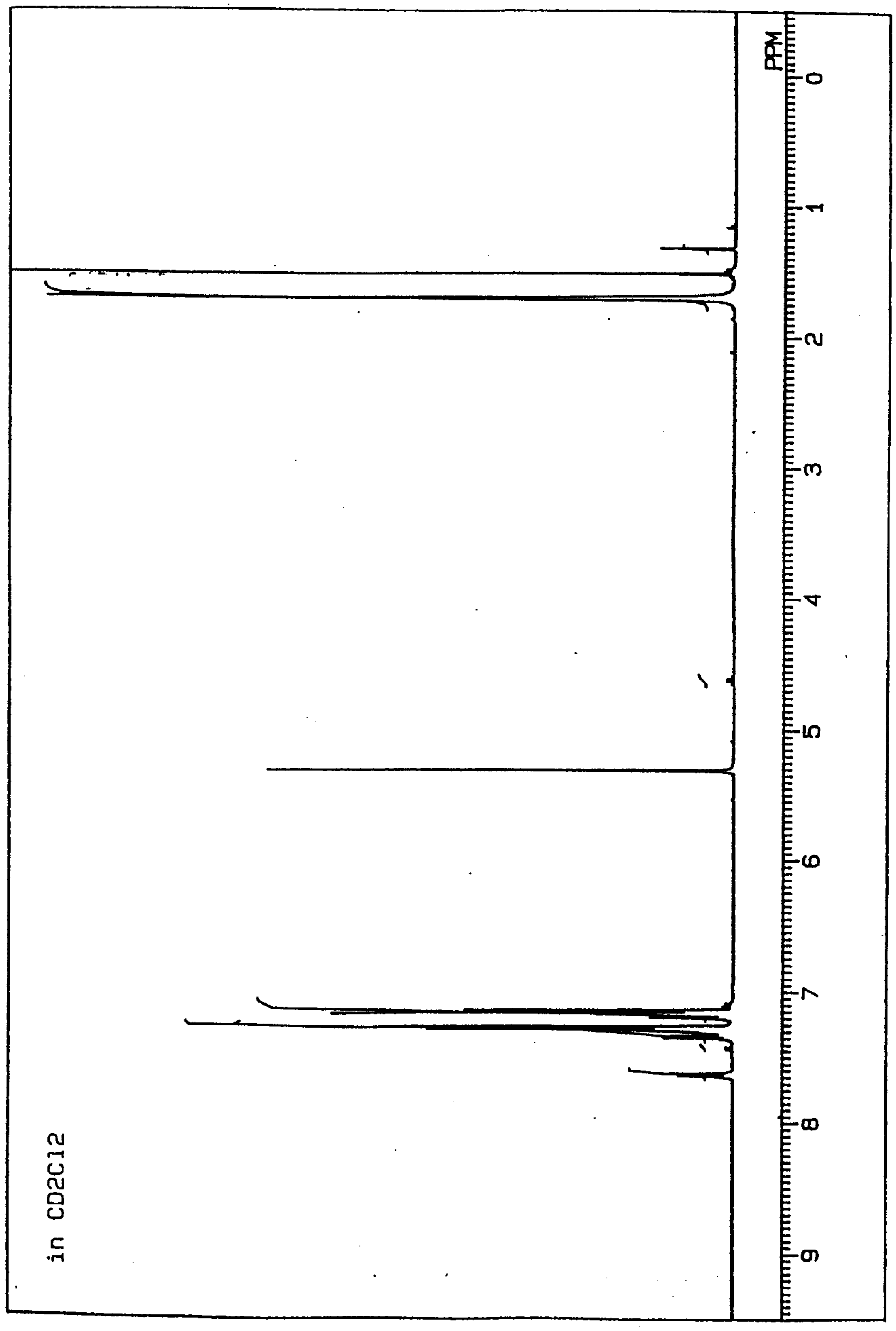

Fig. 5

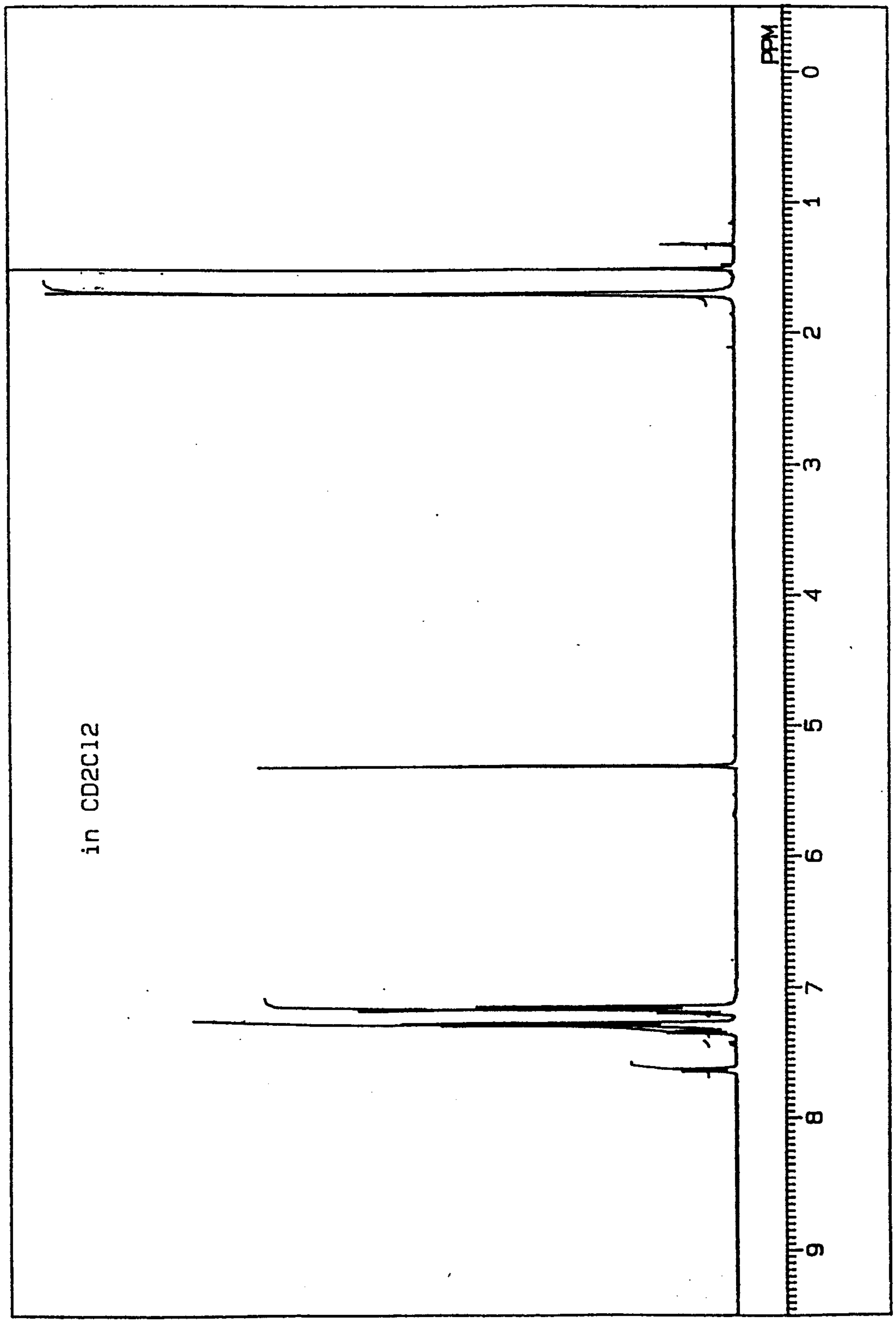

Fig. 6

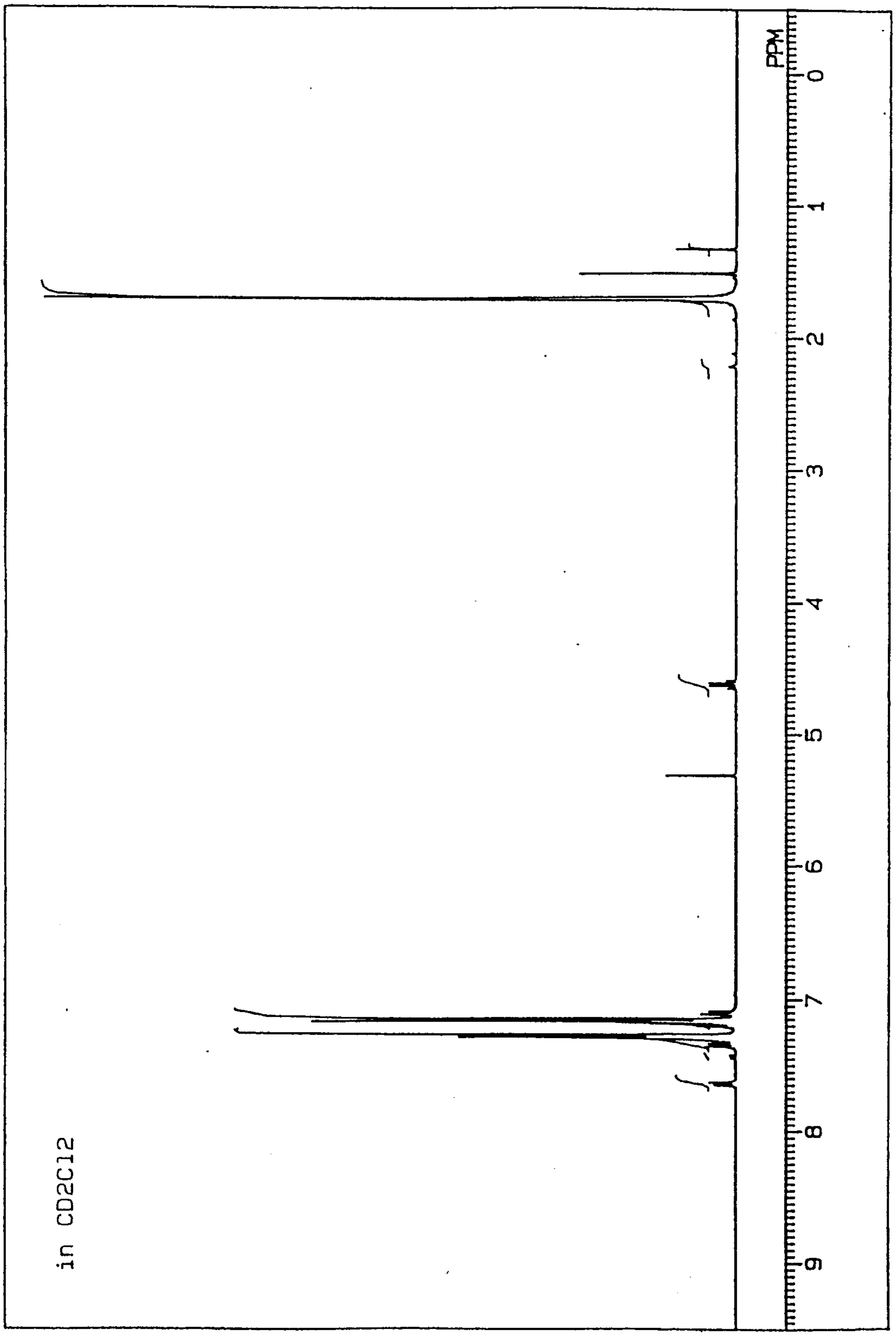

Fig. 7

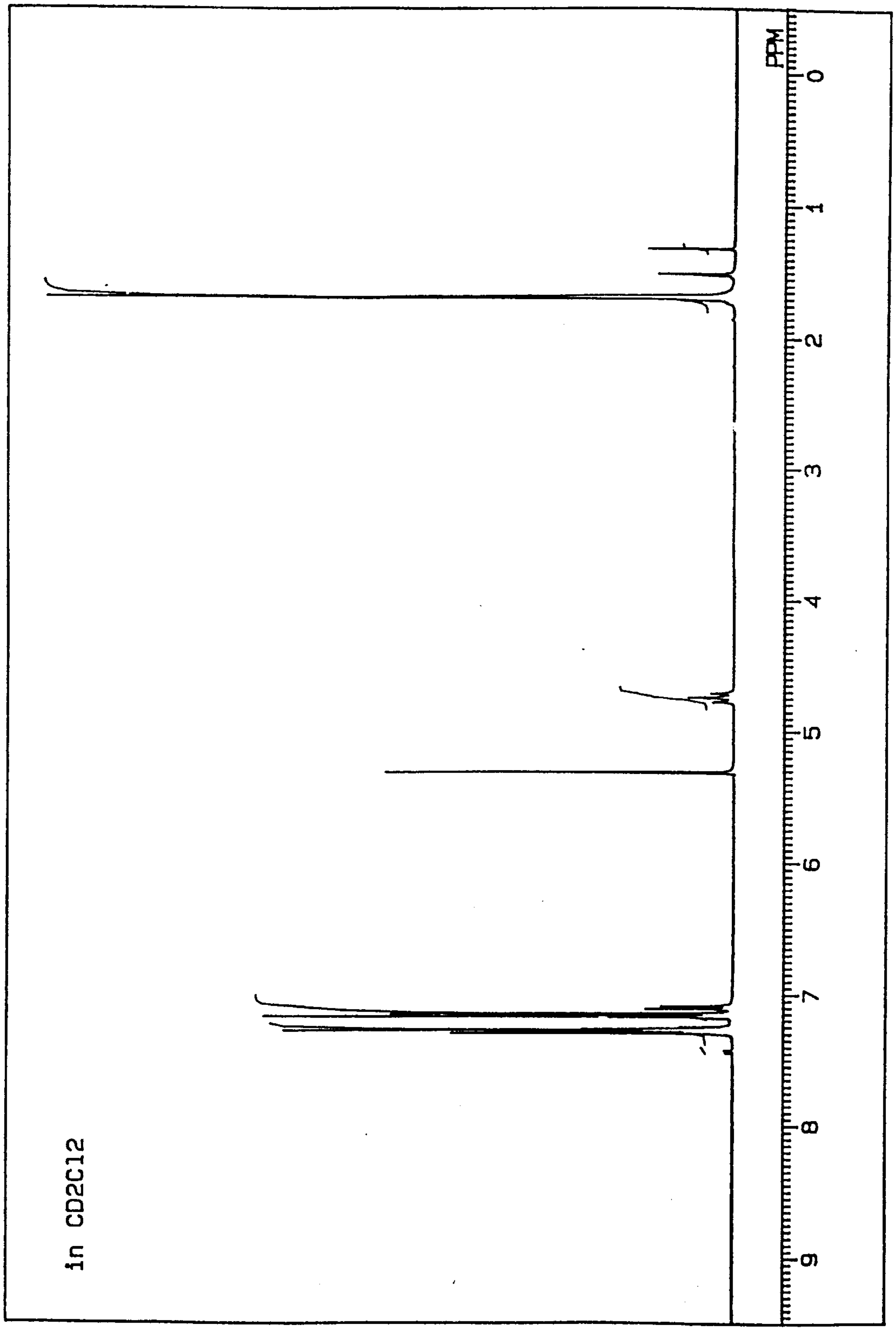

Fig. 8

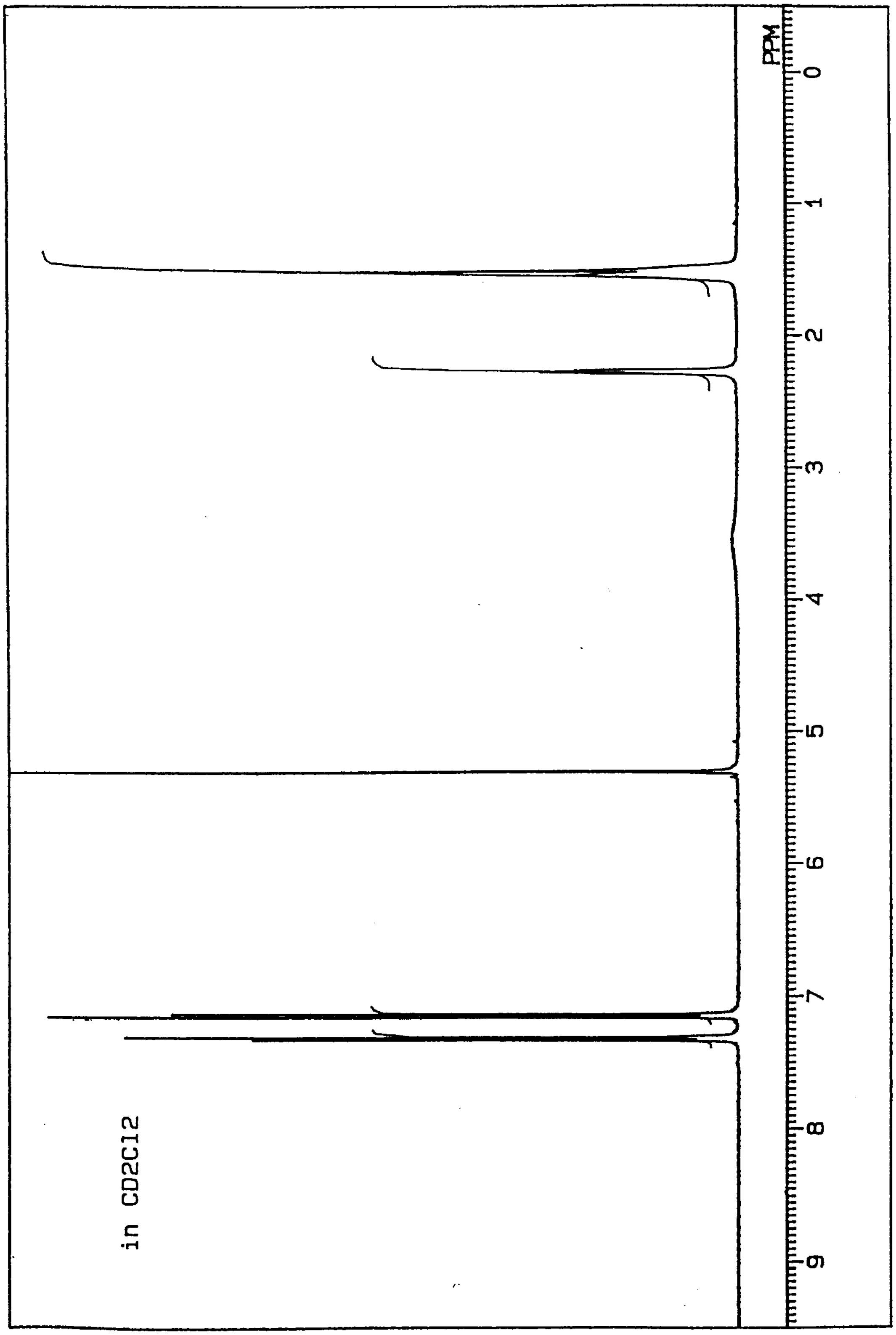

Fig. 9

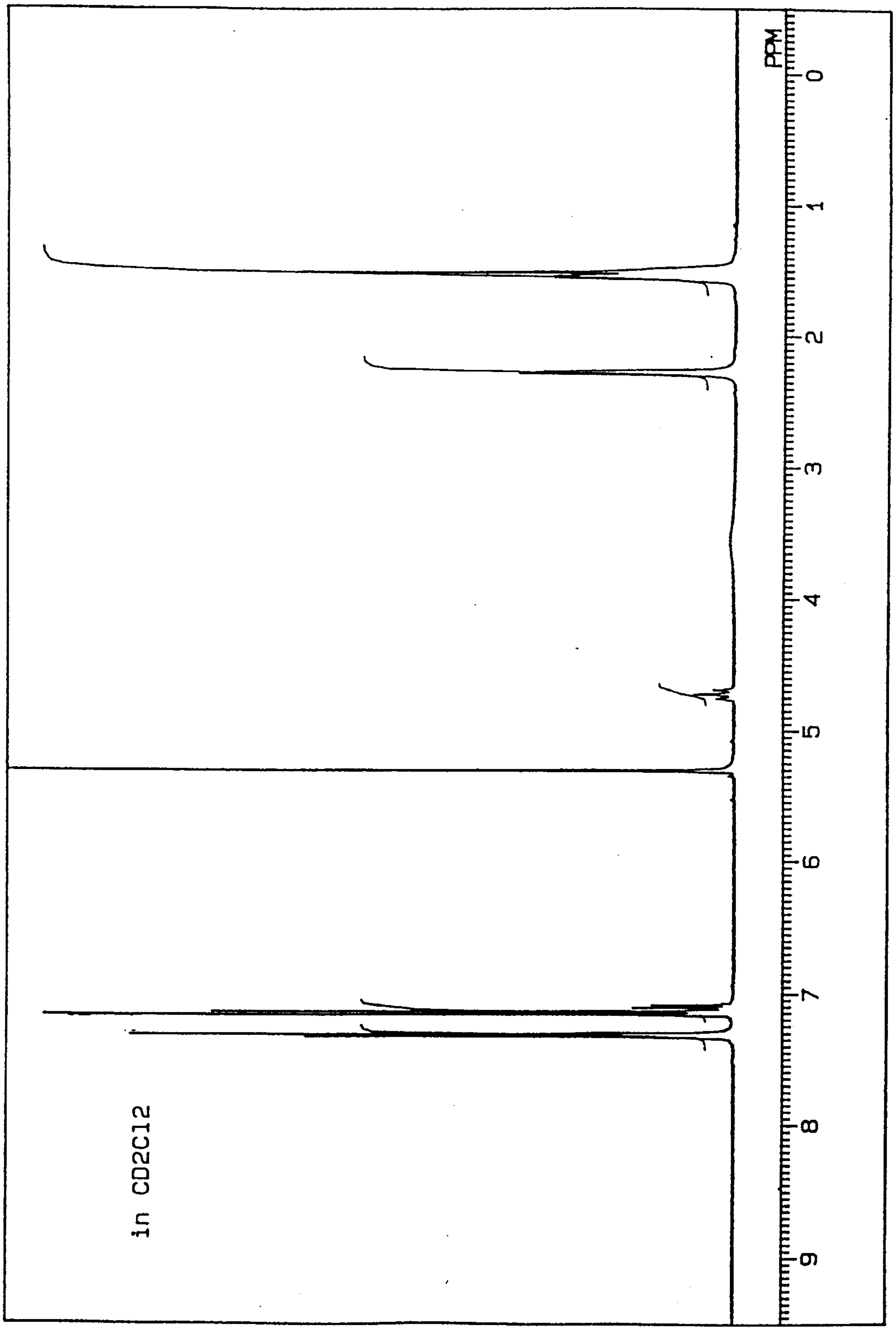

Fig. 10

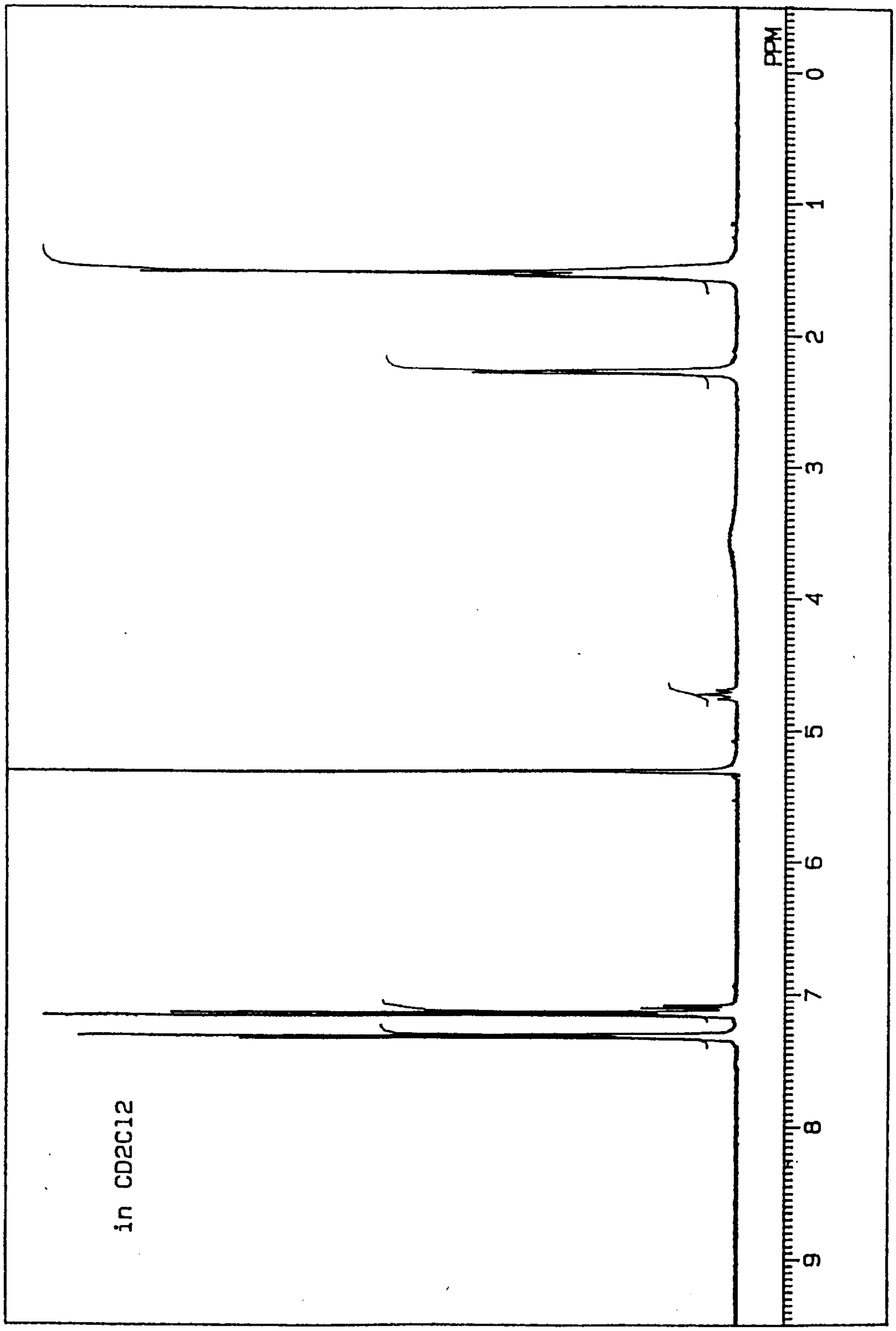

Fig. 11

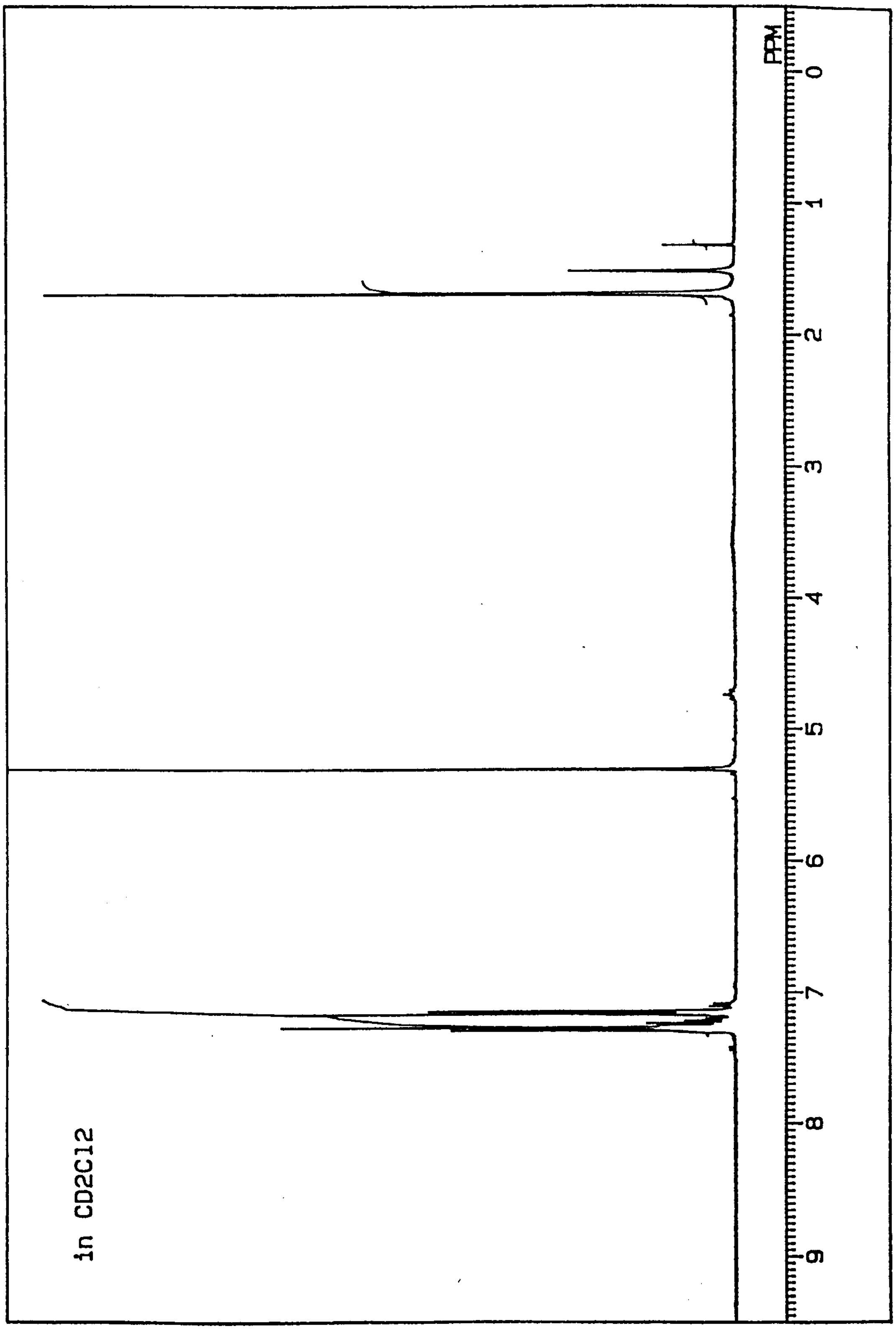

**INTERNATIONAL SEARCH REPORT**

International application No. PCT/JP95/02609

**A. CLASSIFICATION OF SUBJECT MATTER**

Int. $Cl^6$ C08G64/02, 64/10, 64/14, 64/16, 64/22, C09D169/00, G03G5/05

According to International Patent Classification (IPC) or to both national classification and IPC

**B. FIELDS SEARCHED**

Minimum documentation searched (classification system followed by classification symbols)

Int. $Cl^6$ C08G64/02-64/16, 64/22, C09D169/00, G03G5/05

Documentation searched other than minimum documentation to the extent that such documents are included in the fields searched

Electronic data base consulted during the international search (name of data base and, where practicable, search terms used)

CAS ONLINE, WPI/L

**C. DOCUMENTS CONSIDERED TO BE RELEVANT**

| Category* | Citation of document, with indication, where appropriate, of the relevant passages | Relevant to claim No. |
|---|---|---|
| X | JP, 54-148097, A (Daikin Industries, Ltd.), November 19, 1979 (19. 11. 79), Claim (Family: none) | 1, 2 |
| X | JP, 4-055429, A (Chisso Corp.), February 24, 1992 (24. 02. 92), Claim, upper left column, page 4 (Family: none) | 1, 6 |
| X | JP, 4-057826, A (Chisso Corp.), February 25, 1992 (25. 02. 92), Claim, lower left column, page 3 (Family: none) | 1, 6 |
| X | JP, 3-012418, A (Kuraray Co., Ltd.), January 21, 1991 (21. 01. 91), Claim, line 12, lower left column to line 20, lower right column, page 2 (Family: none) | 1 |
| A | JP, 51-063894, A (Bayer AG.), June 2, 1976 (02. 06. 76), Claim, line 13, lower left column, page 1 to line 15, lower right column, page 2 | 20 - 24 |

[X] Further documents are listed in the continuation of Box C. [ ] See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| February 19, 1996 (19. 02. 96) | March 12, 1996 (12. 03. 96) |
| Name and mailing address of the ISA/<br>Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP95/02609

C (Continuation). DOCUMENTS CONSIDERED TO BE RELEVANT

| Category* | Citation of document, with indication, where appropriate, of the relevant passages | Relevant to claim No. |
|---|---|---|
| | & DE, 2446107, A1 & GB, 1525933, A | |
| A | JP, 5-306335, A (Idemitsu Kosan Co., Ltd.), November 19, 1993 (19. 11. 93), Claim, line 43, column 10 to line 1, column 15 & WO, 93/18081, A1 & EP, 582722, A1 | 1 - 24 |
| A | JP, 6-220182, A (Mitsui Toatsu Chemicals, Inc.), August 9, 1994 (09. 08. 94), Claim, line 25, column 2 to line 6, column 20 (Family: none) | 1 - 13 |

Form PCT/ISA/210 (continuation of second sheet) (July 1992)